(19) **Europäisches Patentamt**
**European Patent Office**
**Office européen des brevets**

(11) **EP 3 713 157 B1**

(12) ## EUROPEAN PATENT SPECIFICATION

(45) Date of publication and mention
of the grant of the patent:
**03.04.2024 Bulletin 2024/14**

(21) Application number: **20172805.2**

(22) Date of filing: **06.10.2015**

(51) International Patent Classification (IPC):
**H04L 12/28** (2006.01)     **G06F 9/451** (2018.01)

(52) Cooperative Patent Classification (CPC):
**G06F 8/65; F24F 11/30; F24F 11/58; F24F 11/62;**
**F24F 11/63; G06F 16/33; G06F 16/38;**
**H04L 12/281; H04L 12/2823; H04L 45/02;**
**H04L 67/12; H04L 67/141; H04L 67/143**

(54) **TIME VARIANT DATA PROFILE FOR A FABRIC NETWORK**

**ZEITVARIANTENDATENPROFIL FÜR EIN GEWEBENETZ**

**PROFIL DE DONNÉES VARIABLE DANS LE TEMPS POUR UN RÉSEAU À MATRICE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.10.2014 US 201462061593 P
31.12.2014 US 201414588086
23.03.2015 US 201514665913**

(43) Date of publication of application:
**23.09.2020 Bulletin 2020/39**

(62) Document number(s) of the earlier application(s) in
accordance with Art. 76 EPC:
**15787751.5 / 3 205 055**

(73) Proprietors:
• **Google LLC**
**Mountain View, CA 94043 (US)**
• **Gujjaru, Sunny Vardhan**
**Mountain View, California 94043 (US)**
• **Dixon, Michael**
**Mountain View, California 94043 (US)**
• **Lu, Jiakang**
**Mountain View, California 94043 (US)**
• **Smith, Zach B.**
**Mountain View, California 94043 (US)**

(72) Inventors:
• **Gujjaru, Sunny Vardhan**
**Mountain View, CA California 94043 (US)**
• **Dixon, Michael**
**Mountain View, CA California 94043 (US)**
• **Lu, Jiakang**
**Mountain View, CA California 94043 (US)**
• **Smith, Zach B.**
**Mountain View, CA California 94043 (US)**
• **LOGUE, Jay D.**
**Mountain View, CA California 94043 (US)**
• **ERICKSON, Grant M.**
**Mountain View, CA California 94043 (US)**
• **NEELEY, Matthew G.**
**Mountain View, CA California 94043 (US)**

(74) Representative: **Maikowski & Ninnemann
Patentanwälte Partnerschaft mbB
Postfach 15 09 20
10671 Berlin (DE)**

(56) References cited:
**US-A1- 2005 209 845     US-A1- 2013 013 286**

**Description**

**CROSS-REFERENCE TO RELATED APPLICATIONS**

This application claims the benefit of Provisional Application Serial No. 62/061,593, filed October 8, 2014, entitled "FABRIC NETWORK".

**BACKGROUND**

This disclosure relates data communication profiles for systems, devices, methods, and related computer program products for smart buildings, such as a smart home. This disclosure relates to a fabric network that couples electronic devices using one or more network types and a time variant data profile used to determine chronology of events of multiple devices in the home.

Some homes today are equipped with smart home networks to provide automated control of devices, appliances and systems, such as heating, ventilation, and air conditioning ("HVAC") systems, lighting systems, alarm systems, and home theater and entertainment systems. Smart home networks may include control panels that a person may use to input settings, preferences, and scheduling information that the smart home network uses to provide automated control the various devices, appliances and systems in the home. For example, a person may input a desired temperature and a schedule indicating when the person is away from home.

These networks may include various devices that are sleepy and/or have intermittent connection between each other. The data stored in each of these devices may then not be chronologically accurate if only using clock times of the devices while the devices are awake. Furthermore, it may be unclear how entries in data from different devices relate to each other in time when events between all the devices may not be linearly recorded.

This section is intended to introduce the reader to various aspects of art that may be related to various aspects of the present techniques, which are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

US 2013/013286 A1 relates to handling locale and language in a cloud management system. US 2005/209845 A1 relates to synchronizing a user interface language between a software application and a web site.

**SUMMARY**

The invention is defined by the independent claims. Embodiments of the invention are defined in the dependent claims. A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

Embodiments of the present disclosure relate to systems and methods a fabric network that includes one or more logical networks that enables devices connected to the fabric to communicate with each other using a list of protocols and/or profiles known to the devices. The communications between the devices may follow a typical message format that enables the devices to understand communications between the devices regardless of which logical networks the communicating devices are connected to in the fabric. Within the message format, a payload of data may be included for the receiving device to store and/or process. The format and the contents of the payload may vary according to a header (e.g., profile tag) within the payload that indicates a specific profile (including one or more protocols) and/or a type of message/action that is being sent according to the profile.

According to some embodiments, two or more devices in a fabric may communicate using various profiles. For example, in certain embodiments, a data management profile, a network provisioning profile, or a core profile (including status reporting protocols) that are available to devices connected to the fabric. Also, a time-variant data profile may be used for reporting and exchanging time-variant historical data among endpoints within a smart network. In some embodiments, at least a portion of the role of any device in the smart network is to observe and record the environment of which the device is a part. This observation and reporting is done over time and reporting those time-variant historical observations to other endpoints in the smart network. The time-variant data profile defines a set of constants and messages for exchanging these time-variant historical observations atop the bulk data transfer protocol. In some embodiments, this profile has an identified profile identifier that indicates that a communication includes data in the time-variant data profile.

Various refinements of the features noted above may exist in relation to various aspects of the present disclosure. Further features may also be incorporated in these various aspects as well. These refinements and additional features may exist individually or in any combination. For instance, various features discussed below in relation to one or more of the illustrated embodiments may be incorporated into any of the above-described aspects of the present disclosure alone or in any combination. The brief summary presented above is intended only to familiarize the reader with certain aspects and contexts of embodiments of the present disclosure without limitation to the claimed subject matter.

## BRIEF DESCRIPTION OF THE DRAWINGS

Various aspects of this disclosure may be better understood upon reading the following detailed description and upon reference to the drawings in which:

FIG. 1 is a block diagram of an electronic device having that may be interconnected with other devices using a fabric network, in accordance with an embodiment;

FIG. 2 illustrates a block diagram of a home environment in which the general device of FIG. 1 may communicate with other devices via the fabric network, in accordance with an embodiment;

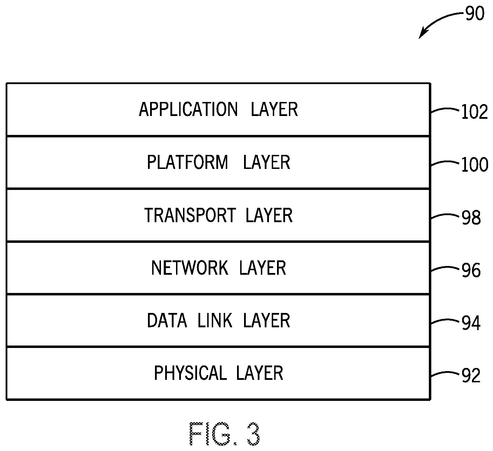

FIG. 3 illustrates a block diagram of an Open Systems Interconnection (OSI) model that characterizes a communication system for the home environment of FIG. 2, in accordance with an embodiment;

FIG. 4 illustrates the fabric network having a single logical network topology, in accordance with an embodiment;

FIG. 5 illustrates the fabric network having a star network topology, in accordance with an embodiment;

FIG. 6 illustrates the fabric network having an overlapping networks topology, in accordance with an embodiment;

FIG. 7 illustrates a service communicating with one or more fabric networks, in accordance with an embodiment;

FIG. 8 illustrates two devices in a fabric network in communicative connection, in accordance with an embodiment;

FIG. 9 illustrates a unique local address format (ULA) that may be used to address devices in a fabric network, in accordance with an embodiment;

FIG. 10 illustrates a process for proxying periphery devices on a hub network, in accordance with an embodiment;

FIG. 11 illustrates a tag-length-value (TLV) packet that may be used to transmit data over the fabric network, in accordance with an embodiment;

FIG. 12 illustrates a general message protocol (GMP) that may be used to transmit data over the fabric network that may include the TLV packet of FIG. 11, in accordance with an embodiment;

FIG. 13 illustrates a message header field of the GMP of FIG. 12, in accordance with an embodiment;

FIG. 14 illustrates a key identifier field of the GMP of FIG. 12, in accordance with an embodiment;

FIG. 15 illustrates an application payload field of the GMP of FIG. 12, in accordance with an embodiment;

FIG. 16 illustrates a profile library that includes various profiles that may be used in the application payload field of FIG. 15;

FIG. 17 illustrates a status reporting schema that may be used to update status information in the fabric network, in accordance with an embodiment;

FIG. 18 illustrates a profile field of the status reporting schema of FIG. 17, in accordance with an embodiment;

FIG. 19 illustrates a protocol sequence that may be used to perform a software update between a client and a server, in accordance with an embodiment;

FIG. 20 illustrates an image query frame that may be used in the protocol sequence of FIG. 19, in accordance with an embodiment;

FIG. 21 illustrates a frame control field of the image query frame of FIG. 20, in accordance with an embodiment;

FIG. 22 illustrates a product specification field of the image query frame of FIG. 20, in accordance with an embodiment;

FIG. 23 illustrates a version specification field of the image query frame of FIG. 20, in accordance with an embodiment;

FIG. 24 illustrates a locale specification field of the image query frame of FIG. 20, in accordance with an embodiment;

FIG. 25 illustrates an integrity types supported field of the image query frame of FIG. 20, in accordance with an embodiment;

FIG. 26 illustrates an update schemes supported field of the image query frame of FIG. 20, in accordance with an embodiment;

FIG. 27 illustrates an image query response frame that may be used in the protocol sequence of FIG. 19, in accordance with an embodiment;

FIG. 28 illustrates a uniform resource identifier (URI) field of the image query response frame of FIG. 27, in accordance with an embodiment;

FIG. 29 illustrates a integrity specification field of the image query response frame of FIG. 27, in accordance with an embodiment;

FIG. 30 illustrates an update scheme field of the image query response frame of FIG. 27, in accordance with an embodiment;

FIG. 31 illustrates a communicative connection between a sender and a receiver in a bulk data transfer, in accordance with an embodiment;

FIG. 32 illustrates a SendInit message that may be used to initiate the communicative connection by the sender of FIG. 31, in accordance with an embodiment;

FIG. 33 illustrates a transfer control field of the SendInit message of FIG. 32, in accordance with an embodiment;

FIG. 34 illustrates a range control field of the SendInit message of FIG. 33, in accordance with an embodiment;

FIG. 35 illustrates a SendAccept message that may be used to accept a communicative connection proposed by the SendInit message of FIG. 32 sent by the sender of FIG. 32, in accordance with an embodiment;

FIG. 36 illustrates a SendReject message that may be used to reject a communicative connection proposed by the SendInit message of FIG. 32 sent by the sender of FIG. 32, in accordance with an embodiment;

FIG. 37 illustrates a ReceiveAccept message that may be used to accept a communicative connection proposed by the receiver of FIG. 32, in accordance with an embodiment;

FIG. 38 illustrates a profile identifier used to identify a message as pertaining to a specific profile, in accordance with an embodiment;

FIG. 39 illustrates a data management (WDM) frame for the WDM profile, in accordance with an embodiment;

FIG. 40 illustrates WDM architecture in a smart device, in accordance with an embodiment;

FIG. 41 illustrates a binding transaction protocol sequence created using the WDM profile, in accordance with an embodiment;

FIG. 42 illustrates a broadcast publish protocol sequence that may be performed using the WDM profile, in accordance with an embodiment;

FIG. 43 illustrates a peer publish protocol sequence that may be performed using the WDM profile, in accordance with an embodiment;

FIG. 44 illustrates a dynamic subscription publish protocol sequence that may be performed using the WDM profile, in accordance with an embodiment;

FIG. 45 illustrates a cancel subscription protocol sequence that may be performed using the WDM profile, in accordance with an embodiment;

FIG. 46 illustrates a view transaction protocol sequence that may be performed using the WDM profile, in accordance with an embodiment;

FIG. 47 illustrates an update transaction protocol sequence that may be performed using the WDM profile, in accordance with an embodiment;

FIG. 48 illustrates an example of a conflict resolution that may be performed using the WDM profile, in accordance with an embodiment;

FIG. 49 illustrates a view request frame of the WDM profile, in accordance with an embodiment;

FIG. 50 illustrates a view response frame of the WDM profile, in accordance with an embodiment;

FIG. 51 illustrates a subscribe request frame of the WDM profile, in accordance with an embodiment;

FIG. 52 illustrates a subscribe response frame of the WDM profile, in accordance with an embodiment;

FIG. 53 illustrates a cancel subscription request frame of the WDM profile, in accordance with an embodiment;

FIG. 54 illustrates an update request frame of the WDM profile, in accordance with an embodiment;

FIG. 55 illustrates a notify frame of the WDM profile, in accordance with an embodiment;

FIG. 56 illustrates an embodiment of WDM communications between devices, in accordance with an embodiment;

FIG. 57 illustrates a detailed view of WDM communications between devices, in accordance with an embodiment; and

FIG. 58 illustrates a schematic view of an interconnection of various publishing and subscribing devices in a fabric, in accordance with an embodiment

FIG. 59 illustrates a streams structure of the used by a time variant data profile, in accordance with an embodiment;

FIG. 60 illustrates an External Descriptor structure that is an array of Descriptor elements, in accordance with an embodiment;

FIG. 61 illustrates a descriptor structure of the streams structure of FIG. 59, in accordance with an embodiment;

FIG. 62 illustrates a derivation structure of the descriptor structure of FIG. 61, in accordance with an embodiment;

FIG. 63 illustrates a field structure of the descriptor structure of FIG. 61, in accordance with an embodiment;

FIG. 64 illustrates a units structure of the field structure of FIG. 60, in accordance with an embodiment;

FIG. 65 illustrates a time period structure of the descriptor structure of FIG. 61, in accordance with an embodiment;

FIG. 66 illustrates a time base structure of the descriptor structure of FIG. 61, in accordance with an embodiment;

FIG. 67 illustrates a stream substructure of the streams structure of FIG. 59, in accordance with an embodiment;

FIG. 68 illustrates a flexible data arrangement of data that may be sent using the time variant data profile, in accordance with an embodiment;

FIG. 69 illustrates another flexible data arrangement of data that may be sent using the time variant data profile, in accordance with an embodiment;

FIG. 70 illustrates a flow diagram of a process that may be used to generate encapsulated data samples for time variant data, in accordance with an embodiment;

FIG. 71 illustrates a locale profile data structure that may be employed to implement a locale profile, in accordance with an embodiment;

FIG. 72 illustrates a method for setting an active locale using the locale profile, in accordance with an embodiment;

FIG. 73 illustrates a method for receiving an indication of an active locale using the locale profile, in accordance with an embodiment;

FIG. 74 illustrates a protocol sequence diagram view of a reset configuration interaction, according to an embodiment;

FIG. 75 illustrates a protocol sequence diagram view of an new arm failsafe interaction, according to an embodiment;

FIG. 76 illustrates a protocol sequence diagram view of a reset arm failsafe interaction, according to an embodiment;

FIG. 77 illustrates a protocol sequence diagram view of a resume arm failsafe interaction, according to an embodiment;

FIG. 78 illustrates a protocol sequence diagram view of a disarm failsafe interaction, according to an embodiment;

FIG. 79 illustrates a protocol sequence diagram view of an enable connection monitor interaction, according to an embodiment;

FIG. 80 illustrates a protocol sequence diagram view of a remote passive rendezvous interaction, according to an embodiment;

FIG. 81 illustrates a schematic view of a reset configuration data frame, according to an embodiment;

FIG. 82 illustrates a schematic view of an arm failsafe data frame, according to an embodiment;

FIG. 83 illustrates a schematic view of an enable connection monitor data frame, according to an embodiment; and

FIG. 84 illustrates a schematic view of a remote passive rendezvous request data frame, according to an embodiment;

FIG. 85 illustrates a schematic view of an addition of a joining device to a fabric, in accordance with an embodiment;

FIG. 86 illustrates a schematic view of provisioning a service on a smart device, in accordance with an embodiment; and

FIG. 87 illustrates a flowchart of a process for pairing a device to an account managed by a remote service via a commissioning device, in accordance with an embodiment;

FIG. 88 illustrates a flowchart of a process for pairing a device to an account via a remote service, in accordance with an embodiment;

FIG. 89 illustrates a flowchart of a process for pairing a device to an account managed by a remote service, in accordance with an embodiment;

FIG. 90 illustrates a flowchart of a process for unregistering a device from an account managed by a remote service via a commissioning device, in accordance with an embodiment;

FIG. 91 illustrates a flowchart of a process for unregistering a device from an account managed by a remote service, in accordance with an embodiment; and

FIG. 92 illustrates a flowchart of a process for updating service information on a device, in accordance with an embodiment;

FIG. 93 illustrates a service endpoint response frame of the service directory profile, in accordance with an embodiment;

FIG. 94 illustrates a directory list field of the service endpoint response frame of FIG. 93, in accordance with an embodiment;

FIG. 95 illustrates a host and port list field of the director list field of FIG. 94, in accordance with an embodiment;

FIG. 96 illustrates a suffix table field of the service endpoint response frame of FIG. 93, in accordance with an embodiment;

FIG. 97 illustrates a requestor requesting a network scan and receiving a network scan response, in accordance with an embodiment;

FIG. 98 illustrates a requestor requesting a network addition and receiving a network addition response, in accordance with an embodiment;

FIG. 99 illustrates a requestor requesting a responding device to get a network and receiving a get network response, in accordance with an embodiment;

FIG. 100 illustrates a requestor requesting a responding device to remove a network and receiving a remove network response, in accordance with an embodiment;

FIG. 101 illustrates a requestor requesting a network addition and receiving a network addition response, in accordance with an embodiment;

FIG. 102 illustrates a flowchart of a Disable Network process, in accordance with an embodiment;

FIG. 103 illustrates a flowchart of a Test Connectivity process, in accordance with an embodiment;

FIG. 104 illustrates a flowchart of a Set Rendezvous Mode process, in accordance with an embodiment;

FIG. 105 illustrates a process for changing channels of WiFi networks after the device joins an additional network from a perspective of a device joining a network, in accordance with an embodiment;

FIG. 106 illustrates a process for changing channels of WiFi networks after the device joins an additional network from a perspective of a requesting device causing another device to join a network, in accordance with an embodiment;

FIG. 107 illustrates an unicast request and response, in accordance with an embodiment;

FIG. 108 illustrates a multicast request and response, in accordance with an embodiment;

FIG. 109 illustrates an alarm propagation between various smart devices using an alarm profile, in accordance with an embodiment;

FIG. 110 illustrates an alarm profile message distribution between three devices in a smart network using multicast distribution, in accordance with an embodiment;

FIG. 111 illustrates an alarm profile message distribution for a unicast message between two devices in a smart network, in accordance with an embodiment;

FIG. 112 illustrates an alarm profile message distribution for a unicast message between two devices in a smart network when an alarm condition changes at an originating device, in accordance with an embodiment; and

FIG. 113 illustrates an alarm profile message distribution for a unicast message between two devices in a smart network when a remote device sends an alarm update message, in accordance with an embodiment.

## DETAILED DESCRIPTION

One or more specific embodiments of the present disclosure will be described below. These described embodiments are only examples of the presently disclosed techniques. Additionally, in an effort to provide a concise description of these embodiments, features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but may nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features.

Embodiments of the present disclosure relate generally to an efficient fabric network that may be used by devices and/or services communicating with each other in a home environment. Generally, consumers living in homes may find it useful to coordinate the operations of various devices within their home such that of their devices are operated efficiently. For example, a thermostat device may be used to detect a temperature of a home and coordinate the activity of other devices (e.g., lights) based on the detected temperature. In this example, the thermostat device may detect a temperature that may indicate that the temperature outside the home corresponds to daylight hours. The thermostat device may then convey to the light device that there may be daylight available to the home and that thus the light should turn off.

In addition to operating these devices efficiently, consumers generally prefer to use user-friendly devices that involve a minimum amount of set up or initialization. That is, consumers may generally prefer to purchase devices that are fully operational after performing a few number initialization steps that may be performed by almost any individual regardless of age or technical expertise.

With the foregoing in mind, to enable to effectively communicate data between each other within the home environment, the devices may use a fabric network that includes one or more logical networks to manage communication between the devices. That is, the efficient fabric network may enable numerous devices within a home to communicate with each other using one or more logical networks. The communication network may support Internet Protocol version 6 (IPv6) communications such that each connected device may have a unique local address (LA). Moreover, to enable each device to integrate with a home, it may be useful for each device to communicate within the network using low amounts of power. That is, by enabling devices to communicate using low power, the devices may be placed anywhere in a home without being coupled to a continuous power source (e.g., battery-powered).

## I. Fabric Introduction

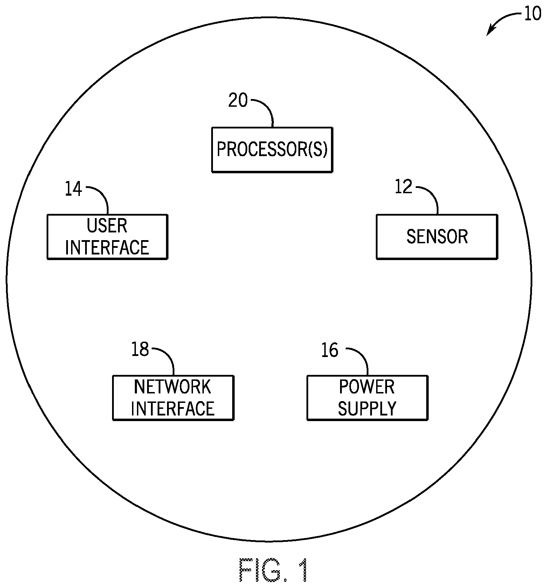

By way of introduction, FIG. 1 illustrates an example of a general device 10 that may that may communicate with other like devices within a home environment. In one embodiment, the device 10 may include one or more sensors 12, a user-interface component 14, a power supply 16 (e.g., including a power connection and/or battery), a network interface 18, a processor 20, and the like. Particular sensors 12, user-interface components 14, and power-supply configurations may be the same or similar with each devices 10. However, it should be noted that in some embodiments, each device 10 may include particular sensors 12, user-interface components 14, power-supply configurations, and the like based on a device type or model.

The sensors 12, in certain embodiments, may detect various properties such as acceleration, temperature, humidity, water, supplied power, proximity, external motion, device motion, sound signals, ultrasound signals, light signals, fire, smoke, carbon monoxide, globalpositioning-satellite (GPS) signals, radio-frequency (RF), other electromagnetic signals or fields, or the like. As such, the sensors 12 may include temperature sensor(s), humidity sensor(s), hazard-related sensor(s) or other environmental sensor(s), accelerometer(s), microphone(s), optical sensors up to and including camera(s) (e.g., charged coupled-device or video cameras), active or passive radiation sensors, GPS receiver(s) or radiofrequency identification detector(s). While FIG. 1 illustrates an embodiment with a single sensor, many embodiments may include multiple sensors. In some instances, the device 10 may includes one or more primary sensors and one or more secondary sensors. Here, the primary sensor(s) may sense data central to the core operation of the device (e.g., sensing a temperature in a thermostat or sensing smoke in a smoke detector), while the secondary sensor(s) may sense other types of data (e.g., motion, light or sound), which can be used for energy-efficiency objectives or smart-operation objectives.

One or more user-interface components 14 in the device 10 may receive input from the user and/or present information to the user. The user-interface component 14 may also include one or more user-input components that may receive information from the user. The received input may be used to determine a setting. In certain embodiments, the user-input components may include a mechanical or virtual component that responds to the user's motion. For example, the user can mechanically move a sliding component (e.g., along a vertical or horizontal track) or rotate a rotatable ring (e.g., along a circular track), the user's motion along a touchpad may be detected, or motions/gestures may be detected using a contactless gesture detection sensor (e.g., infrared sensor or camera). Such motions may correspond to a setting adjustment, which can be determined based on an absolute position of a user-interface component 104 or based on a displacement of a user-interface components 104 (e.g., adjusting a setpoint temperature by 1 degree F for every 10° rotation of a rotatable-ring component). Physically and virtually movable user-input components can allow a user to set a setting along a portion of an apparent continuum. Thus, the user may not be confined to choose between two discrete options (e.g., as would be the case if up and down buttons were used) but can quickly and intuitively define a setting along a range of possible setting values. For example, a magnitude of a movement of a user-input component may be associated with a magnitude of a setting adjustment, such that a user may dramatically alter a setting with a large movement or finely tune a setting with s small movement.

The user-interface components 14 may also include one or more buttons (e.g., up and down buttons), a keypad, a number pad, a switch, a microphone, and/or a camera (e.g., to detect gestures). In one embodiment, the user-input component 14 may include a click-and-rotate annular ring component that may enable the user to interact with the component by rotating the ring (e.g., to adjust a setting) and/or by clicking the ring inwards (e.g., to select an adjusted setting or to select an option). In another embodiment, the user-input component 14 may include a camera that may detect gestures (e.g., to indicate that a power or alarm state of a device is to be changed). In some instances, the device 10 may have one primary input component, which may be used to set various types of settings. The user-interface components 14 may also be configured to present information to a user via, e.g., a visual display (e.g., a thin-film-transistor display or organic light-emitting-diode display) and/or an audio speaker.

The power-supply component 16 may include a power connection and/or a local battery. For example, the power connection may connect the device 10 to a power source such as a line voltage source. In some instances, an AC power source can be used to repeatedly charge a (e.g., rechargeable) local battery, such that the battery may be used later to supply power to the device 10 when the AC power source is not available. In certain embodiments, the power supply component 16 may include intermittent or reduced power connections that may be less than that provided via an AC plug in the home. In certain embodiments, devices with batteries and/or intermittent or reduced power may be operated as "sleepy devices" that alternate between an online/awake state and an offline/sleep state to reduce power consumption.

The network interface 18 may include one or more components that enable the device 10 to communicate between devices using one or more logical networks within the fabric network. In one embodiment, the network interface 18 may communicate using an efficient network layer as part of its Open Systems Interconnection (OSI) model. In certain embodiments, one component of the network interface 18 may communicate with one logical network (e.g., WiFi) and another component of the network interface may communicate with another logical network (e.g., 802.15.4). In other words, the network interface 18 may enable the device 10 to wirelessly communicate via multiple IPv6 networks. As such, the network interface 18 may include a wireless card, Ethernet port, and/or other suitable transceiver connections.

The processor 20 may support one or more of a variety of different device functionalities. As such, the processor 20 may include one or more processors configured and programmed to carry out and/or cause to be carried out one or more of the functionalities described herein. In one embodiment, the processor 20 may include general-purpose processors carrying out computer code stored in local memory (e.g., flash memory, hard drive, random access memory), special-purpose processors or application-specific integrated circuits, other types of hardware/firmware/software processing platforms, and/or some combination thereof. Further, the processor 20 may be implemented as localized versions or counterparts of algorithms carried out or governed remotely by central servers or cloud-based systems, such as by virtue of running a Java virtual machine (JVM) that executes instructions provided from a cloud server using Asynchronous Javascript and XML (AJAX) or similar protocols. By way of example, the processor 20 may detect when a location (e.g., a house or room) is occupied, up to and including whether it is occupied by a specific person or is occupied by a specific number of people (e.g., relative to one or more thresholds). In one embodiment, this detection can occur, e.g., by analyzing microphone signals, detecting user movements (e.g., in front of a device), detecting openings and closings of doors or garage doors, detecting wireless signals, detecting an IP address of a received signal, detecting operation of one or more devices within a time window, or the like. Moreover, the processor 20 may include image recognition technology to identify particular occupants or objects.

In some instances, the processor 20 may predict desirable settings and/or implement those settings. For example, based on presence detection, the processor 20 may adjust device settings to, e.g., conserve power when nobody is home or in a particular room or to accord with user preferences (e.g., general at-home preferences or user-specific preferences). As another example, based on the detection of a particular person, animal or object (e.g., a child, pet or lost object), the processor 20 may initiate an audio or visual indicator of where the person, animal or object is or may initiate an alarm or security feature if an unrecognized person is detected under certain conditions (e.g., at night or when lights are off).

In some instances, devices may interact with each other such that events detected by a first device influences actions of a second device using one or more common profiles between the devices. For example, a first device can detect that a user has pulled into a garage (e.g., by detecting motion in the garage, detecting a change in light in the garage or detecting opening of the garage door). The first device can transmit this information to a second device via the fabric network, such that the second device can, e.g., adjust a home temperature setting, a light setting, a music setting, and/or a security-alarm setting. As another example, a first device can detect a user approaching a front door (e.g., by detecting motion or sudden light pattern changes). The first device may cause a general audio or visual signal to be presented (e.g., such as sounding of a doorbell) or cause a location-specific audio or visual signal to be presented (e.g., to announce the visitor's presence within a room that a user is occupying).

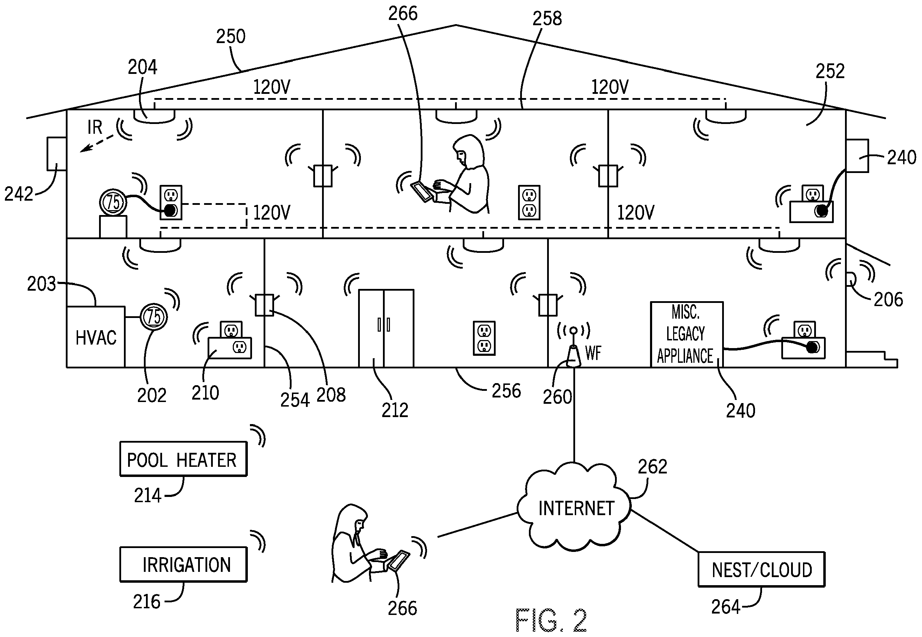

With the foregoing in mind, FIG. 2 illustrates a block diagram of a home environment 30 in which the device 10 of FIG. 1 may communicate with other devices via the fabric network. The depicted home environment 30 may include a structure 32 such as a house, office building, garage, or mobile home. It will be appreciated that devices can also be integrated into a home environment that does not include an entire structure 32, such as an apartment, condominium, office space, or the like. Further, the home environment 30 may control and/or be coupled to devices outside of the actual structure 32. Indeed, several devices in the home environment 30 need not physically be within the structure 32 at all. For example, a device controlling a pool heater 34 or irrigation system 36 may be located outside of the structure 32.

The depicted structure 32 includes multiple rooms 38, separated at least partly from each other via walls 40. The walls 40 can include interior walls or exterior walls. Each room 38 can further include a floor 42 and a ceiling 44. Devices can be mounted on, integrated with and/or supported by the wall 40, the floor 42, or the ceiling 44.

The home environment 30 may include multiple devices, including intelligent, multisensing, network-connected devices that may integrate seamlessly with each other and/or with cloud-based server systems to provide any of a variety of useful home objectives. One, more or each of the devices illustrated in the home environment 30 may include one or more sensors 12, a user interface 14, a power supply 16, a network interface 18, a processor 20 and the like.

Example devices 10 may include a network-connected thermostat 46 that may detect ambient climate characteristics (e.g., temperature and/or humidity) and control a heating, ventilation and air-conditioning (HVAC) system 48. Another example device 10 may include a hazard detection unit 50 that can detect the presence of a hazardous substance and/or a hazardous condition in the home environment 30 (e.g., smoke, fire, or carbon monoxide). Additionally, entryway interface devices 52, which can be termed a "smart doorbell", can detect a person's approach to or departure from a location, control audible functionality, announce a person's approach or departure via audio or visual means, or control settings on a security system (e.g., to activate or deactivate the security system).

In certain embodiments, the device 10 may include a light switch 54 that may detect ambient lighting conditions, detect room-occupancy states, and control a power and/or dim state of one or more lights. In some instances, the light switches 54 may control a power state or speed of a fan, such as a ceiling fan.

Additionally, wall plug interfaces 56 may detect occupancy of a room or enclosure and control supply of power to one or more wall plugs (e.g., such that power is not supplied to the plug if nobody is at home). The device 10 within the home environment 30 may further include an appliance 58, such as refrigerators, stoves and/or ovens, televisions, washers, dryers, lights (inside and/or outside the structure 32), stereos, intercom systems, garage-door openers, floor fans, ceiling fans, whole-house fans, wall air conditioners, pool heaters 34, irrigation systems 36, security systems, and so forth. While descriptions of FIG. 2 may identify specific sensors and functionalities associated with specific devices, it will be appreciated that any of a variety of sensors and functionalities (such as those described throughout the specification) may be integrated into the device 10.

In addition to containing processing and sensing capabilities, each of the example devices described above may be capable of data communications and information sharing with any other device, as well as to any cloud server or any other device that is network-connected anywhere in the world. In one embodiment, the devices 10 may send and receive communications via a fabric network discussed below. In one embodiment, fabric may enable the devices 10 to communicate with each other via one or more logical networks. As such, certain devices may serve as wireless repeaters and/or may function as bridges between devices, services, and/or logical networks in the home environment that may not be directly connected (i.e., one hop) to each other.

In one embodiment, a wireless router 60 may further communicate with the devices 10 in the home environment 30 via one or more logical networks (e.g., WiFi). The wireless router 60 may then communicate with the Internet 62 or other network such that each device 10 may communicate with a remote service or a cloud-computing system 64 through the Internet 62. The cloud-computing system 64 may be associated with a manufacturer, support entity or service provider associated with a particular device 10. As such, in one embodiment, a user may contact customer support using a device itself rather than using some other communication means such as a telephone or Internet-connected computer. Further, software updates can be automatically sent from the cloud-computing system 64 or devices in the home environment 30 to other devices in the fabric (e.g., when available, when purchased, when requested, or at routine intervals).

By virtue of network connectivity, one or more of the devices 10 may further allow a user to interact with the device even if the user is not proximate to the device. For example, a user may communicate with a device using a computer (e.g., a desktop computer, laptop computer, or tablet) or other portable electronic device (e.g., a smartphone) 66. A webpage or application may receive communications from the user and control the device 10 based on the received communications. Moreover, the webpage or application may present information about the device's operation to the user. For example, the user can view a current setpoint temperature for a device and adjust it using a computer that may be connected to the Internet 62. In this example, the thermostat 46 may receive the current setpoint temperature view request via the fabric network via one or more underlying logical networks.

In certain embodiments, the home environment 30 may also include a variety of noncommunicating legacy appliances 68, such as old conventional washer/dryers, refrigerators, and the like which can be controlled, albeit coarsely (ON/OFF), by virtue of the wall plug interfaces 56. The home environment 30 may further include a variety of partially communicating legacy appliances 70, such as infra-red (IR) controlled wall air conditioners or other IR-controlled devices, which can be controlled by IR signals provided by the hazard detection units 50 or the light switches 54.

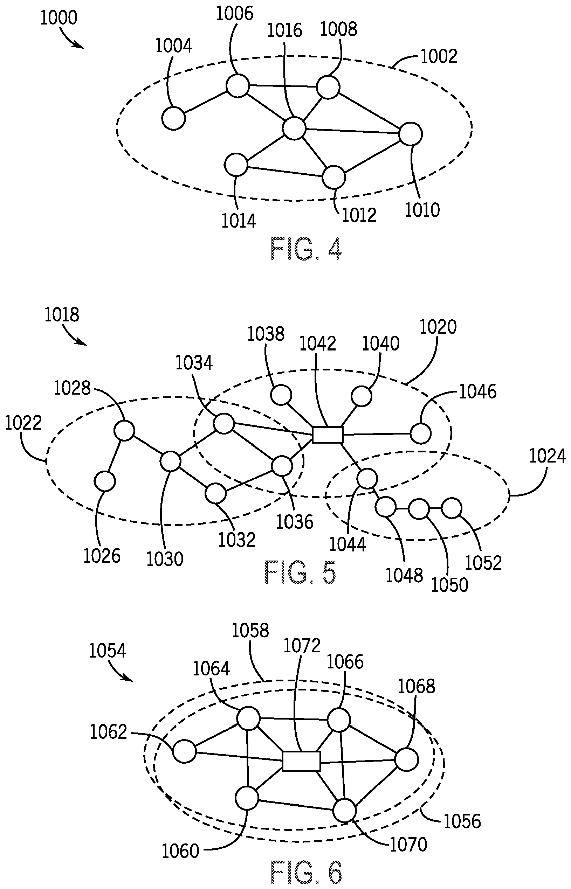

As mentioned above, each of the example devices 10 described above may form a portion of a fabric network. Generally, the fabric network may be part of an Open Systems Interconnection (OSI) model 90 as depicted in FIG. 4. The OSI model 90 illustrates functions of a communication system with respect to abstraction layers. That is, the OSI model may specify a networking framework or how communications between devices may be implemented. In one embodiment, the OSI model may include six layers: a physical layer 92, a data link layer 94, a network layer 96, a transport layer 98, a platform layer 100, and an application layer 102. Generally, each layer in the OSI model 90 may serve the layer above it and may be served by the layer below it.

Keeping this in mind, the physical layer 92 may provide hardware specifications for devices that may communicate with each other. As such, the physical layer 92 may establish how devices may connect to each other, assist in managing how communication resources may be shared between devices, and the like.

The data link layer 94 may specify how data may be transferred between devices. Generally, the data link layer 94 may provide a way in which data packets being transmitted may be encoded and decoded into bits as part of a transmission protocol.

The network layer 96 may specify how the data being transferred to a destination node is routed. The network layer 96 may also provide a security protocol that may maintain the integrity of the data being transferred. The efficient network layer discussed above corresponds to the network layer 96. In certain embodiments, the network layer 96 may be completely independent of the platform layer 100 and include any suitable IPv6 network type (e.g., WiFi, Ethernet, HomePlug, 802.15.4, etc).

The transport layer 98 may specify a transparent transfer of the data from a source node to a destination node. The transport layer 98 may also control how the transparent transfer of the data remains reliable. As such, the transport layer 98 may be used to verify that data packets intended to transfer to the destination node indeed reached the destination node. Example protocols that may be employed in the transport layer 98 may include Transmission Control Protocol (TCP) and User Datagram Protocol (UDP).

The platform layer 100 includes the fabric network and establishes connections between devices according to the protocol specified within the transport layer 98 and may be agnostic of the network type used in the network layer 96. The platform layer 100 may also translate the data packets into a form that the application layer 102 may use. The application layer 102 may support a software application that may directly interface with the user. As such, the application layer 102 may implement protocols defined by the software application. For example, the software application may provide serves such as file transfers, electronic mail, and the like.

## II. Fabric Device Interconnection

As discussed above, a fabric may be implemented using one or more suitable communications protocols, such as IPv6 protocols. In fact, the fabric may be partially or completely agnostic to the underlying technologies (e.g., network types or communication protocols) used to implement the fabric. Within the one or more communications protocols, the fabric may be implemented using one or more network types used to communicatively couple electrical devices using wireless or wired connections. For example, certain embodiments of the fabric may include Ethernet, WiFi, 802.15.4, ZigBee®, ISA100.1 1a, WirelessHART, MiWi™, power-line networks, and/or other suitable network types. Within the fabric devices (e.g., nodes) can exchange packets of information with other devices (e.g., nodes) in the fabric, either directly or via intermediary nodes, such as intelligent thermostats, acting as IP routers. These nodes may include manufacturer devices (e.g., thermostats and smoke detectors) and/or customer devices (e.g., phones, tablets, computers, etc.). Additionally, some devices may be "always on" and continuously powered using electrical connections. Other devices may have partially reduced power usage (e.g., medium duty cycle) using a reduced/intermittent power connection, such as a thermostat or doorbell power connection. Finally, some devices may have a short duty cycle and run solely on battery power. In other words, in certain embodiments, the fabric may include heterogeneous devices that may be connected to one or more sub-networks according to connection type and/or desired power usage. FIGS. 4-6 illustrate three embodiments that may be used to connect electrical devices via one or more sub-networks in the fabric.

**A. Single Network Topology**

FIG. 4 illustrates an embodiment of the fabric 1000 having a single network topology. As illustrated, the fabric 1000 includes a single logical network 1002. The network 1002 could include Ethernet, WiFi, 802.15.4, power-line networks, and/or other suitable network types in the IPv6 protocols. In fact, in some embodiments where the network 1002 includes a WiFi or Ethernet network, the network 1002 may span multiple WiFi and/or Ethernet segments that are bridged at a link layer.
The network 1002 includes one or more nodes 1004, 1006, 1008, 1010, 1012, 1014, and 1016, referred to collectively as 1004 - 1016. Although the illustrated network 1002 includes seven nodes, certain embodiments of the network 1002 may include one or more nodes interconnected using the network 1002. Moreover, if the network 1002 is a WiFi network, each of the nodes 1004 - 1016 may be interconnected using the node 1016 (e.g., WiFi router) and/or paired with other nodes using WiFi Direct (i.e., WiFi P2P).

**B. Star Network Topology**

FIG. 5 illustrates an alternative embodiment of fabric 1000 as a fabric 1018 having a star network topology. The fabric 1018 includes a hub network 1020 that joins together two periphery networks 1022 and 1024. The hub network 1020 may include a home network, such as WiFi/Ethernet network or power line network. The periphery networks 1022 and 1024 may additional network connection types different of different types than the hub network 1020. For example, in some embodiments, the hub network 1020 may be a WiFi/Ethernet network, the periphery network 1022 may include an 802.15.4 network, and the periphery network 1024 may include a power line network, a ZigBee® network, a ISA100.11a network, a WirelessHART, network, or a MiWi™ network. Moreover, although the illustrated embodiment of the fabric 1018 includes three networks, certain embodiments of the fabric 1018 may include any number of networks, such as 2, 3, 4, 5, or more networks. In fact, some embodiments of the fabric 1018 include multiple periphery networks of the same type.
Although the illustrated fabric 1018 includes fourteen nodes, each referred to individually by reference numbers 1024 - 1052, respectively, it should be understood that the fabric 1018 may include any number of nodes. Communication within each network 1020, 1022, or 1024, may occur directly between devices and/or through an access point, such as node 1042 in a WiFi/Ethernet network. Communications between periphery network 1022 and 1024 passes through the hub network 1020 using inter-network routing nodes. For example, in the illustrated embodiment, nodes 1034 and 1036 are be connected to the periphery network 1022 using a first network connection type (e.g., 802.15.4) and to the hub network 1020 using a second network connection type (e.g., WiFi) while the node 1044 is connected to the hub network 1020 using the second network connection type and to the periphery network 1024 using a third network connection type (e.g., power line). For example, a message sent from node 1026 to node 1052 may pass through nodes 1028, 1030, 1032, 1036, 1042, 1044, 1048, and 1050 in transit to node 1052.

**C. Overlapping Networks Topology**

FIG. 6 illustrates an alternative embodiment of the fabric 1000 as a fabric 1054 having an overlapping networks topology. The fabric 1054 includes networks 1056 and 1058. As illustrated, each of the nodes 1062, 1064, 1066, 1068, 1070, and 1072 may be connected to each of the networks. In other embodiments, the node 1072 may include an access point for an Ethernet/WiFi network rather than an end point and may not be present on either the network 1056 or network 1058, whichever is not the Ethernet/WiFi network. Accordingly, a communication from node 1062 to node 1068 may be passed through network 1056, network 1058, or some combination thereof. In the illustrated embodiment, each node can communicate with any other node via any network using any network desired. Accordingly, unlike the star network topology of FIG. 5, the overlapping networks topology may communicate directly between nodes via any network without using inter-network routing.

**D. Fabric Network Connection to Services**

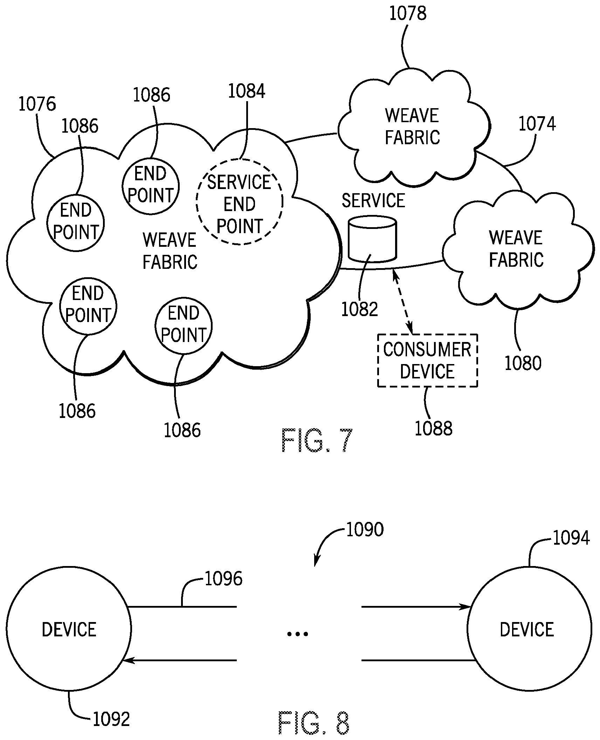

In addition to communications between devices within the home, a fabric (e.g., fabric 1000) may include services that may be located physically near other devices in the fabric or physically remote from such devices. The fabric connects to these services through one or more service end points. FIG. 7 illustrates an embodiment of a service 1074 communicating with fabrics 1076, 1078, and 1080. The service 1074 may include various services that may be used by devices in fabrics 1076, 1078, and/or 1080. For example, in some embodiments, the service 1074 may be a time of day service that supplies a time of day to devices, a weather service to provide various weather data (e.g., outside temperature, sunset, wind information, weather forecast, etc.), an echo service that "pings" each device, data management services, device management services, and/or other suitable services. As illustrated, the service 1074 may include a server 1082 (e.g., web server) that stores/accesses relevant data and passes the information through a service end point 1084 to one or more end points 1086 in a fabric, such as fabric 1076. Although the illustrated embodiment only includes three fabrics with a single server 1082, it should be appreciated that the service 1074 may connect to any number of fabrics and may include servers in addition to the server 1082 and/or connections to additional services.

In certain embodiments, the service 1074 may also connect to a consumer device 1088, such as a phone, tablet, and/or computer. The consumer device 1088 may be used to connect to the service 1074 via a fabric, such as fabric 1076, an Internet connection, and/or some other suitable connection method. The consumer device 1088 may be used to access data from one or more end points (e.g., electronic devices) in a fabric either directly through the fabric or via the service 1074. In other words, using the service 1074, the consumer device 1088 may be used to access/manage devices in a fabric remotely from the fabric.

**E. Communication Between Devices in a Fabric**

As discussed above, each electronic device or node may communicate with any other node in the fabric, either directly or indirectly depending upon fabric topology and network connection types. Additionally, some devices (e.g., remote devices) may communicate through a service to communicate with other devices in the fabric. FIG. 8 illustrates an embodiment of a communication 1090 between two devices 1092 and 1094. The communication 1090 may span one or more networks either directly or indirectly through additional devices and/or services, as described above. Additionally, the communication 1090 may occur over an appropriate communication protocol, such as IPv6, using one or more transport protocols. For example, in some embodiments the communication 1090 may include using the transmission control protocol (TCP) and/or the user datagram protocol (UDP). In some embodiments, the device 1092 may transmit a first signal 1096 to the device 1094 using a connectionless protocol (e.g., UDP). In certain embodiments, the device 1092 may communicate with the device 1094 using a connection-oriented protocol (e.g., TCP). Although the illustrated communication 1090 is depicted as a bi-directional connection, in some embodiments, the communication 1090 may be a uni-directional broadcast.

i. **Unique Local Address**

As discussed above, data transmitted within a fabric received by a node may be redirected or passed through the node to another node depending on the desired target for the communication. In some embodiments, the transmission of the data may be intended to be broadcast to all devices. In such embodiments, the data may be retransmitted without further processing to determine whether the data should be passed along to another node. However, some data may be directed to a specific endpoint. To enable addressed messages to be transmitted to desired endpoints, nodes may be assigned identification information.

Each node may be assigned a set of link-local addresses (LLA), one assigned to each network interface. These LLAs may be used to communicate with other nodes on the same network. Additionally, the LLAs may be used for various communication procedures, such as IPv6 Neighbor Discovery Protocol. In addition to LLAs, each node is assigned a unique local address (ULA).

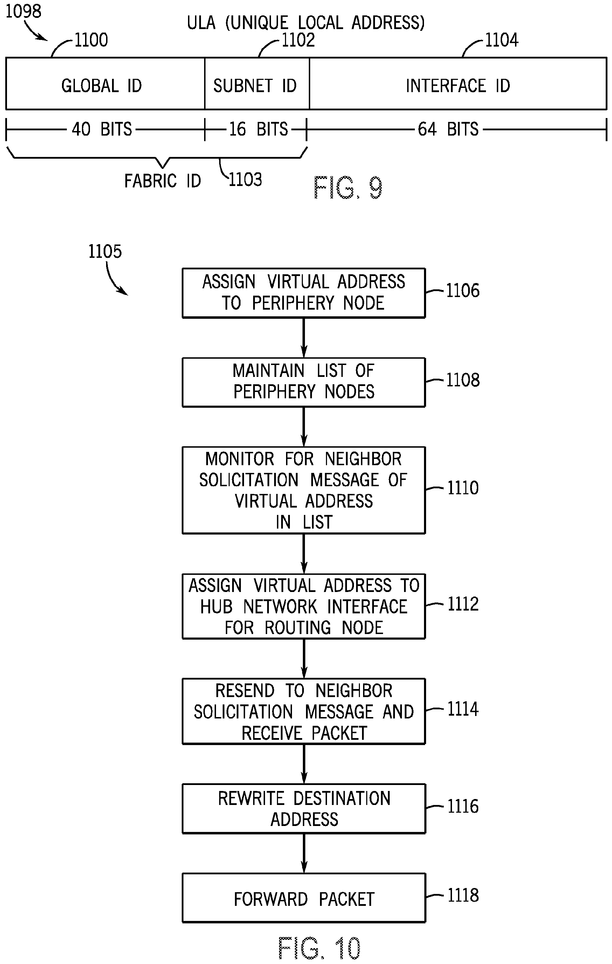

FIG. 9 illustrates an embodiment of a unique local address (ULA) 1098 that may be used to address each node in the fabric. In certain embodiments, the ULA 1098 may be formatted as an IPv6 address format containing 128 bits divided into a global ID 1100, a subnet ID 1102, and an interface ID 1104. The global ID 1100 includes 40 bits and the subnet ID 1102 includes 16 bits. The global ID 1100 and subnet ID 1102 together form a fabric ID 1103 for the fabric.

The fabric ID 1103 is a unique 64-bit identifier used to identify a fabric. The fabric ID 1103 may be generated at creation of the associated fabric using a pseudo-random algorithm. For example, the pseudo-random algorithm may 1) obtain the current time of day in 64-bit NTP format, 2) obtain the interface ID 1104 for the device, 3) concatenate the time of day with the interface ID 1104 to create a key, 4) compute and SHA-1 digest on the key resulting in 160 bits, 5) use the least significant 40 bits as the global ID 1100, and 6) concatenate the ULA and set the least significant bit to 1 to create the fabric ID 1103. In certain embodiments, once the fabric ID 1103 is created with the fabric, the fabric ID 1103 remains until the fabric is dissolved.

The global ID 1100 identifies the fabric to which the node belongs. The subnet ID 1102 identifies logical networks within the fabric. The subnet ID 1102 may be assigned monotonically starting at one with the addition of each new logical network to the fabric. For example, a WiFi network may be identified with a hex value of 0x01, and a later connected 802.15.4 network may be identified with a hex value of 0x02 continuing on incrementally upon the connection of each new network to the fabric.

Finally, the ULA 1098 includes an interface ID 1104 that includes 64 bits. The interface ID 1104 may be assigned using a globally-unique 64-bit identifier according to the IEEE EUI-64 standard. For example, devices with IEEE 802 network interfaces may derive the interface ID 1104 using a burned-in MAC address for the devices "primary interface." In some embodiments, the designation of which interface is the primary interface may be determined arbitrarily. In other embodiments, an interface type (e.g., WiFi) may be deemed the primary interface, when present. If the MAC address for the primary interface of a device is 48 bits rather than 64-bit, the 48-bit MAC address may be converted to a EUI-64 value via encapsulation (e.g., organizationally unique identifier encapsulating). In consumer devices (e.g., phones or computers), the interface ID 1104 may be assigned by the consumer devices' local operating systems.

### ii. Routing Transmissions Between Logical Networks

As discussed above in relation to a star network topology, inter-network routing may occur in communication between two devices across logical networks. In some embodiments, inter-network routing is based on the subnet ID 1102. Each inter-networking node (e.g., node 1034 of FIG. 5) may maintain a list of other routing nodes (e.g., node B 14 of FIG. 5) on the hub network 1020 and their respective attached periphery networks (e.g., periphery network 1024 of FIG. 5). When a packet arrives addressed to a node other than the routing node itself, the destination address (e.g., address for node 1052 of FIG. 5) is compared to the list of network prefixes and a routing node (e.g., node 1044) is selected that is attached to the desired network (e.g., periphery network 1024). The packet is then forwarded to the selected routing node. If multiple nodes (e.g., 1034 and 1036) are attached to the same periphery network, routing nodes are selected in an alternating fashion.

Additionally, inter-network routing nodes may regularly transmit Neighbor Discovery Protocol (NDP) router advertisement messages on the hub network to alert consumer devices to the existence of the hub network and allow them to acquire the subnet prefix. The router advertisements may include one or more route information options to assist in routing information in the fabric. For example, these route information options may inform consumer devices of the existence of the periphery networks and how to route packets the periphery networks.

In addition to, or in place of route information options, routing nodes may act as proxies to provide a connection between consumer devices and devices in periphery networks, such as the process 1105 as illustrated in FIG. 10. As illustrated, the process 1105 includes each periphery network device being assigned a virtual address on the hub network by combining the subnet ID 1102 with the interface ID 1104 for the device on the periphery network (block 1106). To proxy using the virtual addresses, routing nodes maintain a list of all periphery nodes in the fabric that are directly reachable via one of its interfaces (block 1108). The routing nodes listen on the hub network for neighbor solicitation messages requesting the link address of a periphery node using its virtual address (block 1110). Upon receiving such a message, the routing node attempts to assign the virtual address to its hub interface after a period of time (block 1112). As part of the assignment, the routing node performs duplicate address detection so as to block proxying of the virtual address by more than one routing node. After the assignment, the routing node responds to the neighbor solicitation message and receives the packet (block 1114). Upon receiving the packet, the routing node rewrites the destination address to be the real address of the periphery node (block 1116) and forwards the message to the appropriate interface (block 1118).

### iii. Consumer Devices Connecting to a Fabric

To join a fabric, a consumer device may discover an address of a node already in the fabric that the consumer device wants to join. Additionally, if the consumer device has been disconnected from a fabric for an extended period of time may need to rediscover nodes on the network if the fabric topology/layout has changed. To aid in discovery/rediscovery, fabric devices on the hub network may publish Domain Name System-Service Discovery (DNS-SD) records via mDNS that advertise the presence of the fabric and provide addresses to the consumer device.

### III. Data Transmitted in the Fabric

After creation of a fabric and address creation for the nodes, data may be transmitted through the fabric. Data passed through the fabric may be arranged in a format common to all messages and/or common to specific types of conversations in the fabric. In some embodiments, the message format may enable one-to-one mapping to JavaScript Object Notation (JSON) using a TLV serialization format discussed below. Additionally, although the following data frames are described as including specific sizes, it should be noted that lengths of the data fields in the data frames may be varied to other suitable bit-lengths.

It should be understood that each of the following data frames, profiles, and/or formats discussed below may be stored in memory (e.g., memory of the device 10) prior to and/or after transmission of a message. In other words, although the data frame, profiles, and formats may be generally discussed as transmissions of data, they may also be physically stored (e.g., in a buffer) before, during, and/or after transmission of the data frame, profiles, and/or formats. Moreover, the following data frames, profiles, schemas, and/or formats may be stored on a non-transitory, computer-readable medium that allows an electronic device to access the data frames, profiles, schemas, and/or formats. For example, instructions for formatting the data frames, profiles, schemas, and/or formats may be stored in any suitable computer-readable medium, such as in memory for the device 10, memory of another device, a portable memory device (e.g., compact disc, flash drive, etc.), or other suitable physical device suitable for storing the data frames, profiles, schemas, and/or formats.

## A. Security

Along with data intended to be transferred, the fabric may transfer the data with additional security measures such as encryption, message integrity checks, and digital signatures. In some embodiments, a level of security supported for a device may vary according to physical security of the device and/or capabilities of the device. In certain embodiments, messages sent between nodes in the fabric may be encrypted using the Advanced Encryption Standard (AES) block cipher operating in counter mode (AES-CTR) with a 128-bit key. As discussed below, each message contains a 32-bit message id. The message id may be combined with a sending nodes id to form a nonce for the AES-CTR algorithm. The 32-bit counter enables 4 billion messages to be encrypted and sent by each node before a new key is negotiated.

In some embodiments, the fabric may insure message integrity using a message authentication code, such as HMAC-SHA-1, that may be included in each encrypted message. In some embodiments, the message authentication code may be generated using a 160-bit message integrity key that is paired one-to-one with the encryption key. Additionally, each node may check the message id of incoming messages against a list of recently received ids maintained on a node-by-node basis to block replay of the messages.

## B. Tag Length Value (TLV) Formatting

To reduce power consumption, it is desirable to send at least a portion of the data sent over the fabric that compactly while enabling the data containers to flexibly represents data that accommodates skipping data that is not recognized or understood by skipping to the next location of data that is understood within a serialization of the data. In certain embodiments, tag-length-value (TLV) formatting may be used to compactly and flexibly encode/decode data. By storing at least a portion of the transmitted data in TLV, the data may be compactly and flexibly stored/sent along with low encode/decode and memory overhead, as discussed below in reference to Table 7. In certain embodiments, TLV may be used for some data as flexible, extensible data, but other portions of data that is not extensible may be stored and sent in an understood standard protocol data unit (PDU).

Data formatted in a TLV format may be encoded as TLV elements of various types, such as primitive types and container types. Primitive types include data values in certain formats, such as integers or strings. For example, the TLV format may encode: 1, 2, 3, 4, or 8 byte signed/unsigned integers, UTF-8 strings, byte strings, single/double-precision floating numbers (e.g., IEEE 754-1985 format), boolean, null, and other suitable data format types. Container types include collections of elements that are then sub-classified as container or primitive types. Container types may be classified into various categories, such as dictionaries, arrays, paths or other suitable types for grouping TLV elements, known as members. A dictionary is a collection of members each having distinct definitions and unique tags within the dictionary. An array is an ordered collection of members with implied definitions or no distinct definitions. A path is an ordered collection of members that described how to traverse a tree of TLV elements.

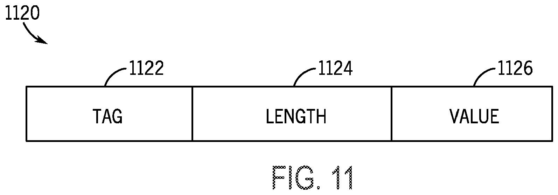

As illustrated in FIG. 11, an embodiment of a TLV packet 1120 includes three data fields: a tag field 1122, a length field 1124, and a value field 1126. Although the illustrated fields 1122, 1124, and 1126 are illustrated as approximately equivalent in size, the size of each field may be variable and vary in size in relation to each other. In other embodiments, the TLV packet 1120 may further include a control byte before the tag field 1122.

In embodiments having the control byte, the control byte may be sub-divided into an element type field and a tag control field. In some embodiments, the element type field includes 5 lower bits of the control byte and the tag control field occupies the upper 3 bits. The element type field indicates the TLV element's type as well as the how the length field 1124 and value field 1126 are encoded. In certain embodiments, the element type field also encodes Boolean values and/or null values for the TLV. For example, an embodiment of an enumeration of element type field is provided in Table 1 below.

**Table 1.** Example element type field values.

| 7 | 6 | 5 | 4 | 3 | 2 | 1 | 0 | |
|---|---|---|---|---|---|---|---|---|
| | | | 0 | 0 | 0 | 0 | 0 | Signed Integer, 1byte value |
| | | | 0 | 0 | 0 | 0 | 1 | Signed Integer, 2byte value |
| | | | 0 | 0 | 0 | 1 | 0 | Signed Integer, 4byte value |
| | | | 0 | 0 | 0 | 1 | 1 | Signed Integer, 8byte value |
| | | | 0 | 0 | 1 | 0 | 0 | Unsigned Integer, 1byte value |
| | | | 0 | 0 | 1 | 0 | 1 | Unsigned Integer, 2byte value |
| | | | 0 | 0 | 1 | 1 | 0 | Unsigned Integer, 4byte value |
| | | | 0 | 0 | 1 | 1 | 1 | Unsigned Integer, 8byte value |
| | | | 0 | 1 | 0 | 0 | 0 | Boolean False |
| | | | 0 | 1 | 0 | 0 | 1 | Boolean True |
| | | | 0 | 1 | 0 | 1 | 0 | Floating Point Number, 4byte value |
| | | | 0 | 1 | 0 | 1 | 1 | Floating Point Number, 8byte value |
| | | | 0 | 1 | 1 | 0 | 0 | UTF8-String, 1byte length |
| | | | 0 | 1 | 1 | 0 | 1 | UTF8-String, 2byte length |
| | | | 0 | 1 | 1 | 1 | 0 | UTF8-String, 4byte length |
| | | | 0 | 1 | 1 | 1 | 1 | UTF8-String, 8byte length |
| | | | 1 | 0 | 0 | 0 | 0 | Byte String, 1byte length |
| | | | 1 | 0 | 0 | 0 | 1 | Byte String, 2byte length |
| | | | 1 | 0 | 0 | 1 | 0 | Byte String, 4byte length |
| | | | 1 | 0 | 0 | 1 | 1 | Byte String, 8byte length |
| | | | 1 | 0 | 1 | 0 | 0 | Null |
| | | | 1 | 0 | 1 | 0 | 1 | Dictionary |
| | | | 1 | 0 | 1 | 1 | 0 | Array |
| | | | 1 | 0 | 1 | 1 | 1 | Path |
| | | | 1 | 1 | 0 | 0 | 0 | End of Container |

The tag control field indicates a form of the tag in the tag field 1122 assigned to the TLV element (including a zero-length tag). Examples, of tag control field values are provided in Table 2 below.

**Table 2.** Example values for tag control field.

| 7 | 6 | 5 | 4 | 3 | 2 | 1 | 0 | |
|---|---|---|---|---|---|---|---|---|
| 0 | 0 | 0 | | | | | | Anonymous, 0 bytes |
| 0 | 0 | 1 | | | | | | Context-specific Tag, 1 byte |
| 0 | 1 | 0 | | | | | | Core Profile Tag, 2 bytes |
| 0 | 1 | 1 | | | | | | Core Profile Tag, 4 bytes |
| 1 | 0 | 0 | | | | | | Implicit Profile Tag, 2 bytes |
| 1 | 0 | 1 | | | | | | Implicit Profile Tag, 4 bytes |
| 1 | 1 | 0 | | | | | | Fully-qualified Tag, 6 bytes |
| 1 | 1 | 1 | | | | | | Fully-qualified Tag, 8 bytes |

In other words, in embodiments having a control byte, the control byte may indicate a length of the tag.

In certain embodiments, the tag field 1122 may include zero to eight bytes, such as eight, sixteen, thirty two, or sixty four bits. In some embodiments, the tag of the tag field may be classified as profile-specific tags or context-specific tags. Profile-specific tags identify elements globally using a vendor Id, a profile Id, and/or tag number as discussed below. Context-specific tags identify TLV elements within a context of a containing dictionary element and may include a single-byte tag number. Since context-specific tags are defined in context of their containers, a single context-specific tag may have different interpretations when included in different containers. In some embodiments, the context may also be derived from nested containers.

In embodiments having the control byte, the tag length is encoded in the tag control field and the tag field 1122 includes a possible three fields: a vendor Id field, a profile Id field, and a tag number field. In the fully-qualified form, the encoded tag field 1122 includes all three fields with the tag number field including 16 or 32 bits determined by the tag control field. In the implicit form, the tag includes only the tag number, and the vendor Id and profile number are inferred from the protocol context of the TLV element. The core profile form includes profile-specific tags, as discussed above. Context-specific tags are encoded as a single byte conveying the tag number. Anonymous elements have zero-length tag fields 1122.

In some embodiments without a control byte, two bits may indicate a length of the tag field 1122, two bits may indicate a length of the length field 1124, and four bits may indicate a type of information stored in the value field 1126. An example of possible encoding for the upper 8 bits for the tag field is illustrated below in Table 3.

**Table 3.** Tag field of a TLV packet

| Byte | | | | | | | | |
|---|---|---|---|---|---|---|---|---|
| 0 | | | | | | | | |
| 7 | 6 | 5 | 4 | 3 | 2 | 1 | 0 | Description |
| 0 | 0 | - | - | - | - | - | - | Tag is 8 bits |
| 0 | 1 | - | - | - | - | - | - | Tag is 16 bits |
| 1 | 0 | - | - | - | - | - | - | Tag is 32 bits |
| 1 | 1 | - | - | - | - | - | - | Tag is 64 bits |
| - | - | 0 | 0 | - | - | - | - | Length is 8 bits |
| - | - | 0 | 1 | - | - | - | - | Length is 16 bits |
| - | - | 1 | 0 | - | - | - | - | Length is 32 bits |
| - | - | 1 | 1 | - | - | - | - | Length is 64 bits |
| - | - | | | 0 | 0 | 0 | 0 | Boolean |
| - | - | | | 0 | 0 | 0 | 1 | Fixed 8-bit Unsigned |
| - | - | | | 0 | 0 | 1 | 0 | Fixed 8-bit Signed |
| - | - | | | 0 | 0 | 1 | 1 | Fixed 16-bit Unsigned |
| - | - | | | 0 | 1 | 0 | 0 | Fixed 16-bit Signed |
| - | - | | | 0 | 1 | 0 | 1 | Fixed 32-bit Unsigned |
| - | - | | | 0 | 1 | 1 | 0 | Fixed 32-bit Signed |
| - | - | | | 0 | 1 | 1 | 1 | Fixed 64-bit Unsigned |
| - | - | | | 1 | 0 | 0 | 0 | Fixed 64-bit Signed |
| - | - | | | 1 | 0 | 0 | 1 | 32-bit Floating Point |
| - | - | | | 1 | 0 | 1 | 0 | 64-bit Floating Point |
| - | - | | | 1 | 0 | 1 | 1 | UTF-8 String |
| - | - | | | 1 | 1 | 0 | 0 | Opaque Data |
| - | - | | | 1 | 1 | 0 | 1 | Container |

As illustrated in Table 3, the upper 8 bits of the tag field 1122 may be used to encode information about the tag field 1122, length field 1124, and the value field 1126, such that the tag field 112 may be used to determine length for the tag field 122 and the length fields 1124. Remaining bits in the tag field 1122 may be made available for user-allocated and/or userassigned tag values.

The length field 1124 may include eight, sixteen, thirty two, or sixty four bits as indicated by the tag field 1122 as illustrated in Table 3 or the element field as illustrated in Table 2. Moreover, the length field 1124 may include an unsigned integer that represents a length of the encoded in the value field 1126. In some embodiments, the length may be selected by a device sending the TLV element. The value field 1126 includes the payload data to be decoded, but interpretation of the value field 1126 may depend upon the tag length fields, and/or control byte. For example, a TLV packet without a control byte including an 8 bit tag is illustrated in Table 4 below for illustration.

**Table 4.** Example of a TLV packet including an 8-bit tag

| Tag | Length | Value | Description |
|-----|--------|-------|-------------|
| 0x0d | 0x24 | | |
| 0x09 | 0x04 | 0x42 95 00 00 | 74.5 |
| 0x09 | 0x04 | 0x42 98 66 66 | 76.2 |
| 0x09 | 0x04 | 0x42 94 99 9a | 74.3 |
| 0x09 | 0x04 | 0x42 98 99 9a | 76.3 |
| 0x09 | 0x04 | 0x42 95 33 33 | 74.6 |
| 0x09 | 0x04 | 0x42 98 33 33 | 76.1 |

As illustrated in Table 4, the first line indicates that the tag field 1122 and the length field 1124 each have a length of 8 bits. Additionally, the tag field 1122 indicates that the tag type is for the first line is a container (e.g., the TLV packet). The tag field 1124 for lines two through six indicate that each entry in the TLV packet has a tag field 1122 and length field 1124 consisting of 8 bits each. Additionally, the tag field 1124 indicates that each entry in the TLV packet has a value field 1126 that includes a 32-bit floating point. Each entry in the value field 1126 corresponds to a floating number that may be decoded using the corresponding tag field 1122 and length field 1124 information. As illustrated in this example, each entry in the value field 1126 corresponds to a temperature in Fahrenheit. As can be understood, by storing data in a TLV packet as described above, data may be transferred compactly while remaining flexible for varying lengths and information as may be used by different devices in the fabric. Moreover, in some embodiments, multi-byte integer fields may be transmitted in little-endian order or big-endian order.

By transmitting TLV packets in using an order protocol (e.g., little-endian) that may be used by sending/receiving device formats (e.g., JSON), data transferred between nodes may be transmitted in the order protocol used by at least one of the nodes (e.g., little endian). For example, if one or more nodes include ARM or ix86 processors, transmissions between the nodes may be transmitted using little-endian byte ordering to reduce the use of byte reordering. By reducing the inclusion of byte reordering, the TLV format enable devices to communicate using less power than a transmission that uses byte reordering on both ends of the transmission. Furthermore, TLV formatting may be specified to provide a one-to-one translation between other data storage techniques, such as JSON+ Extensible Markup Language (XML). As an example, the TLV format may be used to represent the following XML Property List:

```
<?xml version="1.0" encoding="UTF-8"?>
<!DOCTYPE plist PUBLIC "-//Apple Computer//DTD PLIST 1.0//EN"
"http://www.apple.com/DTDs/PropertyList-1.0.dtd">
<plist version="1.0">
<dict>
    <key>OfflineMode</key>
    <false/>
    <key>Network</key>
    <dict>
        <key>IPv4</key>
        <dict>
                <key>Method</key>
                <string>dhcp</string>
        </dict>
        <key>IPv6</key>
```

```
            <dict>
                <key>Method</key>
                <string>auto</string>
            </dict>
        </dict>
        <key>Technologies</key>
        <dict>
            <key>wifi</key>
            <dict>
                <key>Enabled</key>
                <true/>
                <key>Devices</key>
                <dict>
                    <key>wifi_18b4300008b027</key>
                    <dict>
                    <key>Enabled</key>
                    <true/>
                    </dict>
                </dict>
                <key>Services</key>
                <array>
                    <string>wifi_18b4300008b027_3939382d33204 16
                c70696e652054657 272646365</string>
                </array>
            </dict>
            <key>802.15.4</key>
            <dict>
                <key>Enabled</key>
                <true/>
                <key>Devices</key>
                <dict>
                    <key>802.15.4_18b43000000002fac4</key>
                    <dict>
                        <key>Enabled</key>
                        <true/>
                    </dict>
                </dict>
                <key>Services</key>
                <array>
                    <string>802.15.4_18b43000000002fac4_3 939382d332041
                    6c70696e6520546572</string>
                </array>
            </dict>
        </dict>
        <key>Services</key>
        <dict>
        <key>wifi_18b4300008b027_3939382d3320416c70696e6520546572
        72646365</key>
            <dict>
                <key>Name</key>
                <string>998-3 Alpine Terrace</string>
                <key>SSID</key>
                <data>3939382d3320416c70696e652054657272646365
                </data>
                <key>Frequency</key>
                <integer>2462</integer>
                <key>AutoConnect</key>
                <true/>
                <key>Favorite</key>
                <true/>
                <key>Error</key>
                <string/>
                <key>Network</key>
```

```
        <dict>
            <key>IPv4</key>
            <dict>
                    <key>DHCP</key>
                    <dict>
                            <key>LastAddress</key>
                            <data>0a02001e</data>
                    </dict>
            </dict>
            <key>IPv6</key>
            <dict/>
        </dict>
    </dict>
    <key>802.15.4_18b43000000002fac4_3939382d3320416c70696e
    6520546572</key>
    <dict>
        <key>Name</key>
        <string>998-3 Alpine Ter</string>
        <key>EPANID</key>
        <data>3939382d3320416c70696e6520546572</data>
        <key>Frequency</key>
        <integer>2412</integer>
        <key>AutoConnect</key>
        <true/>
        <key>Favorite</key>
        <true/>
        <key>Error</key>
        <string/>
        <key>Network</key>
        <dict/>
    </dict>
        </dict>
    </dict>
</dict>
</plist>
```

As an example, the above property list may be represented in tags of the above described TLV format (without a control byte) according to Table 5 below.

**Table 5.** Example representation of the XML Property List in TLV format

| XML Key | Tag Type | Tag Number |
|---|---|---|
| OfflineMode | Boolean | 1 |
| IPv4 | Container | 3 |
| IPv6 | Container | 4 |
| Method | String | 5 |
| Technologies | Container | 6 |
| WiFi | Container | 7 |
| 802.15.4 | Container | 8 |
| Enabled | Boolean | 9 |
| Devices | Container | 10 |
| ID | String | 11 |
| Services | Container | 12 |
| Name | String | 13 |
| SSID | Data | 14 |
| EPANID | Data | 15 |

(continued)

| XML Key | Tag Type | Tag Number |
|---|---|---|
| Frequency | 16-bit Unsigned | 16 |
| AutoConnect | Boolean | 17 |
| Favorite | Boolean | 18 |
| Error | String | 19 |
| DHCP | String | 20 |
| LastAddress | Data | 21 |
| Device | Container | 22 |
| Service | Container | 23 |

Similarly, Table 6 illustrates an example of literal tag, length, and value representations for the example XML Property List.

**Table 6.** Example of literal values for tag, length, and value fields for XML Property List

| Tag | Length | Value | Description |
|---|---|---|---|
| 0x40 01 | 0x01 | 0 | OfflineMode |
| 0x4d 02 | 0x14 | | Network |
| 0x4d 03 | 0x07 | | Network.IPv4 |
| 0x4b 05 | 0x04 | "dhcp" | Network.IPv4.Method |
| 0x4d 04 | 0x07 | | Network.IPv6 |
| 0x4b 05 | 0x04 | "auto" | Network.IPv6.Method |
| 0x4d 06 | 0xd6 | | Technologies |
| 0x4d 07 | 0x65 | | Technologies.wifi |
| 0x40 09 | 0x01 | 1 | Technologies.wifi.Enabled |
| 0x4d 0a | 0x5e | | Technologies.wifi.Devices |
| 0x4d 16 | 0x5b | | Technologies.wifi.Devices.Device.[0] |
| 0x4b 0b | 0x13 | "wifi_18b43..." | Technologies.wifi.Devices.Device.[0].ID |
| 0x40 09 | 0x01 | 1 | Technologies.wifi.Devices.Device.[0].Enabled |
| 0x4d 0c | 0x3e | | Technologies.wifi.Devices.Device.[0].Services |
| 0x0b | 0x 3c | "wifi_18b43..." | Technologies.wifi.Devices.Device.[0].Services.[0] |
| 0x4d 08 | 0x6b | | Technologies.802.15.4 |
| 0x40 09 | 0x01 | 1 | Technologies.802.15.4.Enabled |
| 0x4d 0a | 0x64 | | Technologies.802.15.4.Devices |
| 0x4d 16 | 0x61 | | Technologies.802.15.4.Devices.Device.[0] |
| 0x4b 0b | 0x1a | "802.15.4_18..." | Technologies.802.15.4.Devices.Device.[0].ID |
| 0x40 09 | 0x01 | 1 | Technologies.802.15.4.Devices.Device.[0].Enabled |
| 0x4d 0c | 0x3d | | Technologies.802.15.4.Devices.Device.[0].Services |
| 0x0b | 0x 3b | "802.15.4_18..." | Technologies.802.15.4.Devices.Device.[0].Services.[0] |
| 0x4d 0c | 0xcb | | Services |
| 0x4d 17 | 0x75 | | Services.Service.[0] |
| 0x4b 0b | 0x13 | "wifi_18b43..." | Services.Service.[0].ID |

(continued)

| Tag | Length | Value | Description |
|---|---|---|---|
| 0x4b 0d | 0x14 | "998-3 Alp..." | Services.Service.[0].Name |
| 0x4c 0f | 0x28 | 3939382d... | Services.Service.[0].SSID |
| 0x45 10 | 0x02 | 2462 | Services.Service.[0].Frequency |
| 0x40 11 | 0x01 | 1 | Services.Service.[0].AutoConnect |
| 0x40 12 | 0x01 | 1 | Services.Service.[0].Favorite |
| 0x4d 02 | 0x0d | | Services.Service.[0].Network |
| 0x4d 03 | 0x0a | | Services.Service.[0].Network.IPv4 |
| 0x4d 14 | 0x07 | | Services.Service.[0].Network.IPv4.DHCP |
| 0x45 15 | 0x04 | 0x0a02001e | Services.Service.[0].Network.IPv4.LastAddress |
| 0x4d 17 | 0x50 | | Services.Service.[1] |
| 0x4b 0b | 0x1a | "802.15.4_18..." | Services.Service.[1].ID |
| 0x4c 0d | 0x10 | "998-3 Alp..." | Services.Service.[1].Name |
| 0x4c 0f | 0x10 | 3939382d... | Services.Service.[1].EPANID |
| 0x45 10 | 0x02 | 2412 | Services.Service.[1].Frequency |
| 0x40 11 | 0x01 | 1 | Services.Service.[1].AutoConnect |
| 0x40 12 | 0x01 | 1 | Services.Service.[1].Favorite |

The TLV format enables reference of properties that may also be enumerated with XML, but does so with a smaller storage size. For example, Table 7 illustrates a comparison of data sizes of the XML Property List, a corresponding binary property list, and the TLV format.

**Table 7.** Comparison of the sizes of property list data sizes.

| List Type | Size in Bytes | Percentage of XML Size |
|---|---|---|
| XML | 2,199 | - |
| Binary | 730 | -66.8% |
| TLV | 450 | -79.5% |

By reducing the amount of data used to transfer data, the TLV format enables the fabric 1000 transfer data to and/or from devices having short duty cycles due to limited power (e.g., battery supplied devices). In other words, the TLV format allows flexibility of transmission while increasing compactness of the data to be transmitted.

### C. General Message Protocol

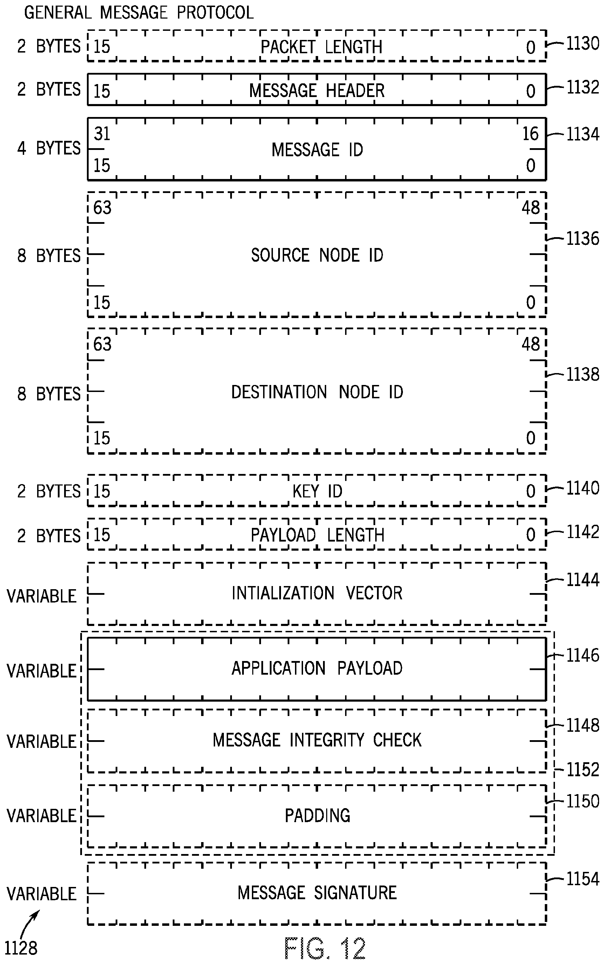

In addition to sending particular entries of varying sizes, data may be transmitted within the fabric using a general message protocol that may incorporate TLV formatting. An embodiment of a general message protocol (GMP) 1128 is illustrated in FIG. 12. In certain embodiments, the general message protocol (GMP) 1128 may be used to transmit data within the fabric. The GMP 1128 may be used to transmit data via connectionless protocols (e.g., UDP) and/or connection-oriented protocols (e.g., TCP). Accordingly, the GMP 1128 may flexibly accommodate information that is used in one protocol while ignoring such information when using another protocol. Moreover, the GMP 1226 may enable omission of fields that are not used in a specific transmission. Data that may be omitted from one or more GMP 1226 transfers is generally indicated using grey borders around the data units. In some embodiments, the multi-byte integer fields may be transmitted in a little-endian order or a big-endian order.

### i. Packet Length

In some embodiments, the GMP 1128 may include a Packet Length field 1130. In some embodiments, the Packet Length field 1130 includes 2 bytes. A value in the Packet Length field 1130 corresponds to an unsigned integer indicating an overall length of the message in bytes, excluding the Packet Length field 1130 itself. The Packet Length field 1130 may be present when the GMP 1128 is transmitted over a TCP connection, but when the GMP 1128 is transmitted over a UDP connection, the message length may be equal to the payload length of the underlying UDP packet obviating the Packet Length field 1130.

### ii. Message Header

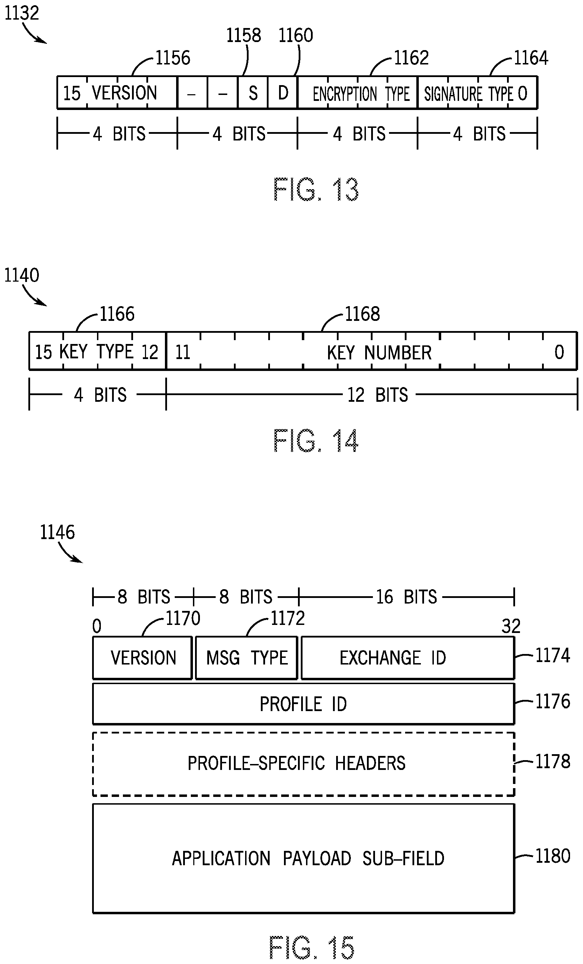

The GMP 1128 may also include a Message Header 1132 regardless of whether the GMP 1128 is transmitted using TCP or UDP connections. In some embodiments, the Message Header 1132 includes two bytes of data arranged in the format illustrated in FIG. 13. As illustrated in FIG. 13, the Message Header 1132 includes a Version field 1156. The Version field 1156 corresponds to a version of the GMP 1128 that is used to encode the message. Accordingly, as the GMP 1128 is updated, new versions of the GMP 1128 may be created, but each device in a fabric may be able to receive a data packet in any version of GMP 1128 known to the device. In addition to the Version field 1156, the Message Header 1132 may include an S Flag field 1158 and a D Flag 1160. The S Flag 1158 is a single bit that indicates whether a Source Node Id (discussed below) field is included in the transmitted packet. Similarly, the D Flag 1160 is a single bit that indicates whether a Destination Node Id (discussed below) field is included in the transmitted packet.

The Message Header 1132 also includes an Encryption Type field 1162. The Encryption Type field 1162 includes four bits that specify which type of encryption/integrity checking applied to the message, if any. For example, 0x0 may indicate that no encryption or message integrity checking is included, but a decimal 0x1 may indicate that AES-128-CTR encryption with HMAC-SHA-1 message integrity checking is included.

Finally, the Message Header 1132 further includes a Signature Type field 1164. The Signature Type field 1164 includes four bits that specify which type of digital signature is applied to the message, if any. For example, 0x0 may indicate that no digital signature is included in the message, but 0x1 may indicate that the Elliptical Curve Digital Signature Algorithm (ECDSA) with Prime256v1 elliptical curve parameters is included in the message.

### iii. Message Id

Returning to FIG. 12, the GMP 1128 also includes a Message Id field 1134 that may be included in a transmitted message regardless of whether the message is sent using TCP or UDP. The Message Id field 1134 includes four bytes that correspond to an unsigned integer value that uniquely identifies the message from the perspective of the sending node. In some embodiments, nodes may assign increasing Message Id 1134 values to each message that they send returning to zero after reaching $2^{32}$ messages.

### iv. Source Node Id

In certain embodiments, the GMP 1128 may also include a Source Node Id field 1136 that includes eight bytes. As discussed above, the Source Node Id field 1136 may be present in a message when the single-bit S Flag 1158 in the Message Header 1132 is set to 1. In some embodiments, the Source Node Id field 1136 may contain the Interface ID 1104 of the ULA 1098 or the entire ULA 1098. In some embodiments, the bytes of the Source Node Id field 1136 are transmitted in an ascending index-value order (e.g., EUI[0] then EUI[1] then EUI[2] then EUI[3], etc.).

### v. Destination Node Id

The GMP 1128 may include a Destination Node Id field 1138 that includes eight bytes. The Destination Node Id field 1138 is similar to the Source Node Id field 1136, but the Destination Node Id field 1138 corresponds to a destination node for the message. The Destination Node Id field 1138 may be present in a message when the single-bit D Flag 1160 in the Message Header 1132 is set to 1. Also similar to the Source Node Id field 1136, in some embodiments, bytes of the Destination Node Id field 1138 may be transmitted in an ascending index-value order (e.g., EUI[0] then EUI[1] then EUI[2] then EUI[3], etc.).

### vi. Key Id

In some embodiments, the GMP 1128 may include a Key Id field 1140. In certain embodiments, the Key Id field 1140 includes two bytes. The Key Id field 1140 includes an unsigned integer value that identifies the encryption/message integrity keys used to encrypt the message. The presence of the Key Id field 1140 may be determined by the value of Encryption Type field 1162 of the Message Header 1132. For example, in some embodiments, when the value for the Encryption Type field 1162 of the Message Header 1132 is 0x0, the Key Id field 1140 may be omitted from the message.

An embodiment of the Key Id field 1140 is presented in FIG. 14. In the illustrated embodiment, the Key Id field 1140 includes a Key Type field 1166 and a Key Number field 1168. In some embodiments, the Key Type field 1166 includes four bits. The Key Type field 1166 corresponds to an unsigned integer value that identifies a type of encryption/message integrity used to encrypt the message. For example, in some embodiments, if the Key Type field 1166 is 0x0, the fabric key is shared by all or most of the nodes in the fabric. However, if the Key Type field 1166 is 0x1, the fabric key is shared by a pair of nodes in the fabric.

The Key Id field 1140 also includes a Key Number field 1168 that includes twelve bits that correspond to an unsigned integer value that identifies a particular key used to encrypt the message out of a set of available keys, either shared or fabric keys.

### vii. **Payload Length**

In some embodiments, the GMP 1128 may include a Payload Length field 1142. The Payload Length field 1142, when present, may include two bytes. The Payload Length field 1142 corresponds to an unsigned integer value that indicates a size in bytes of the Application Payload field. The Payload Length field 1142 may be present when the message is encrypted using an algorithm that uses message padding, as described below in relation to the Padding field.

### viii. **Initialization Vector**

In some embodiments, the GMP 1128 may also include an Initialization Vector (IV) field 1144. The IV field 1144, when present, includes a variable number of bytes of data. The IV field 1144 contains cryptographic IV values used to encrypt the message. The IV field 1144 may be used when the message is encrypted with an algorithm that uses an IV. The length of the IV field 1144 may be derived by the type of encryption used to encrypt the message.

### ix. **Application Payload**

The GMP 1128 includes an Application Payload field 1146. The Application Payload field 1146 includes a variable number of bytes. The Application Payload field 1146 includes application data conveyed in the message. The length of the Application Payload field 1146 may be determined from the Payload Length field 1142, when present. If the Payload Length field 1142 is not present, the length of the Application Payload field 1146 may be determined by subtracting the length of all other fields from the overall length of the message and/or data values included within the Application Payload 1146 (e.g., TLV).

An embodiment of the Application Payload field 1146 is illustrated in FIG. 15. The Application Payload field 1146 includes an APVersion field 1170. In some embodiments, the APVersion field 1170 includes eight bits that indicate what version of fabric software is supported by the sending device. The Application Payload field 1146 also includes a Message Type field 1172. The Message Type field 1172 may include eight bits that correspond to a message operation code that indicates the type of message being sent within a profile. For example, in a software update profile, a 0x00 may indicate that the message being sent is an image announce. The Application Payload field 1146 further includes an Exchange Id field 1174 that includes sixteen bits that corresponds to an exchange identifier that is unique to the sending node for the transaction.

In addition, the Application Payload field 1146 includes a Profile Id field 1176. The Profile Id 1176 indicates a "theme of discussion" used to indicate what type of communication occurs in the message. The Profile Id 1176 may correspond to one or more profiles that a device may be capable of communicating. For example, the Profile Id 1176 may indicate that the message relates to a core profile, a software update profile, a status update profile, a data management profile, a climate and comfort profile, a security profile, a safety profile, and/or other suitable profile types. Each device on the fabric may include a list of profiles which are relevant to the device and in which the device is capable of "participating in the discussion." For example, many devices in a fabric may include the core profile, the software update profile, the status update profile, and the data management profile, but only some devices would include the climate and comfort profile. The APVersion field 1170, Message Type field 1172, the Exchange Id field, the Profile Id field 1176, and the Profile-Specific Header field 1176, if present, may be referred to in combination as the "Application Header."

In some embodiments, an indication of the Profile Id via the Profile Id field 1176 may provide sufficient information to provide a schema for data transmitted for the profile. However, in some embodiments, additional information may be used to determine further guidance for decoding the Application Payload field 1146. In such embodiments, the Application Payload field 1146 may include a Profile-Specific Header field 1178. Some profiles may not use the Profile-Specific Header field 1178 thereby enabling the Application Payload field 1146 to omit the Profile-Specific Header field 1178.

Upon determination of a schema from the Profile Id field 1176 and/or the Profile-Specific Header field 1178, data may be encoded/decoded in the Application Payload sub-field 1180. The Application Payload sub-field 1180 includes the core application data to be transmitted between devices and/or services to be stored, rebroadcast, and/or acted upon by the receiving device/service.

### x. Message Integrity Check

Returning to FIG. 12, in some embodiments, the GMP 1128 may also include a Message Integrity Check (MIC) field 1148. The MIC field 1148, when present, includes a variable length of bytes of data containing a MIC for the message. The length and byte order of the field depends upon the integrity check algorithm in use. For example, if the message is checked for message integrity using HMAC-SHA-1, the MIC field 1148 includes twenty bytes in big-endian order. Furthermore, the presence of the MIC field 1148 may be determined by whether the Encryption Type field 1162 of the Message Header 1132 includes any value other than 0x0.

### xi. Padding

The GMP 1128 may also include a Padding field 1150. The Padding field 1150, when present, includes a sequence of bytes representing a cryptographic padding added to the message to make the encrypted portion of the message evenly divisible by the encryption block size. The presence of the Padding field 1150 may be determined by whether the type of encryption algorithm (e.g., block ciphers in cipher-block chaining mode) indicated by the Encryption Type field 1162 in the Message Header 1132 uses cryptographic padding.

### xii. Encryption

The Application Payload field 1146, the MIC field 1148, and the Padding field 1150 together form an Encryption block 1152. The Encryption block 1152 includes the portions of the message that are encrypted when the Encryption Type field 1162 in the Message Header 1132 is any value other than 0x0.

### xiii. Message Signature

The GMP 1128 may also include a Message Signature field 1154. The Message Signature field 1154, when present, includes a sequence of bytes of variable length that contains a cryptographic signature of the message. The length and the contents of the Message Signature field may be determined according to the type of signature algorithm in use and indicated by the Signature Type field 1164 of the Message Header 1132. For example, if ECDSA using the Prime256v1 elliptical curve parameters is the algorithm in use, the Message Signature field 1154 may include two thirty-two bit integers encoded in little-endian order.

### IV. Profiles and Protocols

As discussed above, one or more schemas of information may be selected upon desired general discussion type for the message. A profile may consist of one or more schemas. For example, one set of schemas of information may be used to encode/decode data in the Application Payload sub-field 1180 when one profile is indicated in the Profile Id field 1176 of the Application Payload 1146. However, a different set of schemas may be used to encode/decode data in the Application Payload sub-field 1180 when a different profile is indicated in the Profile Id field 1176 of the Application Payload 1146.

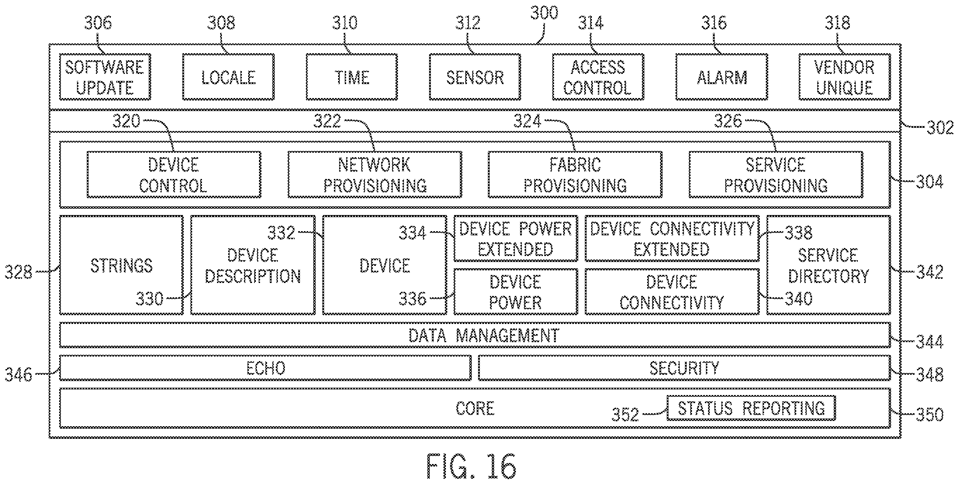

FIG. 16 illustrates a schematic view of a variety of profiles that may be used in various messages. For example, one or more profile schemas may be stored in a profile library 300 that may be used by the devices to encode or decode messages based on a profile ID. The profile library 300 may organize the profiles into groups. For example, an application- and vendor-specific profile group 302 of profiles may be application- and vendor-specific profiles, and a provisioning group 304 of profiles may profiles used to provision networks, services, and/or fabrics. The application- and vendor-specific profile group 302 may include a software update profile 306, a locale profile 308, a time profile 310, a sensor profile 312, an access control profile 314, an alarm profile 316, and one or more vendor unique profiles 318. The software update profile 306 may be used by the devices to update software within the devices. The locale profile 308 may be used to specify a location and/or language set as the active locale for the device. The alarm profile 316 may be used to send, read, and propagate alarms.

The profiles library 300 may also include a device control profile 320, a network provisioning profile 322, a fabric provisioning profile 324, and a service provisioning profile 326. The device control profile 320 allows one device to request that another device exercise a specified device control (e.g., arm failsafe, etc.) capability. The network provisioning profile 322 enables a device to be added to a new logical network (e.g., WiFi or 802.15.4). The fabric provisioning profile 324 allows the devices to join a pre-existing fabric or create a new fabric. The service provisioning profile 326 enables the devices to be paired to a service.

The profiles library 300 may also include a strings profile 328, a device description profile 330, a device profile 332, device power extended profile 334, a device power profile 336, a device connectivity extended profile 338, a device connectivity profile 340, a service directory profile 342, a data management profile 344, an echo profile 346, a security profile 348, and a core profile 350. The device description profile 330 may be used by a device to identify one or more other devices. The service directory profile 342 enables a device to communicate with a service. The data management profile 344 enables devices to view and/or track data stored in another device. The echo profile 346 enables a device to determine whether the device is connected to a target device and the latency in the connection. The security profile 348 enables the devices to communicate securely.

The core profile 350 includes a status reporting profile 352 that enables devices to report successes and failures of requested actions. Additionally, in certain embodiments, each device may include a set of methods used to process profiles. For example, a core protocol may include the following profiles: GetProfiles, GetSchema, GetSchemas, Get-Property, GetProperties, SetProperty, SetProperties, RemoveProperty, RemoveProperties, RequestEcho, NotifyPropertyChanged, and/or NotifyPropertiesChanged. The Get Profiles method may return an array of profiles supported by a queried node. The GetSchema and GetSchemas methods may respectively return one or all schemas for a specific profile. GetProperty and GetProperties may respectively return a value or all value pairs for a profile schema. SetProperty and SetProperties may respectively set single or multiple values for a profile schema. RemoveProperty and Remove-Properties may respectively attempt to remove a single or multiple values from a profile schema. RequestEcho may send an arbitrary data payload to a specified node which the node returns unmodified. NotifyPropertyChange and NotifyPropertiesChanged may respectively issue a notification if a single/multiple value pairs have changed for a profile schema.

To aid in understanding profiles and schemas, a non-exclusive list of profiles and schemas are provided below for illustrative purposes.

**A. Status Reporting**

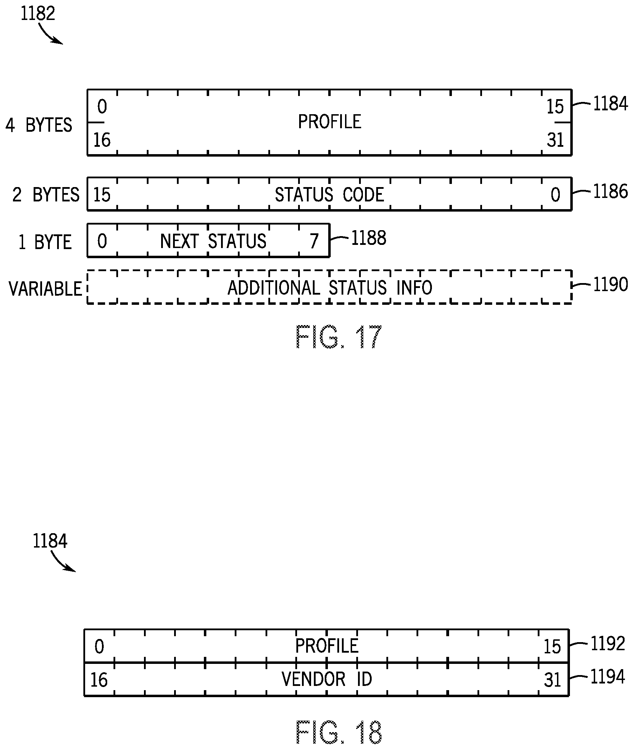

A status reporting schema is presented as the status reporting frame 1182 in FIG. 17. The status reporting schema may be a separate profile or may be included in one or more profiles (e.g., a core profile). In certain embodiments, the status reporting frame 1182 includes a profile field 1184, a status code field 1186, a next status field 1188, and may include an additional status info field 1190.

i. **Profile Field**

In some embodiments, the profile field 1184 includes four bytes of data that defines the profile under which the information in the present status report is to be interpreted. An embodiment of the profile field 1184 is illustrated in FIG. 18 with two sub-fields. In the illustrated embodiment, the profile field 1184 includes a profile Id sub-field 1192 that includes sixteen bits that corresponds to a vendor-specific identifier for the profile under which the value of the status code field 1186 is defined. The profile field 1184 may also includes a vendor Id sub-field 1194 that includes sixteen bits that identifies a vendor providing the profile identified in the profile Id sub-field 1192.

ii. **Status Code**

In certain embodiments, the status code field 1186 includes sixteen bits that encode the status that is being reported. The values in the status code field 1186 are interpreted in relation to values encoded in the vendor Id sub-field 1192 and the profile Id sub-field 1194 provided in the profile field 1184. Additionally, in some embodiments, the status code space may be divided into four groups, as indicated in Table 8 below.

**Table 8.** Status Code Range Table

| Range | Name | Description |
|---|---|---|
| 0x0000 ... 0x0010 | success | A request was successfully processed. |
| 0x0011 ... 0x0020 | client error | An error has or may have occurred on the client-side of a client/server exchange. For example, the client has made a badly-formed request. |

(continued)

| Range | Name | Description |
|---|---|---|
| 0x0021 ... 0x0030 | server error | An error has or may have occurred on the server side of a client/server exchange. For example, the server has failed to process a client request to an operating system error. |
| 0x0031 ... 0x0040 | continue/ redirect | Additional processing will be used, such as redirection, to complete a particular exchange, but no errors yet. |

Although Table 8 identifies general status code ranges that may be used separately assigned and used for each specific profile Id, in some embodiments, some status codes may be common to each of the profiles. For example, these profiles may be identified using a common profile (e.g., core profile) identifier, such as 0x00000000.

iii. **Next Status**

In some embodiments, the next status code field 1188 includes eight bits. The next status code field 1188 indicates whether there is following status information after the currently reported status. If following status information is to be included, the next status code field 1188 indicates what type of status information is to be included. In some embodiments, the next status code field 1188 may always be included, thereby potentially increasing the size of the message. However, by providing an opportunity to chain status information together, the potential for overall reduction of data sent may be reduced. If the next status field 1186 is 0x00, no following status information field 1190 is included. However, non-zero values may indicate that data may be included and indicate the form in which the data is included (e.g., in a TLV packet).

iv. **Additional Status Info**

When the next status code field 1188 is non-zero, the additional status info field 1190 is included in the message. If present, the status item field may contain status in a form that may be determined by the value of the preceding status type field (e.g., TLV format)

**B. Software Update**

The software update profile or protocol is a set of schemas and a client/server protocol that enables clients to be made aware of or seek information about the presence of software that they may download and install. Using the software update protocol, a software image may be provided to the profile client in a format known to the client. The subsequent processing of the software image may be generic, device-specific, or vendor-specific and determined by the software update protocol and the devices.

i. **General Application Headers for the Application Payload**

In order to be recognized and handled properly, software update profile frames may be identified within the Application Payload field 1146 of the GMP 1128. In some embodiments, all software update profile frames may use a common Profile Id 1176, such as 0x0000000C. Additionally, software update profile frames may include a Message Type field 1172 that indicates additional information and may chosen according to Table 9 below and the type of message being sent.

**Table 9.** Software update profile message types

| Type | Message |
|---|---|
| 0x00 | image announce |
| 0x01 | image query |
| 0x02 | image query response |
| 0x03 | download notify |
| 0x04 | notify response |

(continued)

| Type | Message |
|------|---------|
| 0x05 | update notify |
| 0x06 ...0xff | reserved |

Additionally, as described below, the software update sequence may be initiated by a server sending the update as an image announce or a client receiving the update as an image query. In either embodiment, an Exchange Id 1174 from the initiating event is used for all messages used in relation to the software update.

ii. **Protocol Sequence**

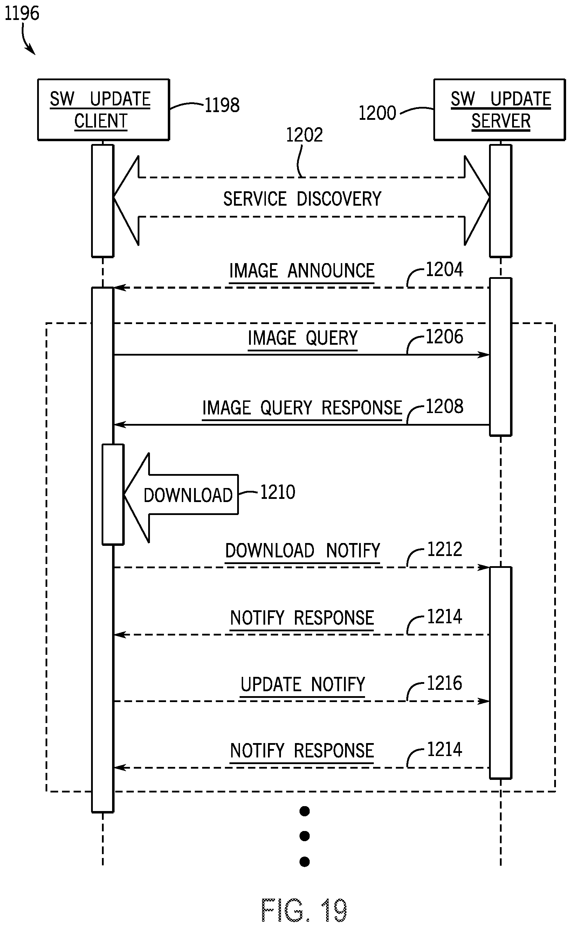

FIG. 19 illustrates an embodiment of a protocol sequence 1196 for a software update between a software update client 1198 and a software update server 1200. In certain embodiments, any device in the fabric may be the software update client 1198 or the software update server 1200. Certain embodiments of the protocol sequence 1196 may include additional steps, such as those illustrated as dashed lines that may be omitted in some software update transmissions.

1. **Service Discovery**

In some embodiments, the protocol sequence 1196 begins with a software update profile server announcing a presence of the update. However, in other embodiments, such as the illustrated embodiment, the protocol sequence 1196 begins with a service discovery 1202, as discussed above.

2. **Image Announce**

In some embodiments, an image announce message 1204 may be multicast or unicast by the software update server 1200. The image announce message 1204 informs devices in the fabric that the server 1200 has a software update to offer. If the update is applicable to the client 1198, upon receipt of the image announce message 1204, the software update client 1198 responds with an image query message 1206. In certain embodiments, the image announce message 1204 may not be included in the protocol sequence 1196. Instead, in such embodiments, the software update client 1198 may use a polling schedule to determine when to send the image query message 1206.

3. **Image Query**

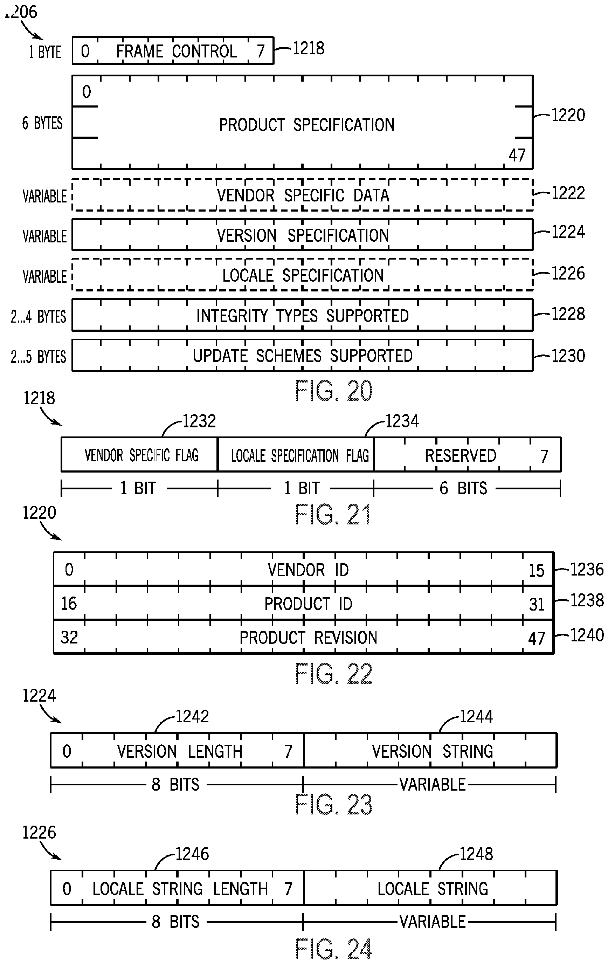

In certain embodiments, the image query message 1206 may be unicast from the software update client 1198 either in response to an image announce message 1204 or according to a polling schedule, as discussed above. The image query message 1206 includes information from the client 1198 about itself. An embodiment of a frame of the image query message 1206 is illustrated in FIG. 20. As illustrated in FIG. 20, certain embodiments of the image query message 1206 may include a frame control field 1218, a product specification field 1220, a vendor specific data field 1222, a version specification field 1224, a locale specification field 1226, an integrity type supported field 1228, and an update schemes supported field 1230.

a. **Frame Control**

The frame control field 1218 includes 1 byte and indicates various information about the image query message 1204. An example of the frame control field 128 is illustrated in FIG. 21. As illustrated, the frame control field 1218 may include three sub-fields: vendor specific flag 1232, locale specification flag 1234, and a reserved field S3. The vendor specific flag 1232 indicates whether the vendor specific data field 1222 is included in the message image query message. For example, when the vendor specific flag 1232 is 0 no vendor specific data field 1222 may be present in the image query message, but when the vendor specific flag 1232 is 1 the vendor specific data field 1222 may be present in the image query message. Similarly, a 1 value in the locale specification flag 1234 indicates that a locale specification field 1226 is present in the image query message, and a 0 value indicates that the locale specification field 1226 in not present in the image query message.

b. **Product Specification**

The product specification field 1220 is a six byte field. An embodiment of the product specification field 1220is illustrated in FIG. 22. As illustrated, the product specification field 1220 may include three sub-fields: a vendor Id field 1236, a product Id field 1238, and a product revision field 1240. The vendor Id field 1236 includes sixteen bits that indicate a vendor for the software update client 1198. The product Id field 1238 includes sixteen bits that indicate the device product that is sending the image query message 1206 as the software update client 1198. The product revision field 1240 includes sixteen bits that indicate a revision attribute of the software update client 1198.

c. **Vendor Specific Data**

The vendor specific data field 1222, when present in the image query message 1206, has a length of a variable number of bytes. The presence of the vendor specific data field 1222 may be determined from the vendor specific flag 1232 of the frame control field 1218. When present, the vendor specific data field 1222 encodes vendor specific information about the software update client 1198 in a TLV format, as described above.

d. **Version Specification**

An embodiment of the version specification field 1224 is illustrated in FIG. 23. The version specification field 1224 includes a variable number of bytes sub-divided into two sub-fields: a version length field 1242 and a version string field 1244. The version length field 1242 includes eight bits that indicate a length of the version string field 1244. The version string field 1244 is variable in length and determined by the version length field 1242. In some embodiments, the version string field 1244 may be capped at 255 UTF-8 characters in length. The value encoded in the version string field 1244 indicates a software version attribute for the software update client 1198.

e. **Locale Specification**

In certain embodiments, the locale specification field 1226 may be included in the image query message 1206 when the locale specification flag 1234 of the frame control 1218 is 1. An embodiment of the locale specification field 1226 is illustrated in FIG. 24. The illustrated embodiment of the locale specification field 1226 includes a variable number of bytes divided into two sub-fields: a locale string length field 1246 and a locale string field 1248. The locale string length field 1246 includes eight bits that indicate a length of the locale string field 1248. The locale string field 1248 of the locale specification field 1226 may be variable in length and contain a string of UTF-8 characters encoding a local description based on Portable Operating System Interface (POSIX) locale codes. The standard format for POSIX locale codes is [language[_territory][.codeset][@modifier]] For example, the POSIX representation for Australian English is en_AU.UTF8.

f. **Integrity Types Supported**

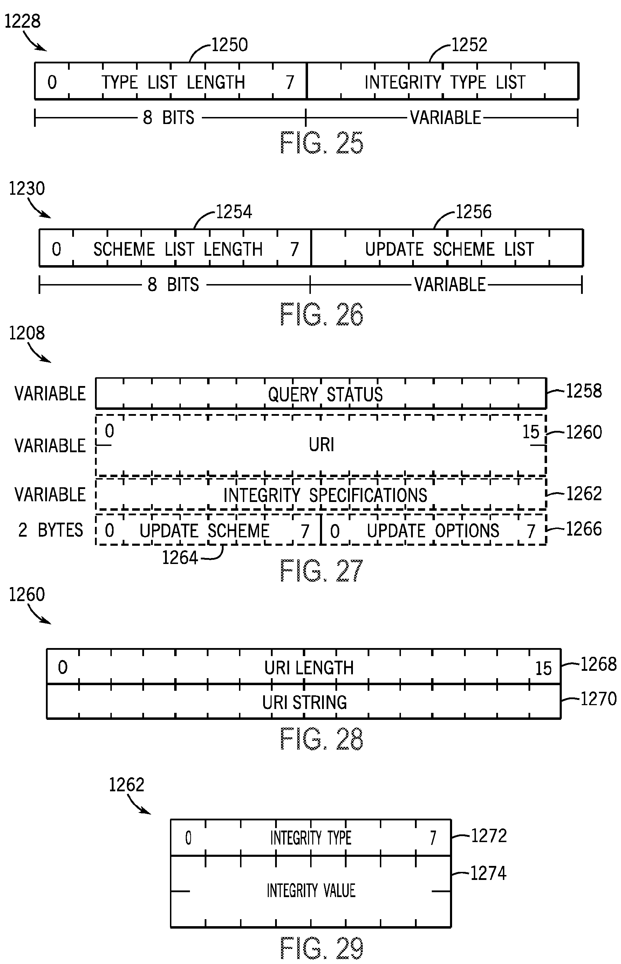

An embodiment of the integrity types field 1228 is illustrated in FIG. 25. The integrity types supported field 1228 includes two to four bytes of data divided into two sub-fields: a type list length field 1250 and an integrity type list field 1252. The type list length field 1250 includes eight bits that indicate the length in bytes of the integrity type list field 1252. The integrity type list field 1252 indicates the value of the software update integrity type attribute of the software update client 1198. In some embodiments, the integrity type may be derived from Table 10 below.

**Table 10.** Example integrity types

| Value | Integrity Type |
|---|---|
| 0x00 | SHA-160 |
| 0x01 | SHA-256 |
| 0x02 | SHA-512 |

The integrity type list field 1252 may contain at least one element from Table 10 or other additional values not included.

g. **Update Schemes Supported**

An embodiment of the schemes supported field 1230 is illustrated in FIG. 26. The schemes supported field 1230 includes a variable number of bytes divided into two sub-fields: a scheme list length field 1254 and an update scheme list field 1256. The scheme list length field 1254 includes eight bits that indicate a length of the update scheme list field in bytes. The update scheme list field 1256 of the update schemes supported field 1222 is variable in length determined by the scheme list length field 1254. The update scheme list field 1256 represents an update schemes attributes of the software update profile of the software update client 1198. An embodiment of example values is shown in Table 11 below.

**Table 11.** Example update schemes

| Value | Update Scheme |
|---|---|
| 0x00 | HTTP |
| 0x01 | HTTPS |
| 0x02 | SFTP |
| 0x03 | Fabric-specific File Transfer Protocol (e.g., Bulk Data Transfer discussed below) |

Upon receiving the image query message 1206, the software update server 1200 uses the transmitted information to determine whether the software update server 1200 has an update for the software update client 1198 and how best to deliver the update to the software update client 1198.

4. **Image Query Response**

Returning to FIG. 19, after the software update server 1200 receives the image query message 1206 from the software update client 1198, the software update server 1200 responds with an image query response 1208. The image query response 1208 includes either information detailing why an update image is not available to the software update client 1198 or information about the available image update to enable to software update client 1198 to download and install the update.

An embodiment of a frame of the image query response 1208 is illustrated in FIG. 27. As illustrated, the image query response 1208 includes five possible sub-fields: a query status field 1258, a uniform resource identifier (URI) field 1260, an integrity specification field 1262, an update scheme field 1264, and an update options field 1266.

a. **Query Status**

The query status field 1258 includes a variable number of bytes and contains status reporting formatted data, as discussed above in reference to status reporting. For example, the query status field 1258 may include image query response status codes, such as those illustrated below in Table 12.

**Table 12**. Example image query response status codes

| Profile | Code | Description |
|---|---|---|
| 0x00000000 | 0x0000 | The server has processed the image query message 1206 and has an update for the software update client 1198. |
| 0x0000000C | 0x0001 | The server has processed the image query message 1206, but the server does not have an update for the software update client 1198. |
| 0x00000000 | 0x0010 | The server could not process the request because of improper form for the request. |
| 0x00000000 | 0x0020 | The server could not process the request due to an internal error |

b. **URI**

The URI field 1260 includes a variable number of bytes. The presence of the URI field 1260 may be determined by the query status field 1258. If the query status field 1258 indicates that an update is available, the URI field 1260 may be included. An embodiment of the URI field 1260 is illustrated in FIG. 28. The URI field 1260 includes two sub-fields: a URI length field 1268 and a URI string field 1270. The URI length field 1268 includes sixteen bits that indicates the length of the URI string field 1270 in UTF-8 characters. The URI string field 1270 and indicates the URI attribute of the software image update being presented, such that the software update client 1198 may be able to locate, download, and install a software image update, when present.

c. **Integrity Specification**

The integrity specification field 1262 may variable in length and present when the query status field 1258 indicates that an update is available from the software update server 1198 to the software update client 1198. An embodiment of the integrity specification field 1262 is illustrated in FIG. 29. As illustrated, the integrity specification field 1262 includes two sub-fields: an integrity type field 1272 and an integrity value field 1274. The integrity type field 1272 includes eight bits that indicates an integrity type attribute for the software image update and may be populated using a list similar to that illustrated in Table 10 above. The integrity value field 1274 includes the integrity value that is used to verify that the image update message has maintained integrity during the transmission.

d. **Update Scheme**

The update scheme field 1264 includes eight bits and is present when the query status field 1258 indicates that an update is available from the software update server 1198 to the software update client 1198. If present, the update scheme field 1264 indicates a scheme attribute for the software update image being presented to the software update server 1198.

e. **Update Options**

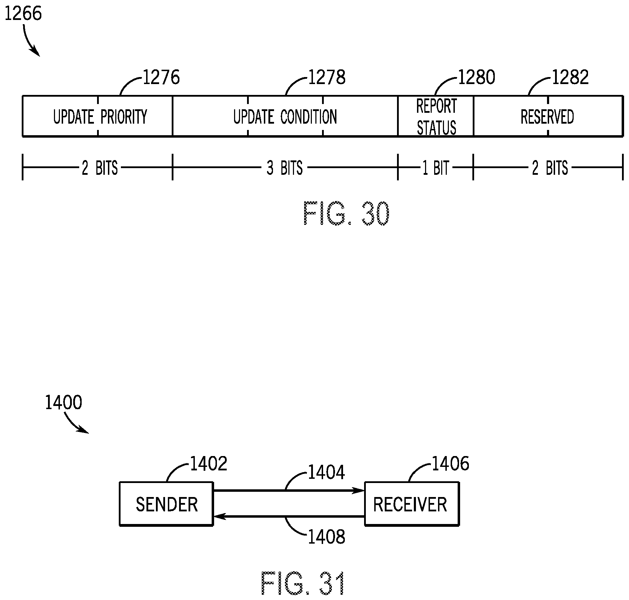

The update options field 1266 includes eight bits and is present when the query status field 1258 indicates that an update is available from the software update server 1198 to the software update client 1198. The update options field 1266 may be sub-divided as illustrated in FIG. 30. As illustrated, the update options field 1266 includes four sub-fields: an update priority field 1276, an update condition field 1278, a report status flag 1280, and a reserved field 1282. In some embodiments, the update priority field 1276 includes two bits. The update priority field 1276 indicates a priority attribute of the update and may be determined using values such as those illustrated in Table 13 below.

**Table 13.** Example update priority values

| Value | Description |
|---|---|
| 00 | Normal - update during a period of low network traffic |
| 01 | Critical - update as quickly as possible |

The update condition field 1278 includes three bits that may be used to determine conditional factors to determine when or if to update. For example, values in the update condition field 1278 may be decoded using the Table 14 below.

**Table 14.** Example update conditions

| Value | Decryption |
|---|---|
| 0 | Update without conditions |
| 1 | Update if the version of the software running on the update client software does not match the update version. |
| 2 | Update if the version of the software running on the update client software is older than the update version. |
| 3 | Update if the user opts into an update with a user interface |

The report status flag 1280 is a single bit that indicates whether the software update client 1198 should respond with a download notify message 1210. If the report status flag 1280 is set to 1 the software update server 1198 is requesting a download notify message 1210 to be sent after the software update is downloaded by the software update client 1200.
If the image query response 1208 indicates that an update is available. The software update client 1198 downloads 1210 the update using the information included in the image query response 1208 at a time indicated in the image query response 1208.

### 5. Download Notify

After the update download 1210 is successfully completed or failed and the report status flag 1280 value is 1, the software update client 1198 may respond with the download notify message 1212. The download notify message 1210 may be formatted in accordance with the status reporting format discussed above. An example of status codes used in the download notify message 1212 is illustrated in Table 15 below.

**Table 15.** Example download notify status codes

| Profile | Code | Description |
|---|---|---|
| 0x00000000 | 0x0000 | The download has been completed, and integrity verified |
| 0x0000000C | 0x0020 | The download could not be completed due to faulty download instructions. |
| 0x0000000C | 0x0021 | The image query response message 1208 appears proper, but the download or integrity verification failed. |
| 0x0000000C | 0x0022 | The integrity of the download could not be verified. |

In addition to the status reporting described above, the download notify message 1208 may include additional status information that may be relevant to the download and/or failure to download.

### 6. Notify Response

The software update server 1200 may respond with a notify response message 1214 in response to the download notify message 1212 or an update notify message 1216. The notify response message 1214 may include the status reporting format, as described above. For example, the notify response message 1214 may include status codes as enumerated in Table 16 below.

**Table 16.** Example notify response status codes

| Profile | Code | Description |
|---|---|---|
| 0x00000000 | 0x0030 | Continue - the notification is acknowledged, but the update has not completed, such as download notify message 1214 received but update notify message 1216 has not. |
| 0x00000000 | 0x0000 | Success- the notification is acknowledged, and the update has completed. |
| 0x0000000C | 0x0023 | Abort - the notification is acknowledged, but the server cannot continue the update. |
| 0x0000000C | 0x0031 | Retry query - the notification is acknowledged, and the software update client 1198 is directed to retry the update by submitting another image query message 1206. |

In addition to the status reporting described above, the notify response message 1214 may include additional status information that may be relevant to the download, update, and/or failure to download/update the software update.

### 7. Update Notify

After the update is successfully completed or failed and the report status flag 1280 value is 1, the software update client 1198 may respond with the update notify message 1216. The update notify message 1216 may use the status reporting format described above. For example, the update notify message 1216 may include status codes as enumerated in Table 17 below.

**Table 17.** Example update notify status codes

| Profile | Code | Description |
|---|---|---|
| 0x00000000 | 0x0000 | Success - the update has been completed. |
| 0x0000000C | 0x0010 | Client error - the update failed due to a problem in the software update client 1198. |

In addition to the status reporting described above, the update notify message 1216 may include additional status information that may be relevant to the update and/or failure to update.

**C. Bulk Transfer**

In some embodiments, it may be desirable to transfer bulk data files (e.g., sensor data, logs, or update images) between nodes/services in the fabric 1000. To enable transfer of bulk data, a separate profile or protocol may be incorporated into one or more profiles and made available to the nodes/services in the nodes. The bulk data transfer protocol may model data files as collections of data with metadata attachments. In certain embodiments, the data may be opaque, but the metadata may be used to determine whether to proceed with a requested file transfer.

Devices participating in a bulk transfer may be generally divided according to the bulk transfer communication and event creation. As illustrated in FIG. 31, each communication 1400 in a bulk transfer includes a sender 1402 that is a node/service that sends the bulk data 1404 to a receiver 1406 that is a node/service that receives the bulk data 1404. In some embodiments, the receiver may send status information 1408 to the sender 1402 indicating a status of the bulk transfer. Additionally, a bulk transfer event may be initiated by either the sender 1402 (e.g., upload) or the receiver 1406 (e.g., download) as the initiator. A node/service that responds to the initiator may be referred to as the responder in the bulk data transfer.

Bulk data transfer may occur using either synchronous or asynchronous modes. The mode in which the data is transferred may be determined using a variety of factors, such as the underlying protocol (e.g., UDP or TCP) on which the bulk data is sent. In connectionless protocols (e.g., UDP), bulk data may be transferred using a synchronous mode that allows one of the nodes/services ("the driver") to control a rate at which the transfer proceeds. In certain embodiments, after each message in a synchronous mode bulk data transfer, an acknowledgment may be sent before sending the next message in the bulk data transfer. The driver may be the sender 1402 or the receiver 1406. In some embodiments, the driver may toggle between an online state and an offline mode while sending messages to advance the transfer when in the online state. In bulk data transfers using connection-oriented protocols (e.g., TCP), bulk data may be transferred using an asynchronous mode that does not use an acknowledgment before sending successive messages or a single driver.

Regardless of whether the bulk data transfer is performed using a synchronous or asynchronous mode, a type of message may be determined using a Message Type 1172 in the Application Payload 1146 according the Profile Id 1176 in the Application Payload. Table 18 includes an example of message types that may be used in relation to a bulk data transfer profile value in the Profile Id 1176.

**Table 18** Examples of message types for bulk data transfer profiles

| Message Type | Message |
|---|---|
| 0x01 | SendInit |
| 0x02 | SendAccept |
| 0x03 | SendReject |
| 0x04 | ReceiveInit |
| 0x05 | ReceiveAccept |
| 0x06 | ReceiveReject |
| 0x07 | BlockQuery |
| 0x08 | Block |
| 0x09 | BlockEOF |
| 0x0A | Ack |
| 0x0B | Block EOF |
| 0x0C | Error |

i. **SendInit**

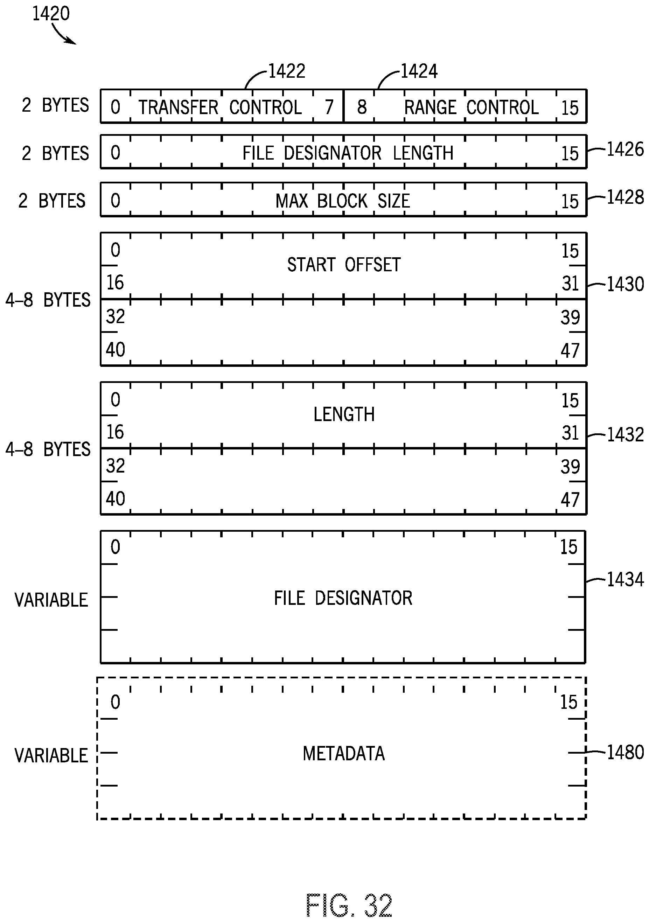

An embodiment of a SendInit message 1420 is illustrated in FIG. 32. The SendInit message 1420 may include seven fields: a transfer control field 1422, a range control field 1424, a file designator length field 1426, a proposed max block size field 1428, a start offset field 1430, length field 1432, and a file designator field 1434.

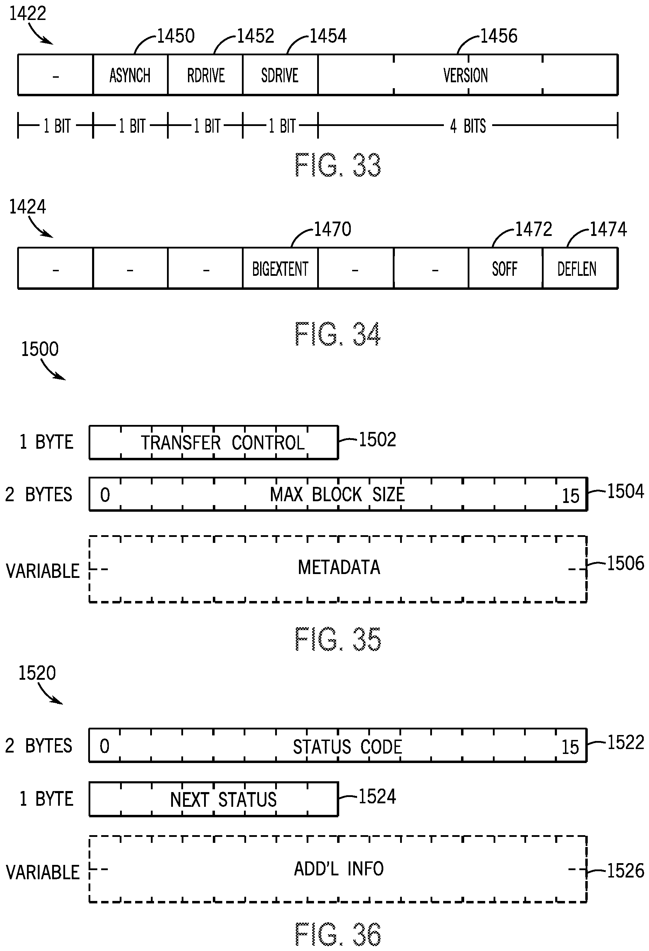

The transfer control field 1422 includes a byte of data illustrated in FIG. 33. The transfer control field includes at least four fields: an Asynch flag 1450, an RDrive flag 1452, an SDrive flag 1454, and a version field 1456. The Asynch flag 1450 indicates whether the proposed transfer may be performed using a synchronous or an asynchronous mode. The RDrive flag 1452 and the SDrive flag 1454 each respectively indicates whether the receiver 1406 is capable of transferring data with the receiver 1402 or the sender 1408 driving a synchronous mode transfer.

The range control field 1424 includes a byte of data such as the range control field 1424 illustrated in FIG. 34. In the illustrated embodiment, the range control field 1424 includes at least three fields: a BigExtent flag 1470, a start offset flag 1472, and a definite length flag 1474. The definite length flag 1474 indicates whether the transfer has a definite length. The definite length flag 1474 indicates whether the length field 1432 is present in the SendInit message 1420, and the BigExtent flag 1470 indicates a size for the length field 1432. For example, in some embodiments, a value of 1 in the BigExtent flag 1470 indicates that the length field 1432 is eight bytes. Otherwise, the length field 1432 is four bytes, when present. If the transfer has a definite length, the start offset flag 1472 indicates whether a start offset is present. If a start offset is present, the BigExtent flag 1470 indicates a length for the start offset field 1430. For example, in some embodiments, a value of 1 in the BigExtent flag 1470 indicates that the start offset field 1430 is eight bytes. Otherwise, the start offset field 1430 is four bytes, when present.

Returning to FIG. 32, the file designator length field 1426 includes two bytes that indicate a length of the file designator field 1434. The file designator field 1434 which is a variable length field dependent upon the file designator length field 1426. The max block size field 1428 proposes a maximum size of block that may be transferred in a single transfer.

The start offset field 1430, when present, has a length indicated by the BigExtent flag 1470. The value of the start offset field 1430 indicates a location within the file to be transferred from which the sender 1402 may start the transfer, essentially allowing large file transfers to be segmented into multiple bulk transfer sessions.

The length field 1432, when present, indicates a length of the file to be transferred if the definite length field 1474 indicates that the file has a definite length. In some embodiments, if the receiver 1402 receives a final block before the length is achieved, the receiver may consider the transfer failed and report an error as discussed below.

The file designator field 1434 is a variable length identifier chosen by the sender 1402 to identify the file to be sent. In some embodiments, the sender 1402 and the receiver 1406 may negotiate the identifier for the file prior to transmittal. In other embodiments, the receiver 1406 may use metadata along with the file designator field 1434 to determine whether to accept the transfer and how to handle the data. The length of the file designator field 1434may be determined from the file designator length field 1426. In some embodiments, the SendInit message 1420 may also include a metadata field 1480 of a variable length encoded in a TLV format. The metadata field 1480 enables the initiator to send additional information, such as application-specific information about the file to be transferred. In some embodiments, the metadata field 1480 may be used to avoid negotiating the file designator field 1434 prior to the bulk data transfer.

#### ii. **SendAccept**

A send accept message is transmitted from the responder to indicate the transfer mode chosen for the transfer. An embodiment of a SendAccept message 1500 is presented in FIG. 35. The SendAccept message 1500 includes a transfer control field 1502 similar to the transfer control field 1422 of the SendInit message 1420. However, in some embodiments, only the RDrive flag 1452 or the SDrive 1454 may have a nonzero value in the transfer control field 1502 to identify the sender 1402 or the receiver 1406 as the driver of a synchronous mode transfer. The SendAccept message 1500 also includes a max block size field 1504 that indicates a maximum block size for the transfer. The block size field 1504 may be equal to the value of the max block field 1428 of the SendInit message 1420, but the value of the max block size field 1504 may be smaller than the value proposed in the max block field 1428. Finally, the SendAccept message 1500 may include a metadata field 1506 that indicates information that the receiver 1506 may pass to the sender 1402 about the transfer.

#### iii. **SendReject**

When the receiver 1206 rejects a transfer after a SendInit message, the receiver 1206 may send a SendReject message that indicates that one or more issues exist regarding the bulk data transfer between the sender 1202 and the receiver 1206. The send reject message may be formatted according to the status reporting format described above and illustrated in FIG. 36. A send reject frame 1520 may include a status code field 1522 that includes two bytes that indicate a reason for rejecting the transfer. The status code field 1522 may be decoded using values similar to those enumerated as indicated in the Table 19 below.

**Table 19** Example status codes for send reject message

| Status Code | Description |
| --- | --- |
| 0x0020 | Transfer method not supported |
| 0x0021 | File designator unknown |
| 0x0022 | Start offset not supported |
| 0x0011 | Length required |
| 0x0012 | Length too large |
| 0x002F | Unknown error |

In some embodiments, the send reject message 1520 may include a next status field 1524. The next status field 1524, when present, may be formatted and encoded as discussed above in regard to the next status field 1188 of a status report frame. In certain embodiments, the send reject message 1520 may include an additional information field 1526. The additional information field 1526, when present, may store information about an additional status and may be encoded using the TLV format discussed above.

iv. **ReceiveInit**

A ReceiveInit message may be transmitted by the receiver 1206 as the initiator. The ReceiveInit message may be formatted and encoded similar to the SendInit message 1480 illustrated in FIG. 32, but the BigExtent field 1470 may be referred to as a maximum length field that specifies the maximum file size that the receiver 1206 can handle.

v. **ReceiveAccept**

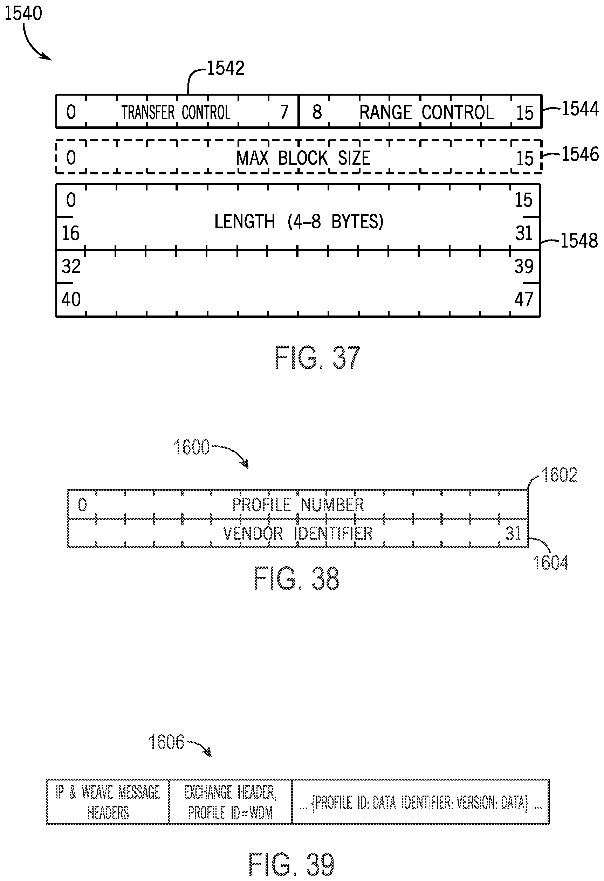

When the sender 1202 receives a ReceiveInit message, the sender 1202 may respond with a ReceiveAccept message. The ReceiveAccept message may be formatted and encoded as the ReceiveAccept message 1540 illustrated in FIG. 37. The ReceiveAccept message 1540 may include four fields: a transfer control field 1542, a range control field 1544, a max block size field 1546, and sometimes a length field 1548. The ReceiveAccept message 1540 may be formatted similar to the SendAccept message 1502 of FIG. 35 with the second byte indicating the range control field 1544. Furthermore, the range control field 1544 may be formatted and encoded using the same methods discussed above regarding the range control field 1424 of FIG. 34.

vi. **ReceiveReject**

If the sender 1202 encounters an issue with transferring the file to the receiver 1206, the sender 1202 may send a ReceiveReject message formatted and encoded similar to a SendReject message 48 using the status reporting format, both discussed above. However, the status code field 1522 may be encoded/decoded using values similar to those enumerated as indicated in the Table 20 below.

**Table 20** Example status codes for receive reject message

| Status Code | Description |
| --- | --- |
| 0x0020 | Transfer method not supported |
| 0x0021 | File designator unknown |
| 0x0022 | Start offset not supported |
| 0x0013 | Length too short |
| 0x002F | Unknown error |

vii. **BlockQuery**

A BlockQuery message may be sent by a driving receiver 1202 in a synchronous mode bulk data transfer to request the next block of data. A BlockQuery impliedly acknowledges receipt of a previous block of data if not explicit Acknowledgement has been sent. In embodiments using asynchronous transfers, a BlockQuery message may be omitted from the transmission process.

viii. **Block**

Blocks of data transmitted in a bulk data transfer may include any length greater than 0 and less than a max block size agreed upon by the sender 1202 and the receiver 1206.

ix. **BlockEOF**

A final block in a data transfer may be presented as a Block end of file (BlockEOF). The BlockEOF may have a length between 0 and the max block size. If the receiver 1206 finds a discrepancy between a pre-negotiated file size (e.g., length field 1432) and the amount of data actually transferred, the receiver 1206 may send an Error message indicating the failure, as discussed below.

x. **Ack**

If the sender 1202 is driving a synchronous mode transfer, the sender 1202 may wait until receiving an acknowledgment (Ack) after sending a Block before sending the next Block. If the receiver is driving a synchronous mode transfer, the receiver 1206 may send either an explicit Ack or a BlockQuery to acknowledge receipt of the previous block. Furthermore, in asynchronous mode bulk transfers, the Ack message may be omitted from the transmission process altogether.

xi. **AckEOF**

An acknowledgement of an end of file (AckEOF) may be sent in bulk transfers sent in synchronous mode or asynchronous mode. Using the AckEOF the receiver 1206 indicates that all data in the transfer has been received and signals the end of the bulk data transfer session.

xii. **Error**

In the occurrence of certain issues in the communication, the sender 1202 or the receiver 1206 may send an error message to prematurely end the bulk data transfer session. Error messages may be formatted and encoded according to the status reporting format discussed above. For example, an error message may be formatted similar to the SendReject frame 1520 of FIG. 36. However, the status codes may be encoded/decoded with values including and/or similar to those enumerated in Table 21 below.

**Table 21.** Example status codes for an error message in a bulk data transfer profile

| Status code | Description |
|---|---|
| 0x001F | Transfer failed unknown error |
| 0x0011 | Overflow error |

**D. Data Management Profile**

The data management profile (WDM) provides a method for nodes to view, share and update node-resident information between each other and/or a service. Any device viewing or requesting the data may be referred to as a client, and any device storing the information locally that is sent out may be referred to as a publisher. For example, a thermostat node, acting as a client, may view and update a heat state from on to off in a radiator control node as a publisher. The data management profile includes message types, status values, and data tags each with a corresponding schema. As discussed previously in relation to the general message format, each message may include a profile ID and associated message type. For example, logically a profile ID and message type (e.g., [<WDMprofile>, <view request>]) indicates that the data management profile is called with the specific message type of a view request. Moreover, the view request message may also include a path list [[...{{<radiator profile>,} {<heat state>}]] that indicates that the data being viewed in the heat state of the radiator profile.

As previously discussed, a class of interactions between nodes on a fabric, e.g. remote sensing and control, configuration management and so on, may be described as data management. In these and many other cases, a particular node "owns" a data set and other nodes may inquire about its values, submit updates and/or subscribe to notifications when values within the data set change. Furthermore, a number of protocols that go beyond simple data management, e.g. software update or data logging, often have parameter sets that control their operation or encapsulate their state and the management and sharing of these parameters may properly be viewed as data management as well.

Seen from this point of view, a fabric node may appear as an unordered collection of application-specific domains, formally known as profiles, e.g. for settings synchronization, software update, HVAC control and so on. As previously discussed, each profile is identified by a 32-bit vendor-specific profile identifier 1600, as illustrated in FIG. 38.

A 16-bit profile number subfield 1602 of the profile identifier 1600 is assigned by a vendor for the device. In some embodiments, a 16-bit vendor identifier subfield 1604 of the profile identifier 1600 may be assigned by a central arbiter. Moreover, in some embodiments, the central arbiter may be a manufacturer with its own vendor ID is 0x235A. In some embodiments, the vendor identifier 0 may be used to designate "Core" profiles intended for common usage. In some embodiments, the profile identifier 0xFFFFFFFF may be reserved for a "profile identifier unspecified" error code. A profile may define 3 things: 1) A set of messages that, again by convention, imply protocols, which are the basis of inter-node exchanges over the fabric; 2) a set of profile-specific status codes; and 3) a schema for profile-related data.

WDM frames, generally speaking, address and/or contain profile data for one or more profiles and the representation of that data may be entirely determined by the profile of interest. For example, FIG. 39 illustrates a WDM frame 1606. The profile identifier 1602 in the exchange header identifies the frame as belonging to the data management protocol, but the profile identifiers in the various elements that make up the body of the message are likely to belong to some other profile, e.g. "HVAC control". In this case the WDM profile is being used to manage and communicate HVAC control data on behalf of other profiles resident on devices in the fabric.

The disposition and format of actual data on a fabric node may vary widely between instances of different profiles being managed. To give a few examples, a piece of data used in the operation of a profile may be readily available in RAM, but it may also be in some form of persistent storage that requires special access. In some embodiments, the data may be under the control of a different thread or process and may include a multi-step process to retrieve, or it may be read from external hardware and never stored at all. In order to make sense of disparate and differently accessible data, a schema is defined whereby data may be organized, understood and published for external access without regard to its internal representation.

For example, the data may be formatted using the TLV format discussed above. In other words, data may be represented as a hierarchical structure of tag-value pairs possibly incorporating ordered lists (arrays) with elements of arbitrary type; a representation for null and empty data items; the ability to handle a variety of primitive data types, such as Boolean values, signed and unsigned integers of various lengths, single and double-precision floating point values, byte strings, and UTF-8 strings; and representation of paths that provide access to particular data items or subtrees within the hierarchy.

In some embodiments, the over-the-air (OTA) representation of profile data is in the TLV format. The internal format may be TLV in cases where that is appropriate or it may be something completely different depending on constraints imposed by the platform, profiles, and/or applications. However, in some embodiments, the internal format may be efficiently converted to the OTA format and vice-versa.

### a. **WDM Architecture**

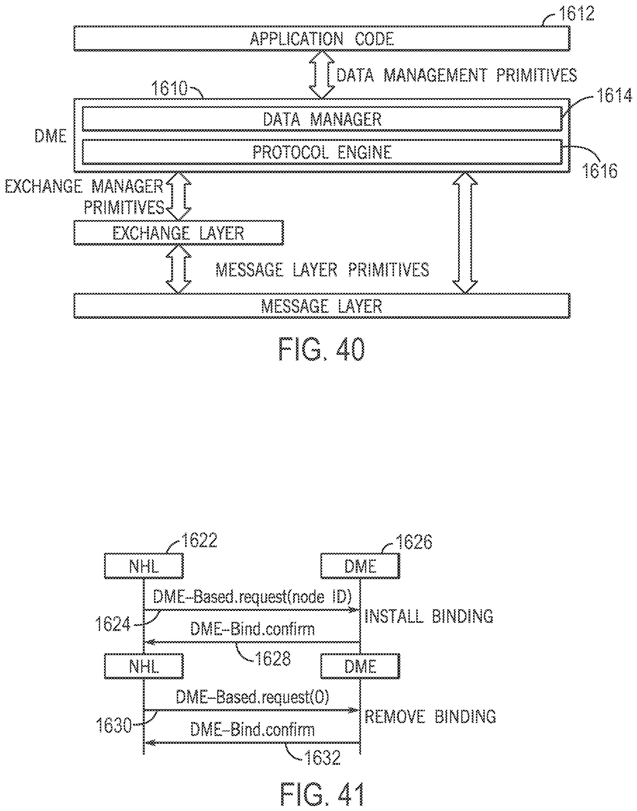

As shown in FIG. 40, a data management entity (DME) 1610 has a layered architecture to separate data representation from communication. Application code 1612 communicates with the DME 1610 using a set of general-purpose primitives. The upper sublayer of the DME, the data manager 1614, makes few assumptions about the underlying medium of exchange. As a result, the DME 1610 could be adapted to participate in data management exchanges that take place across IPC channels or other media. The data manager 1614 sublayer is responsible for data management proper. For example, the data manager 1614 sublayer may maintain an internal model for the data of interest; provide access to data based on a set of predefined paths, established by convention as part of profile definition; track changes and resolve conflicts that may arise between multiple updaters of the same data set; link data paths to methods for merging data from disparate sources (e.g. in the case of a request to view); and/or link data paths to methods for disseminating changes to their disparate destinations (e.g. in the case of a request to update).

The DME 1610 communicates via its lower sublayer, a protocol engine 1616. The protocol engine 1616 sublayer may bind requests to a particular node or service endpoint, maintenance-including creation, disposal and cancellation-of transactions covering the lifecycle of an OTA data management operation (e.g., an update), establish and maintain listeners in the case where a device may listen for unsolicited requests (e.g., view requests or receiving unsolicited notifications as a result of a subscription request), parse and pack WDM frames; and/or interaction with the fabric exchange manager, including the creation and disposal of exchange contexts and the transmission and receipt of frames.

b. **Functions**

The DME 1610 handles data management service on behalf of higher layers generally using a fabric as a medium of exchange. Services offered by the DME 1610 may include: publishing (e.g., setting up a node or service endpoint, a publisher) to "own" and manage a particular data set and accept requests to view it, update it and subscribe to notifications when that data is changed; binding to a single remote node or service endpoint as the publisher of a data set of interest or as the default client of a particular publisher; viewing (e.g., asking a publisher for a snapshot of the data referenced by some set of paths in the data set under its control); updating (e.g., requesting a modification to data under control of a publisher); and/or subscribing to notifications from a publisher in the event that data under the control of that publisher changes.

i. **Definitions**

A path, P, is a pair, $\{p:[e_0...e_n]\}$, where p is a profile identifier and the sequence $[e_0...e_n]$ is an ordered set of path elements which, taken together, describe a path through the hierarchical structure defined by the profile schema in a way that is analogous to the way a path expression in Unix defines a path through the file system. In some cases, there may be more than one instance of a profile on a node and in these cases the profile identifiers are assigned an instance identifier, i, written $p_i$. Note here that, as shown in FIG. 39 above, the profile identifier in a path may be a profile other than the identifier of the data management profile. Instead, it may be the identifier for a profile that defines a schema wherein the sequence of elements $[e_0...e_n]$ may be used to uniquely identify a particular piece of data. In this sense the profile identifier acts as the "path root" for all paths defined for a particular profile.

A path list, L, is an array of paths, written $[P_0...P_n]$ and a data list is a list of triples $[\{P_0:v_0:X_0\}...\{P_n:v_n:X_n\}]$ where the data items $[X_0...X_n]$ represent the data located at the places in the schema instance indicated by the paths $[P_0...P_n]$. We call $X_i$ the "terminal" of $P_i$. The $[v_0...v_n]$ are data versions associated with the terminals $[X_0...X_n]$. The version may be omitted in some case and the element will then be written $\{P_i::X_i\}$.

ii. **Primitives**

Operations may be described in terms of a set of primitives, which may be mapped onto function calls and callbacks, events queued between threads, RPC calls and so on. The DME primitives are discussed below. Each primitive has up to 4 variants: 1) request used to request a DME operation (e.g. view), 2) an indication used to communicate an internal event (e.g. the arrival of a view request), a response used to signal the completion of processing for an indication, and a confirmation used to signal the completion of processing for a request. If a primitive has a particular variant, an indication for the corresponding variant is shown to indicate that additional detail is provided below.

**Table 22.** DME primitives

| name | request | indication | response | confirm |
|---|---|---|---|---|
| DME-View | X | X | X | X |
| DME-Subscribe | X | X | X | X |
| DME-Update | X | X | X | X |
| DME-CancelTransaction | X | | | X |
| DME-CancelSubscription | X | X | | X |
| DME-Bind | X | | | X |
| DME-BeginPublishing | X | | | X |
| DME-EndPublishing | X | | | X |
| DME-BeginSubscription | X | | | X |
| DME-Notify | X | X | | X |

iii. **DME Frames**

When DME operations pass between nodes or service endpoints, they may be sent as fabric frames. The fabric data management frames are shown in Table 23.

**Table 23.** DME frames

| name | description |
| --- | --- |
| view request | A view request frame, containing a path list, L = $[P_0...P_n]$, is sent when a node or service endpoint wishes to receive a data list $[\{P_0::X_0\}...\{P_n::X_n\}]$ constituting a snapshot of the terminals of L in the data set under management by a remote node or service endpoint. |
| view response | A view response frame, containing the requested data list, is returned to the requestor in the case where a view request frame was successfully received and processed. |
| subscribe request | A subscribe request frame the same content as a view request, i.e. a path list L. The difference in semantics is that, in addition to requesting a snapshot of the data at the terminals of L, the requestor also expresses a wish to receive notifications when that data changes. |
| subscribe response | A subscribe response frame, containing both the requested data list and a topic ID chosen by the responder, is sent in response to a subscribe request to indicate that the subscription has been successfully established. |
| cancel subscription request | A cancel subscription request frame, containing the topic ID of the subscription to be canceled, is sent to request that the subscription be canceled and all state associated with it removed. |
| update request | An update request frame, containing a data list, is sent to request a modification to data under the management of a remote node or service endpoint. |
| notify request | A notify request frame, containing a topic ID and a data list, in which each item is required to contain the version component, is sent to inform a node or service endpoint that data of interest to it has changed. |

Data management exchanges may also include status report frames described in reference to the status report profile.

**iv. DME Roles**

There are four defined roles under the data management profile. These roles, along with the primitives they implement and the expected behavior appear in Table 24.

**Table 24.** WDM roles

| name | primitives | expected behavior |
| --- | --- | --- |
| viewer | DME-View.request<br>DME-View.confirm<br>DME-CancelTransaction.request<br>DME-CancelTransaction.confirm<br>DME-Bind.request<br>DME-Bind.confirm | • A viewer may implement the client portion of the view transaction and may be able to cancel a transaction that it has begun.<br><br>• A viewer may implement the bind transaction. |
| updater | DME-Update.request<br>DME-Update.confirm<br>DME-CancelTransaction.request<br>DME-CancelTransaction.confirm<br>DME-Bind.request<br>DME-Bind.confirm | • An updater may implement the client portion of the updater transaction and may be able to cancel a transaction that it has begun.<br><br>• An updater may implement the bind transaction. |

(continued)

| name | primitives | expected behavior |
|---|---|---|
| publisher | DME-View.indication<br>DME-View.response<br>DME-Update.indication<br>DME-Update.response<br>DME- Subscribe .indication<br>DME-Subscribe.response<br>DME-CancelTransaction.request<br>DME-CancelTransaction.confirm<br>DME-CancelSubscription.indication<br>DME-Bind.request<br>DME-Bind.confirm<br>DME-BeginPublishing.request<br>DME-BeginPublishing.confirm<br>DME-BeginSubscription.request<br>DME-BeginSubscription.confirm<br>DME-Notify.request<br>DME-Notify.confirm | • A publisher may implement the client portion of the notify transaction and may be able to cancel a transaction that it has begun.<br><br>• A publisher may implement the begin publishing transaction.<br>• A publisher may implement the begin subscription transaction.<br>• A publisher may implement the server portion of the view transaction.<br><br>• A publisher may implement the server portion of the update transaction.<br><br>• A publisher may implement the server portion of the subscribe transaction.<br>• A publisher may implement the server portion of the cancel subscription transaction.<br>• An updater may implement the bind transaction. |
| subscriber | DME-Subscribe.request<br>DME-Subscribe.confirm<br>DME-CancelTransaction.request | • A subscriber may implement the server portion of the notify transaction. |
|  | DME-CancelTransaction.confirm<br>DME-CancelSubscription.request<br>DME-CancelSubscription.indication<br>DME-CancelSubscription.confirm<br>DME-Bind.request<br>DME-Bind.confirm<br>DME-Notify.indication | • If a subscriber implements the client side of any transaction it may also implement the cancel transaction transaction.<br><br>• A subscriber may implement the client side of the subscribe transaction.<br><br>• A subscriber may implement the client side of the cancel subscription transaction.<br>• A subscriber may implement the bind transaction. |

The given roles may overlap such that, for example, an updater may also be a viewer of a particular remote schema instance and the publisher of this data may also be an updater.

v. **Binding Function**

For a variety of applications, a DME instance may have a single peer node or service endpoint by default. In these cases, the instance may be bound to that peer and subsequent transactions may use the node identifier of that peer as a destination. FIG. 41 illustrates a binding transaction. As shown in FIG. 41, a next higher layer (NHL) 1620 issues a DME-Bind.request 1622 primitive containing the 64-bit peer node identifier (e.g., ULA) of interest to a DME 1626. The node identifier is installed as the value of the aPeerNodeId attribute of the DME 1626. The DME 1626 then responds with a DME-Bind.confirm message 1628. To remove the binding, the NHL 1620 replaces the value of aPeer-NodeId in a DME-Based.request 1630 with the value of 0, meaning "no bound peer." The DME-Bind.confirm 1632 primitive is issued when the binding operation is complete and contains a status of success.

### vi. Publishing and Subscription Functions

A node or service endpoint may set itself up as a publisher for a certain data set as long as the data can be represented. Devices with widely varying capabilities may become publishers, and the list of features associated with publishing may be designed to scale with the number of publishers or functions thereof.

### 1. Broadcast Publishing

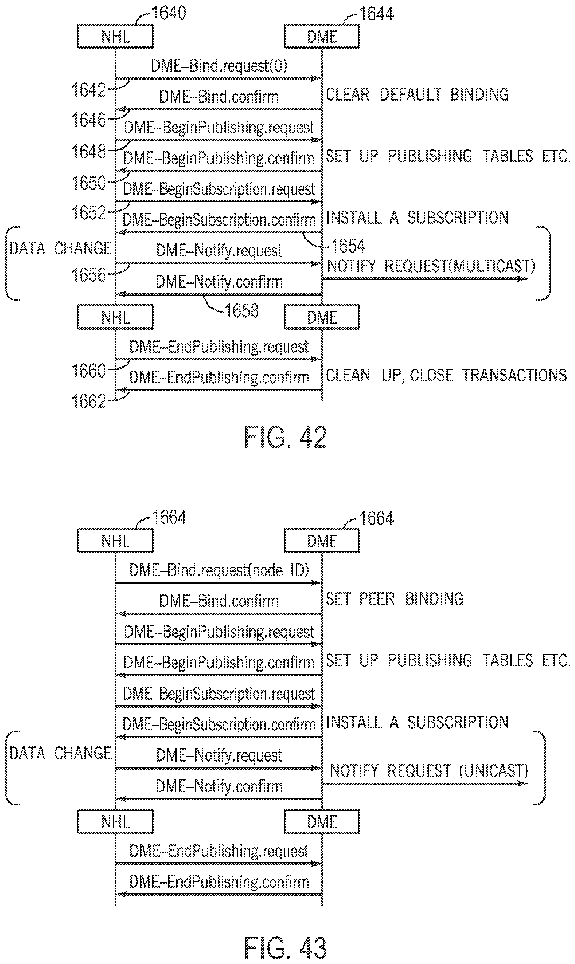

In the simplest form of publishing, a publisher begins publishing or establishes one or more subscriptions, and then simply transmits the notification request frames via multicast as shown in FIG. 42. To establish itself as a broadcast publisher, an NHL 1640 in a request 1642 clears the DME 1644 default binding to 0 indicating that that the default destination for outgoing frames is a multicast address. The DME 1644 confirms the request in a confirmation message 1646. The NHL 1640 then begins publishing by issuing a DME-BeginPublishing.request 1648 primitive to the DME 1644. The results of this operation are communicated via the DME-BeginPublishing.confirm 1650 primitive. If the Status contained in the DME-BeginPublishing.confirm 1650 primitive has a value indicating success, then the NHL 1640 may establish one or more subscriptions in the DME 1644 using a subscription request 1652. Once this is done and the resulting DME-BeginSubscription.confirm 1654 primitives contain a status indicating success, the NHL 1640 may begin to issue change notification requests 1656. In some embodiments, when the default binding is set to 0, notifications are sent to a multicast address and interested parties on the fabric may receive them. In some embodiments, when issuing a notification, a reply is not expected from the recipient, and the DME 1644 may issue a DME-Notify.confirm 1658 primitive reflecting the status of the attempt on the part of the lower stack to transmit the frame.

The criteria whereby a publisher decides to issue a notification may be application-specific. For example, if the data in question is continuously and incrementally variable, a thresholding or timed-update strategy may be used. In the case of device configuration data, on the other hand, the call for a notification may occur whenever the data changes.

Publishing may be halted by issuing the DME-EndPublishing.request 1660 primitive. The DME 1644 waits until the states involved in publishing are cleaned up and, in particular, all active transactions have been disposed of, before issuing the corresponding DME_EndPublishing.confirm 1662 primitive.

### 2. Peer Publishing

A variant of broadcast publishing involves a single peer node or service endpoint may be called "peer publishing", which is shown in FIG. 43. The main differences between broadcast publishing and peer publishing are: 1) the DME is bound to a specific peer node or service endpoint, and 2) by default, a status response is requested for each notification.

### 3. Dynamic subscription

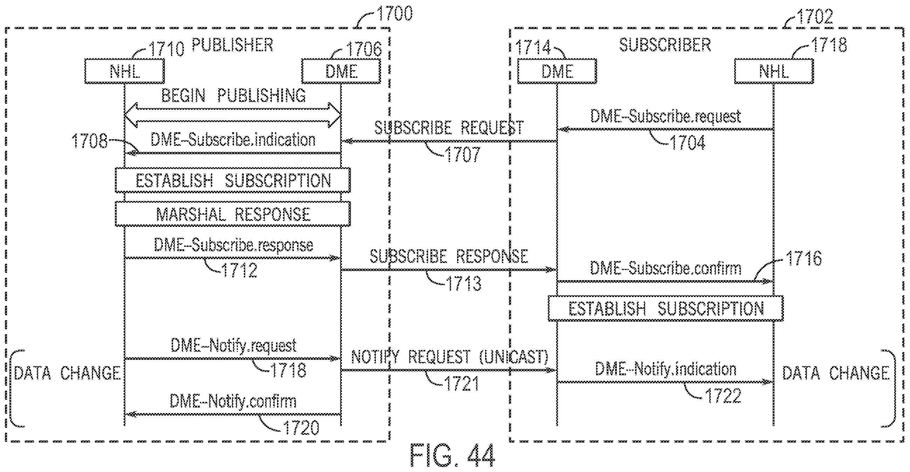

Of course, not all publishers may broadcast or peer publish. Some nodes and service endpoints may maintain subscriptions in the name of multiple devices and may deal with devices that enter and leave the fabric. In some embodiments, it may also be important to the subscriber to know whether its notifications have been received. In cases like this, it makes sense to have the subscribers explicitly request a subscription. As shown in FIG. 44, after a publisher 1700 begins publishing, a subscriber 1702 may request a subscription by issuing a DME-Subscribe.request 1704 primitive. On receipt of the DME-Subscribe.request 1704 primitive, the DME 1706 of the subscriber 1700 may establish a transaction with the identifier given by the value of the TransactionId parameter of the DME-Subscribe.request 1704 primitive. The DME 1706 may then format a subscribe request frame 1707. The subscriber 1700 either binds to the 64-bit node identifier of the publisher or includes the 64-bit node identifier of the publisher as the value of the DestinationId parameter of the DME-Subscribe.request 1708. This node identifier may be used as the intended destination of the subscribe request frame 1707.

The values of the topic identifier and path list fields of the subscribe request frame 1707 may reflect the values of the TopicId and PathList parameters of the DME-Subscribe.request 1704 primitive. Once the subscribe request frame 1707 has been formatted, the protocol engine sublayer of the DME 1706 may transmit it via a fabric exchange layer. If the Timeout parameter of the DME-Subscribe.request primitive has a non-zero value then the value may be used to set the expected response timeout for the fabric exchange.

Upon receipt of subscribe request frame 1707 from a fabric exchange manager in the publisher, the DME 1706 of the publishing node attempts to establish the requested subscription. If the topic identifier field of the subscribe request frame 1707 has a non-zero value, then the DME 1706 may attempt to match the value of that field with the identifier of an existing topic under management. If a matching topic is found, the 64-bit node identifier of the sender (e.g., subscriber 1702) of the subscribe request frame 1707 may be added to the list of subscribers for that topic.

If the topic identifier field of the subscribe request frame 1707 has a value of 0, indicating an undefined topic, a path list of non-zero length may be supplied. This path list is checked against the existing list of topics under management to determine if there is an existing topic with a matching path list. If a matching topic is found, the 64-bit node identifier of the sender (e.g., subscriber 1702) of the subscribe request frame 1707 is to be added to the list of subscribers for the topic. The DME 1706 then issues a DME-Subscribe.indication 1708 primitive where the TopicId and PathList parameters reflect the values selected above and the value of the ResponseCtx parameter may be the fabric exchange context object generated by the exchange manager and containing all the information required to send a response

If no existing topic matches the supplied path list field, the DME 1706 may ensure that each entry in the path list field of the subscribe request frame 1707 is a valid path. If all path list items are valid, the DME 1706 issues a DME-Subscribe.indication 1708 primitive where the value of the TopicId parameter is 0, indicating an undefined topic, and the value of the PathList parameter is the list of paths present in the path list field of the subscribe request frame 1707. The NHL 1710 of the publisher 1700 may pick a topic identifier for the requested subscription and establish it using the DME-Begin-Subscription.request primitive where the value of the Subscriber parameter is to be the 64-bit node identifier of the requesting node derived from the ResponseCtx parameter of the DME-Subscribe.indication 1708 primitive.

Once the subscription has been established and the NHL 1710 has marshalled the data to be used in responding to the DME-Subscribe.indication 1708, the NHL 170 issues a DME-Subscribe.response1712 primitive to the DME. Then, the response 1713 is relayed to a DME 1714 of the subscriber 1702. On receipt of a DME-Subscribe.confirm1716 primitive, an NHL 1718 of the subscriber disseminates the data list and may record the topic ID contained in the primitive. At this point, the subscription is established in the subscriber 1702. Thereafter, at the discretion of the NHL 1710, the publisher 1700 may issue DME-Notify.request 1718 primitives in response to changes in the data of interest as shown in the previous examples. The transaction uses reliable unicast transmission and a status response may be used.

On receipt of the DME-Notify.request 1718 primitive, the DME 1706 of the publisher 1700 determines the list of subscribers, if any, with an interest in the DataList parameter of the DME_Notify.request 1718 primitive. If the TopicId parameter has been provided then that identifier may be compared against the topic identifier in each subscription and the associated node identifier added to the list of interested subscribers in the case of a match. If a topic identifier has not been supplied, for each data list item given in the DataList parameter, the path component is to be compared against each element of the path list given in the subscription. If a match is found, the associated node identifier is to be added to the list of interested subscribers. In some embodiments, the publisher DME 1706 may exclude a subscriber 1702 from the list of interested subscribers if it can be determined that the subscriber has the most up-to-date version of the data of interest.

If it is discovered that a particular subscriber has an interest in the DataList provided, the DME formats a notify request frame 1721 where the 64-bit node identifier of the interested subscriber may be used as the destination identifier for the frame. The data list field of the notify request frame 1721 reflects the value of the DataList parameter of the DME-Notify.request 1718 primitive. The publisher DME 1706 may remove items that it determines not to be of interest to the given subscriber 1702. Once the notify request frame 1721 has been formatted, it is sent via the fabric exchange manager. The process may be repeated for every interested subscriber identified in the subscriber list of the DME.

The DME 1706 may issue a DME-Notify.confirm 1720 primitive. The Status parameter may be a status report indicating the success or failure of the transmission attempt. The value of the TransactionId parameter may be the 16-bit identifier of the now-completed WDM transaction. On receipt of a DME-Notify.confirm primitive, the NHL of the notifier is informed of the success or failure of a previous request and the completion of the corresponding transaction. On receipt of the notify request frame 1721, the DME 1714 of the subscribing device 1718 issues a DME-Notify.indication 1722 primitive to the NHL. The values of the TopicId and DataList parameters reflect the corresponding field values form the notify request frame 1721.

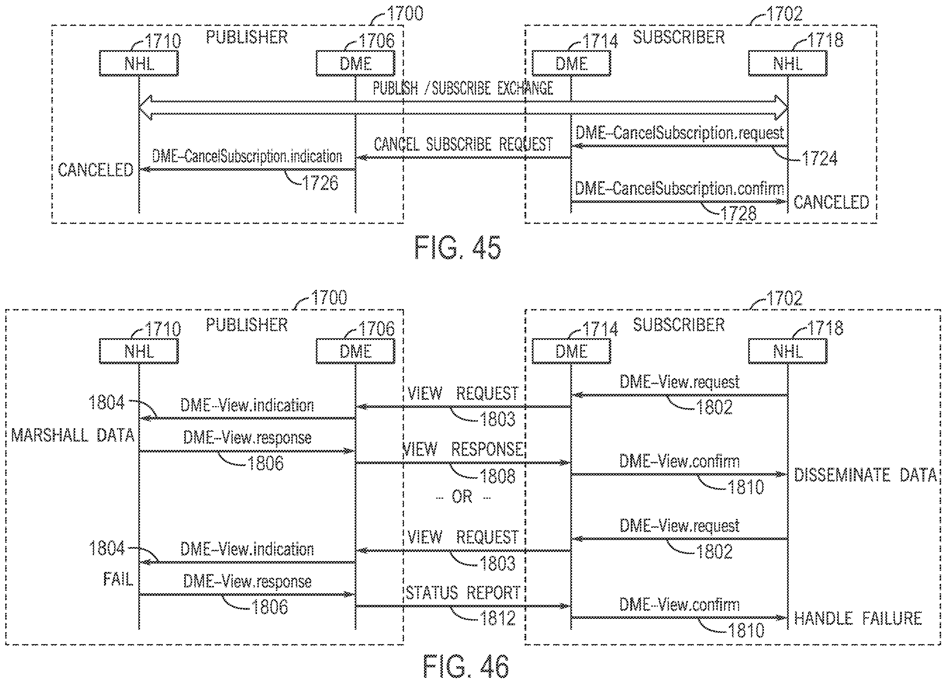

On receipt of the DME-Notify.indication 1722 primitive, the NHL 1718 may begin the process of disseminating the data for each of the items in the DataList parameter. The subscriber1702 may cancel the subscription by initiating a DME-CancelSubscription.request 1724primitive as shown in FIG. 45. The DME 1706 of the publisher receives the cancellation request 1724 and sends the NHL 1710 an cancel subscription indication 1726. The DME 1714 of the subscriber 1702 may send the NHL 1718 of the subscriber a cancel subscription confirmation 1728 upon successful transmittal for the cancel subscription request 1724.

**4. Topic Identifier**

In the above cases, the publisher is, in principle, responsible for choosing a topic identifier for the subscription. The topic identifier is used in subsequent management operations around the subscription and may be used as a shorthand for the path list associated with the subscription (e.g., in the case of a DME-View.request). For a subscriber, the pair $\{t:N_p\}$ where t is a topic ID and $N_p$ is the node ID of the publisher should uniquely identify a subscribed data set and likewise, for a publisher, the pair $\{t:N_s\}$, where $N_s$ is the Node ID of the subscriber, uniquely identifies a subscription.

Topic IDs may, by convention, be chosen to have particular semantics so that, for example, an HVAC controller may define a topic called something like an HVAC State to capture whatever data in resident on that device was involved in HVAC control. Thus, in some embodiments, devices of a similar type (e.g., HVAC controllers) may use the same topic ID to simplify service discovery.

In the case of dynamic subscriptions, the subscriber may include a pre-agreed topic identifier in the subscribe request frame 1707 as a "shorthand" for the list of paths governed by intended subscription, or it may simply send a path list requiring the publisher to choose a topic identifier. The publisher may use a predefined topic identifier, if an applicable identifier is available, but the publisher may not give out that same topic ID to the same subscriber until the previous instance of it has been canceled. Topic IDs in this case may be sequenced, chosen at random (with duplicate checking), or another suitable scheme. In some embodiments, the topic identifier with the value 0 is reserved for an unspecified topic.

### vii. Viewing Function

FIG. 46 illustrates a view transaction 1800. On receipt of a DME-View.request 1802 primitive, the DME 1714 of the viewer 1702 establishes a transaction with the identifier given by the value of the TransactionId parameter of the DME-View.request 1802 primitive. The DME 1714 of the viewer 1702 then formats a view request frame 1803. If NHL 1718 has supplied a DestinationId parameter, the value of that parameter may be used as the identifier of the destination node. If no such parameter has been supplied, and a default binding has previously been established use the DME-Bind.request primitive, the node identifier found in that binding may be used as the identifier of the destination node. View request frames may also be transmitted via multicast in the case where the default binding is set to a value of 0.

If the TopicId parameter of the DME-View.request 1802 primitive has been supplied, the DME 1714 may use fabric TLV encoding of the list of paths corresponding to that topic identifier as the value of the path list field of the outgoing view request.

If the TopicId parameter has not been supplied, the PathList parameter may be supplied, and the value of the path list field of the view request frame 1803 may be the fabric TLV representation of the PathList parameter. Once the view request frame 1803 has been formatted, the protocol engine sublayer of the DME 1714 may transmit it via the fabric exchange layer. If the Timeout parameter of the DME-View.request 1802 primitive has a non-zero value, the value may be used to set the expected response timeout for the fabric exchange.

On receipt of the view request frame 1803, the DME 1706 of the publisher 1700 may issue a DME-View.indication 1804 primitive to the NHL 1710. The value of the ResponseCtx parameter of the DME-View.indication 1804 primitive may be the fabric exchange context object generated by the exchange manager and containing the information required to send a response. The PathList parameter of the DME-View.indication 1804 primitive may reflect the value of the path list field of the received view request frame 1803.

On receipt of the DME-View.indication 1804 primitive, the NHL 1710 begins the process of marshalling data for each of the paths contained in the PathList parameter. Once marshalling has been completed, the NHL 1710 issues a DME-View.response 1806 primitive. The Status parameter of the DME-View.response 1806 primitive reflects the status of the attempt to marshall results and, if the attempt is successful, the DataList parameter is supplied and has, as a value, a data list containing terminal values for all the paths in the PathList parameter of the corresponding DME-View.indication 1804. The ResponseCtx parameter of the DME-View.response 1806 primitive has the same value as that of the corresponding DME-View.indication 1804.

On receipt of the DME-View.response 1806 primitive, if the value of the Status parameter has a value denoting success, the DME 1706 may format and transmit a view response frame 1808 containing a fabric TLV encoding of the data list that is the value of the in the DataList parameter of the DEM-View.response 1806 primitive. The publisher provides the most recent version number for each data list item. On receipt of this view response frame 1808, the DME 1714 of the viewer 1718 issues a DME-View.confirm 1810 primitive. The Status parameter of the DME-View.confirm 1810 primitive may be a status report with a status code value denoting success. The DataList parameter of the DME-View.confirm 1810 primitive reflects the value of the data list field of the view response frame 1808.

If the value of the Status parameter denotes an outcome other than success, the DME 1706 may format and transmit a status report frame 1812, as previously described. On receipt of this status report, DME 1714 of the viewer issues a DME-View.confirm 1810 primitive. The value of the ResponderId parameter of the DME-View.confirm 1810 primitive may include the 64-bit node identifier of the publisher. The Status parameter may be a decoding of the status report frame. In some embodiments, the DataList parameter may be omitted. The value of the TransactionId parameter may be the 16-bit identifier of the now-completed WDM transaction. In either case, the transmission, via the fabric exchange layer, may be performed using the information in the ResponseCtx parameter.

On receipt of a DME-View.confirm primitive, the NHL of the viewer is informed of the success or failure of a previous request. In the case of success, the version and value of the data requested.

viii. **Update Transaction**

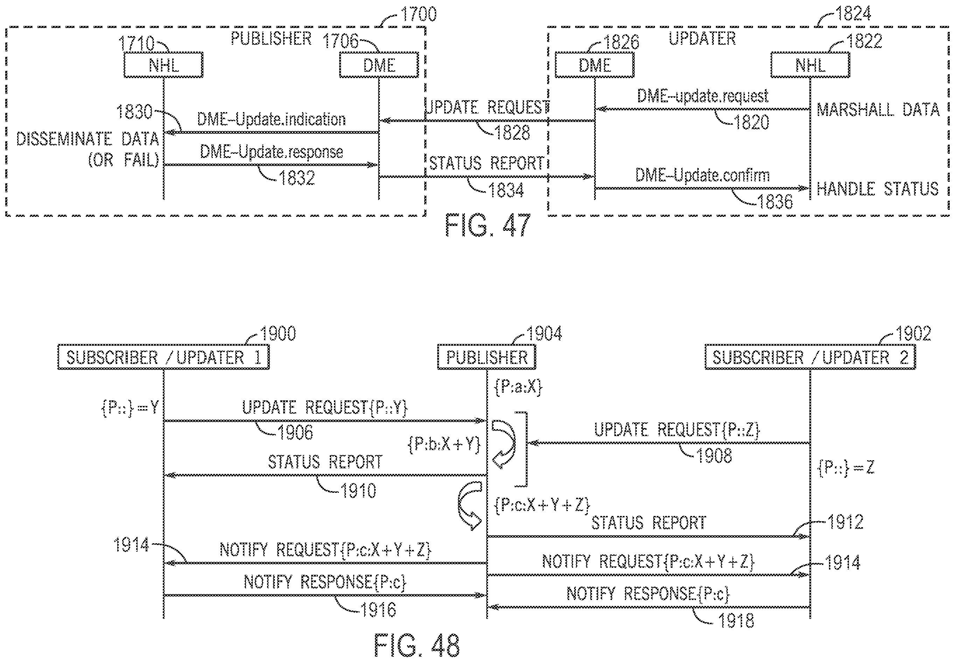

An update transaction is shown in FIG. 47. On receipt of a DME-Update.request 1820 primitive from an NHL 1822 of an updater device 1824, a DME 1826 of the updater 1824 establishes a transaction with the identifier given by the value of the TransactionId parameter of the DME-Update.request 1820 primitive. The DME 1826 of the updater 1824 then formats and transmits an update request frame 1828. If NHL 1822 has supplied a DestinationId parameter then the value of that parameter may be used as the identifier of the destination node. If no such parameter has been supplied, and a default binding has previously been established using the DME-Bind.request primitive, the node identifier found in that binding is used as the identifier of the destination node. Update request frames 1828 may also be transmitted via multicast in the case where the default binding has a value of 0. The value of the data list field of the update request frame may be the fabric TLV representation of the DataList parameter. The DME 1826 of the updater 1824 may include the most recent known version for each item in the outgoing data list.

Once the update request frame 1828 has been formatted, the protocol engine sublayer of the DME 1826 transmits it via the fabric exchange layer. If the Timeout parameter of the DME-Update.request 1820 primitive has a non-zero value then the value may be used to set the expected response timeout for the fabric exchange. On receipt of an update request frame, the DME 1706 of the publisher 1700 issues a DME-Update.indication 1830 primitive to the NHL 1710. The value of the ResponseCtx parameter of the DME-Update.indication 1830 primitive is the fabric exchange context object generated by the exchange manager and containing the information used to send a response. The DataList parameter of the DME-Update.indication 1830 primitive reflects the value of the data list field of the received update request frame 1828.

On receipt of the DME-Update.indication primitive 1830, the NHL 1710 begins the process of disseminating the data for each of the items in the DataList parameter. Once the dissemination has been completed, the NHL issues a DME-Update.response 1832 primitive. The Status parameter of the DME-Update.response 1832 primitive reflects the status of the attempt. The ResponseCtx parameter of the DME-Update.response 1832 primitive has the same value as that of the corresponding DME-Update.indication 1830. The DME 1706 then formats and transmits a status report frame 1834. On receipt of a status report, DME 1826 of the updater 1824 issues a DME-Update.confirm 1836 primitive. The value of the ResponderId parameter of the DME-Update.confirm 1836 primitive the 64-bit node identifier of the publisher 1700. The Status parameter may be a decoding of the status report frame 1834. The value of the TransactionId parameter may be the 16-bit identifier of the now-completed WDM transaction.

On receipt of a DME-Update.confirm 1836 primitive, the NHL 1822 of the updater is informed of the success or failure of a previous request and the completion of the corresponding transaction.

1. **Concurrent Updates**

In an operating environment where multiple entities have an interest in a particular data set, there is the possibility that multiple entities will submit updates concurrently. FIG. 48 below shows an example of this in which subscribers 1900 and 1902 also have an interest in updating information on a publisher 1904. Updates may, in principle, be requested by a variety of entities, including the publisher 1904 itself, and might be requested "out of band" (e.g., not using WDM).

In the initial state, the data set of interest at path P is {P:a:X} (e.g., the terminal of P has the value X and the current version is a). On arrival of an update request 1906 from subscriber/updater 1, the DME of the publisher 1904 sets in motion the process of merging the data in the update request as described later. On arrival of the second update request 1908 from subscriber/updater 2 1902, the DME of the publisher 1904, noting that the path in question is currently being updated, queues the incoming update and waits until the currently running update is finished and a status report 1910 is issued (e.g., the NHL issues the DME-Update.response primitive). After the update for the first update request 1906 is finished, the DME of the publisher 1904 processes the second update from the second update request 1908 and issues a status report 1912. In this way updates are serialized on the publisher. When the data in the second update has been merged and after the status report 1912 detailing the success or failure of the update request has been issued, the DME also issues a notify request frame 1914 to both entities informing them of the results of the merge and receives notify responses 1916 and 1918.

ix. **Failure Cases**

Common failure cases, along with the contents of the status report produced, may be represented according to the Table 25. Note that the error code, in cases where one is available, may be attached to the status report as meta-data.

**Table 25.** Failure cases

| description | profile ID | status code | error code |
|---|---|---|---|
| The DME is unable to establish a transaction on request due to resource constraints. | Core | InternalError | OutOfMemory |
| The fabric exchange layer or lower fabric layer fails on request and returns an error, (e.g. fails to establish an exchange context or make a connection). | Core | fabricError | a fabric error |
| A requested timeout, e.g. for DME-View.request, is exceeded. | Core | Timeout | N/A |
| The DME on a publisher is unable to buffer an update due to resource constraints. | Core | InternalServer Problem | OutOfMemory |
| The DME on a publisher fails to find a requested path in its path table or subscriber table. This report will be received by the requester either if the path requested is not a part of the profile schema definition or the responder is has no path table entry for the given path. | WDM | InvalidPath | N/A |
| An update request contains an out-of-date version identifier. | WDM | InvalidVersion | N/A |

x. **DME Attributes**

The DME has number of attributes or stored parameters that are used to manage and control behavior. Table 26 includes examples of DME attributes.

**Table 26.** Example DME attributes.

| name | type | range | Description |
|---|---|---|---|
| aUseTcp | boolean | true/ false | This attribute has a value of true if the Protocol Engine sublayer of the DME is expected to establish a TCP connection with peer nodes in order to send data management messages. Otherwise, the attribute is false. |
| aDefaultTimeout | unsigned 16-bit integer | 0... 0xffff | The default timeout for data management protocol operations. This timeout may be used in cases where one is not supplied by the requestor in a transaction. |
| aPeerNodeId | 64-bit Node ID | any | The bound peer address for this DME instance. The value 0 means "no bound peer". |

xi. **DME-View Request**

As previously discussed, the DME-View.request primitive is issued by the NHL to request a view or snapshot of profile data resident on a remote node. In some embodiments, the primitive interface includes a DestinationId, TopicId, PathList, TransactionId, and Timeout. Table 27 includes example DME-View parameters.

**Table 27.** DME-View.request parameters

| name | type | range | description |
|---|---|---|---|
| DestinationId | 64-bit Node ID | any | The 64-bit Node identifier of the node from which the profile data view is being requested. In some embodiments, this parameter is optional in the case where a default binding has been set up using the DME-Bind primitive. In this case, if the parameter is not supplied then the default destination is used. In some embodiments, the DestinationId may be 0 or use a default binding of 0. |

(continued)

| name | type | range | description |
|---|---|---|---|
| PathList | a path list | - | A list of paths $[P_0...P_n]$ in an agreed profile schema that the entity issuing the primitive assumes is resident on the remote node and for which it wishes to receive the corresponding data list $[\{P_0::X_0\}...\{P_n::X_n\}]$. |
| TransactionId | unsigned 16-bit integer | 1... 0xffff | A token used as local reference to the transaction set up to track this view, e.g. for cancellation. The value 0 is reserved to mean "undefined ID" and may not be used in this context, in some embodiments. |
| Timeout | unsigned 32-bit integer | 1... 0xffff | A time in milliseconds to wait for a response. This parameter is optional. If a timeout is not provided then the default timeout, aDefaultTimeout, from the DME attributes table may be used. The value 0 is reserved to mean "no timeout required" and may not be used in this context, in some embodiments. |

### xii. DME-View.indication

As previously discussed, a DME-View.indication primitive may be issued by the DME upon arrival, via the fabric exchange layer, of a view request frame. In some embodiments, the primitive interface may include a ResponseCtx or a PathList, which are defined in Table 28.

**Table 28.** DME-View.indication parameters

| name | type | range | description |
|---|---|---|---|
| ResponseCtx | - | any | An object (e.g., a fabric exchange context) that contains the information required for the protocol engine sublayer to frame a response to the received indication. This object may be retained and passed back as the ResponseCtx parameter of the corresponding DME-View.response primitive. |
| PathList | a path list | - | A list of paths $[P_0...P_n]$ in an agreed profile schema that the requestor assumes is resident on the receiving node and for which the requestor wishes to receive the corresponding data list, $[\{P_0::X_0\}...\{P_n::X_n\}]$. |

### xiii. DME-View.response

As previously discussed, a DME-View.response primitive is issued by the data manager sublayer of the DME to the protocol engine sublayer in response to the receipt, and after the processing, of a DME-View.indication primitive. The DME-View primitive interface may include ResponseCtx, Status, and DataList, such as the parameters described in Table 29.

**Table 29.** DME-View.response parameters

| name | type | range | description |
|---|---|---|---|
| ResponseCtx | - | any | The value of the ResponseCtx parameter of the DME-View.indication primitive to which this is a response. |
| Status | status report | any | The status of the indication containing profile identifier, status code and optional additional information. |

(continued)

| name | type | range | description |
|---|---|---|---|
| DataList | a path list | - | A data list, $[\{P_0::X_0\}...\{P_n::X_n\}]$, as described in clause 5 where the list length, n, is the same as the length of the path list in the DME-View.indication frame that produced this response and where each path $P_i$ is equal to one and only one element of the corresponding path list.<br>In some embodiments, the version field of each data list element may be supplied but is not required.<br>In some embodiments, this parameter be omitted unless the status expressed in the Status parameter is Success or an equivalent indicating successful processing of the corresponding DME-View.indication primitive. |

**xiv. DME-View.confirm**

As previously discussed, a DME-View.confirm primitive is issued by the data manager sublayer of the DME to the NHL in response to the receipt, and after the processing, of a view response frame. In some embodiments, the primitive interface includes ResponderId, Status, DataList, and TransactionId, as discussed in Table 30.

**Table 30.** DME-View.confirm parameters

| name | type | range | description |
|---|---|---|---|
| ResponderId | 64-bit Node ID | any | The 64-bit identifier of the node from which the profile data view was requested.<br>In some embodiments, the ResponderId may be optional when a unicast default binding has been set up using the DME-Bind primitive. |
| Status | status report | any | The status of the request containing profile identifier, status code and optional additional information. |
| DataList | a path list | - | A data list, $[\{P_0::X_0\}...\{P_n::X_n\}]$ where the list length, n, is the same as the length of the path list in the DME-View.request primitive that produced this confirmation, and where each path $P_i$ is equal to one element of the corresponding path list.<br>The version field of each data list element may be supplied.<br>This parameter may be omitted unless the status expressed in the Status parameter is Success or an equivalent indicating a successful WDM exchange. |
| TransactionId | unsigned 16 -bit integer | 1... 0xffff | The transaction identifier of the DME-View.request primitive of which this is a confirmation.<br><br>The return of this identifier here indicates that the associated transaction may be freed and any associated state expunged. |

**xv. DME-Subscribe.request**

As previously discussed, a DME-Subscribe.request primitive is issued by the NHL both to request a snapshot of profile data resident on a remote node and to request subsequent updates in the event that the data of interest changes. In some embodiments, the primitive interface may include a DestinationId, TopicId, PathList, TransactionId, and a Timeout, as defined in Table 31.

**Table 31.** - DME-Subscribe.request parameters

| name | type | range | description |
|---|---|---|---|
| DestinationId | 64-bit Node ID | any | The 64-bit identifier of the node from which the profile data subscription is being requested. |

(continued)

| name | type | range | description |
|---|---|---|---|
| | | | This parameter is optional in the case where a default unicast binding has been set up using the DME-Bind primitive. In this case, if the parameter is not supplied then the default destination is used. |
| TopicId | 16-bit topic ID | any | The 16-bit identifier of a topic, available on the publisher, to which the requestor wishes to subscribe. In some embodiments, the TopicId parameter or the PathList parameter, may be omitted. |
| PathList | a path list | - | A list of paths $[P_0...P_n]$ in an agreed profile schema that the entity issuing the primitive assumes is resident on the remote node and for which it wishes to subscribe. This parameter is optional. Either the TopicId parameter or the PathList parameter, but not both, may be supplied. |
| TransactionId | unsigned 16 -bit integer | 1...0xffff | A token used for local reference to the transaction set up to track this subscribe, e.g. for cancellation. The value 0 is reserved to mean "undefined ID" and may not be used in this context in some embodiments. |
| Timeout | unsigned 16 -bit integer | 1...0xffff | A time in milliseconds to wait for a response. This parameter is optional. The value 0 is reserved to mean "no timeout required" and may not be used in this context in some embodiments. |

### xvi. DME-Subscribe.indication

As previously discussed, a DME-Subscribe.indication primitive is issued by the DME protocol engine sublayer upon arrival, via the fabric exchange layer, of a subscribe request frame. In some embodiments, the primitive interface may include ResponseCtx, TopicId, and PathList, as represented in Table 32.

**Table 32.** DME-Subscribe.indication parameters

| name | type | range | description |
|---|---|---|---|
| ResponseCtx | - | any | An object, e.g. a fabric exchange context, that contains the information used for the protocol engine sublayer to frame a response to the received indication. This object may be retained and passed back as the ResponseCtx parameter of the corresponding DME-Subscribe.response primitive. |
| TopicId | 16-bit topic identifier | any | A topic identifier, known to the publisher, representing the content of the subscription. This parameter may be present if the topic id field is present in the corresponding subscribe request frame. |
| PathList | a path list | - | A list of paths $[P_0...P_n]$ in an agreed profile schema that the requestor assumes is resident on the receiving node and for which the requestor wishes to receive the corresponding $[\{P_0:X_0\}...\{P_n:X_n\}]$ along with subsequent updates if data items covered by the path list are changed. This parameter may be present if the path list field is present in the corresponding subscribe request frame. |

### xvii. DME-Subscribe.response

As previously discussed, a DME-Subscribe.response primitive is issued by the NHL in response to, and after processing of, a DME-Subscribe.indication primitive. In some embodiments, the primitive interface includes ResponseCtx, Status, TopicId, and DataList, as defined in Table 33.

**Table 33.** DME_Subscribe.response parameters

| name | type | range | description |
|---|---|---|---|
| ResponseCtx | - | any | The value of the ResponseCtx parameter of the DME-Subscribe.indication primitive to which this is a response. |
| Status | a status report | any | The status of the attempt to subscribe. |
| TopicId | unsigned 16-bit integer | any | A topic identifier chosen by the NHL for this subscription. |
| DataList | a data list | - | A data list, $[\{P_0::X_0\}...\{P_n::X_n\}]$, as described above, where the list length, n, is the same as the length of the path list in the DME-Subscribe.indication frame that produced this response and where each path $P_i$ is equal to one element of the corresponding path list. The version field of each data list element may be supplied. This parameter may be present if the status expressed in the Status parameter is Success or an equivalent indicating successful processing of the corresponding DME-Subscribe.indication primitive. |

**xviii. DME-Subscribe.confirm**

As previously discussed, a DME_Subscribe.confirm primitive is issued by the DME to the NHL to report the completion status of a previously issued DME-Subscribe.request. In some embodiments, the primitive interface includes ResponderId, Status, TopicId, DataList, and TransactionId, as defined in Table 34.

**Table 34.** DME_Subscribe.response parameters

| name | type | range | description |
|---|---|---|---|
| ResponderId | 64-bit node ID | any | The 64-bit identifier of the node from which the subscription was requested. This parameter is optional in the case where a unicast default binding has been set up using the DME-Bind primitive. In the case where a broadcast default binding has been established, the ResponderId parameter may be provided. |
| Status | a status report | - | The status of the subscribe request containing profile identifier, status code and optional additional information. |
| TopicId | unsigned 16-bit integer | any | The topic identifier chosen by the DME of the publishing device. |
| DataList | a data list | - | A data list, $[\{P_0::X_0\}...\{P_n::X_n\}]$, as described above, where the list length, n, is the same as the length of the path list in the DME-Subscribe.indication frame that produced this response and where each path $P_i$ is equal to one element of the corresponding path list. The version field of each data list element may be supplied. This parameter may be present if the status expressed in the Status parameter is Success or an equivalent indicating successful processing of the corresponding DME-Subscribe.indication primitive. |
| TransactionId | unsigned 16-bit integer | 1... 0xffff | The transaction identifier of the DME-Subscribe.request primitive of which this is a confirmation. |

(continued)

| name | type | range | description |
|---|---|---|---|
| | | | The return of this identifier here indicates that the associated transaction may be freed and any associated state expunged. |

**xix. DME-Update.request**

As previously discussed, a DME-update.request primitive is issued by the NHL to request a change to profile data resident on a remote node. In some embodiments, the primitive interface may include a DestinationId, DataList, TransactionId, and Timeout, as defined in Table 35.

**Table 35.** DME-Update.request parameters

| name | type | range | description |
|---|---|---|---|
| DestinationId | 64-bit Node ID | any | The 64-bit identifier of the publisher node on which the data for which a change is being requested is under management. If the DestinationId parameter is supplied and has a value of 0, then the resulting update request frame may be multicast. This parameter is optional in the case where a default binding has been set up using the DME-Bind primitive. In this case, if the parameter is not supplied then the default destination may be omitted. |
| DataList | a data list | - | A data list, $[\{P_0::X_0\}...\{P_n::X_n\}]$, as described above, describing both the location in the agreed profile schema and the new values of the data for which a change is being requested. In some embodiments, the version field of each data list element may be optional. |
| TransactionId | unsigned 16-bit integer | 1...0xffff | A token used for local reference to the transaction set up to track this update (e.g. for cancellation). In some embodiments, the value 0 is reserved to mean "undefined ID." |
| Timeout | unsigned 16-bit integer | 1...0xffff | A time in milliseconds to wait for a response. In some embodiments, this parameter is optional when the RspRequired parameter has a value of false. The value 0 is reserved to mean "no timeout required." |

**xx. DME-Update.indication**

As previously discussed, a DME-Update.indication primitive is issued by the DME upon arrival, via the fabric exchange layer, of an update request frame. In some embodiments, the primitive interface may include ResponseCtx and DataList, as defined in Table 36.

**Table 36.** DME-Update.indication parameters

| name | type | range | description |
|---|---|---|---|
| ResponseCtx | - | any | An object that contains the information for the protocol engine sublayer to frame a response to the received indication. This object may be retained and passed back as the ResponseCtx parameter of the corresponding DME-update.response primitive. |
| DataList | a data list | - | A data list, $[\{P_0::X_0\}...\{P_n::X_n\}]$ describing both the location in the agreed profile schema and, as terminals, the new values of the data for which a change is being requested. |

### xxi. DME-Update.response

As previously discussed, a DME-update.response primitive is issued by the NHL in response to, and after processing of, a DME-update.indication primitive. The NHL sends a response if the RspRequired parameter of the corresponding DME-Update.indication primitive has a value of true. In some embodiments, the primitive interface includes ResponseCtx and Status, as defined in defined in Table 37.

**Table 37.** DME_Update.response parameters

| name | type | range | description |
|---|---|---|---|
| ResponseCtx | - | any | An object that contains the information for the protocol engine sublayer to frame a response to the received indication. |
| Status | a status report | any | The status of the update indication containing profile identifier, status code and optional additional information. |

### xxii. DME-Update.confirm

As previously discussed, a DME-Update.confirm primitive is issued by the DME to the NHL to report the completion and status of an update transaction. In some embodiments, the primitive interface may include ResponderId, Status, and TransactionId, as defined in Table 38 below.

**Table 38.** DME-Update.confirm parameters

| name | type | range | description |
|---|---|---|---|
| ResponderId | 64-bit node ID | any | The 64-bit identifier of the node of which the update was requested.<br><br>This parameter is optional in the case where a unicast default binding has been set up using the DME-Bind primitive. In the case where a broadcast default binding has been established, the ResponderId parameter may be provided. |
| Status | a status report | - | The status of the update request containing profile identifier, status code and optional additional information. |
| TransactionId | unsigned 16-bit integer | 1... 0xffff | The transaction identifier of the DME-Update.request primitive of which this is a confirmation. The return of this identifier here indicates that the associated transaction may be freed and any associated state expunged. |

### xxiii. DME-CancelTransaction.request

As previously discussed, a DME-CancelTransaction.request primitive is issued by the NHL in order to cancel a previously requested transaction. In some embodiments, the primitive interface may include a TransactionId and ErrorCode, as defined in Table 39.

**Table 39.** DME_CancelTransaction.request parameters

| name | type | range | description |
|---|---|---|---|
| TransactionId | unsigned 16-bit integer | 0...0xffff | The identifier of the transaction to be canceled. A value of 0 in this context means, "cancel all transaction". |
| ErrorCode | - | - | An implementation-specific error code to be reported in the confirmation primitive that results from the canceled transaction. |

### xxiv. DME-CancelTransaction.confirm

As previously discussed, a DME-CancelTransaction.confirm primitive is issued by the DME to the NHL to confirm the cancellation of a transaction. In some embodiments, the primitive interface may include a TransactionId, as defined in Table 40.

**Table 40.** DME_CancelTransaction.confirm parameters

| name | type | range | description |
|---|---|---|---|
| TransactionId | unsigned 16-bit integer | 0...0xffff | The identifier of the canceled transaction. A value of 0 in this context means, "all transactions canceled". |

**xxv. DME-CancelSubscription.request**

As previously discussed, a DME-CancelSubscription.request transaction may be issued by the NHL of a subscriber to cancel an existing subscription. In some embodiments, the primitive interface may include DestinationId, TopicId, TransactionId, Timeout, as defined in Table 41.

**Table 41.** DME_CancelSubscription.request parameters

| name | type | range | description |
|---|---|---|---|
| DestinationId | 64-bit node ID | any | The 64-bit identifier of the peer node for the subscription being canceled. This parameter is optional and need not be provided in the case where a default binding has been established. |
| TopicId | unsigned 16-bit integer | any | The topic identifier of subscription to be canceled. |
| TransactionId | unsigned 16-bit integer | 1...0xffff | A token used for local reference to the transaction set up to track this request, e.g. for cancellation. The value 0 is reserved to mean "undefined ID" and may not be used in this context in some embodiments. |
| Timeout | unsigned 16-bit integer | 1...0xffff | A time in milliseconds to wait for a response. This parameter is optional and, in particular, should not be provided is the RspRequired parameter has a value of false. The value 0 is reserved to mean "no timeout required" and may not be used in this context in some embodiments. |

**xxvi. DME-CancelSubscription.indication**

As previously discussed, a DME-CancelSubscription.indication transaction may be issued by the DME of a publisher on receipt of a cancel subscription request frame. In some embodiments, the primitive interface may include RequestorId and TopicId, as defined in Table 42.

**Table 42.** DME_CancelSubscription.indication parameters

| name | type | range | description |
|---|---|---|---|
| RequestorId | 64-bit node ID | any | The node ID of the subscriber attempting to cancel a subscription. |
| TopicId | unsigned 16-bit integer | any | The topic identifier of subscription to be canceled. |

**xxvii. DME-CancelSubscription.confirm**

As previously discussed, a DME-CancelSubscription.confirm primitive is issued by the DME of a subscriber to communicate the status of a previous attempt to cancel a subscription. In some embodiments, the primitive interface includes ResponderId, TopicId, Status, and TransactionId, as defined in Table 43.

**Table 43.** DME_CancelSubscription.confirm parameters

| name | type | range | description |
|---|---|---|---|
| ResponderId | 64-bit node ID | any | The 64-bit identifier of the node from which the subscription was requested. This parameter is optional in the case where a unicast default binding has been set up using the DME-Bind primitive. In the case where a broadcast default binding has been established, the ResponderId parameter may be provided. |
| TopicId | unsigned 16-bit integer | any | The topic identifier of subscription that has been canceled. |
| Status | a status report | any | The status of the cancel request. |
| TransactionId | unsigned 16-bit integer | 1...0xffff | The token used for local reference to the now-completed transaction. The value 0 is reserved to mean "undefined ID" and may not be used in this context in some embodiments. |

**xxviii. DME-Bind.request**

As previously discussed, a DME-Bind.request is issued by the NHL in order to provide a default destination address for WDM frames. In some embodiments, the primitive interface may include DestinationId , as defined in Table 44.

**Table 44.** DME-Bind.request parameters

| name | type | range | description |
|---|---|---|---|
| DestinationId | 64-bit Node ID | any | The 64-bit identifier of the node which is to be the default destination for WDM frames. If the DestinationId parameter has a value of 0, then the resulting update request frame is to be multicast. |

**xxix. DME-Bind.confirm**

As previously discussed, a DME-Bind.confirm primitive is issued by the DME to report the status of a bind request. In some embodiments, the primitive interface includes Status, as described in Table 45.

**Table 45.** DME-Bind.confirm parameters

| name | type | range | description |
|---|---|---|---|
| Status | a status report | any | The status of the bind request. |

**xxx. DME-BeginPublishing.request**

As previously discussed, a DME-BeginPublishing.request primitive is issued by the NHL when it wishes to set up a DME to act as a publisher. In some embodiments, the primitive interface includes no parameters.

**xxxi. DME-BeginPublishing.confirm**

As previously discussed, a DME-BeginPublishing.confirm primitive is issued by the DME to report the status of a request to begin publishing. In some embodiments, the primitive interface includes a Status, as described in Table 46.

**Table 46.** DME-BeginPublishing.confirm parameters

| name | type | range | description |
|---|---|---|---|
| Status | a status report | any | The status of the request. |

**xxxii. DME-EndPublishing.request**

As previously discussed, a DME-EndPublishing.request primitive is issued by the NHL in order to end publishing activities for a particular DME instance. Thereafter, arriving DME frames may not be routed to that instance nor may issuing DME primitives to that instance have any effect. In some embodiments, the primitive interface has no parameters.

**xxxiii. DME-EndPublishing.confirm**

As previously discussed, a DME-EndPublishing.confirm primitive is issued by the DME to report the status of a request to end publishing. In some embodiments, the primitive interface includes Status, as described in Table 47.

**Table 47.** DME-EndPublishing.confirm parameters

| name | type | range | description |
|---|---|---|---|
| Status | a status report | any | The status of the request. |

**xxxiv. DME-BeginSubscription.request**

As previously discussed, a DME-BeginSubscription primitive may be issued by the HNL to a DME instance that supports subscription in order to start a particular subscription. Thereafter, it should be able to handle DME-Subscribe.indication primitives with respect to the topic identified by the TopicId parameter of the DME-BeginSubscription.request primitive. The primitive interface may include TopicId, SubscriberId, and PathList, as described in Table 48.

**Table 48.** DME-BeginSubscription.request parameters

| name | type | range | description |
|---|---|---|---|
| TopicId | unsigned 16-bit integer | 1... 0xffff | The topic identifier to be associated with this subscription. |
| SubscriberId | 64-bit Node ID | any | The node identifier of the intended subscriber. A value of 0 indicating "any node ID" may be used in the case of broadcast publishing. |
| PathList | a path list | any | The list of paths, which is a sub-list of the path list given as the PathList parameter of the DME-BeginPublishing.request primitive, that is used to define the content of the subscription. In some embodiments, the PathList parameter may be omitted. |

**xxxv. DME-BeginSubscription.confirm**

As previously discussed, a DME-BeginSubscription.confirm primitive is issued by the DME to report the status of a request to begin a subscription. In some embodiments, the primitive may include Status, as described in Table 49.

**Table 49.** DME-BeginSubscription.confirm parameters

| name | type | range | description |
|---|---|---|---|
| Status | a status report | any | The status of the request. |

**xxxvi. DME-Notify.request**

As previously discussed, a DME-Notify.request primitive is issued by the NHL when it wishes to notify subscribers of changes in a published data set. In some embodiments, the primitive interface may include TopicId, DataList, TransactionId, and Timeout, as described in Table 50.

**Table 50.** DME-Notify.request parameters

| name | type | range | description |
|---|---|---|---|
| TopicId | unsigned 16-bit integer | any | The 16-bit topic identifier of the subscription under which this notification is being reported. |

(continued)

| name | type | range | description |
|------|------|-------|-------------|
| DataList | a data list | any | A data list containing changes to the data set under control of the DME instance to which this primitive is issued. |
| TransactionId | unsigned 16-bit integer | 1... 0xffff | A token used as local reference to the transaction set up to track this notify request, (e.g. for cancellation). The value 0 is reserved to mean "undefined ID." |
| Timeout | unsigned 32-bit integer | 1... 0xffff | A time in milliseconds to wait for a response. In some embodiments, this parameter is omitted. If a timeout is not provided then the default timeout, aDefaultTimeout, from the DME attributes table may be used. The value 0 is reserved to mean "no timeout required." |

**xxxvii. DME-Notify.indication**

As previously discussed, a DME-Notify.indication primitive is issued by the DME of a subscriber upon arrival, via the fabric exchange manager, of a notify request frame. The primitive interface may include ResponseCtx, TopicId, and DataList, as described in Table 51.

**Table 51.** DME-Notify.indication parameters

| name | type | range | description |
|------|------|-------|-------------|
| ResponseCtx | - | any | An object that contains the information required for the protocol engine sublayer to frame a response to the received indication. This object may be retained and passed back as the ResponseCtx parameter of the corresponding DME-Notify.response primitive. |
| TopicId | unsigned 16-bit integer | any | The 16-bit topic identifier of the subscription under which this notification is being reported. |
| DataList | a data list | any | A data list containing changes to a data set to which this DME instance has a subscription. |

**xxxviii. DME-Notify.confirm**

As previously discussed, a DME-Notify.confirm primitive is issued by the DME to the NHL to report the completion and status of a notify transaction. The primitive interface may include TopicId, Status, and TransactionId, as defined in Table 52.

**Table 53.** DME_Notify.response parameters

| name | type | range | description |
|------|------|-------|-------------|
| TopicId | unsigned 16-bit integer | any | The 16-bit topic identifier of the subscription under which this notification was reported. |
| Status | a status report | - | The status of the notify request containing profile identifier, status code and optional additional information. |
| TransactionId | unsigned 16-bit integer | 1...0xffff | The transaction identifier of the DME-Notify.request primitive of which this is a confirmation. The return of this identifier here indicates that the associated transaction will be freed and any associated state expunged. |

### c. Frame Formats

A list of frames employed by WDM is provided above. In addition to the frames described here, data management exchanges may include status report profile frames, as previously discussed, when appropriate.

### i. Fabric application header

As previously discussed, in order for a data management profile frame to be properly recognized and handled, the fabric application header identifies the frame as such.

### 1. Profile ID

In some embodiments, the profile identifier field of the fabric application header has a value of 0x0000000B for WDM frames.

### 2. Message type

As previously discussed, the message type field of the fabric application header may have one of the following set of values for WDM frames.

**Table 54.** WDM profile message types

| type | message |
| --- | --- |
| 0x00 | view request |
| 0x01 | view response |
| 0x02 | subscribe request |
| 0x03 | subscribe response |
| 0x04 | cancel subscription request |
| 0x05 | update request |
| 0x06 | notify request |
| 0x09-0xff | reserved |

### ii. View request frame

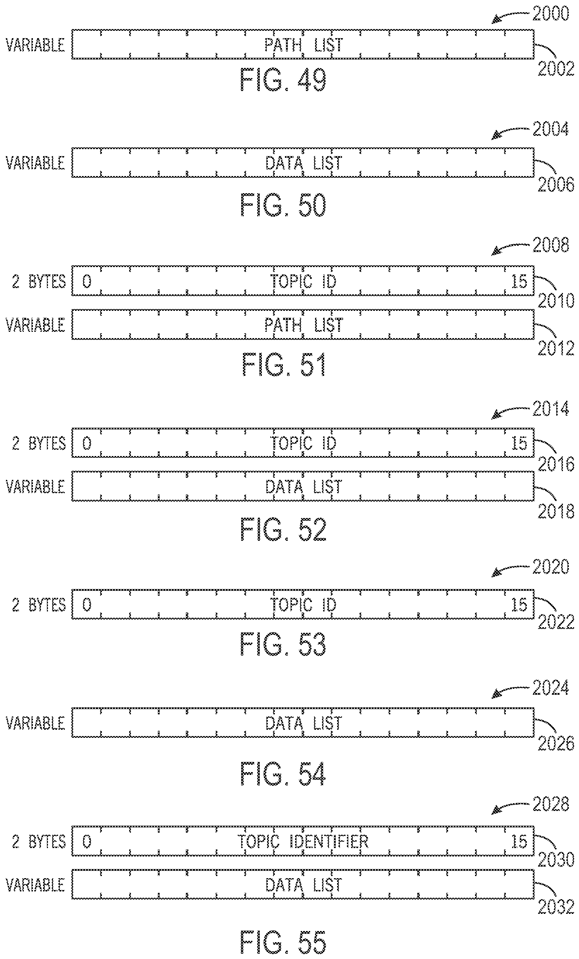

The view request frame may be sent when the requestor wants a view of profile data under management by a publisher. In some embodiments, the view request frame 2000 has the form illustrated in FIG. 49. The path list field 2002 of the view request frame 2000 is variable in length and extends to the end of the frame. The path list field 2002 is an array of paths, expressed in the TLV format and may contain at least one path to be viewed.

### iii. View response frame

The view response frame may be sent, via unicast only, in response to the receipt and successful processing of a view request frame 2004 and may have the form shown in FIG. 50. The data list field 2006 of the view response frame 2004 is variable in length and extends to the end of the message. The data list field 2006 is an array of data items, expressed in the TLV format, that corresponds to the path list field 2002 of the view request frame 2000.

### iv. View request status

If a view request frame cannot be processed successfully or a response cannot be formulated and sent, the receiver responds with a status report according to the status report profile discussed previously.

### v. Subscribe request frame

The subscribe request 2008 as illustrated in FIG. 51 may be sent when the requestor wants both a view into the current state of profile data resident on a publisher and subsequent updates when the data of interest is modified that includes a topic identifier field 2010 and a path list field 2012, as previously discussed.

### 1. Topic ID field

The topic ID field 2010 of the subscribe request frame is 16 bits in length and may either contain a value of 0, indicating "topic identifier not specified" or a non-zero value that is unique in the sense that no two active subscriptions from a particular subscribing node may have the same topic ID value.

### 2. Path list field

The path list field 2012 of the subscribe request frame 2008 is variable in length and extends to the end of the frame. The path list field is an array of paths, expressed in the TLV format. If the topic ID field 2010 has a non-zero value then the path list field is empty. If the topic ID field has a value of 0, the path list field is non-empty and contains at least one path.

### vi. Subscribe response frame

The subscribe response frame 2014, as illustrated in FIG. 52, includes a topic id field 2016 and a data list field 2018. The subscribe response frame 2014 may be sent, via unicast in response to the receipt and successful processing of a subscribe request frame 2008.

### 1. Topic ID field

The topic ID field 2016 of the subscribe response frame 2014 is 16 bits in length and may have the same value as the topic ID field 2010 of the view request frame 2008 to which the current frame is a response.

### 2. Data list field

The data list field 2018 of the subscribe response frame 2014 is variable in length and contains the most recent snapshot available of the data of interest as requested in the corresponding subscribe request frame 2008. The data list field 2018 is an array of data items, expressed in the TLV format. In some embodiments, the data list field 2018 contains at least one data item.

### vii. Subscribe request status

If a subscribe request frame cannot be processed successfully or a response cannot be formulated and sent, then the receiver responds with a status report, as previously discussed.

### viii. Cancel subscription request frame

As illustrated in FIG. 53, a cancel subscription request frame 2020 may be sent when the requestor wishes to cancel a previously established subscription and remove associated state. In some embodiments, the cancel subscription request frame 2020 includes a topic ID field 2022 of the cancel view request frame is 16 bits in length and may be the topic ID given in the subscribe request frame 2008 under which the subscription being canceled was established. On receipt of a cancel subscription request, the receiver attempts to cancel the subscription identified in the request and remove relevant state.

### ix. Update request frame

As illustrated in FIG. 54, a update request frame 2024 may be transmitted when a node wishes to make a change to data resident on another. The update request frame 2024 includes a data list field 2026 is variable in length and contains the most recent snapshot available of a data set which may be of interest to the receiver. On receipt of an update request, the receiver attempts to disseminate the data described in the frame. It then responds with a status report containing the status of the attempt.

**x. Notify frame**

As illustrated in FIG. 55, a notify frame 2028 may be sent by a publisher, either by multicast or unicast, to inform subscribers of changes to profile data under management. The notify frame 2028 may include a topic identifier field 2030 and a data list field 2032.

**1. The topic identifier field**

The topic identifier field 2030 is 16 bits in width. It may contain the 16-bit topic identifier for the subscription on the receiving device under which this notify request frame is being performed.

**2. The data list field**

The data list field 2032 of the notify frame is variable in width and may contain a data list describing changes to the data set of interest.

**xi. Profile schema**

The WDM profile, as described above, specifies complex data structures encoded in TLV-specifically the path list and data list. For the following discussion, <type>:<tag>:<value> represents TLV elements.

**1. Example path list format**

Schematically, a TLV path list has the form: <array>:**WDMPathList:** { <path>:: {...} ... }. That is, a path list is a named array of paths. A TLV path from the perspective of WDM has the form shown in Table 89.

```
<path>::
{
        {
                <unsigned int>:WDMPathProfileId:<integer value>
                | <TLV type>:WDMPathProfileInstance:<TLV value> |
        }

                | <path element> |
                ...
        }
```

**Table 55.** TLV path

The data includes a collection of type <path> where the first element is an anonymous structure containing a profile ID and optional profile instance followed by 0 or more path elements. In some embodiments, the form of a path element is one of:

- <NULL>:<tag>: in the case where the element specifies a structure member with a particular tag.

- <integer type>:**WDMPathArrayIndexSelector:**<integer value> in the case where the integer value is to be used as an array index.

- <structure>:**WDMPathArrayValueSelector:**{<type>:<tag>:<value>} in the case where the contained element is to be used as a record selector.

**2. Data list format**

A TLV data list has the form: <array>:**WDMDataList:**{<data list element>...}. In some embodiments, each data list element may have a form, such as that produced in Table 56.

```
<structure>::
{
        <path>:WDMDataListElementPath:{...}
        <unsigned 8-byte integer>:WDMDataListElementVersion:<integer value>
        <type>:WDMDataListElementData:<value>
}
```

**Table 56**. Data list element format

The first element of the form is the path to the data element, the second is its 64-bit version as assigned by the sender and the third is the data element itself.

When the path component of a data list element is the "top level" path for the given profile (e.g., identifies the profile and optional instance but no following path elements naming specific data items), the following data component may be a structure containing elements of the profile schema. These elements may be identified by fully qualified tags containing a profile identifier.

A profile schema implementation over WDM may support data access (e.g. view or update) employing the top level path as just described as well as the complete set of "next level" paths (e.g., paths containing a single additional path element specifying an element of the top level structure).

### 3. Tag dictionary

The list of tags used to encode data management frames within the data management profile is shown in Table 57.

**Table 57.** WDM tag values

| name | value | description |
|---|---|---|
| WDMPathList | 100 | The element is a path list. |
| WDMPathProfile | 101 | The element is a structure that is used to start a path and contains the profile information in light of which the tags in the path are to be interpreted. |
| WDMPathProfileId | 102 | The element is a profile ID that begins a TLV path. |
| WDMPathProfileInstance | 103 | The element is a profile instance, which may follow the profile ID in a TLV path. Note that a node may or may not have multiple instances of a particular profile and, in the case where there is only one, this element may be omitted. |
| WDMPathArrayIndexSelector | 104 | The path element corresponds to an array in the schema and the contained integer element is to be used as an index into that array. |
| WDMPathArrayValueSelector | 105 | The path element corresponds to an array in the schema and the contained TLV element is intended to match a contained array element. |
| WDMDataList | 200 | The element is a data list. |
| WDMDataListElementPath | 201 | The element is the path component of a data list element. |
| WDMDataListElementVersion | 202 | The element is the version component of a data list element. |
| WMDataListElementData | 203 | The element is a container for the data portion of a data list element. |

### 4. Profile Status Codes

The profile status codes for data management are shown in Table 58.

**Table 58.** Status codes for the data management profile

| name | value | description |
|---|---|---|
| CancelSuccess | 0x0001 | A subscription was successfully canceled. |
| BadPath | 0x0012 | A path for the path list or data list of a request was ill-formed. |
| InvalidPath | 0x0013 | A path from the path list of a view or update request frame did not match the node-resident schema of the responder. |
| UnknownTopic | 0x0014 | The topic ID given in a cancel subscription request did not match any view extant on the receiving node. |
| IllegalReadRequest | 0x0015 | The node making a request to read a particular data item does not have permission to do so. |
| IllegalWriteRequest | 0x0016 | The node making a request to write a particular data item does not have permission to do so. |
| InvalidVersion | 0x0017 | The version check on an update request failed. |

d. **Example exchange between devices**

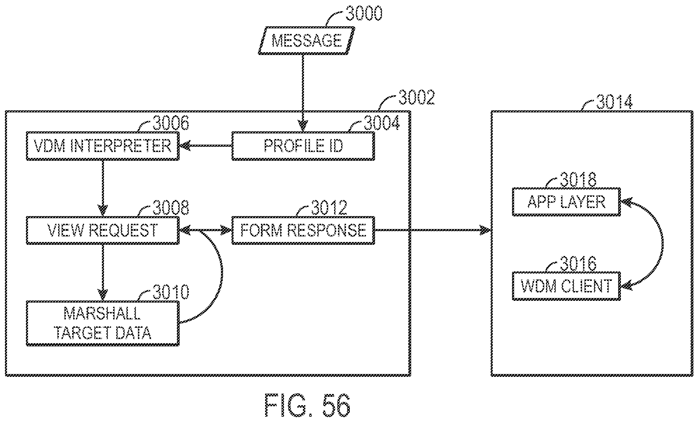

FIG. 56 illustrates an embodiment of data management communications between devices as further illustration of the foregoing discussion. A message 3000 (e.g., in general message format) is sent through a smart network and/or fabric to a receiving device 3002. The message 3000 is decoded by the device 3002 using profile ID code 3004 included in the message 3000. Wherein the device 3002 uses the profile ID code 3004 to determine that the message 3000 is a WDM message. The device 3002 sends the decoded payload of the message 3000 to its WDM interpreter 3006 to handle the WDM functions. The WDM interpreter 3006 interprets the code pertaining to various functions and submits the code to proper code functions for the device. For example, if the message contains a view request, the WDM interpreter 3006 determines that a view request is present and sends the view request to view request code 3008 which then sends a relevant request to marshalling code 3010 that marshals the target data to be viewed. The marshalling code 3010 returns the marshaled target data to the view request code 3008, which sends the marshaled data to form response code 3012. The form response code 3012 forms a response and sends the response to the requesting device 3014. In some embodiments, the requesting device 3014 receives the response via a WDM client 3016 that sends the response to the application layer 3018.

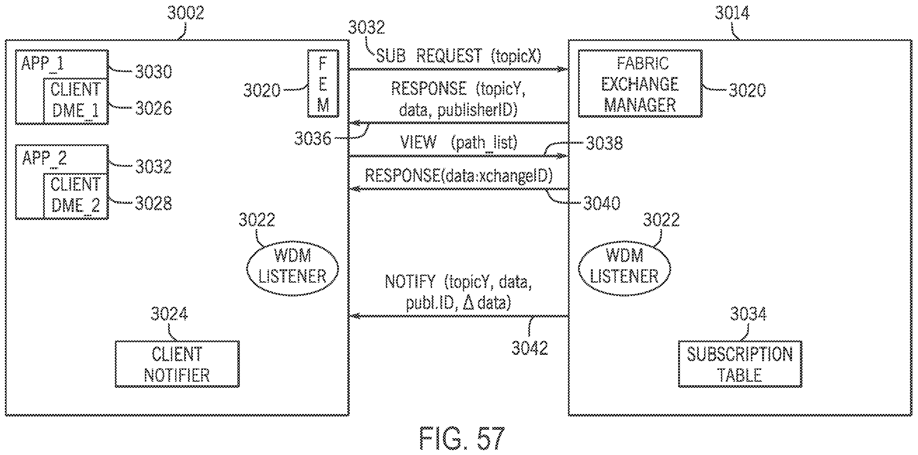

FIG. 57 illustrates a more detailed illustration of the devices 3002 and 3014 of FIG. 56. As illustrated, the devices 3002 and 3014 communicate using fabric encoded text via a fabric exchange communication that is managed by fabric exchange managers 3020. Furthermore, in some embodiments, the devices 3002 and 3014 have WDM listeners 3022 that listen for unexpected messages that are addressed to or relevant to their respective devices. For example, in some embodiments, any message not sent in response to a request may be an unexpected message. In some embodiments, one or more devices may also include a client notifier 3024 that may be used to notify clients of the detected unexpected messages, such as Client DME_1 3026 and Client DME_2 3028 each residing within respective client applications 3030 and 3032.

As discussed above, the device 3002 may request to subscribe to data from device 3014 using a subscribe request 3032 that indicates a topic (e.g., pathlist or profile field) to which the subscription applies. The device 3002 also stores a list of subscriptions in client notifier 3024. Upon receiving the subscription request 3032 via the WDM listener 3022, the device 3014 stores the device 3002 in its subscription table along with the topic to be subscribed. In addition to saving the device 3002 in the subscription table 3034, the device 3014 returns a response message 3036 that includes the current data described the topic requested. In some embodiments, the response message 3036 may include the publisherID to indicate that the device 3014 is the publishing device sending the data. Also, in certain embodiments, the response may include a topic that pertains to the subscription such that all messages sent by the client 3014 relating to the subscription will have a common topic.

Moreover, in some embodiments, the device 3002 may request and/or receive additional information, such as a view request 3038 and 3040 via the WEM 3020 or the WDM listener 3022. Even though additional communications have occurred, the device 3014 will update the device 3002 with changes to the subscribed-to data with a notify message 3042. In some embodiments, the notify message 3042 includes the topic, the data, the publisherID, and/or a change in the data.

e. **Multiple Publishers**

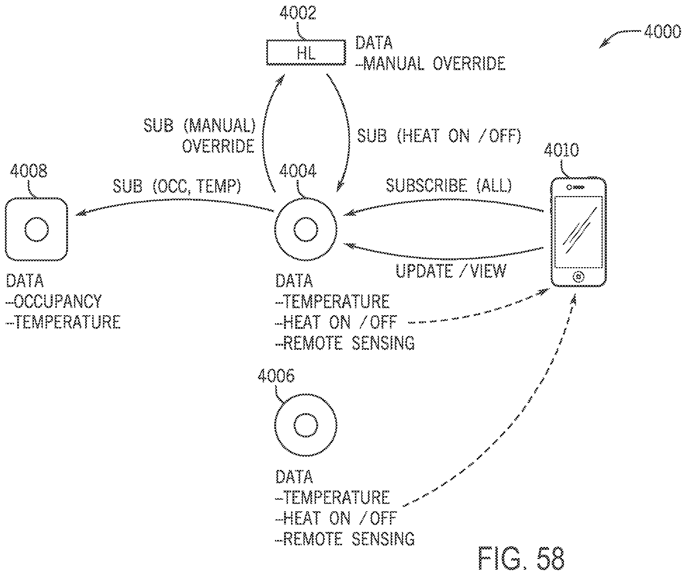

FIG. 58 illustrates a concept of multiple publishers in a fabric and "ownership" of the data that belongs to that publisher. FIG. 58 includes a fabric 4000 that contains a heatlink device 4002, two thermostats 4004 and 4006, a hazard detector 4008, and a mobile device 4010. Each device may be able to determine information that the device owns and shares with other devices using the publishing steps discussed above. For example, the heatlink device 4002 may include a manual override for a radiator valve. The heatlink device 4002 may "own" the data, and the thermostat 4004 may subscribe to this data. As previously discussed, the heatlink device 4002 may store the thermostat 4002 in its lists of subscribed devices, so that whenever the manual override value changes, the heatlink device 4002 may send an update to the thermostat 4004. Similarly, the thermostat 4004 may include data, such as a sensed temperature, a heat on/off value, and remote sensing data. The heatlink device 4002 may subscribe to the heat on/off value so that the heatlink device 4002 will be updated when thermostat 4004 determines that the heat should be switched on or off. The hazard detector 4008 may include data related to occupancy and/or temperature of a room in which it is installed. Moreover, the thermostat 4004 may subscribe to this information. Finally, the mobile device 4010 may subscribe to view any data on any node through the thermostat 4004. In other words, in the current embodiment, the mobile device 4010 may connect to the other devices through the thermostat 4004. Thus, in certain embodiments, a device that only directly connects to a single other device in the fabric may connect to other devices in the fabric through that device and perform the data management techniques discussed above. Moreover, in light of the foregoing discussion, multiple devices in a network may publish data as a publisher. Furthermore, multiple devices may subscribe to data from a single device, and each device may be a subscriber for some data and a publisher for other data.

**E. Time Variant Data Profile**

Time-variant data profile may be used for reporting and exchanging time-variant historical data among endpoints within a smart network. In some embodiments, at least a portion of the role of any device in the smart network is to observe and record the environment of which the device is a part. This observation and reporting is done over time and reporting those time-variant historical observations to other endpoints in the smart network. The time-variant data profile defines a set of tags and data values for exchanging these time-variant historical observations atop the bulk data transfer protocol. In some embodiments, this profile has an identified profile identifier that indicates that a communication includes data in the time-variant data profile
While it is possible to exchange time-variant data using the bulk data transfer protocol as opaque, binary data, it may be desirable to exchange such data in a way to enable a pipeline of backend consumers and applications for the data. Consequently, tagging or marking up the data in a well-known format provides scale in both the number of data producers as well as consumers without invasive or disruptive redefinition of the encoders and decoders used for the data.

Time-variant data in this profile is tagged using the tag-length-value (TLV) Format. As previously discussed, the structure defined and imposed by the TLV amounts to a small read-only section at the "front" of a time-variant exchange that describe the data streams at the "back." In some embodiments, the format may be trivially transformed to other representations such as JSON or XML for backend consumption and processing. Moreover, the data may be represented in a known byte order (e.g., big endian or little endian) to provide for ease of conversion and interpretation.

a. **Stream Structures**

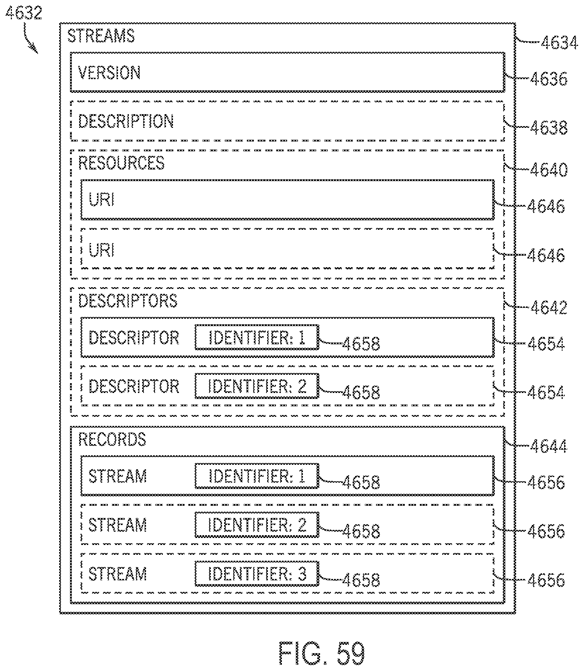

A time-variant data exchange 4632 is organized as nested set of structures, as illustrated in FIG. 59. At the outermost nesting level is the overall streams structure 4634 that marks the overall time-variant data exchange 4632. Contained within the streams structure 4634 is a single version element 4636, a description field 4638, a resources element 4640, descriptors arrays 4642, and records arrays 4644. The version element 4636 is a value (e.g., 8-bit unsigned fixed-point integer) that indicates the version of the structure described within the streams container 4634. For example, in some embodiments, the version may be a 1 for the first version.

The description field 4638 includes a human readable string that describes the entire time variant stream. In some embodiments, the description field 4638 may be formatted as a UTF-8 string. In some embodiments, the description field 4638 may be advisory and/or informative for later analysis. Moreover, in some embodiments, the description field 4638 may be omitted from at least some broadcasted messages.

The resources element 4640 inside the streams structure 4634 is an optional element that contains an array of one or more URI elements 4646 that map to resources to be fetched while parsing the streams structure 4634. In some embodiments, URI elements 4646 are strings. In some embodiments, the URIs 4646 may also include an identification of a path that identifies the time-variant data element into which the data is to be imported. When importing array data from multiple locations into the same destination array, the multiple source arrays may be concatenated together in the order the resource elements 4640.

In some embodiments, URI elements 4648 shared between vendors / public descriptors may also be URLs. In such scenarios, the service that would return the resources requested by providing these URLs may set an appropriate MIME type that is an indicator of the encoding of the resource fetched. For example, if the resource is encoded as a TLV element, the appropriate MIME type may be "application/vnd.nest.weave.tvd+tlv". Table 58 provides examples of possible MIME types:

**Table 58.** Example MIME types

| Resource Encoding | MIME Type |
| --- | --- |
| TLV | application/vnd.<vendor>.weave.tvd+tlv |
| JSON | application/vnd.<vendor>.weave.tvd+json |
| XML | application/vnd.<vendor>.weave.tvd+xml |

Each of these external resources that are imported may be decoded into an array of descriptor elements 4642. Resources element 4640 can have multiple descriptors elements which could point to resources that have intersecting descriptor elements 4654.

The imported resources, decode into the descriptors elements equivalent to the descriptor elements 4654 in the descriptors array 4642 inside the parent streams element 4634. The descriptors element 4642 includes one or more descriptor structures 4654 that includes metadata describing the data contained within the following records structure element 4644. The records structure element 4644 includes one or more record structures 4656, which represents the historical time-variant data samples being exchanged. Moreover, each descriptor structure 4654 is correlated to a corresponding record structure 4656 through a key/value pairs shared within respective structures through respective identifier fields 4658.

Resources element 4654 inside the streams element 4634 can contain multiple URIs that import different sets of descriptors. Also, a streams element 4634 can contain inline descriptors arrays 4642 that have intersecting/non-interacting descriptors. In some embodiments, the URI may include a vendor identifier and a product identifier. For example, the URI might include http://tlvsite.com/0x235A/0x0005/85a14e9.tlv. Furthermore, certain constraints may be placed on the URIs. For example, in some embodiments, URIs may contain domain information as an identifier of vendor and domain information should be in lower cased. (e.g http://www.tlvsite.com/tvd/ or http://tvd.tlvsite.com/). Moreover, in certain embodiments, the URIs may contain the product name, product version, and/or a schema version or a unique identifier for the resource like a SHA1# of the resource (e.g., http://tlvsite.com/tvd/hazard_detector/t1/#85a14e9 or http://hazard_detector.tvd.tlvsite.com /#85a14e9). In some embodiments, the URIs may constrain use of delimiter characters, such as "/", in the identifier of the resource. In some embodiments, the URIs may have an extension to specify encoding of the resource (e.g http://hazard_detector.tvd.tlvsite.com/85a14e9.tlv). In some embodiments, public URLs may include vendorId and productId for namespacing (e.g http://tvd.tlvsite.com/235A/5/85a14e9.tlv).

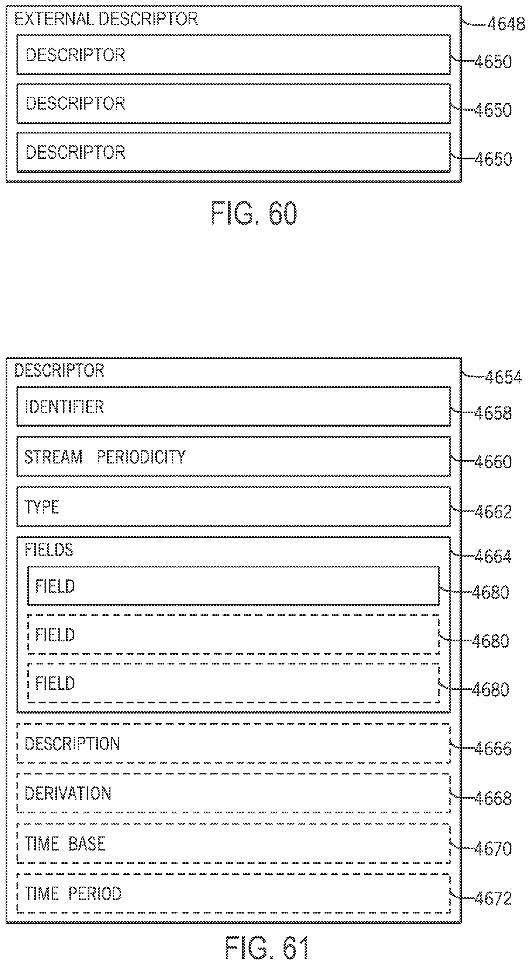

Some resources that are imported may be decoded into an External Descriptors element that may be parsed independently from and interpreted outside the Streams object 4632. FIG. 60 illustrates a possible structure for an External Descriptor 4648, in accordance with an embodiment. As illustrated, the External Descriptor structure 4648 includes an array of one or more Descriptor elements 4650. These Descriptor elements 4650 may be similar in structure to the Descriptors 4642, but the External Descriptors array 4648 may be encoded with a Top Level Profile Tag (e.g., ExtDescriptor tag) with each Descriptor 4650 therein having a context tag to maintain context specific interpretation of the Descriptor elements 4642. In certain embodiments, the External Descriptors 4650 may be formatted in any suitable format. However, in some embodiments, a TLV encoding may be used to maintain consistency between imported elements and inline elements already present. In some embodiments, when external resources are requested by their URIs the service that returns these external descriptors. The Table 59 below provides example tags used by this profile to format data. Each tag is subsequently described in detail.

**Table 59.** Example tags for the time-variant profile

| Name | Tag Type | Element Type | Value |
| --- | --- | --- | --- |
| Resources | Context | Array | 0x23 |
| URI | Context | String | 0x24 |
| ExtDescriptors | Fully Qualified | Array | 0x02 |

The following Table 60 provides example external descriptor values:

**Table 60.** Example external descriptor values

| Element | Notes | Tag | Length | Value |
|---|---|---|---|---|
| Descriptors (parent) | Start of Descriptors | 0xD5 23 5 A 00 04 00 02 | - | - |
| Descriptor | Start of Descriptor | 0x15 | - | - |
| Identifier | 1 | 0x25 05 | 0x02 | 0x00 01 |
| Stream Periodicity | True | 0x29 0A | - | - |
| Type | Temperature | 0x25 06 | 0x02 | 0x00 05 |
| Fields | Start of Fields | 0x36 0C | - | - |
| Field | Start of Field | 0x15 | - | - |
| Valid | True | 0x29 0E | - | - |
| Relative | False | 0x28 0F | - | - |
| Signed | True | 0x29 10 | - | - |
| Size | 15-bits | 0x24 11 | 0x01 | 0x10 |
| Count | 1 | 0x24 13 | 0x01 | 0x01 |
| Exponent | -1 | 0x20 18 | 0x01 | 0xFF |
| Units | Start of Units | 0x35 14 | - | - |
| System | SI | 0x24 15 | 0x01 | 0x01 |
| Description | "°C" | 0x2C 09 | 0x03 | 0xC2 B0 43 |
| Units | Start of Units | 0x36 14 | - | - |
| Unit | Start of Unit | 0x35 16 | - | - |
| Quantity | Temperature | 0x24 17 | 0x01 | 0x05 |
| End of Container | End of Unit | 0x18 | - | - |
| End of Container | End of Units | 0x18 | - | - |
| End of Container | End of Units | 0x18 | - | - |
| End of Container | End of Field | 0x18 | - | - |
| Field | Start of Field | 0x15 | - | - |
| Valid | False | 0x28 0F | - | - |
| Size | 1-bit | 0x24 12 | 0x01 | 0x01 |
| Count | 1 | 0x24 13 | 0x01 | 0x01 |
| End of Container | End of Field | 0x18 | - | - |
| End of Container | End of Fields | 0x18 | - | - |
| Description | "Temperature" | 0x2C 09 | 0x0B | 0x54 65 6D 7 065 72 61 74 75 72 65 |
| Time Base | Start of Time Base | 0x35 1F | - | - |
| Reference | Monotonic | 0x24 21 | 0x01 | 0x00 |
| Exponent | 0 | 0x20 18 | 0x01 | 0x00 |
| Synchronization | Unsynchronized | 0x24 22 | 0x01 | 0x02 |
| End of Container | End of Timer Base | 0x18 | - | - |
| Time Period | Start of Time Period | 0x35 0B | - | - |

(continued)

| Element | Notes | Tag | Length | Value |
|---|---|---|---|---|
| Exponent | 0 | 0x20 18 | 0x01 | 0x00 |
| End of Container | End of Time Period | 0x18 | - | - |
| End of Container | End of Descriptor | 0x18 | - | - |
| End of Container | End of ExtDescriptors | 0x18 | - | - |

The following Table 61 provides example values for imported descriptors.

**Table 61.** Example imported descriptors.

| | Notes | Tag | Length | Value |
|---|---|---|---|---|
| Streams | Start of Streams | 0xD5 23 5 A00 0400 01 | - | - |
| Version | 1 | 0x24 02 | 0x01 | 0x01 |
| Resources | Start of Descriptors | 0x36 23 | - | - |
| URI | String (http://tlvsite.com/tvd/235A /5/a33d424) | 0x24 | 0x22 | 0x68 74 74....32 34 0a |
| URI | String (http://tlvsite.com/tvd/235A /5/3d42434)) | 0x24 | 0x22 | 0x68 74 74.... 33 32 0a |
| End of Container | End of Resources | 0x18 | - | - |
| Records | Start of Records | 0x36 1D | - | - |
| Stream | Start of Stream | 0x35 1E | - | - |
| Identifier | 1 | 0x25 05 | - | 0x00 01 |
| Time Period | 10 | 0x24 0B | 0x01 | 0x0A |
| Time Base | 11 | 0x22 1F | 0x04 | 0x00 00 00 0B |
| Data | 21.7 °C, 22.2 °C, ... 23.3° C | 0x31 1E | 0x0B 40 | 0x00 D9 00 DE ... 00 E9 |
| End of Container | End of Stream | 0x18 | - | - |
| End of Container | End of Records | 0x18 | - | - |
| End of Container | End of Streams | 0x18 | - | - |

The following Table 62 provides example values for inline descriptors.

**Table 62.** Example inline descriptors.

| Element | Notes | Tag | Length | Value |
|---|---|---|---|---|
| Streams | Start of Streams | 0xD5 23 5 A 00 04 00 01 | - | - |
| Version | 1 | 0x24 02 | 0x01 | 0x01 |
| Descriptors | Start of Descriptors | 0x36 03 | - | - |
| Descriptor | Start of Descriptor | 0x15 | - | - |

(continued)

| Element | Notes | Tag | Length | Value |
|---|---|---|---|---|
| Identifier | 1 | 0x25 05 | 0x02 | 0x00 01 |
| Stream Periodicity | True | 0x29 0A | - | - |
| Type | Temperature | 0x25 06 | 0x02 | 0x00 05 |
| Fields | Start of Fields | 0x36 0C | - | - |
| Field | Start of Field | 0x15 | - | - |
| Valid | True | 0x29 0E | - | - |
| Relative | False | 0x28 0F | - | - |
| Signed | True | 0x29 10 | - | - |
| Size | 15-bits | 0x24 11 | 0x01 | 0x10 |
| Count | 1 | 0x24 13 | 0x01 | 0x01 |
| Exponent | -1 | 0x20 18 | 0x01 | 0xFF |
| Units | Start of Units | 0x35 14 | - | - |
| System | SI | 0x24 15 | 0x01 | 0x01 |
| Description | "°C" | 0x2C 09 | 0x03 | 0xC2 B0 43 |
| Units | Start of Units | 0x36 14 | - | - |
| Unit | Start of Unit | 0x35 16 | - | - |
| Quantity | Temperature | 0x24 17 | 0x01 | 0x05 |
| End of Container | End of Unit | 0x18 | - | - |
| End of Container | End of Units | 0x18 | - | - |
| End of Container | End of Units | 0x18 | - | - |
| End of Container | End of Field | 0x18 | - | - |
| Field | Start of Field | 0x15 | - | - |
| Valid | False | 0x28 0F | - | - |
| Size | 1-bit | 0x24 12 | 0x01 | 0x01 |
| Count | 1 | 0x24 13 | 0x01 | 0x01 |
| End of Container | End of Field | 0x18 | - | - |
| End of Container | End of Fields | 0x18 | - | - |
| Description | "Temperature" | 0x2C 09 | 0x0B | 0x54 65 6D 7 065 72 61 74 75 72 65 |
| Time Base | Start of Time Base | 0x35 1F | - | - |
| Reference | Monotonic | 0x24 21 | 0x01 | 0x00 |
| Exponent | 0 | 0x20 18 | 0x01 | 0x00 |
| Synchronization | Unsynchronized | 0x24 22 | 0x01 | 0x02 |
| End of Container | End of Timer Base | 0x18 | - | - |
| Time Period | Start of Time Period | 0x35 0B | - | - |
| Exponent | 0 | 0x20 18 | 0x01 | 0x00 |
| End of Container | End of Time Period | 0x18 | - | - |

(continued)

| Element | Notes | Tag | Length | Value |
|---|---|---|---|---|
| End of Container | End of Descriptor | 0x18 | - | - |
| End of Container | End of Descriptors | 0x18 | - | - |
| Records | Start of Records | 0x36 1D | - | - |
| Stream | Start of Stream | 0x35 1E | - | - |
| Identifier | 1 | 0x25 05 | - | 0x00 01 |
| Time Period | 10 | 0x24 0B | 0x01 | 0x0A |
| Time Base | 11 | 0x22 1F | 0x04 | 0x00 00 00 0B |
| Data | 21.7 °C, 22.2 °C, ... 23.3° C | 0x31 1E | 0x0B 40 | 0x00 D9 00 DE ... 00 E9 |
| End of Container | End of Stream | 0x18 | - | - |
| End of Container | End of Records | 0x18 | - | - |
| End of Container | End of Streams | 0x18 | - | - |
| Total Size | - | 86 | 20 | 5,797 |

Table 63 below provides example values for imported plus inline descriptors.

Table 63. Example imported plus inline descriptors.

| Element | Notes | Tag | Length | Value |
|---|---|---|---|---|
| Streams | Start of Streams | 0xD5 23 5 A 00 04 00 01 | - | - |
| Version | 1 | 0x24 02 | 0x01 | 0x01 |
| Resources | Start of Descriptors | 0x36 23 | - | - |
| URI | String (http://tlvsite.com/t vd/ 235A/5/a33d42 4) | 0x24 | 0x22 | 0x68 74 74.... 32 34 0a |
| URI | String (http://tlvsite.com/t vd/ 235A/5/3d4243 4)) | 0x24 | 0x22 | 0x68 74 74.... 33 32 0a |
| End of Container | End of Resources | 0x18 | - | - |
| Descriptors | Start of Descriptors | 0x36 03 | - | - |
| Descriptor | Start of Descriptor | 0x15 | - | - |
| Identifier | 1 | 0x25 05 | 0x02 | 0x00 01 |
| Stream Periodicity | True | 0x29 0A | - | - |
| Type | Temperature | 0x25 06 | 0x02 | 0x00 05 |
| Fields | Start of Fields | 0x36 0C | - | - |
| Field | Start of Field | 0x15 | - | - |
| Valid | True | 0x29 0E | - | - |
| Relative | False | 0x28 0F | - | - |
| Signed | True | 0x29 10 | - | - |
| Size | 15-bits | 0x24 11 | 0x01 | 0x10 |
| Count | 1 | 0x24 13 | 0x01 | 0x01 |
| Exponent | -1 | 0x20 18 | 0x01 | 0xFF |

(continued)

| Element | Notes | Tag | Length | Value |
|---|---|---|---|---|
| Units | Start of Units | 0x35 14 | - | - |
| System | SI | 0x24 15 | 0x01 | 0x01 |
| Description | "°C" | 0x2C 09 | 0x03 | 0xC2 B0 43 |
| Units | Start of Units | 0x36 14 | - | - |
| Unit | Start of Unit | 0x35 16 | - | - |
| Quantity | Temperature | 0x24 17 | 0x01 | 0x05 |
| End of Container | End of Unit | 0x18 | - | - |
| End of Container | End of Units | 0x18 | - | - |
| End of Container | End of Units | 0x18 | - | - |
| End of Container | End of Field | 0x18 | - | - |
| Field | Start of Field | 0x15 | - | - |
| Valid | False | 0x28 0F | - | - |
| Size | 1-bit | 0x24 12 | 0x01 | 0x01 |
| Count | 1 | 0x24 13 | 0x01 | 0x01 |
| End of Container | End of Field | 0x18 | - | - |
| End of Container | End of Fields | 0x18 | - | - |
| Description | "Temperature" | 0x2C 09 | 0x0B | 0x54 65 6D 7 065 72 61 74 75 72 65 |
| Time Base | Start of Time Base | 0x35 1F | - | - |
| Reference | Monotonic | 0x24 21 | 0x01 | 0x00 |
| Exponent | 0 | 0x20 18 | 0x01 | 0x00 |
| Synchronization | Unsynchronized | 0x24 22 | 0x01 | 0x02 |
| End of Container | End of Timer Base | 0x18 | - | - |
| Time Period | Start of Time Period | 0x35 0B | - | - |
| Exponent | 0 | 0x20 18 | 0x01 | 0x00 |
| End of Container | End of Time Period | 0x18 | - | - |
| End of Container | End of Descriptor | 0x18 | - | - |
| End of Container | End of Descriptors | 0x18 | - | - |
| Records | Start of Records | 0x36 1D | - | - |
| Stream | Start of Stream | 0x35 1E | - | - |
| Identifier | 1 | 0x25 05 | - | 0x00 01 |
| Time Period | 10 | 0x24 0B | 0x01 | 0x0A |
| Time Base | 11 | 0x22 1F | 0x04 | 0x00 00 00 0B |
| Data | 21.7 °C, 22.2 °C, ... 23.3° C | 0x31 1E | 0x0B 40 | 0x00 D9 00 DE ... 00 E9 |
| End of Container | End of Stream | 0x18 | - | - |
| End of Container | End of Records | 0x18 | - | - |

(continued)

| Element | Notes | Tag | Length | Value |
|---------|-------|-----|--------|-------|
| End of Container | End of Streams | 0x18 | - | - |

### i. Descriptor Structure

The descriptor structure 4654 is a collection of data describing the data contained within the associated record structure 4656 and may be generally formatted as depicted below in FIG 43. As previously discussed, the device descriptor 4654 includes the identifier element 4658. The identifier element is a caller-assigned 16-bit unsigned fixed-point value that is used to uniquely identify a particular sequence within the time-variant data exchange and to correlate a descriptor with its associated data in the stream.

The descriptor structure 4654 also includes a stream periodicity element 4660 is a Boolean flag that is used to indicate whether the descriptor structure 4654 and the associated data stream are periodic or aperiodic. When stream periodicity element 4660 is false, the stream is aperiodic and the data stream may be represented in tuples. The first element of each tuple, when specified, represents a relative or absolute time when the data sample(s) were taken. When stream periodicity element 4660 is true, the stream is periodic and the data stream is interpreted as values sampled at precise and evenly spaced intervals in time. The sampling period will be described by a period element within the descriptor structure, discussed below.

The descriptor structure 4654 further includes a type element 4662. The type element 4662 is a caller-assigned 16-bit or 32-bit unsigned fixed-point value that represents the type of sample in a particular data stream. The type element 4662 applies to any and all field elements 4664 found in the descriptor structure 4654 unless explicitly overridden by another type element 4662 contained within a field element 4664.

In some embodiments, values in the range 0-65 and 535 are reserved and selected for use from those listed below in Table 64.

**Table 64.** Types defined for data streams.

| Value(s) | Description |
|----------|-------------|
| 0x0000 | None |
| 0x0001 | Length |
| 0x0002 | Mass |
| 0x0003 | Time |
| 0x0004 | Current |
| 0x0005 | Temperature |
| 0x0006 | Luminous Intensity |
| 0x0007 | Area |
| 0x0008 | Volume |
| 0x0009 | Velocity |
| 0x000A | Acceleration |
| 0x000B | Density |
| 0x000C | Current Density |
| 0x000D | Magnetic Field Strength |
| 0x000E | Luminance |
| 0x000F | Mass Concentration |
| 0x0010 | Molar Concentration |
| 0x0011 | Number Concentration |
| 0x0012 | Volume Concentration |
| 0x0013 | Normality |

(continued)

| Value(s) | Description |
| --- | --- |
| 0x0014 | Molality |
| 0x0015 | Mole Fraction |
| 0x0016 | Mole Ratio |
| 0x0017 | Mass Fraction |
| 0x0018 | Mass Ratio |
| 0x0019 | Plane Angle |
| 0x001A | Solid Angle |
| 0x001B | Frequency |
| 0x001C | Force |
| 0x001D | Pressure |
| 0x001E | Energy |
| 0x001F | Power |
| 0x0020 | Electric Charge |
| 0x0021 | Electric Potential |
| 0x0022 | Capacitance |
| 0x0023 | Electric Resistance |
| 0x0024 | Electric Conductance |
| 0x0025 | Magnetic Flux |
| 0x0026 | Magnetic Flux Density |
| 0x0028 | Inductance |
| 0x0029 | Luminous Flux |
| 0x002A | Illuminance |
| 0x002B | Radioactivity |
| 0x002C | Depth |
| 0x002D | Height |
| 0x002E | Humidity |
| 0x002F | Distance |
| 0x0030 | Opacity |
| 0x0031 | Attenuation |
| 0xFFFE - 0x0031 | Reserved for future use. |
| 0xFFFF | Other |
| 0xFFFE FFFF - 0x0001 0000 | Reserved for vendor use. |
| 0xFFFF FFFF - 0xFFFF 0000 | Reserved. |

In some embodiments, vendors may create their own values for this element in the 32-bit range by qualifying the name space with a vendor identifier in the upper 16-bits and using any value in the lower 16-bits.

The descriptor structure 4654 may also include a description element 4666. The description element 4666 is a caller-assigned, human-readable UTF-8 string that may be used to describe a particular stream. The description element 4666 may apply to any and all field elements 4664 found in the descriptor structure 4654 unless explicitly overridden by another description element contained within a field element 4664. In some embodiments, the description element 4666 may be omitted from some instances of the descriptor structure 4654.

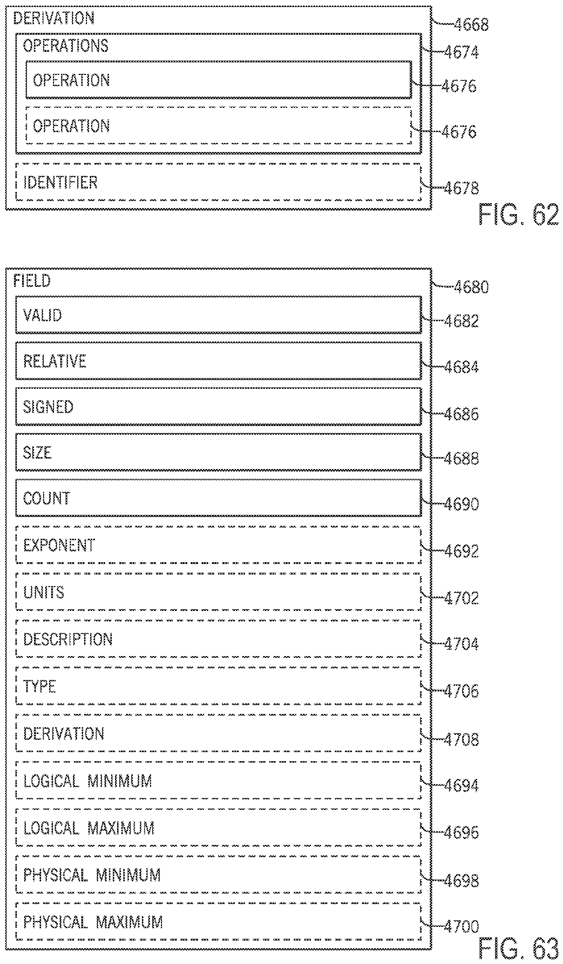

As discussed above, the descriptor structure 4654 may also include a derivation element 4668, a time base element 4670, and a time period element 4672. The derivation element 4668 is a structure used to indicate that a mathematical operation was applied to the data stream to arrive at the exchanged data. FIG. 62 illustrates an embodiment of the derivation element 4668. The derivation element 4668 applies to any field elements 4664 found in the descriptor structure 4654 unless explicitly overridden by another derivation element 4668 contained within a field element 4664.The derivation element 4668 includes an operations element 4674 is a array that contains one or more operation sub-elements 4676 describing mathematical operations or transformations that have been applied to the data samples in the corresponding stream structure. The operation sub-element 4676 is a caller-assigned 16-bit or 32-bit unsigned fixed-point value that represents a mathematical operation that was applied to achieve the sample derivation. For example, the operations may be indexed similarly to the values reproduced below in Table 65.

**Table 65.** Operations defined for data streams.

| Value(s) | Description |
|---|---|
| 0x0000 | None |
| 0x0001 | Minimum |
| 0x0002 | Maximum |
| 0x0003 | Mean |
| 0x0004 | Mode |
| 0x0005 | Median |
| 0x0006 | Logarithm - Base 2 |
| 0x0007 | Logarithm - Base e |
| 0x0008 | Logarithm - Base 10 |
| 0x0009 | Quadratic Mean |
| 0xFFFE - 0x000A | Reserved for future use. |
| 0xFFFF | Other |
| 0xFFFE FFFF - 0x0001 0000 | Reserved for vendor use. |
| 0xFFFF FFFF - 0xFFFF 0000 | Reserved. |

In some embodiments, vendors may create their own values for this element in the 32-bit range by qualifying the name space with a vendor identifier in the upper 16-bits and using any value in the lower 16-bits.

The derivation element 4668 also includes an identifier element 4678. The identifier element 4658 is a caller-assigned 16-bit unsigned fixed-point value that is to correlate the derivation back to another base descriptor structure 4654/stream. In some embodiments, the identifier element 4678 may be omitted from the derivation element 4668 and instead use the identifier element 4658 of the descriptor structure 4654 of the derivation element 4668.

Returning to FIG. 61, the fields element 4664 is an array that contains or one or more field structures 4680 describing the format of the data samples found in a corresponding stream structure. The field structure 4680 is a structured collection of metadata describing a stride of the data in an associated stream element and may be structured as illustrated in FIG. 63. Several of the fields describe how to compute both the resolution of the sample data as well as a linear transformation on each data sample to arrive at a physical value from a logical value. As discussed below, the fields used for these computations may include an exponent field, a minimum field, a logical maximum field, a physical minimum, and a physical maximum, among other fields. The resolution may be derived as shown in Equation 1 below:

$$\text{Resolution} = \frac{\text{Logical Maximum-Logical Minimum}}{\text{Physical Maximum - Physical Minimum}} \times 10^{\text{Exponent}}, \quad \text{(Equation 1)}$$

The linear transformation may be applied as shown in Equation 2 below:

$$\text{Physical}_i = \left( \frac{(\text{Logical}_i \text{-Logical Minimum}) \times (\text{Physical Maximum - Physical Minimum})}{(\text{Logical Maximum - Logical Minimum})} + \text{Physical Minimum} \right) \times 10^{\text{Exponent}}$$

, (Equation 2).

The field structure 4680 may include a valid element 4682. The valid element 4682 is a Boolean flag used to indicate whether or not the field contains alignment padding or valid data. When the valid element 4682 is false, the field contains padding and may be ignored, regardless of value. When valid element 4682 is true, the field contains a valid data sample.

The field structure 4680 may include may also include a relative element 4684. The relative element 4684 is a conditional Boolean value that may be omitted when the valid element 4682 is false. When present, the relative element 4684 may be used to indicate whether or not the field contains absolute or relative measurements.

When relative element 4684 is false, the field structure 4680 contains data that is absolute and may be interpreted without consideration of any prior samples. When the relative element 4684 is true, the field structure 4680 contains data that is relative to be interpreted in the context of the samples that preceded it.

The field structure 4680 may also include a signed element 4686. The signed element 4686 is a conditional Boolean flag that may be omitted when the valid element 4682 is false. When present, the signed element 4686 may be used to indicate whether or not the field contains unsigned or signed data. When the signed element 4686 is false, the field contains unsigned data. When the signed element 4686 is true, the field contains signed data. In some embodiments, the signed data may be two's complement data.

The field structure 4680 may include a size element 4688 and a count element 4690. The size element is an 8-bit unsigned fixed-point value that indicates the size of a corresponding data value. In some embodiments, the size may be represented in bits or bytes. The count element 4690 is a required 8-bit unsigned fixed-point value that indicates the number of size elements 4688 for the field.

In some embodiments, the count element 4690 may be one. However, the count element 4690 provides a means by which to represent tuple streams, such as a RGB tuple from a multi-color luminance sensor. In some embodiments, the size and count elements 4688 and 4690 may be specified such that individual fields achieve alignments of precisely 1 byte, 2 bytes, or 4*k bytes, where k is a positive integer.

The field structure 4680 may also include an exponent element 4692. The exponent element 4692 is an optional 8-bit signed or unsigned fixed-point value that represents the exponent applicable to the data samples. In some embodiments, the exponent may be represented in base 10. This element provides a way to scale data to preserve resolution or to avoid floating-point representation. Equations 1 and 2 above demonstrate how the exponent element 4692 may be used to transform each data sample. In some embodiments, an omitted exponent element 4692 implies an exponent of 0 (e.g., $10^0$=1). For example, to communicate a range of values 0.0 to 150.0 with significance to the tenths, the values could be exchanged with the logical range 0 to 1500 with an exponent element 4692 value of -1 (e.g., $10^{-1}$= 1/10).

The field structure 4680 may also include a logical minimum element 4694. The logical minimum element 4694 is a fixed-point value that indicates the minimum expected, valid logical value for the field. Equations 1 and 2 above demonstrate how this value is used to transform each data sample. When the logical minimum element 4694 is absent, the implied value for this field is the minimum valid representation based on the size and signed field elements 4686 and 4688. The field structure 4680 may also include a similar a logical maximum element 4696 as a fixed-point value that indicates the maximum expected, valid logical value for the field. When the logical maximum element 4696 is absent, the implied value is the maximum valid representation for the field based on the size and signed field elements 4686 and 4688. When one or both of these values is present, data samples outside of the range are invalid and should be ignored.

The field structure 4680 may also include a physical minimum element 4698 and a physical maximum element 4700. The physical minimum element 4698 is a fixed-point value that indicates the minimum expected and valid physical value for the field. When the physical minimum element 4698 is absent, the implied value field is the literal or implied value of logical minimum element 4694. Equations 1 and 2 above demonstrate how this value is used to transform each data sample. The physical maximum element 4700 is a fixed-point value that indicates the maximum expected and valid physical value for the field. Equations 1 and 2 above demonstrate how this value is used to transform each data sample. When the physical maximum element 4700 is absent, the implied value is the literal or implied value of logical maximum element 4696.

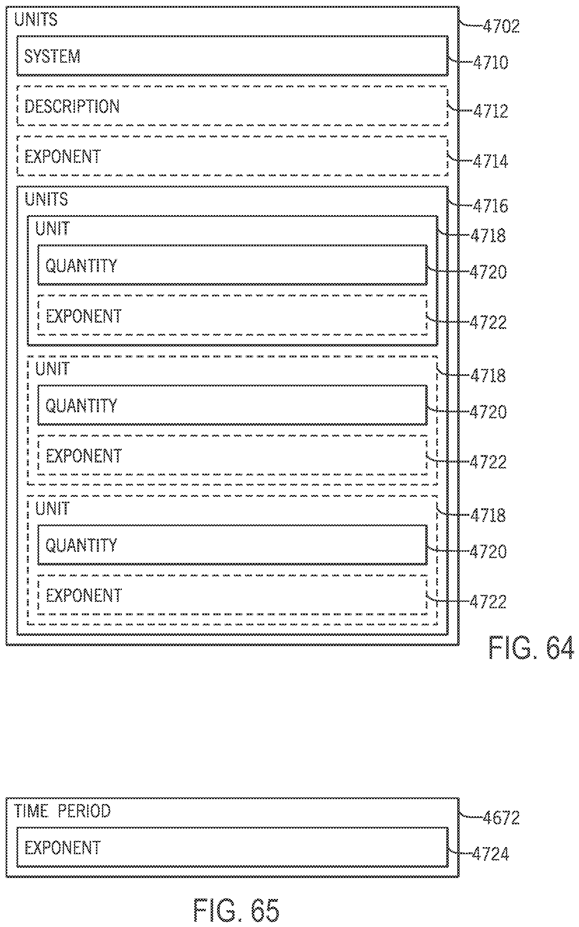

The field structure 4680 may also include a units element 4702, a description element 4704, a type element 4706, and a derivation element 4708. The units element 4702 is an advisory structured collection of metadata describing the units associated with the physical values represented by data samples and may be structured as illustrated in FIG. 64.

The units element 4702 includes a system element 4710 that is an 8-bit unsigned fixed-point number that indicates the system of units in effect for the enclosing units element 4702. In some embodiments, the system element 4710 may be selected from one of those values specified in Table 66 below.

**Table 66.** Allowed values for the System tag in the Units structure.

| Value | Description |
|---|---|
| 0 | None |
| 1 | System International |
| 2 | English |
| 3-255 | Reserved |

The units element 4702 may also include a description element 4712 is a caller-assigned, human-readable UTF-8 string that may be used to describe the specified units (e.g. "N" for kg*m/s$^2$). The units element 4702 may also include an exponent element 4714. In the context of the units element 4702, the exponent element 4714 is an 8-bit signed or unsigned fixed-point value that represents the exponent applied to the overall, composed Units. These correspond to common unit prefixes used to indicate a decadic multiple or fraction of the units. For example millimeters would have an exponent value of -3 and hectometers would have an exponent value of 2. When the exponent element 4714 is absent no prefix is applied to the units of measure. The units element 4702 includes a units sub-element 4716. The units sub-element 4716, in the context of a parent units element 4702, is an array composed of one or more unit structures 4718, as shown in Figure 5 above. The unit structure 4718 is a structure, that when composed with all other unit structures 4718, describes the derived quantity the data stream represents. Each unit structure 4718 may include a quantity element as a required 8-bit unsigned fixed-point value that represents the base unit in the system. In some embodiments, the quantity element 4720 may include a value selected from the values listed in Table 67 below.

**Table 67.** Example values for the Quantity tag in the Unit structure.

| Value | Quantity | None | SI | English |
|---|---|---|---|---|
| 0 | None | - | - | - |
| 1 | Length | - | Meter | Inch |
| 2 | Mass | - | Kilogram | Slug |
| 3 | Time | - | Second | Second |
| 4 | Electric Current | - | Ampere | Ampere |
| 5 | Temperature | - | Celsius | Fahrenheit |
| 6 | Luminous Intensity | - | Candela | Candela |
| 7 | Amount | - | Mole | Mole |
| 8 | Plane Angle | - | Radians | Degrees |
| 9 | Solid Angle | - | Steradians | Square Degrees |
| 10 | Reserved | - | | |
| ... | ... | - | | |
| 255 | Reserved | - | | |

Each unit structure 4718 may also include an exponent element 4722. The exponent element 4722, in the context of the unit structure 4718, is an 8-bit signed or unsigned fixed-point value that represents the exponent applied to the associated quantity element 4720. In some embodiments, an omitted exponent element 4722 implies an exponent of 0 (e.g., $10^0 = 1$). For example $\frac{1}{m^2}$ would have an exponent value of -2.

Returning to FIG. 63, when the description element 4704 overrides any previously encountered in the parent descriptor structure 4654. When the type element 4706 is present, the type element 4706 overrides any previously encountered in the parent descriptor structure 4654. Similarly, in FIG. 62, when the operation element 4676 is present it overrides any previously encountered in the parent descriptor structure 4692.

The time period element 4672 of FIG 43 is predicated on the assertion of the stream periodicity element 4660 and contains a single exponent element 4724, as illustrated in FIG. 65. The actual period value itself is contained within the stream element 4656, described in detail below. The exponent element 4724 within the time period element 4672 is an 8-bit signed or unsigned fixed-point value indicating the base 10 exponent of the time period. For example, an exponent element 4724 value of -3 ($10^{-3}$) may indicate that the time period is specified in milliseconds.

The time base element 4670 of FIG. 61 within a descriptor structure 4654 includes a reference element 4726, an exponent element 4728, and a synchronization element 4730. The reference element 4726 within the time base element 4670 is an 8-bit unsigned fixed-point value indicating the reference of the time base. In some embodiments, the time base element 4670 may be one of the non-reserved values specified in Table 68 below.

**Table 68.** Allowed values for the Time Base Reference element.

| Value | Mnemonic | Description |
|---|---|---|
| 0 | Monotonic | The monotonically increasing time from some implementation-dependent epoch. |
| 1 | Real Time | The current real-time time of day clock. |
| 2-255 | - | Reserved for future use. |

For the monotonic reference, the epoch is system- and implementation-defined. The definition might, for example, be from a system power-on or boot-up time. For the real time reference, the Epoch is the POSIX or Unix Epoch of 1970-01-01T00:00:00Z, not counting leap seconds.

The exponent element 4728 within the time base element 4670 is an 8-bit signed or unsigned fixed-point value indicating the base 10 exponent of the time reference offset. For example, an Exponent value of -3 ($10^{-3}$) may indicate that the time base is specified in milliseconds from the Reference epoch. In some embodiments, an omitted Exponent element implies an exponent of 0 ($10^0$).

The synchronization element 4730 within the time base element 4670 is an 8-bit unsigned fixed-point value indicating the synchronization state of the time base. In some embodiments, the synchronization element 4730 may be one of the non-reserved values specified in Table 69 below.

**Table 69.** Allowed values for the Time Base Synchronization element.

| Value | Mnemonic | Description |
|---|---|---|
| 0 | Unknown | The state is indeterminate or unknown. |
| 1 | Synchronized | The state is synchronized. |
| 2 | Unsynchronized | The state is unsynchronized. |
| 3-255 | - | Reserved for future use. |

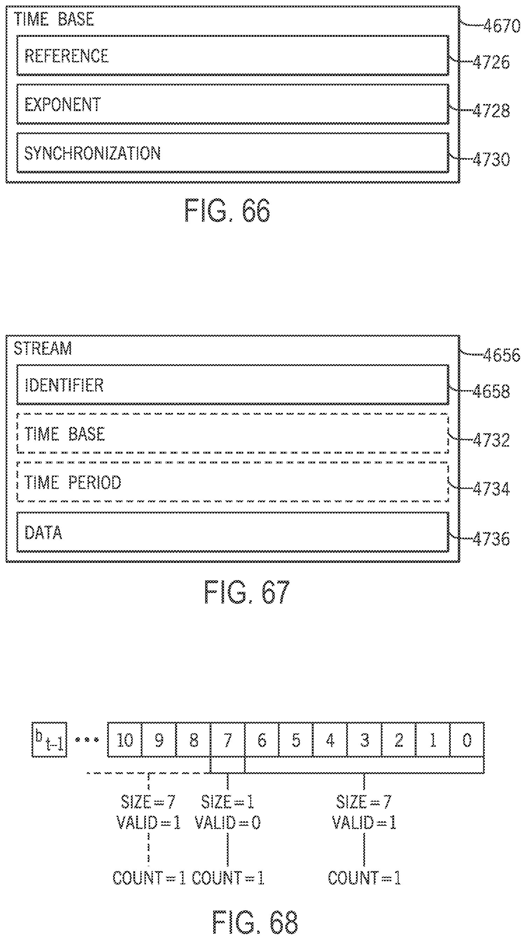

FIG. 67 illustrates an example of a structure of the stream element 4656. As previously discussed, each stream element 4656 includes a respective identifier field 4658. Furthermore, each stream element 4656 includes a time base element 4732, a time period element 4734, and data element 4736. In the context of a stream element 4656, the time base element 4732 is a signed or unsigned, fixed-point element present when the time base element 4670 is also present in the corresponding descriptor element 4654. The value represents the offset, in the magnitude specified by the exponent element 4728 of the time base element 4732, 4671 from the reference element 4726 value.

Also, in the context of a stream element 4656, the time period element 4734 is a signed or unsigned, fixed-point element present when the time period element 4672 is also present in the corresponding descriptor element 4654. In this context, the time period element 4734 is the data for the metadata in the corresponding descriptor 4654. The value represents the sampling period, in the magnitude specified by the exponent element 4728 of the time period element 4672 in the descriptor element 4654, applicable to all the data samples.

The data element 4736 is a byte stream that represents the actual data samples described by the corresponding descriptor element 4654. The data is interpreted with boundaries according to the Field Size and Count elements in the corresponding descriptor as shown in Figures 9 and 10 below.

**ii. Example Data Arrangements**

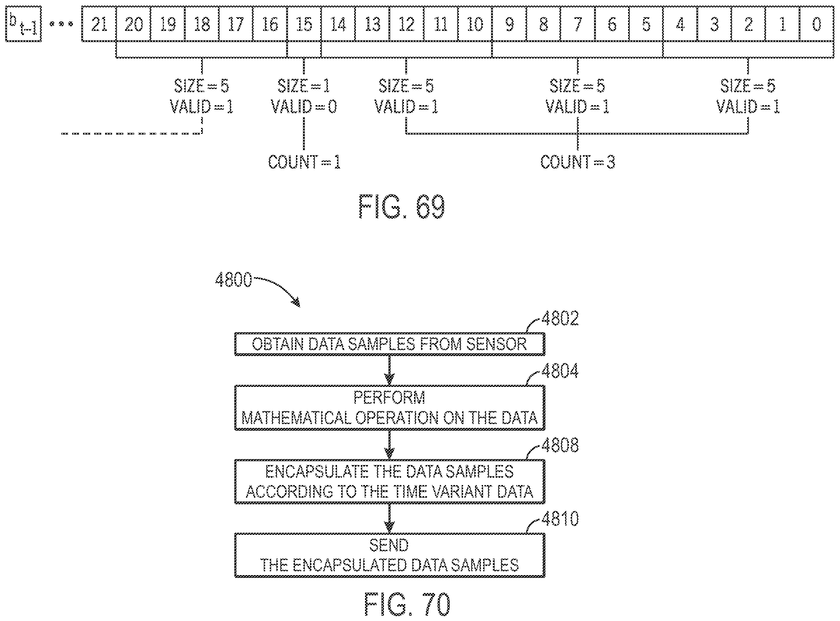

FIG. 68 depicts a flexible data arrangement with three (3), valid 5-bit fields and one (1), 1-bit padding field, achieving two-byte alignment. FIG. 69 depicts a flexible data arrangement with one (1), valid 7-bit field and one (1), 1-bit padding field, achieving one-byte alignment.

**iii. Tags**

Table 70 below summarizes a few possible tags used by this profile to format data. Each tag is subsequently described in detail.

**Table 70.** TLV tags defined for this profile.

| Name | Tag Type | Element Type | Value |
|---|---|---|---|
| Streams | Fully-Qualified | Structure | 0x01 |
| Version | Context | U8 | 0x02 |
| Descriptors | Context | Array | 0x03 |
| Descriptor | Context | Structure | 0x04 |
| Identifier | Context | U16 | 0x05 |
| Type | Context | U16 / U32 | 0x06 |
| Derivation | Context | Structure | 0x07 |
| Operation | Context | U16 / U32 | 0x08 |
| Description | Context | UTF-8 String | 0x09 |
| Stream Periodicity | Context | Boolean | 0x0A |
| Time Period | Context | Structure / [SU] | 0x0B |
| Fields | Context | Array | 0x0C |
| Field | Context | Structure | 0x0D |
| Valid | Context | Boolean | 0x0E |
| Relative | Context | Boolean | 0x0F |
| Signed | Context | Boolean | 0x10 |
| Size | Context | U8 | 0x11 |
| Count | Context | U8 | 0x12 |
| Units | Context | Structure / Array | 0x13 |
| System | Context | U8 | 0x14 |
| Unit | Context | Structure | 0x15 |
| Quantity | Context | U8 | 0x16 |
| Exponent | Context | [SU]8 | 0x17 |
| Logical Minimum | Context | Fixed | 0x18 |
| Logical Maximum | Context | Fixed | 0x19 |
| Physical Minimum | Context | Fixed | 0x1A |
| Physical Maximum | Context | Fixed | 0x1B |
| Records | Context | Array | 0x1C |
| Stream | Context | Structure | 0x1D |
| Data | Context | Data | 0x1E |
| Time Base | Context | Structure / [SU] | 0x1F |
| Reference | Context | U8 | 0x20 |
| Synchronization | Context | U8 | 0x21 |
| Operations | Context | Array | 0x22 |

In some embodiments, in order to reduce RAM usage in RAM constrained devices, an effectively read-only descriptor portion of a stream may be composed at compile time and stored in read-only memory. Consequently, these implementations may use constants that can be specified and resolved at compile time and that are further amenable to macros suitable for packing and arranging the data in byte arrays.

When the sample rate of observed data changes, various methods for handling the changes may be employed. For example, the stream may be re-represented as an aperiodic stream. With the aperiodic option, the timestamps in the stream may change at any appropriate frequency with an added overhead of an absolute or relative timestamp for each data sample.

Additionally or alternatively, the stream may be submitted as $n$ + 1 different periodic streams, for n sampling rate changes. With this approach, the time period metadata and/or data will be different for each stream, corresponding to the sample rate change. These same options may be employed when there is a gap in the stream. In other words, the portions of the streams around the gap may be treated as different periodic streams.

FIG. 70 illustrates a flowchart view of an embodiment of a process 4800 for using the previously discussed time variant data profile. A smart device obtains data samples from one of its sensors (block 4802). For example, the device may obtain temperature samples from a temperature sensor. In some embodiments, the data samples may be minimum or maximum values obtained by the sensor during a period of time. In other embodiments, the data samples may have a mathematical operation performed upon them by the smart device (block 4804). For example, the data samples may be used in a transformative math operation to generate a mean, mode, median, or other operation for the data samples for a period of time within a whole period of time for the data samples. In some embodiments, the mathematical operation may include an identity operation that passes through values unchanged.

In certain embodiments, the smart device may also import some information from external resources in a first format. For example, the smart device may obtain data samples from memory of a remote device where the remote data samples are encoded in a specific format (e.g., TLV, JSON, XML, etc.) In some embodiments, the smart device may convert the remote data samples into a second format for use in a stream to be sent to other devices. In other embodiments, the remote data samples may simply be encoded in the first format in the stream. In further embodiments, the smart device may simply encode a location of a resource from which to import the data samples.

The smart device then encapsulates the data samples in a time variant data format previously discussed (block 4806). For example, the data samples may be encoded in a stream structure within a general message that is tagged as using the time variant data profile. Furthermore, the stream structure may include a resource structure that provides identification of external resources encoded and/or to be encoded in the stream structure. The stream structure may also include the descriptor structure. As previously discussed, the descriptor structure includes an array of data that has been imported into the stream and/or the data samples from the sensor. Within the descriptor is a derivation structure that includes various metadata about the data therein. For example, as previously discussed, in some embodiments, encapsulating the data samples includes populating the derivation structure with information about a stride of the data samples, units for the data samples, exponent relating to scale (e.g., milliseconds or seconds) of the units, a time period of the data samples, indications of whether the data samples are measured in absolute time units or relative time units, and/or other information about the data samples. After the data samples have been encapsulated, the smart device may send to another device. (block 4808). For example, the smart device may send the encapsulated data samples to other devices in the network, a device outside the network via a network gateway, and/or a remote service.

**F. Locale Profile Schema**

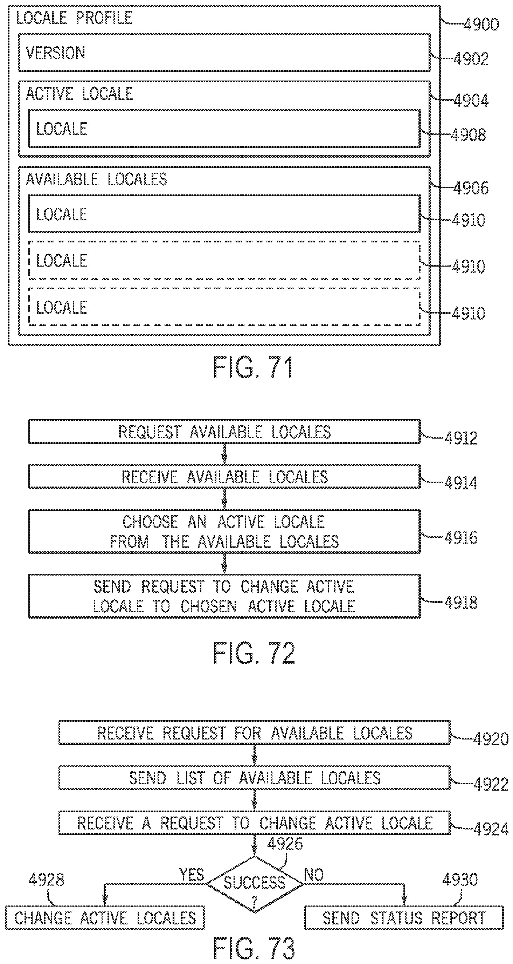

FIG. 71 illustrates a schema 4900 for the locale profile, according to an embodiment. The schema 4900 includes three fields: a version field 4902, an active locale field 4904, and an available locale field 4906. The version field 4902 includes an indication of which version of the schema is being currently employed. Thus, in some embodiments, the devices on the network may be able to use future-designed schema and/or to encode/decode the data in the currently-used version of the schema when there are multiple versions of the schema. Table 71 illustrates an example of a format that may be used to represent the version field 4902.

**Table 71.** Example formatting for the schema version element

| Name | Tag Number | Element Type | Constraints | Readability | Writability |
|---|---|---|---|---|---|
| Schema Version | 0x0002 | Unsigned Integer | 0-255 | Any | - |

The schema version field 4902 may include a profile-specific tag number (e.g., 0x0002) that allows a receiving device to determine that the version field 4902 is being sent. In some embodiments, this tag may be formatted according to the locale profile or another profile (e.g., core profile) that enables receiving data to interpret the tag. Furthermore, in some embodiments, the data following the schema version tag may be an unsigned integer that indicates the version. In some embodiments, the unsigned integer may be limited to a number of values (e.g., 0-255). For example, the integer may be limited by an amount of bits allocated to the schema version field 4902. In other embodiments, the number may be constrained beyond the integers that may be represented using the available bits. Furthermore, in some embodiments, the schema version field 4902 may be read by other devices in the network using the locale profile. Furthermore, in some embodiments, the other devices may write to the schema version using another profile (e.g., software update profile, etc.). In some embodiments, at least some of the devices in the network are not able to write the schema version field.

The schema version 4902 value may be largely advisory in nature and intended to signal to schema readers a change in the schema from this specification. In some embodiments, when changes to the schema are additive, the schema number is simply advisory to the schema reader that new top-level schema fields are present. In such embodiments, normal schema lookup or iteration would make these new fields known without a reliance on this particular field or value. However, a schema change coupled with a change in this field value helps software validation checks confirm that these additions are intended and not simply implementation errors.

The active locale field 4904 includes an active locale sub-field 4908 that indicates which locale is active for the device. In other words, the active locale field 4904 may indicate which language and/or location is being used by the device. For example, the device may display a user interface based on the selected location and/or language. The available locales field 4906 includes one or more available locales sub-fields 4910. Each available locale sub-field 4910 indicates an available locale that is supported and understood by the device.

a. **Locale Sub-Fields Representation**

The following Table 72 represents formatting that may be used to represent the active locale sub-field 4908 and/or the available locale sub-fields 4910.

**Table 72.** Example formatting for the active and available locale elements

| Name | Tag Number | Element Type | Constraints | Readability | Writability |
|---|---|---|---|---|---|
| Active Locale | 0x0001 | UTF-8 String | IETF BCP 47 Formatted | Any | Any |
| Available Locale | 0x0002 | UTF-8 String | IETF BCP 47 Formatted | Any | - |

Each of the sub-fields 4908 and 4910 include respective tag numbers used to identify the tagged information as the active locale sub-field 4908 or an available locale sub-field 4910. In some embodiments, the tagged data may be formatted in a specific format (e.g., Universal Character Set and Transformation Format-8 bit). Furthermore, in certain embodiments, the tagged data may have further constraints. For example, in some embodiments, the tagged data may include strings of data formatted according to the Internet Engineering Task Force (IETF) Best Current Practices (BCP) 47 specification.

b. **Retrieving and Setting Locales**

FIG. 72 illustrates a process used by a device on the network to request available locales and set an active locale for another device on the network. The requesting device requests that another device send a list of available locales that are available to the other device (block 4912) In some embodiments, the requesting device may use a data management view request, such as those disclosed in U.S. Provisional Application No. 62/061,593, filed October 8, 2014, and entitled "FABRIC NETWORK." In certain embodiments, the requesting device may request a view of the entire profile instance of the locale profile on the other device. In other embodiments, the requesting device may request a view of only the available locales sub-fields 4910 of the profile instance. The requesting device then receives the available locales sub-fields 4910 (block 4914). In embodiments where the requesting device has requested the entire profile instance, the requesting device may iterate over the list of available locales with or without the additional information in the profile instance. In embodiments where the requesting device has only requested the available locales sub-fields 4910, the requesting device may iterate over all received data.

Upon receiving the available locales, the requesting device selects an active profile form the available profiles (block 4916). In some embodiments, the requesting device may present the available locales to a user and receive a selection from a user. In certain embodiments, the requesting device may select the active profile to a preferred locale that may be stored on the requesting device, another device, and/or the service. In some embodiments, the preferred locale may be a locale atop a list of available locale. In other words, one or more locales may be prioritized into a list with the requesting device selecting the highest priority locale available to the other device. After selecting a new active profile, the requesting device sends a request to change the active locale to the selected locale (block 4918).

In some embodiments, the requesting device may store the available locales for a device without setting a new active profile. For example, a user wishing to see available locales (or a set active profile) for another device may be physically located at the requesting device without changing the active profile. In such embodiments, the requesting device may not choose and active profile or send a request to change the active profile.

FIG. 73 illustrates a process that may be performed by the device upon which the locale is to be set. The device receives a request from a requesting device on the same smart network as the device (block 4920). The request asks for information related to the locales available to the device. For example, the request may include a data management view request, such as those disclosed in U.S. Provisional Application No. 62/061,593, filed October 8, 2014, and entitled "FABRIC NETWORK." As previously discussed, the request may also include a request for an entire locale profile instance or may only request the available locales sub-fields 4910 of the profile instance. The device responds with the available locales sub-fields 4910 with or without the rest of the profile instance (block 4922). The device subsequently receives a request to change the active locale (block 4924). The device determines whether a properly formatted request pertains to an available locale (block 4926). If the request is successful, the device changes its active locale to the requested locale (block 4928). However, if the request is not successful, the device response with a failure status report (block 4930). For example, if the request is formatted incorrectly or refers to a locale unsupported by the device, the device responds with a relevant status report. For example, the device may respond using a status report of the core profile. Table 73 illustrates a couple example status codes that may be used in reporting failure of a set active locale request.

**Table 73.** Example locale profile status codes

| Status | Code | Description |
|---|---|---|
| Locale Not Supported or Unknown | 0x0001 | The requested locale is not supported or is unknown to the device. |
| Locale Improperly Formatted | 0x0002 | The requested locale is not a properly IETF BCP 47-formatted locale. |

Herebelow is an example of the process for setting an active locale. The requesting device requests all available locales. The responding device responds with British English, United States English, United States Spanish, Canadian French, and Netherlands Dutch among one or more other similar locales. The requesting device sets the active profile to United States English. Table 74 below illustrates an example encoding of these communications.

**Table 74.** A Locale Profile data schema example.

| Element | Human Readable Value | Tag | Length | Value |
|---|---|---|---|---|
| Schema Version | 1 | 0xC4 00 00 00 00 00 02 | 0x01 | 0x01 |
| Active Locale | "en_US" | 0xCC 00 00 00 11 00 01 | 0x05 | 0x65 6e 5f 55 53 |
| Available Locales | "en_GB" "en_US" "es_US" "fr_CA" "nl_NL" | 0xD6 00 00 00 11 00 02 | - | 0x0C 05 65 6e 5f47 42 0C 05 65 6e 5f 55 53 0C 05 65 73 5f 55 53 0C 05 66 72 5f 43 41 |

(continued)

| Element | Human Readable Value | Tag | Length | Value |
|---|---|---|---|---|
| | | | | 0C<br>05 6e 6c 5f 4e<br>4c |
| End of Container | End of Available Locales | 0x18 | - | - |

The specific embodiments described above have been shown by way of example, and it should be understood that these embodiments may be susceptible to various modifications and alternative forms. It should be further understood that the claims are not intended to be limited to the particular forms disclosed, but rather to cover all modifications and alternatives falling within the scope of this disclosure.

**G. Device Control Profile**

Device Control Profile interactions may vary by device control capability but includes some controls that are common to all devices and/or specific to different device types. However, each interaction includes a device control server and a device control client. Device control clients initiate protocol interactions with device control servers. In some embodiments, each device control server may not be capable to implement all described capabilities. If the device control server receives a message requesting a capability which it does not support, the device control server may return a core profile status report with the request's exchange ID and an "unsupported message" status code. For example, the commissioner 482 may use a Status Report scheme that is part of a Core Profile as described in U.S. Provisional Patent Application No. 62/061,593, titled "Fabric Network," which was filed on October 8, 2014, and which is incorporated by reference in its entirety. Devices which act as device control servers may also act as device control clients, and vice-versa.

**a. Reset Configuration**

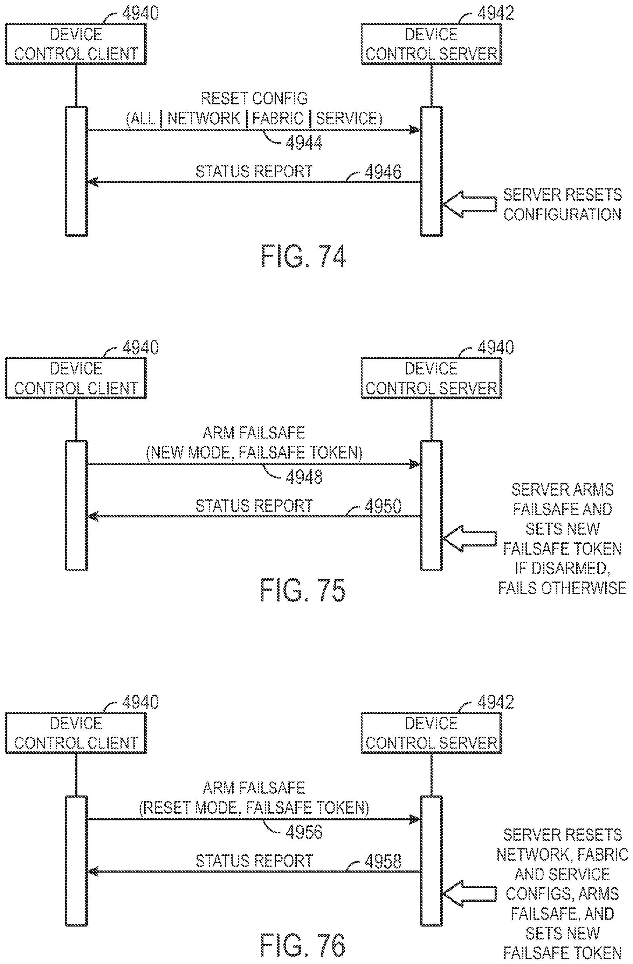

FIG. 74 illustrates a sequence diagram for a reset configuration request. A device control client 4940 may instruct a device control server 4942 to reset any combination of the server's network, fabric, or service configurations to a known state. This is a single request-response interaction. First, the client 4940 may send the server a reset configuration request 4944 whose body contains flags (e.g., service flag, fabric flag, network flag) indicating which configurations to reset. The server 4942 may then prepare to reset the specified configurations, and send the client 4940 a core profile status report 4946 to indicate success or a device control profile "unsupported failsafe mode" status report to indicate failure.
After the server 4942 responds with a core profile status report 4940 to indicate success, the server may reset the specified configurations. In some embodiments, the server 4942 cannot reset its configurations before it responds to the client's request, as to do so may render it unable to communicate further with the client.

**b. Arm Failsafe**

FIG. 75 illustrates a sequence diagram for a new arm failsafe request. A device control client 4940 may request that a device control server 4942 arm its configuration failsafe. This is a single request-response interaction. As discussed below in relation to data frames, an arm request 4948 may include an 8-bit arm mode enumeration value and a 32-bit failsafe token. The failsafe token may be unique to each fabric provisioning attempt, and indicate to new device control clients whether another client has already armed that server's failsafe as part of an in-progress provisioning process.
The failsafe arm modes include New, Reset, and Resume Existing. A New arm request 4948 may arm the server's failsafe and set its failsafe token to the value provided in the client's request if the failsafe is not already armed, and fail otherwise. If a New arm request 4948 succeeds, the server 4942 may send the client 4940 a core profile status report 4950 to indicate success. If a New arm request 4948 fails because the server's failsafe is already active, the server 4942 may send the client 4940 a device control profile "failsafe already active" status report 4950. If a New arm request 4948 fails for some other reason, the server 4942 may send the client an appropriate core profile status report 4950.
FIG. 76 illustrates a sequence diagram for a Reset arm request. A Reset arm request 4952 may reset the server's network, fabric, and/or service configurations, arm the failsafe regardless of its prior state or any existing failsafe token, and/or set the failsafe token to the value provided in the client's request. If a Reset arm request 4952 succeeds, the server 4942 may send the client 4940 a core profile status report 4954 to indicate success. If a Reset arm request 4952 fails, the server 4942 may send the client 4940 an appropriate core profile status report 4954.

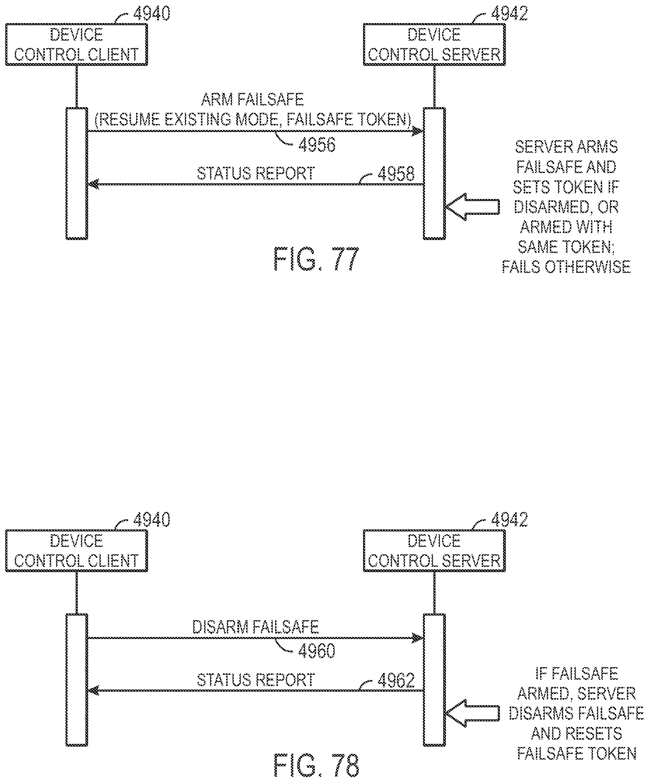

FIG. 77 illustrates a sequence diagram for a Resume Existing arm failsafe request. A Resume Existing arm request 4956 may arm the failsafe and set the failsafe token to the value provided in the client's request if the failsafe is not already armed, or succeed if the failsafe is already armed with the specified failsafe token, and fail otherwise. If a Resume Existing arm request 4956 succeeds, the server 4942 may send the client 4940 a core profile status report 4958 to indicate success. If a Resume Existing arm request 4956 fails because the server's failsafe is already armed with a failsafe token other than that provided by the client 4940, the server 4942 may send the client 4940 a device control profile "no matching failsafe active" status report 4958. If a Resume Existing arm request 4956 fails for some other reason, the server 4942 may send the client 4940 an appropriate core profile status report 4958.

A device control client 4940 may use the Resume Existing arm mode in the case where it reconnects to a new, partially provisioned device after a period of network disconnection. If the Resume Existing request succeeds with the client's earlier failsafe token, the client 4940 may assume that no other device has taken over the new device's provisioning process. If the Resume Existing request fails, the client 4940 may assume that another device has taken over the new device's provisioning process, and that the client 4940 device should not attempt to provision the new device unless its failsafe becomes disarmed and it remains unprovisioned.

If the server 4942 receives an arm failsafe message with an unknown arm mode, it may send the client 4940 a device control profile "unsupported failsafe mode" status report.

### c. Disarm Failsafe

FIG. 78 illustrates a sequence diagram for a disarm failsafe request. A device control client 4940 may request that a device control server 4942 disable its configuration failsafe. In some embodiments, this is a single request-response interaction. The client 4940 sends the server 4942 a disarm failsafe request 4960. If the server's failsafe is armed, the server 4942 disarms the failsafe, clears the failsafe token, and sends the client 4940 a core profile status report 4962 message to indicate success. If the server's failsafe is disarmed, it sends a device control profile "no failsafe active" status report 4962.

### d. Enable/Disable Connection Monitor

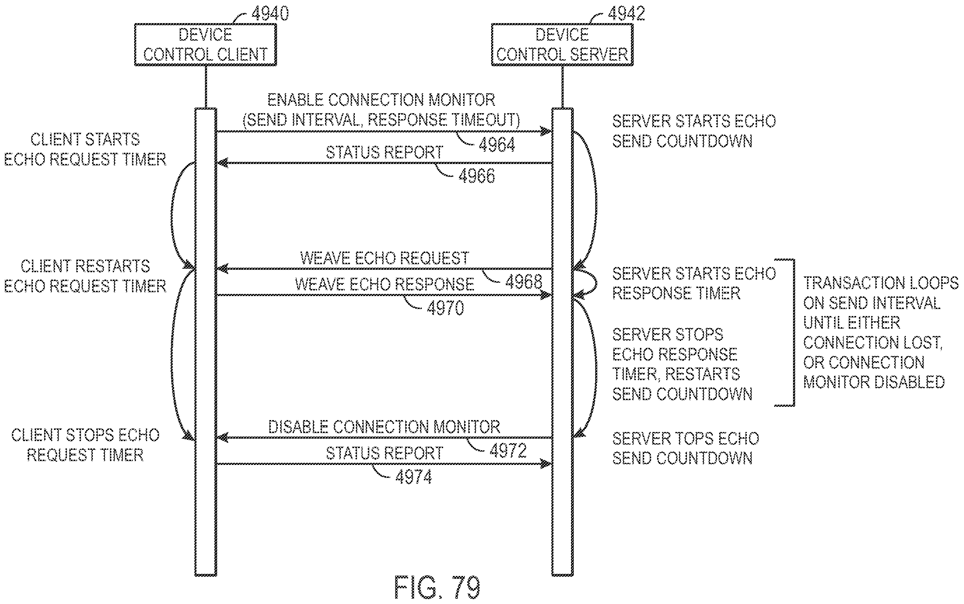

FIG. 79 illustrates a sequence diagram for a connection monitor. A device control client 4940 may request 4964 that a device control server 4942 enables a fabric echo-based connection liveness monitor on a TCP (or UDP) connection between the server 4942 and the client 4940. The client's request 4964 to enable connection monitoring may specify the interval in milliseconds between each of the server's attempts to send echo requests, as well as the response timeout to be used by the server for each echo request sent. The response timeout is defined as the threshold duration during which no communication occurs across the monitored connection before either side may consider the connection closed. For proper operation of the connection monitor, the fabric echo send interval must be smaller than the response timeout. The connection to be monitored is that over which the client sends the enable connection monitor request.

If the server 4942 accepts the client's request 4964 to enable connection monitoring, it may respond with a core profile status report 4966 to indicate success, and create a new exchange ID for fabric echo messages sent over the monitored connection. Fabric echo requests 4968 from the server 4942 to the client 4940, as well as fabric echo responses from 4970 the client 4940 to the server 4942, may be sent with the new exchange ID. If the server 4942 fails to enable connection monitoring, the server 4942 may respond with an appropriate core profile status report 4966 to indicate failure.

After the server 4942 accepts the client's request 4964 to enable connection monitoring, it may start a timer with a duration of the send interval from the client's request 4964. When this timer expires, the server 4942 may send a fabric echo request 4968 to the client over the monitored connection using the new exchange ID created for this purpose. This echo request 4968 may be sent with the response timeout received by the server 4942 as part of the client's initial request 4964. If this timeout expires, the server 4942 may consider the monitored connection terminated and close its side of the connection. If there is already one echo request outstanding when the send timer expires, the server 4942 may refrain from sending another.

After the client 4940 receives a successful status report 4966 from the server in response to its request 4964 to enable connection monitoring, the client 4940 may start a timer with a duration of the response timeout sent to the server 4942. If this timer expires, the client 4940 may consider the monitored connection terminated and close its side of the connection.

When the client 4940 wishes to disable connection monitoring on a given connection, it may send the server 4942 a disable connection monitor request 4972 over that connection. The server 4942 may then disable the monitor for this connection if enabled, cancel all timers for this connection monitor and send the client 4940 a core profile status report 4974 to indicate success or failure. The server 4942 may respond to a disable connection monitor request 4972 with a core profile success status report 4974 if no connection monitor is enabled on the specified connection.

### e. Remote Passive Rendezvous Request

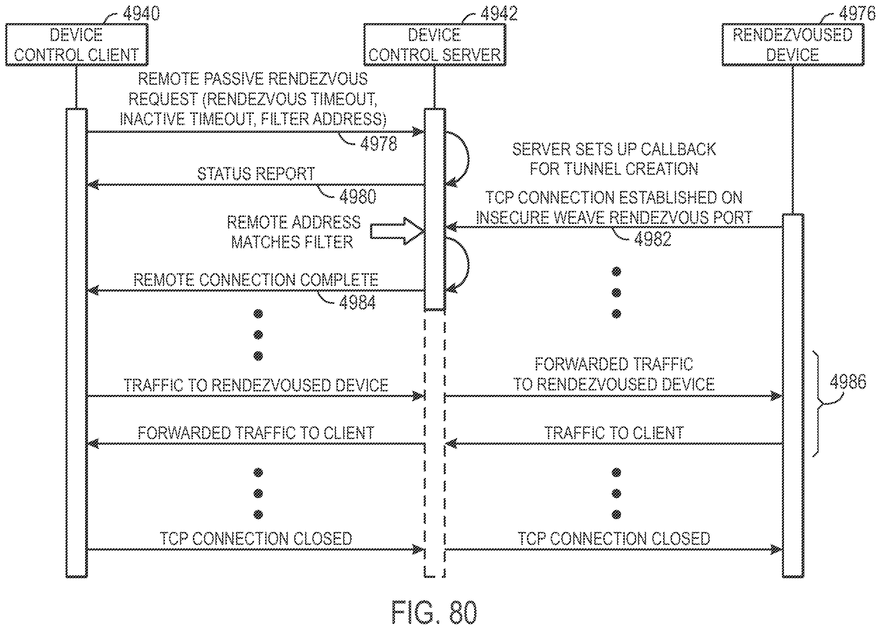

FIG. 80 illustrates a sequence diagram for a remote passive rendezvous request. A device control client 4940 may instruct a device control server 4942 to create a TCP-layer tunnel between the client 4940 and a rendezvoused device 4976 to rendezvous with the server 4942 on its unsecured fabric port. The unsecured fabric port is a predefined port over which all fabric protocol traffic is treated as unsecured at the network layer. The tunnel between the client 4940 and rendezvoused device 4976 may consist of two TCP connections: one from the client 4940 to the server 4942, and one from the server 4942 to the rendezvoused device 4976. The server 4942 may send all data that comes in over one connection out over the other, and similarly mirror connection closures and half-closures.

The client 4940 to perform a remote passive rendezvous may first send the server an RPR request 4978 over an established TCP connection. The request 4978 may contain a timeout value which indicates how long the server 4942, if it accepts the client's request, may listen for a rendezvous connection on the unsecured fabric port. The request 4978 may also include an inactivity timeout which indicates how long the server 4942 may wait to terminate the tunnel after receiving no data over its connection to either the client 4942 or rendezvoused device 4976. If the rendezvous timeout expires before the server 4942 accepts an unsecured rendezvous connection 4982, the server 4942 may stop listening for such a connection on the client's behalf and close the connection over which the client sent its RPR request 4978. Finally, the request 4978 may also contain a fabric node ID value which the server 4942 may use to filter unsecured rendezvous connections using a filter address. The filtering is transparent from the client's perspective (i.e. the server will not connect the client 4940 to a rendezvoused device 4976 with an incorrect node ID). In some embodiments, a null value indicates that the server should not use node ID filtering. If the server 4942 accepts the client's RPR request 4976, the TCP connection over which this request 4978 was sent may eventually become the connection over which the server 4942 forwards traffic between the client 4940 and the rendezvoused device 4976.

When the server 4942 receives the client's RPR request 4978, it may register the client 4940 as its RPR listener and respond with a core profile status report 4980 to indicate success if the server 4942 is already listening for rendezvous connections on the unsecured fabric port and/or another client 4942 is not already registered with the server as its RPR listener. Otherwise the server 4942 may respond with a core profile status report 4980 to indicate failure. The server 4942 may have only one registered RPR listener at a time.

In some embodiments, the device control profile does not include a method to instruct the device control server 4942 to listen for rendezvous connections on the unsecured Fabric port. Instead, in such embodiments, that functionality is provided by the Network Provisioning Profile.

When the client 4940 receives a successful status report 4980 in response to an RPR request 4978, it may keep open the TCP (or UDP) connection over which it sent this request 4978 until either the rendezvous timeout expires or the server 4942 closes this connection. The client 4940 may send no further fabric message or other data over this connection until it receives a remote connection complete message 4984 from the server 4942. If the client 4940 detects that the rendezvous timeout from its RPR request 4978 has expired, it may close its connection to the server 4942.

If the rendezvous timeout specified in the client's RPR request 4978 expires before the server 4942 accepts a rendezvous connection on behalf of the client 4940, the server 4942 may stop listening for such a connection on the client's behalf and close the connection over which the client sent its RPR request 4978. If the server 4942 receives a rendezvous connection before the rendezvous timeout expires, it may cancel this timeout. The server 4942 may discard any data received from the client 4940 over the RPR connection after a successful status report 4980 has been sent in response to the client's RPR request and before the server 4942 has sent the client 4940 a remote connection complete message.

If the server 4942 accepts a rendezvous connection on the unsecured fabric port while it listens for such connections on the client's behalf, the server 4942 first compares the rendezvoused device's fabric node ID to that specified in the client's RPR request 4978, if any. If the IDs match or the client-specified node ID is null, the server 4942 may deregister the client 4940 as an RPR listener and send the client 4940 a remote connection complete message 4984 via the same TCP connection over which it received the client's RPR request 4978. If the client-specified node ID is non-null and does not match that of the rendezvoused device 4976, the server 4942 may immediately close its connection with the rendezvoused device 4976 and resume listening for unsecured rendezvouses on the client's behalf.

The remote connection complete message 4984 indicates that the client 4940 may now send and receive data over this connection to and from the rendezvoused device 4978. Once this message 4984 has been sent, the tunnel between the client 4940 and rendezvoused device 4976 is considered to have been established.

The server 4942 sends the remote connection complete message 4984 before it starts forwarding data 4986 between the client 4940 and rendezvoused device 4976. If the rendezvoused device 4976 sends data over its connection to the server 4942 before the remote connection complete message 4984 has been sent to the client 4940, the server 4942 buffers the data from the rendezvoused device 4976 and sends it to the client 4940 immediately after it sends the remote connection complete message 4984. In some embodiments, once the server 4942 has sent the remote connection complete message 4984, it may no longer send non-forwarded data (i.e. data of its own origin over its connections to the client 4940 and rendezvoused device 4976).

The rendezvoused device 4976 is agnostic of whether the device with whom it exchanges packets over the rendezvoused TCP connection differs from the fabric node with whom it actually exchanges messages over this connection.

After the tunnel has been established, if the server 4942 does not receive data from either side of the tunnel within the inactivity timeout period specified in the client's RPR request, the server 4942 may consider the tunnel terminated and close its connections to both the client 4940 and the rendezvoused device 4976. To avoid unwanted tunnel termination as the result of this timeout, the client 4940 and rendezvoused device 4976 may enable active connection monitoring between them.

When the client 4940 or rendezvoused device 4976 closes their connection with the server 4942, the server 4942 may close its connection with the other tunnel participant and consider the tunnel terminated. If the client 4940 or rendezvoused device 4976 closes only the read or write side of their connection to the server, the server 4942 may close only the read or write side of its connection to the other tunnel participant, and consider the tunnel alive until either it times out due to inactivity or the remaining open side of the connection is closed.

### f. Fabric Application Header

In order for a device control profile frame to be properly recognized and handled, the fabric application header identifies the frame as such. For example, messages using the device control profile may include a fabric application header (e.g., 0x00000006) for device control profile frames. All messages in reset configuration, arm/disarm failsafe, and enable/disable connection monitor protocol interactions may share an exchange ID of the message sent by the device control client to initiate the interaction illustrating that the communications are all related. Fabric echo requests and responses used to determine connection liveness may share the exchange ID selected for this purpose by the device control server for each echo message sent. The exchange ID of the remote connection complete message sent to the device control client by the device control server as part of a remote passive rendezvous interaction is undefined, as the client does not send any message to the device control server in response. In some embodiments, at least some data frames may have no message body and purely rely upon information in the headers of the applications.

A message type field of the fabric application header may have one of the following set of values for Device Control Profile frames:

**Table 75.** Device Control Profile message types

| Value | Message Type |
| --- | --- |
| 0x01 | reset configuration |
| 0x02 | arm failsafe |
| 0x03 | disarm failsafe |
| 0x04 | enable connection monitor |
| 0x05 | disable connection monitor |
| 0x06 | remote passive rendezvous request |
| 0x07 | remote connection complete |
| 0x08-0xff | reserved |

Table 76 illustrates status codes that may be used related to failsafe messages:

**Table 76.** Status codes

| Value | Status Code |
| --- | --- |
| 0x0001 | Failsafe already active |
| 0x0002 | No failsafe active |
| 0x0003 | No matching failsafe active |
| 0x0004 | Unsupported failsafe mode |

(continued)

| Value | Status Code |
|---|---|
| 0x0005 | Success, but expect connection to close |

### g. Device Control Profile Data Frames

### i. Reset Configuration Frame

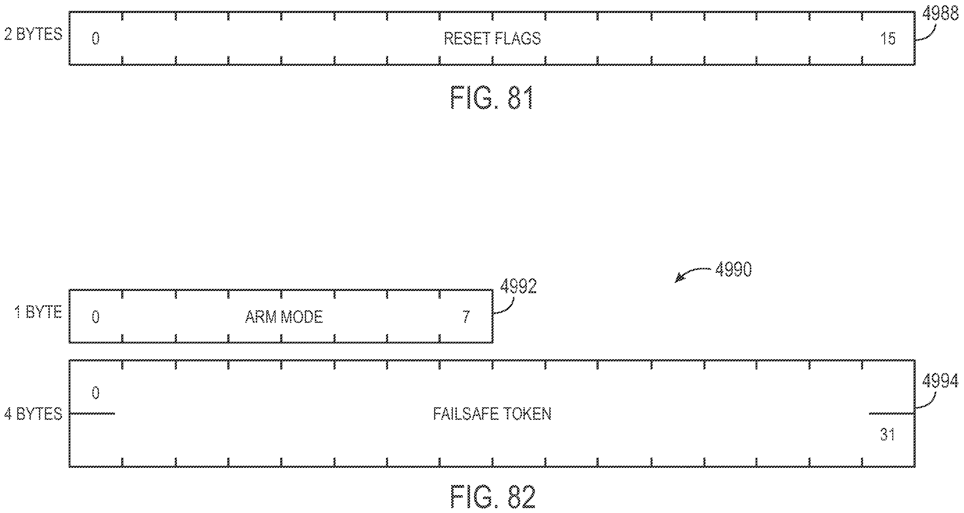

FIG. 81 illustrates a data frame for a reset configuration data frame. As illustrated, the reset configuration data frame 4988 includes 2 bytes of data that is used as flags to indicate which targets are to be reset and may be similar to those values illustrated in Table 77 below:

**Table 77.** Reset configuration values

| Value | Flag |
|---|---|
| 0x00FF | reset all configurations |
| 0x0001 | reset network configuration |
| 0x0002 | reset fabric configuration |
| 0x0004 | reset service configuration |
| 0x8000 | full factory reset |

### ii. Arm Failsafe Frame

FIG. 82 illustrates a data frame for an arm failsafe data frame. As illustrated, the arm failsafe data frame 4990 includes an arm mode field 4992 that includes 1 byte of data that is used as flags to indicate which failsafe mode is to be used and may be similar to those values illustrated in Table 78 below:

**Table 78.** Arm failsafe values

| Value | Arm mode |
|---|---|
| 0x01 | New |
| 0x02 | Reset |
| 0x03 | Resume Existing |

The arm failsafe frame 4990 also includes a failsafe token 4994 that may be used to identify the arm failsafe request and validate it. The failsafe token 4994 may be a 4-byte arbitrary value unique to each fabric provisioning attempt.

### iii. Enable Connection Monitor Frame

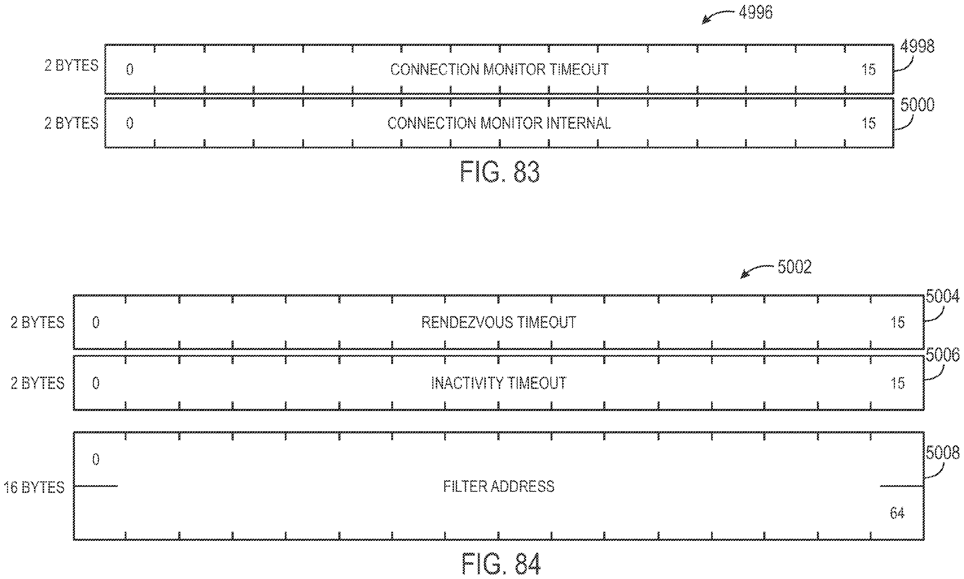

FIG. 83 illustrates a data frame for an enable connection monitor frame. As illustrated, the enable connection monitor frame 4996 includes a connection monitor timeout 4998 and a connection monitor interval 5000. In some embodiments, both the connection monitor timeout 4998 and the connection monitor interval 5000 include 2 bytes of data. The connection monitor timeout 4998 indicates how long a connection can remain idle before timing out. The connection monitor interval 5000 indicates how often echo requests are sent.

### iv. Remote Passive Rendezvous Request Frame

FIG. 84 illustrates a remote passive rendezvous request frame. The remote passive rendezvous request frame 5002 includes a rendezvous timeout field 5004 and an inactivity timeout field 5006. The rendezvous and inactivity timeouts may be 16-bit unsigned integer values in seconds. The rendezvous timeout field 5004 indicates how long the attempt may remain open, and the inactivity timeout field 5006 indicates how long inactivity may occur on the RPR connection before closing the connection. The remote passive rendezvous request frame 5002 also includes a filter address 5008. In some embodiments, the filter address 5008 includes 8 bytes that may be used to verify that the rendezvoused joining device is the correct device.

The specific embodiments described above have been shown by way of example, and it should be understood that these embodiments may be susceptible to various modifications and alternative forms. It should be further understood that the claims are not intended to be limited to the particular forms disclosed, but rather to cover all modifications and alternatives falling within the scope of this disclosure.

## H. Fabric Provisioning Profile

Fabric provisioning refers to creating a new fabric or adding a new device to a fabric that exists with current devices. Membership in a fabric includes knowing an identity (e.g., FabricID) and a set of security credentials for the fabric. However, in some embodiments, there may be different sets of keys to differentiate levels of authority. For example, a rain sensor device may not be authorized to disable a hazard detector alarm when other hazard detectors may be enabled to do so.

### a. Adding a Device to a Current Fabric

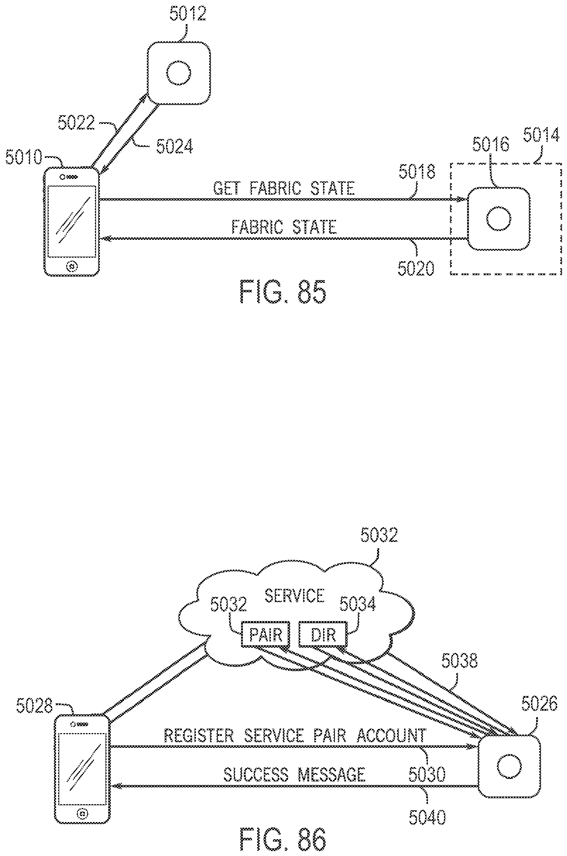

As illustrated in FIG. 85, a commissioning device 5010 may aid in a joining device 5012 to join an existing fabric 5014, on which a fabric device 5016 resides. The commissioning device 5010 may request fabric data using a GetFabricState message 5018 from the fabric device 5016. The fabric device 5018 responds with FabricState data 5020, which includes the Fabric ID and one or more fabric keys. The commissioning device 5010 sends a JoinExistingFabric message 5022 with the FabricState data included therein. The joining device 5012 receives the FabricState data 5020 in memory and returns a success message 5024 (e.g., using a status report message). In some embodiments, the success message 5024 indicates that the joining device 5012 has successfully joined the fabric. In other embodiments, the success message 5024 indicates that the joining device 5012 has successfully received the FabricState. As illustrated, in certain embodiments, the commissioning device 5010 may communicate with the joining device 5012 through the fabric device 5014 using a common network type (e.g., 802.15.4) available to the devices 5012 and 5014. For example, as previously discussed, these devices may communicate using a passive rendezvous connection.

In some embodiments, the commissioning device 5010 may not decode and/or may not be capable of decoding the encoded FabricState data. Instead, in such embodiments, the commissioning device 5010 acts as a passthrough device that passes the FabricState data from the fabric device 5016 to the joining device 5012 through a tunnel without being aware of the content of the FabricState data.

In some embodiments, the commissioning device 5010 may choose a fabric device 5016 in the fabric 5014 that has the same function (e.g., same set of keys) as the joining device 5012. In other words, the commissioning device 5010 determines the capabilities of the joining device 5012 to determine which keys to use. In some embodiments, the joining device 5012 may not have a counterpart device of the same type in the fabric 5014. In certain embodiments, all devices may store all keys, but the keys may be encoded such that only devices desired to use the keys may have access to the keys. Moreover, in some embodiments, all devices may store a superset of keys that allow the devices to join a fabric, and send only the subset of keys to be used by the joining device. In some of these embodiments, additional functionality may be added to the device after the joining device has joined the network. Moreover, in some embodiments, the keys may include a master key, stored on all devices, that may be used to derive other keys using predefined salt-keys. Each device would have the proper salt-keys appropriate to the devices functions and/or authority level. Thus, even when the master key rotates over time the salt-keys may be used to create additional keys that may be understood by devices with the appropriate level of authority (e.g., has the key specific to the salt-key). In some embodiments, the salt-keys may be stored in the service, because the service may not know the master key. Thus, even if the service were compromised, the local network would not be compromised because the service would not be able to generate the keys in the home without the master key.

### b. Creating a New Fabric

The commissioning device may send a CreateFabric command to a smart device. The smart device uses a random number generator to generate a FabricID and one or more fabric keys. In some embodiments, the random number generator may include a hardware random number generator (e.g., a ring oscillator) that is used to create a seed. The seed then may be input into a deterministic random number generator algorithm (e.g., Determininstic Random Bit Generator Counter Mode (CTR_DRBG), Hash_DRBG, HMAC_DRBG, Dual_EC_DRBG) to create a cryptographically strong (e.g., 64 bits of randomness) random number that may be used as the FabricId or one or more fabric keys (e.g., master key). In some embodiments, the smart device may also generate additional fabric keys from the master key using salt-keys appropriate to the device (e.g., rain sensor, security sensor, hazard detector sensor, etc.).

### c. Leaving a Fabric

The commissioning device may also send a message to a fabric device that instructs the fabric device to leave the fabric by "forgetting" the FabricID and/or the fabric keys. After such a process, the fabric device will no longer be capable of communicating via the fabric, but the device may rejoin the fabric using the joining an existing fabric process discussed above.

### I. Service Provisioning Profile

Service provisioning includes pairing a device to an account in the service and informing the device of the service so that the device is aware of the service and may communicate with the service during operation. As illustrated in FIG. 86, before provisioning a service on a device 5026, a commissioning device (e.g., a smartphone) 5028 establishes a connection with the service (e.g., via the Internet) 5032. In some embodiments, this connection is created by logging in using account information with a password that may be entered into the commissioning device and/or the joining device. Through this connection, the commissioning device 5028 receives a pairing token, an account ID (e.g., from the login connection) and service configurations details (e.g., in TLV or JSON). In some embodiments, the commissioning device 5028 may be agnostic to at least a portion (e.g., service configuration details) of the received information. In some embodiments, the pairing token may be any format selected by the service, since, as discussed below, the pairing token allows the service 5032 to determine to which conversation incoming messages relate. The pairing token may also be generated by the service 5032 and associated with only one account, e.g., the account identified by the account ID. In some embodiments, the service configuration details include a structure generated by the service and include an address for a directory service endpoint 5034 (e.g., a host name and port of the directory service) and a list of trusted certificates (including a public key). These certificates may be used to validate connections when the smart device 5026 connects to appropriate servers; e.g., the trusted certificates may be used to validate the directory service pointed to by the directory service endpoint 5034.

In some embodiments, the commissioning device 5028 may obtain initialization data from a user that include user preferences, user interface (UI) choices, configuration details, personalization data, and/or other data related to how a newly paired device is desired to behave. For example, if the device 5026 is a hazard detector, the commissioning device 5028 may ask the user whether the user wants the hazard detector to light walkways during darkness using a user interface of the commissioning device 5028.

The commissioning device 5028 sends a RegisterServicePairAccount message 5030 that includes the service configuration details, the pairing token, the initialization data, and the account ID that identifies the account to which the smart device 5026 is to be paired. As discussed above, in some embodiments, the configuration details include an address of the service endpoint 5034 (e.g., directory service server within the service). Using the data received from the commissioning device 5028, the smart device 5026 connects to a directory service in the service 5032. That is, in some embodiments, the smart device 5026 may connect to the directory service addressed in the configuration details included in the RegisterServicePairAccount message. In one particular embodiment, the smart device 5027 may connect to the directory service using a certificate authenticated session establishment process as described in U.S. Patent Application No. 14/508,933 titled "Authenticated Session Establishment," filed on October 7, 2014, which is incorporated by reference herein in its entirety. The smart device 5026 may use another profile, such as the directory service profile as disclosed in U.S. Provisional Application Serial No. 62/061,593, filed October 8, 2014, entitled "FABRIC NETWORK," which is incorporated by reference herein in its entirety, to obtain a directory of servers from the directory service to find an appropriate pairing server 5036. Upon connecting to the proper pairing service 5036 (which, in one embodiment, may also be established via CASE), the smart device 5026 sends the pairing token and the initialization data to the pairing server 5036. Upon receiving the pairing token, the pairing server may identify the account associated with the pairing token, and determine the pairing token that was previously generated by the service and associated with that account. By comparing the previously generated pairing token with the pairing token received by the smart device 5026, the pairing service may then validate that the smart device 5026 is authorized to be paired with the account.

Accordingly, if the received pairing token matches the pairing token previously generated by the service 5032, the pairing server 5036 may determine that the smart device 5026 is authorized to talk to the service 5032 on behalf of the account used to generate the pairing token. In some embodiments, the pairing token may be time limited, such that the pairing token will expire after a predefined period of time. For example, in some embodiments, the commissioning device 5028 may request a new pairing token every day, 6 hours, or other suitable period of duration for the pairing token. Upon the service verifying the received pairing token, the service 5032 may add the smart device 5026 to a list of devices for the account. In some embodiments, the list of devices may be organized according to structures (e.g., home or office) in which the devices are located. After the device 5026 has been added to the list of the devices for the suitable account, the service 5032 sends a successful pair message 5038 to the smart device. Upon receiving the successful pair message 5038, the smart device 5026 stores the accountID and service configuration details in the device 5026. When the accountID and service configuration details are successfully stored in the device 5026, the device 5026 may transmit a success message 5040 to the commissioning device 5028 indicating that the service 5032 is paired to the device 5026 and the device 5026 is paired to the service 5032. In some embodiments, at least some of the initialization settings may be propagated to the device 5026 using the data management profile discussed below. In some embodiments, the device 5026 may pair to more than one single service. However, in such embodiments, each service may have its own service configuration details with their own service endpoints and lists of trusted certificates.

### a. Commissioning Device Process

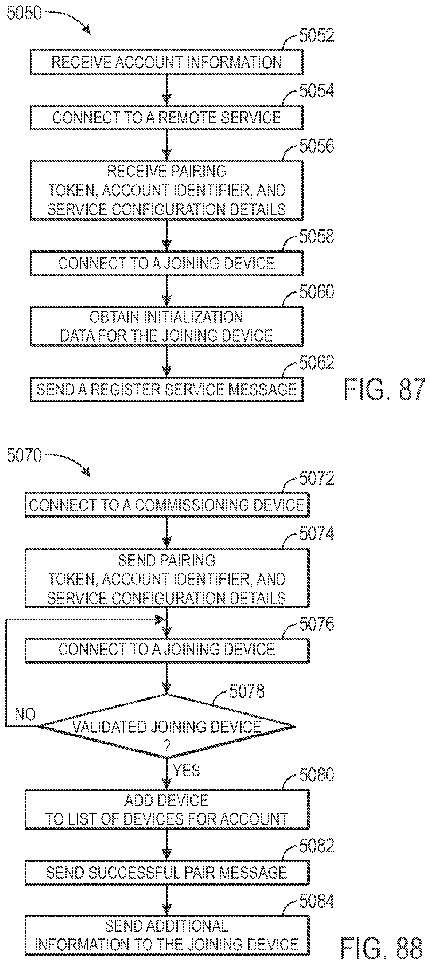

FIG. 87 illustrates a flowchart view of an embodiment of a process 5050 for pairing a joining device to an account managed by a remote service according to the foregoing discussion. The process 5050 includes receiving, at the commissioning device, account information (block 5052). For example, the commissioning device may retrieve the account information as a login and password retrieved from memory (local or remote) or received the account information from a user interface on the commissioning device. Before or after receiving the account information, the commissioning device connects to a remote service that manages the account associated to the account information (block 5054). The commissioning device receives a pairing token, account identifier, and service configuration details from the remote service for the account (block 5056). The service configuration details include various information (e.g., address, port, etc.) about the service and how a joining device is to communicate with the remote service. In some embodiments, the commissioning device may be agnostic of at least a portion of the pairing token, the account identifier, and/or the service configuration details because the portion may be encrypted in a format unreadable by the commissioning device.

The commissioning device also connects to a joining device to be paired to the account and connected to the remote service (block 5058). In some embodiments, the connection to the joining device may occur prior to the connection to the remote service. Through the connection to the remote service the commissioning device obtains initialization data from the remote service and/or a user (block 5060). For example, the initialization data may include some user preferences and user interface choices stored on the remote service and/or obtained by request from a user via an interface of the commissioning device. The commissioning device sends a register service request with the joining device (block 5062). The register request may include the initialization data or may be sent in a subsequent message to the joining device.

### b. Remote Service Process

FIG. 88 illustrates a flowchart of an embodiment of a process 5070 of a remote service pairing a joining device to an account managed by the remote service. The remote service connects to a commissioning device (block 5072). In some embodiments, the connection includes an account login and password sent from the commissioning device. The remote service sends a pairing token, account identifier, and service configuration details for the remote service for the account (block 5074). The remote service also connects to a joining device (block 5076). The remote service determines whether the joining device is a valid joining device by verifying that a received pairing token matches the pairing token sent to the commissioning device (block 5078). In some embodiments, the remote service may authenticate the joining device using Certificate Authenticated Session Exchange as disclosed in U.S. Application No. 14/508,933, entitled "Authenticated Session Establishment" filed on October 7, 2014, which is incorporated by reference in its entirety for all purposes.

If the joining device cannot be validated, the remote service waits for another joining device to connect. If the joining device is validated, the remote service adds the joining device to a list of devices for the account (block 5080). Once the joining device is added to the list of devices for the account, the remote service sends a successful pair message to the joining device to indicate that the pairing has been successfully completed (block 5082). In some embodiments, the remote service may also send additional details to the joining device (block 5084). For example, in some embodiments, the additional information may include account-specific user preferences or interface options.

### c. Joining Device Process

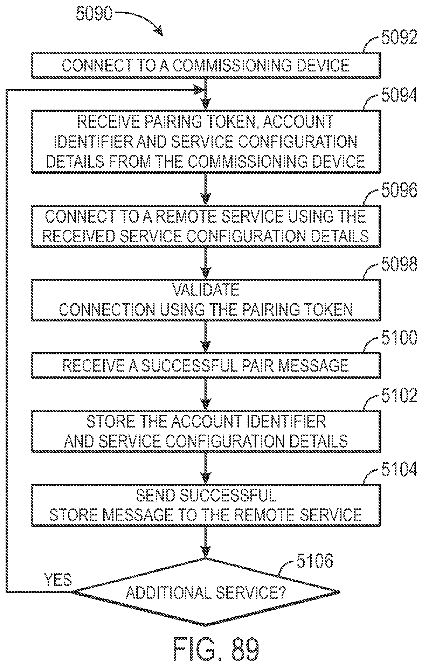

FIG. 89 illustrates a flowchart of an embodiment of a process 5090 for a joining device being paired to an account managed by the remote service. The joining device includes connecting to a commissioning device (block 5092). In some embodiments, the connection between the joining device and commissioning device may include a secure connection (e.g., CASE). The joining device then receives a pairing token, an account identifier, and service configuration details from the commissioning device (block 5094). The joining device connects to a remote service using the service configuration details (block 5096). The joining device also authenticates to the remote service using the received pairing token (block 5098). Once the joining device has been validated to the remote service and stored in a list of devices for the account, the joining device receives a successful pair message (block 5100). Upon receipt of the successful pair message, the joining device stores the account identifier and service configuration details in its memory (block 5102).

In some embodiments, the joining device sends a successful store message to the remote service as an indication of successful storage (block 5104). In some embodiments, the successful store message may be sent as a status update using the status update profile previously discussed. In some embodiments, the joining device may be added to more than one service (block 5106). If more than one service is to be added, the joining device receives additional service-specific information and returns to block 5094 for the next service.

### d. Unregister Service

The commissioning device may also send an unregister service call that deletes the service configuration details and accountID from the smart device. In some embodiments, these items may be deleted separately. In some embodiments, the command may be first propagated to the service causing the service to remove the device from the service's list of devices. In certain embodiments, the call to unregister also causes the service to remove the smart device from the list of devices for the structure in which the joining device resides.

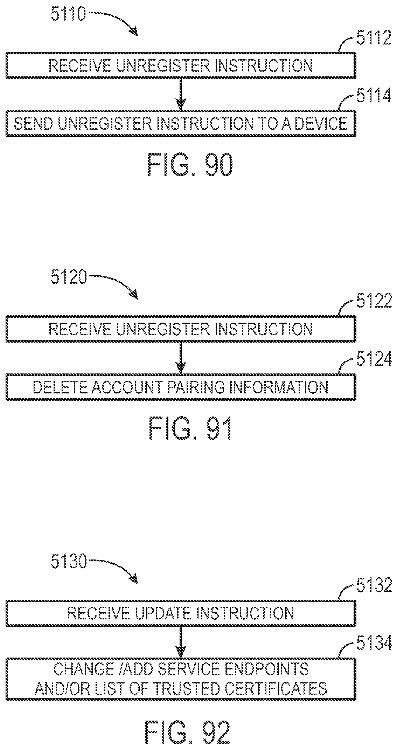

FIG. 90 illustrates a flowchart view of an embodiment of a process 5110 for unregistering the service for a device at the commissioning device. In some embodiments, a device may be unregistered from the remote service using the commissioning device. In such embodiments, the commissioning device receives an unregister instruction (block 5112). For example, in some embodiments, the commissioning device receives an unregister instructions from via an interface and/or the remote service. The commissioning device then forwards the unregister instruction to a device to be unregistered from the remote service (block 5114). In some embodiments, the unregister instruction may be sent directly from the remote service or may be manually input at the device to be unregistered.

FIG. 91 illustrates a flowchart of an embodiment of a process 5120 for unregistering a device from a remote service. The device to be unregistered receives an unregister instruction via the remote service, the commissioning device, and/or a manual input (block 5122). In embodiments, where the unregister instruction has not originated at the remote service, the device may send an indication of unregistration to the remote service. If the unregister instruction has originated at or been sent to the remote service, the device may simply delete pairing information (e.g., account identifier and service configuration details) (block 5124). In some embodiments, the account identifier and service configuration details may be deleted from memory as separate steps.

### e. Update Service Configuration Details

At some point, the service may change the service endpoint and/or list of certificates that may be sent to the smart device. In some embodiments, the update may be sent directly from the service to the smart device and/or to the smart device via a commissioning device.

FIG. 92 illustrates a flowchart of an embodiment of a process 5130 for updating service information on a device paired to an account. The device to be updated receives an update instruction (block 5132). In some embodiments, the update instruction may include an instruction to update a service endpoint, a list of trusted certificates, or other information pertinent to the service. Using the received update instruction, the device changes/adds a service endpoint and/or list of trusted certificates (block 5134).

The specific embodiments described above have been shown by way of example, and it should be understood that these embodiments may be susceptible to various modifications and alternative forms. It should be further understood that the claims are not intended to be limited to the particular forms disclosed, but rather to cover all modifications and alternatives falling within the scope of this disclosure.

### J. Service Directory Profile

In some scenarios, a client device may talk to a service. However, the service may include multiple servers and/or locations. Accordingly, the service may include a service directory that informs the client where to send application messages. The Service Directory profile enables the client device to talk to the service to determine to which endpoint within the service is appropriate for the application messages to be sent.

In some embodiments, the profile identifier field of the fabric application header may have a value of 0x00000010 for all service directory profile frames. Furthermore, in certain embodiments, the service directory profile may include service endpoint queries and responses. The service endpoint query is a message sent from a device to the service to determine where to connect for transmission of the application messages. The message type may be indicated by different tag values, such as those indicated in Table 79 below.

**Table 79.** Directory protocol message types

| type | message |
|---|---|
| 0x00 | service endpoint query |
| 0x01 | service endpoint response |
| 0x02..0xff | reserved |

**a. Service Endpoint Query**

In some embodiments, the service endpoint query frame may have no payload fields. Instead, the mere presence of a query indicates that the sending device (e.g., client) is requesting service endpoint information.

**b. Service Endpoint Response**

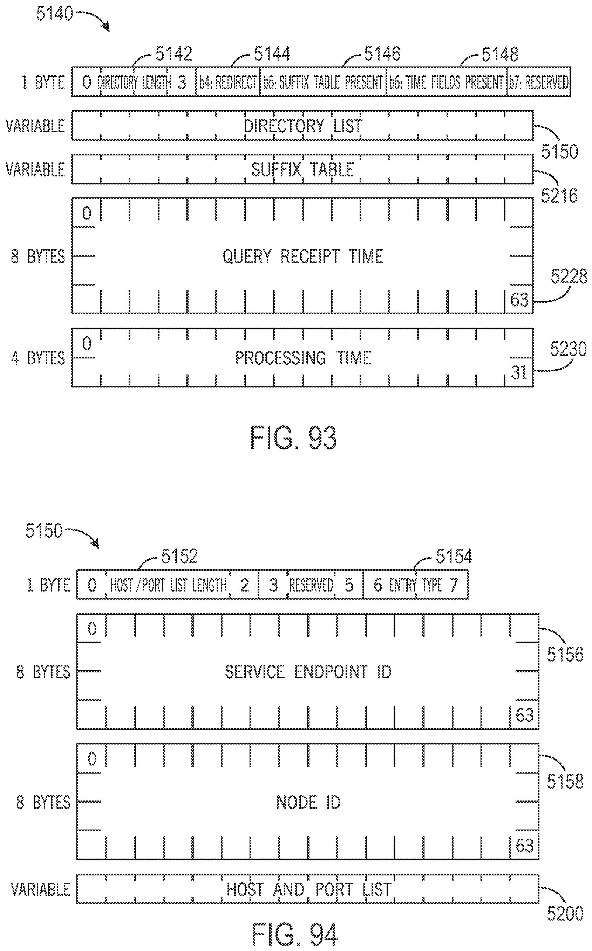

The service endpoint response frame 5140 may be sent in response to a service endpoint query frame and may have the fields shown in FIG. 93. Effectively, the service endpoint response encodes a service directory that maps service endpoint identifiers onto a list of resource locators whereby the service of interest may be accessed. In addition, the service endpoint response may contain timestamps that aid the receiving device in synchronizing its clock with that of the server.

**i. Directory length field**

The directory length field 5142 is 4 bits in length covering bits 0..3 of the first byte of the service endpoint response frame 5140. Its value may be the length of the following list of directory entries.

**ii. Redirect field**

The redirect field 5144 is a single-bit field covering bit 4 of the first byte of the service endpoint response frame 5140. If the redirect field has a value of 1, the following directory list field contains an entry for the service directory endpoint, and the receiving node may query the corresponding host or hosts for additional directory information. If the redirect field has a value of 0, the receiving node may not query for additional information since none will be available for the time being.

**iii. Suffix Table Present Field**

The suffix table present field 5146 is a single-bit field covering bit 5 of the service endpoint response frame 5140. If the suffix table present field has a value of 1, a suffix table field 5216 may follow the directory list field of the current frame. If the suffix table present field has a value of 0, no suffix table field may be present.

**iv. Time Fields Present Field**

In some embodiments, the service endpoint response 5140 may include a time fields present field 5148, which is a single-bit field covering bit 6 of the service endpoint response frame. If the time fields present field has a value of 1, a 64-bit query receipt time field and a 32-bit processing time field may be present as the last two fields in the frame. If the time fields present field has a value of 0, neither the query receipt time field nor the processing time field may be present. In some embodiments, bit 7 of the first byte of the service endpoint response frame may be reserved and may have a value of 0 or 1.

**v. Directory List Field**

The directory list field 5150 of the service endpoint response frame 1600 is variable in length and may contain a (possibly empty) list of directory entries the length of which is the value of the preceding directory length field. Each directory entry may have the subfields shown in FIG. 94.

### 1. Directory List Field: Host/Port List Length

The host/port list length subfield 5152 of the directory list field of the service endpoint response frame is 3 bits in length and covers bit 0..2 of the first byte of the field. The host/port list length field may have a non-zero value if the following entry type subfield has a value of 1 indicating that a host/port list is present.

### 2. Directory List Field: Reserved Bits

In some embodiments, bits 3..5 of the first byte of the directory list field 5150 of the service endpoint response frame 5140 are reserved and may have a value of 0 or 1.

### 3. Director List Field: Entry Type Subfield

The entry type subfield 5154 of the directory list field 5150 of the service endpoint response frame 5140 is 2 bits in length and covers bit 6..7 of the first byte of the field. This subfield takes values from the following Table 80:

**Table 80.** Values of the entry type subfield

| Value | Type | Description |
|---|---|---|
| 00 | single node | The entry contains the fabric node identifier of a single node - assumed to be accessible on the fabric - that provides the service of interest. |
| 01 | host/port list | The entry contains a list of host/port pairs each of which may provide the service of interest. |
| 10..11 | n/a | reserved |

### c. Service Endpoint ID Subfield

The service endpoint ID subfield 5156 of a service endpoint response directory entry 5150 is 64 bits in length. Its value may be the service endpoint identifier for the service of interest in the current directory entry.

### d. Node ID Subfield

In some embodiments, the service endpoint response 5140 includes a node ID subfield 5158. The node ID subfield 5158 is the node ID of a service endpoint response directory entry 5150 is 64 bits in length and is present if the preceding entry type subfield 5154 has a value of 0. If the node ID subfield 5158 is present then the host and port list subfield 5200 may be omitted. If the node ID subfield 5158 is present, its value may be the fabric node identifier of a device that makes the service available to the device and is identified by the preceding service endpoint ID field 5156.

### e. Host/Port List Subfield

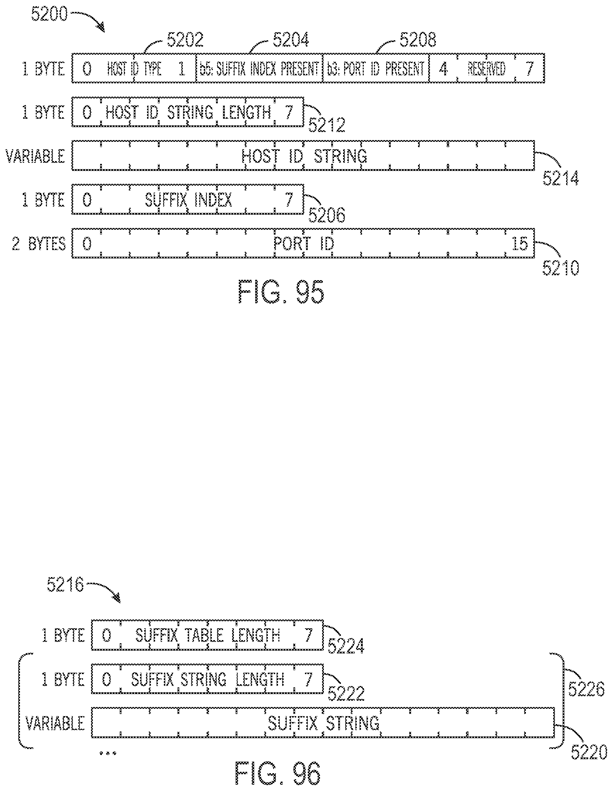

In some embodiments, the service endpoint response 5140 includes a host/port list subfield 5200. The host/port list subfield 5200 of a service endpoint response directory entry 5150 is variable in length and may be present if the preceding entry type subfield 5154 has a value of 1. If the host/port list subfield 5200 is present then the node ID subfield 5158 may not be present. If the host/port list subfield 5200 is present, it may be a list of host and port specifiers, where the number of entries in the list is specified by the value of the host/port list length subfield of the preceding directory entry type/length. In some embodiments, each entry in the host/port list has the form shown in FIG. 95.

The host ID type subfield 5202 of a host/port list field 5200 is 2 bits in length and covers bits 0..1 of the first byte of the field 5200. The host ID type subfield 5202 takes values from Table 81.

**Table 81.** Values of the host ID type field

| Value | Type | Description |
|---|---|---|
| 00 | fully qualified | The following host ID string is a fully-qualified host name that may be submitted as-is to a DNS service for lookup. |

(continued)

| Value | Type | Description |
|---|---|---|
| 01 | composite | The host ID string is missing the suffix portion. In this case, either a suffix index may be present or the receiver may provide a hostname suffix by some other means, e.g. by default. |
| 10..11 | n/a | reserved |

The suffix index present field 5204 of a host/list list field 5200 is a single-bit field covering bit 2 of the first byte of the item 5200. If the suffix index present 5204 field has a value of 0 then no host name suffix index 5206 may be present. If the suffix index present field 5204 has a value of 1 then a host name suffix index 5206 may be present.

The port ID present subfield 5208 of a host/port list field 5200 is a single-bit field covering bit 3 of the first byte of the item 5200. If the port ID present subfield 5208 has a value of 0 then no port identifier subfield 5210 may be present and a port identifier value for subsequent service requests based on the current item may be an agreed-upon default value. If the port ID present subfield 5208 has a value of 1 then a port identifier subfield 5210 may be present in the item and indicate the port to be used. Bites 4..7 of the first byte of a host/port list item are reserved and may have a value of 0.

The host ID string length subfield 5212 of a host/port field 5200 is 8 bits in length and its value may be the length of the following host ID string subfield 5214. The host ID string subfield 5214 of a host/port field 5200 is variable in length and may be a string of UTF-8 characters that conforms specifying a host providing the service of interest either as an IPv4/v6 address in dot or colon-separated format or else as a DNS name.

The optional suffix index subfield 5206 of a host/port list entry is 8 bits in length and may be present if the preceding suffice index present bit-field 5204 has a value of 1. If present, the suffix index field 5206 may specify an index in the following suffix table for the host name suffix that should be applied to the host ID string 5214 in the current entry in order to produce a fully qualified host name that can be used in DNS lookup.

The optional port identifier subfield of a host/port list entry 5200 is 16 bits in length and may be present if the preceding port ID present bit-field has a value of 1. If present, the port identifier field 5210 may specify the port at which the service of interest is available on the host identified in the preceding host identifier string subfield. Otherwise, a default or randomly assigned port may be used.

**f. Suffix Table Field**

Returning to FIG. 93, the service directory response frame 5140 may include a suffix table field 5216, the suffix table field 5216 of the service endpoint response frame 5140 has a form such as that shown in FIG. 96. As the name implies, the suffix table field 5216 is a table of host name suffix strings 5220 each preceded by a string length field 5222.

**i. Suffix Table Field: Suffix Table Length Subfield**

The suffix table length subfield 5224 of the suffix table field 5216 is 8 bits in length. The value of the suffix table length field 5224 may include the number of entries in the following list of suffix name strings.

**ii. Suffix Table Field: Suffix String Length Subfield**

For each suffix table entry 5226 in the suffix table field 5216, the suffix string length subfield 5222 is 8 bits in length and its value may be the length of the immediately following suffix string 5220.

**iii. Suffix Table Field: Suffix String Subfield**

For each suffix table entry 5226 in the suffix table field 5216, the suffix string subfield 5220 is variable in length indicated by the suffix string length 5222 and its value may be a UTF-8 character string. For example, in some embodiments, the UTF-8 string may conforms to the restrictions outlined in IETF RFC 5981 - IDNA2008 for representing a host name suffix.

**g. Query Receipt Time Field**

Returning to FIG. 93, the service endpoint query response 5140 may optionally include a query receipt time field 5228. The optional query receipt time field 5228 is 64 bits in length and may be present if the preceding time fields present field 5148 has a value of 1. In some embodiments, if present, the query receipt time field 5228 records the absolute time of receipt for the service endpoint query frame for which the endpoint response 5140 responds. In some embodiments, absolute time maybe recorded in milliseconds since the beginning of the POSIX epoch.

**h. Processing Time Field**

The optional processing time field 1650 is 32 bits in length and may be present if the preceding time fields present field 5148 has a value of 1. If present, the processing time field 1650 records the elapsed time (e.g., in milliseconds) between the receipt of the service endpoint query frame to the sending of the response 5140.

**i. Service Endpoint Status Message**

In the case where a service endpoint request cannot be handled or responded to with a service endpoint response for any reason, the directory server may instead respond with a status report message using the core profile. In some embodiments, the service directory profile defines a single special status code as shown in Table 82.

**Table 82.** Service directory status codes

| Value | Name | Description |
|---|---|---|
| 0x0051 | directory_unavailable | There is no directory information available from this service endpoint for the requesting device at this time. |

**j. Example Communication Chain**

FIG. 42 illustrates an example communication chain 1650 in accordance with a service directory profile, in accordance with an embodiment. A client device wanting to contact a remote service having a front door, directory service(s), and application service(s) sends a service endpoint (SEP) query 1652 to the front door of the remote service requesting access to a specific application and/or application service responsible for a specific action. The front door is a point of contact used to contact the remote service, the directory service includes a directory of locations in the remote service, and the application services are specific locations for specific functions and/or actions within the remote service. The front door responds with an SEP response 1654 that indicates location of the directory services or services pertinent to the SEP query 1652. The client then sends an SEP query 1656 to the directory service. The directory service responds with a full directory in a service info response 1658. In some embodiments, the client stores the full directory to omit future SEP queries and responses. The client looks up the pertinent application service and sends application messages 1660 to the application service at the location indicated in the full directory. The application service responds with other application messages 1662 to the client. In some embodiments, a stored directory can become outdated. In such embodiments, when the client sends an application message 1664, it may receive a status report 1666 indicating that the application service location has moved. In response to the status report 1666, the client sends a SEP query to the front door to restart the communication chain 1650.

The specific embodiments described above have been shown by way of example, and it should be understood that these embodiments may be susceptible to various modifications and alternative forms. It should be further understood that the claims are not intended to be limited to the particular forms disclosed, but rather to cover all modifications and alternatives falling within the scope of this disclosure.

**K. Network Provisioning Profile**

When a device is to be added to a logical network (e.g., WiFi or 802.15.4) and/or used to create new network, a network provisioning profile may be used to set up the networks or their connections. The network provisioning profile may also be used to test the configurations and connections with various networks. For example, the network provisioning profile may include messages for scanning networks, indicating that a network scan is complete, adding networks, indicating that an add network has been completed, updating networks, removing networks, enabling networks, disabling networks, testing connectivity, setting rendezvous modes, and/or changing channels over which the networks communicate.

**a. Scan Networks**

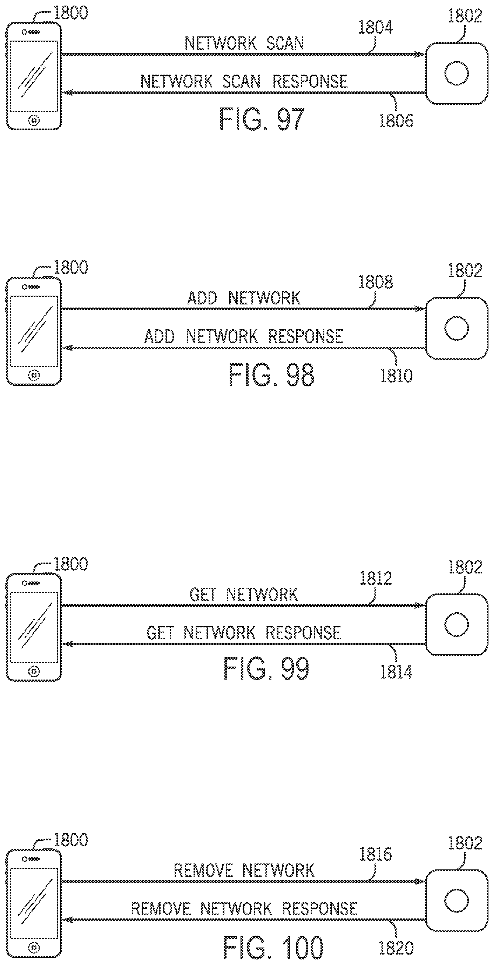

FIG. 97 illustrates a requestor 5230 (e.g., a phone) that connects to a smart device 5232 (e.g., a hazard detector). The device 5230 sends a Scan Networks message 5234 to the smart device 5232. The Scan Networks message 5234 instructs the smart device 5234 to perform a scan for remote networks and return the results to the requestor 5230. The smart device 5232 may respond to a Scan Networks message with a Network Scan Response message 5236. In some embodiments, the Network Scan Response may return a Network Scan Complete message when the scan is successfully completed and a status report message (e.g., using the core profile) when the scan fails for some reason. In some embodiments, the message includes a network type that informs the receiving device which networks to scan.

**b. Network Scan Complete**

The Network Scan Complete message conveys the results of a network scan. In some embodiments, the Network Scan Complete message includes all networks found, but in other embodiments, the Network Scan Complete message may include only networks found since the last Network Scan Complete message. A Network Scan Complete message may be returned when the scan is completed successfully even if there are no found networks.

In some embodiments, the Network Scan Complete message may include two fields: a result count field and a scan results field. In certain embodiments, the Result Count field may be an unsigned integer value conveying the number of networks detected during the scan. In some embodiments, the Result Count field may be 8 bits in length. The Scan Results field may be an array, encoded in TLV format, of NetworkInformation structures containing the results of the scan. The array may vary in size. Thus, the size of the Scan Results field may vary. The encoded array may have the same number of elements as specified in the Result Count field. The Scan Results field may include data specific to a network type. For example, if the Network Scan was performed for WiFi networks, the Scan Results may include an SSID, security type, signal strength, WiFi mode (e.g., ad hoc or managed), and/or WiFi role for each WiFi network discovered. Similarly, if the Network Scan was performed for 802.15.4 networks, the Scan Results may include a network name, an external personal area network ID, and signal strength for the discovered 802.15.4 networks. Similar information may be sent for other network types.

**c. Add Network**

FIG. 98 illustrates an Add Network message 5238 sent from the requestor 5230 to the smart device 5232. The Add Network message 5238 instructs the smart device 5232 to add or update a network in its list of configured networks. Upon receiving an Add Network message 5238, the smart device 5232 compares the identifying information for the new network (e.g. the WiFi SSID) against its list of existing configured networks and either selects a matching network to update or creates a new configured network. In some embodiments, upon completion of the operation, the smart device 5232 responds with an Add Network Response 5240. The Add Network Response 5240 may be an Add Network Complete message for successful addition of the network or a status report message (e.g., from core profile) if the addition fails.

In some embodiments, the Add Network message 5238 includes a single field: Network Configuration. In some embodiments, the Network Configuration field has a variable length. In some embodiments, the Network Configuration field includes a Network Information structure. The Network Information structure, encoded in TLV format, contains the configuration details for the network to be added or created. The NetworkInformation structure may contain all the elements used to configure the specified network type. For example, for WiFi, the NetworkInformation may include the SSID, security type, and password (if security type is not open) for the network. Similarly, for 802.15.4, the NetworkInformation may include the network name, an external personal area network ID, and a network key. In some embodiments, the NetworkInformation structure may contain a NetworkId element (e.g., short handle for the stored network info), that will be ignored when the network is created or added. Moreover, the Add Network message 5238 may be used to add hidden network that are not discovered during a network scan.

**d. Add Network Complete**

As discussed above, an Add Network Complete message may be sent in response to an Add Network message in the event that the network add completed successfully. The Add Network Complete message may include a NetworkID field that indicates which network was added.

**e. Update Network**

The Update Network is similar to an Add Network message 5238 except the Update Network message instructs a device to update an existing network in its list of configured networks. The specified network exists at the time the message is received or the operation fails. Upon completion of the operation, the device responds with a Core Profile Status Report message. In some embodiments, the Network Configuration field in an Update Network message includes a Network Information structure. The Network Information structure contains new configuration for the network being updated along with the NetworkId element identifying the network to be updated. It may also contain any elements that are appropriate to the type of network being updated.

**f. Get Networks**

A Get Networks message 5242 may also be sent from the requestor 5230 to the smart device 5232, as illustrated in FIG. 99. The Get Networks message 5242 instructs the smart device 5232 to get network configuration details that the smart device 5232 has stored (e.g., from previous Add Network messages). Upon receiving a Get Network message 5242, the smart device 5232 retrieves Network Information from memory for all known networks and sends a Get Network Response message 5244 to the requestor 5230. Each Network Information entry in the Get Network Response message 5244 is similar to the information included in the Update Network message, previously discussed.

**g. Remove Network**

FIG. 100 illustrates a Remove Network message 5246 sent from the requestor 5230 to the smart device 5232. The Remove Network messages instructs the smart device 5232 to remove a network from its list of configured networks. In some embodiments, if the specified network is enabled, the network will be disabled first. In some embodiments, the smart device 5232 responds with a Remove Network Response message 5248 as a status report message. In some embodiments, the Remove Network message 5246 may include a single field as a network id identifying the network to be removed.

**h. Enable Network**

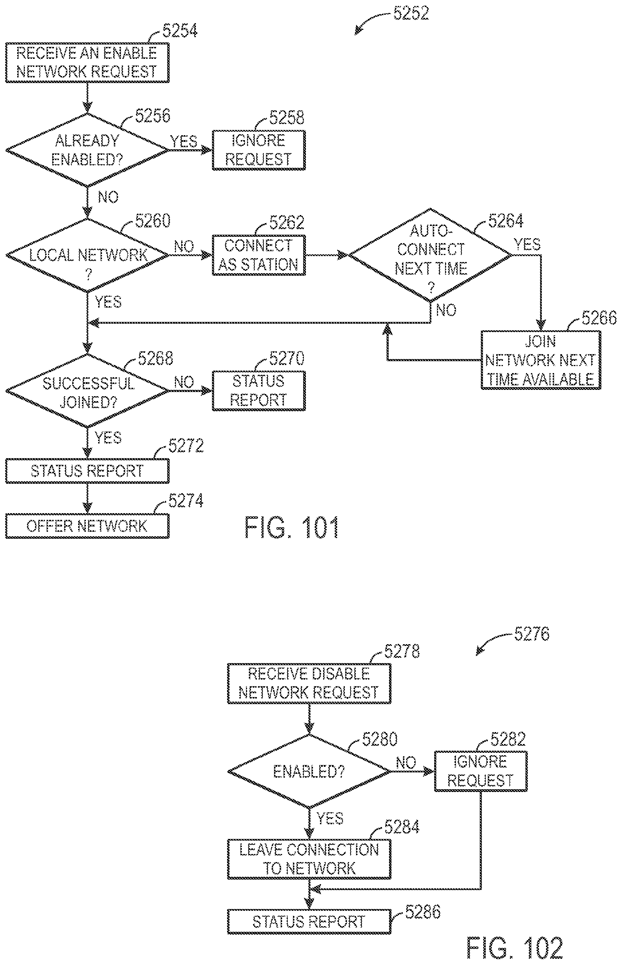

FIG. 101 illustrates a flowchart of an embodiment of an Enable Network process 5252. A device 5232 receives an Enable Network message that instructs the device 5232 to enable one of the networks in its list of configured networks (block 5254). In some embodiments, the Enable Network message may include a single field as a NetworkID, which identifies a network to connect. In certain embodiments, the NetworkID may have a length of 32 bits. If the specified network is already enabled (block 5256), the smart device 5232 may ignore the message (block 5258). In other words, the Enable Network message has no effect. Otherwise, if the network is not local (block 5260), the device 5232 connects to the remote network as a station (block 5262). In some embodiments, when a remote network is specified, the device 5232 determines whether the Enable Network message has enabled auto-connection behavior for the network (block 5264) such that, going forward, the device will automatically connect to the network when in range (block 5266). Regardless of network type, the device 5232 then determines whether it has stored the information and/or joined the network successfully (block 5268). If the storage or the connection has failed, the device 5232 may send a status report that indicates failure (block 5270). If the storage or connection has succeeded, the device 5232 may send a status report that indicates success (block 5272). In some embodiments, after joining the network, the device 5232 may offer the network to join. In certain embodiments, the status report indicates that the smart device 5232 will attempt to connect to the network when possible without sending connection status.

**i. Disable Network**

FIG. 102 illustrates a flowchart of an embodiment of a Disable Network process 5276. The device 5232 receives a Disable Network message that instructs the smart device 5232 to disconnect or withdraw from a configured network (block 5278). For remote networks, the Disable Network message may also disable the auto-connect behavior for the network. If the network is not enabled for the device 5232 (block 5280), the device 5232 may ignore the request (block 5282). If the network is enabled, the device 5232 leaves the network and disables connection to the network (block 5284). In some embodiments, the smart device 5232 responds to a Disable Network message with a status report message upon failure or success (block 5286). In some embodiments, the Disable Network message includes a NetworkID as an unsigned integer value identifying the network from which to disconnect.

**j. Test Connectivity**

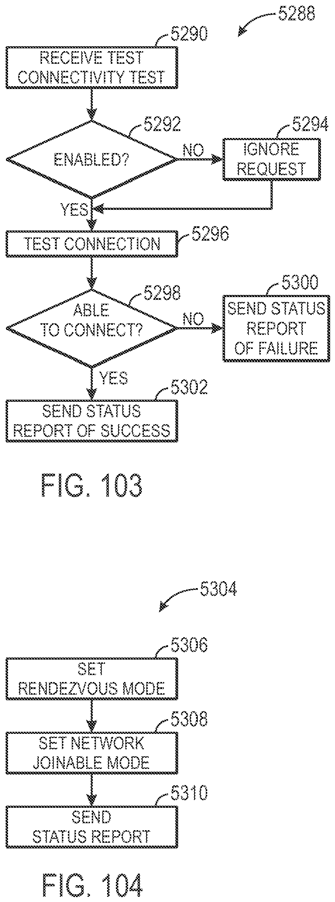

FIG. 103 illustrates a flowchart of an embodiment of a Test Connectivity process 5288. The device 5232 receives a Test Connectivity message that instructs the smart device 5232 to perform a network connectivity test for a particular network (block 5290). In some embodiments, if the network is not currently enabled (block 5292), the smart device 5232 enables it prior to performing the test (block 5294). In response to the Test Connectivity message, the smart device 5232 tests connection via the network by connecting to a remote server (e.g., device in the network, URL, etc.) (block 5296). If the device 5232 is unable to join the complete the test successfully (block 5298), the smart device 5232 send a status report message that indicates that the connection was successful (block 5300). Otherwise, the device 5232 sends a status report of success (block 5302). In some embodiments, the Test Connectivity message includes a single field that indicates a NetworkID identifying the network to which the smart device 5232 is to connect.

### k. Set Rendezvous Mode

FIG. 104 illustrates a flowchart of an embodiment of a Set Rendezvous Mode process 5304. The device 5232 receives a Set Rendezvous Mode message that instructs the smart device 5232 to enable or disable a set of features that allows external devices (e.g. computers, mobiles, etc.) to locate the device and communicate with it (block 5306). The device 5232 sets a network joinable mode. For example, one bit may be used to flag whether WiFi or 802.15.4 local network should have a rendezvous mode enabled or disabled, while other bits are used to enable or disable the rendezvous mode for the 802.15.4 network. The Set Rendezvous Mode message may include a mode flags field that includes a set of flags indicating which rendezvous features to be enabled. The smart device 5232 responds to a Set Rendezvous Mode message with a status report message (block 5310).

### l. Other Message Types

As discussed above, the network provisioning profile may use messages from other profiles, such as a status report profile from the core profile.

### i. EnabledNetworks Data Type

A list of network ids, tagged with a known tag (e.g., 0:3:2) identifying the networks currently enabled on the device. In some embodiments, this list may be read-only via the Device Data Management profile, but the list may be altered using the Enable and Disable Network messages of the Network Provisioning profile, both previously discussed. This list may be stored in an array of NetworkIDs identifying the networks currently enabled on the device.

### m. Networks Data Type

In some embodiments, the list of networks may be tagged with a known tag (e.g., 0:3:1). The data tagged with the networks data tag may be encoded/decoded as a list of networks provisioned on the device and their associated provisioning information. In some embodiments, this list is read-only via the Device Data Management profile (discussed below), but the list may be altered using the Add, Update and Remove Network messages of the Network Provisioning profile. The list may be stored as an array of Network Information in a format that has previously discussed. The array of NetworkInformation describes the provisioned networks known to the device.

### i. RendezvousMode Data Type

The RendezvousMode bit field indicates the currently active rendezvous mode. In some embodiments, this value may be read-only via the Device Data Management profile, but the value may be altered using the Set Rendezvous Mode messages of the Network Provisioning profile. In some embodiments, the RendezvousMode bit field may be an unsigned integers indicating the currently active RendezvousMode.

### ii. NetworkInformation Data Type

In some embodiments, the NetworkInformation structure may be tagged with an understood tag (e.g., 0:3:32) that indicates that the following information is a NetworkInformation structure. The structure contains information for a network. In some embodiments, the NetworkInformation structure may contain the following member elements in the Table 83 below:

**Table 83.** Network Information

| Element | Tag |
|---|---|
| NetworkId | 0:3:33 |
| NetworkType | 0:3:34 |

(continued)

| Element | Tag |
|---|---|
| WirelessSignalStrength | 0:3:35 |
| WiFiSSID | 0:3:64 |
| WiFiMode | 0:3:65 |
| WiFiRole | 0:3:66 |
| WiFiSecurityType | 0:3:67 |
| WiFiPreSharedKey | 0:3:68 |

**1. NetworkInformation: NetworkId**

The NetworkID includes an unsigned integer value uniquely identifying a provisioned network as a short name for the network. In some embodiments, the NetworkIDs are assigned by the device and have an allowable range of 0 to 0xFFFFFFFF.

**2. NetworkInformation: NetworkType**

In some embodiments, the NetworkType is an unsigned integer value identifying the type of a network, such as Ethernet, WiFi, or other network types.

**3. NetworkInformation: WirelessSignalStrength**

In some embodiments, the WirelessSignalStrength is a signed integer value giving the signal strength (e.g., in dBm) of a wireless network.

**4. NetworkInformation: WiFiSSID**

In some embodiments, the WiFiSSID is a string describing the WiFi SSID. In certain embodiments, the WiFiSSID is a UTF-8 string.

**5. NetworkInformation: WiFiMode**

In some embodiments, the WiFiMode is an unsigned integer value used to identify the mode of operation of the WiFi network. For example, the WiFiMode may identify that the WiFi device is in an AdHoc Mode or an Infrastructure Mode.

**6. NetworkInformation: WiFiRole**

In some embodiments, the WiFiRole is an unsigned integer value used to identify the role the device plays in the WiFi network. For example, the WiFiRole may identify whether the device is a station or an access point for the network.

**7. NetworkInformation: WiFiSecurityType**

In some embodiments, the WiFiSecurityType is an unsigned integer value identifying the type of security used by a WiFi network. For example, the WiFiSecurityType may identify that the network was no security type (i.e., open network), WEP security, WPA Personal security, WPA2 Personal security, WPA2 Mixed Personal security, WPA Enterprise security, WPA2 Enterprise security, WPA2 Mixed Enterprise security, or other security types.

**8. NetworkInformation: WiFiPreSharedKey**

In some embodiments, the WiFiPreSharedKey is a byte string containing the WiFi password/pre-shared key.

**n. Channel Change of WiFi Network**

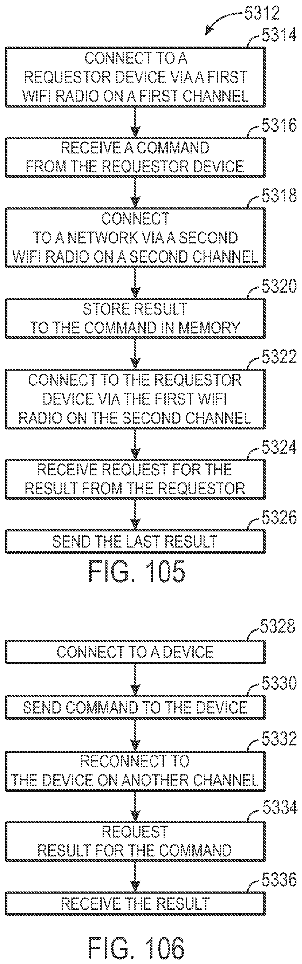

In some embodiments, the smart device 5232 may connect to more than one network using WiFi radios that use a common channel. FIG. 105 illustrates a process 5312 for changing channels of WiFi networks after the device 5232 joins an additional network from a perspective of a device joining a network. The device 5232 connects to the requestor 5230 using a first WiFi network using a first WiFi radio on a first channel (block 5314). The device 5232 receives a command (e.g., add network, enable network, etc.) (block 5316). In response to the command, the device 5232 connects to another network using a second WiFi radio on a second channel (block 5318). In certain embodiments, it may be desirable to cause both WiFi connections to be performed using the same channel to enable the device 5232 to use simpler logic. However, the smart device 5232 may select the channel for the connection with the requestor 5230 before being able to connect to the other WiFi network. In such cases, the smart device 5232 will not know the channel of the other WiFi network until joining the other network. In such cases, the smart device 5232 may store a result from the command in memory (block 5320). The device also may cause the channel of the WiFi connection between the smart device 5232 and the requestor 5230 to change (block 5322). However, this change may temporarily disrupt the connection between the smart device 5232 and the requestor 5230. In some scenarios, the requestor 5230 may not receive the Add Network response due to the disruption. Accordingly, in some embodiments, the device 5232 may receive the last result without attempting to re-add the network or perform a separate message chain (block 5324). In response, the device 5232 may send the last result (block 5326).

FIG. 106 illustrates a process for changing channels of WiFi networks after the device 5232 joins an additional network from a perspective of a requesting device causing another device to join a network. The requestor 5230 connects to a device 5232 (block 5328). The requestor 5230 sends a command (e.g., add network, enable network, etc.) to the device 5232 (block 5330). The requestor 5230 reconnects to the device on a channel other than an original channel (block 5332). The requestor 5230 then requests a result for the command (block 5334). The requestor 5230 then receives the result even after a period of non-connectivity between the device 5232 and requestor 5230 during the reconnection (block 5336).

**L. Device Description Profile**

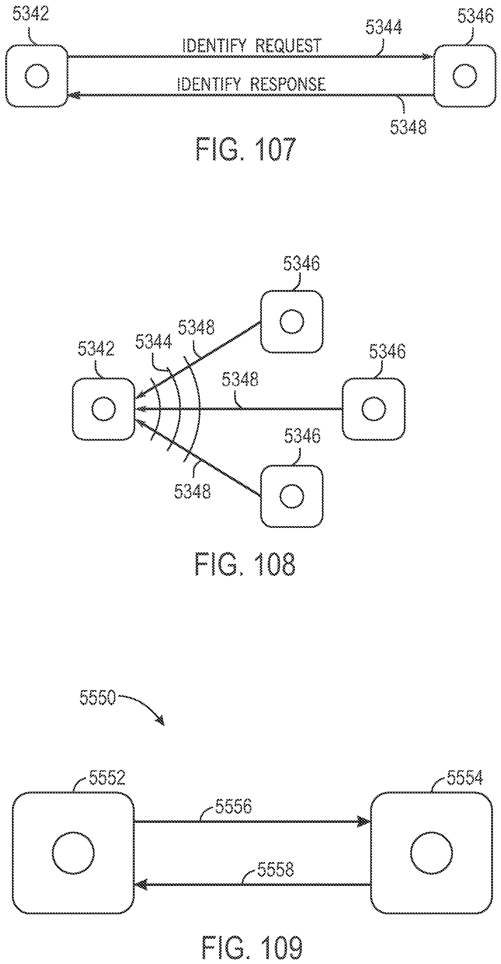

When it is desired for an identifying device to identify one or more other devices on the network. The device description profile may be used. The device description profile includes two message types: Identify Requests and Identify Responses. The device description profile may also be employed in two scenarios: unicast requests and multicast requests. FIG. 107 illustrates an unicast request and response. As illustrated in FIG. 107, a requesting device 5342 (e.g., device description client) sends out an Identify Request 5344 to a responding device 5346 (e.g., device description server) based on a known address for the responding device 5346. In other embodiments, the requesting device 5342 may not have the address for the responding device. Thus, in such embodiments, the requesting device 5342 may multicast the request to any device, as illustrated in FIG. 108. In some embodiments, the Identify Request 5344 includes criteria that identifies which devices on the network should respond. For example, the Identify Request 5344 may include criteria, such as a Fabric ID, a device ID, a device mode, a vendor ID, or productID. For example, an example criteria is represented in the Table 84 below:

**Table 84.** Example criteria

| | |
|---|---|
| uint64_t | TargetFabricId |
| uint32_t | TargetModes |
| uint16_t | TargetVendorId |
| uint16_t | TargetProductId |

When a device (e.g., responding device 5346) satisfies the criteria, the responding device 5346 responds with an identify response message 5348. In some embodiments, the identify response message 5348 may include data formatted in a TLV format. The response may include relevant data for identifying the responding device.

Furthermore, a message may include a tag that indicates whether the message is a request or a response. For example, the tag have a value of 1 when the message is a request and a value of 2 when the message is a response. There may also be tags specific to a structure in which one or more devices and/or fabric of the network reside. The tags may include vendor identifiers, product identifiers, product revisions, device identifier, fabric identifier, pairing compatibility version, and/or manufacturing dates as unsigned integers. Additionally or alternatively, the tags may include serial numbers (e.g., in string format), MAC address for an 802.15.4 network local area network, MAC address for an 802.11 local area network, a pairing code, and/or a software version as strings. The tags may also include flags indicating device connectivity, power types (e.g., battery or line powered),

In some embodiments, when a tag for a specific option is present, the responding device may support the option, but when the tag is missing from a response, the responding device may not support the option. The pseudocode below includes data structures and examples that may be used to provide/request device descriptor information:

```
//Message Types for the Device Description Profile
//
};

//Data Element Tags for the Device Description Profile

enum
{
    //---- Top-level Tags ----
    kTag_fabricDeviceDescriptor       = 1,   //Structure containing
information describing a fabric device.

    //---- Context-specific Tags for fabricDeviceDescriptor Structure ----

    kTag_VendorId              = 0,    //[ uint, range 1-65535 ] Code
identifying product vendor.
    kTag_ProductId             = 1,    //[ uint, range 1-65535 ] Code
identifying product.
    kTag_ProductRevision        = 2,    //[ uint, range 1-65535 ]
Code identifying product revision.
    kTag_ManufacturingDate      = 3,    //[ uint, range 1-65535 ]
Calendar date of manufacture in encoded form.
    kTag_SerialNumber          = 4,    //[ UTF-8 string, len 1-32 ]
Device serial number.
```

```
        kTag_Primary802154MACAddress          = 5,    //[ byte string, len
= 8 ] MAC address for device's primary 802.15.4 interface.
        kTag_PrimaryWiFiMACAddress            = 6,    //[ byte string, len
= 6 ] MAC address for device's primary WiFi interface.
        kTag_RendezvousWiFiESSID              = 7,    //[ UTF-8 string,
len 1-32 ] ESSID for device's WiFi rendezvous network.
        kTag_PairingCode              = 8,    //[ UTF-8 string, len 1-16 ]
        kTag_SoftwareVersion               = 9,    //[ UTF-8 string, len 1-32 ]
Version of software on the device.
        kTag_DeviceId                 = 10,   //[ uint, 2^64 max ] fabric
device id.
        kTag_FabricId               = 11,   //[ uint, 2^64 max ] Id of fabric
to which the device belongs.
        kTag_PairingCompatibilityVersionMajor      = 12,   //[ uint, range 1-
65535 ] Pairing software compatibility major version.
        kTag_PairingCompatibilityVersionMinor      = 13,   //[ uint, range 1-
65535 ] Pairing software compatibility minor version.


        //---- Feature Tags (Context-specific Tags in fabricDeviceDescriptor
that indicate presence of device features) ----


        //NOTE: The absence of a specific tag indicates that the device does not
support the associated feature.
        //
        kTag_DeviceFeature_HomeAlarmLinkCapable     = 100, //[ boolean ]
Indicates a Nest Protect that supports connection to a home alarm panel.
        kTag_DeviceFeature_LinePowered               = 101   //[ boolean ]
Indicates a device that requires line power.
        };
```

For example, a device descriptor may also pertain to other tag type may indicate that a device is a hazard detector that supports connection to a home alarm panel, or the device uses line power, a device ID, a fabric ID, a product ID, various error statuses (e.g., not in a fabric etc.), indicators indentifying device modes (e.g., user selected mode), or other device features

In some embodiments, more or less information may be included in the device description request and/or response. For example, the foregoing pseudocode indicates that a pairing code for the device may be sent. However, in some embodiments, the PairingCode field may not be sent over the network. Instead, in such embodiments, the pairing code field is present in a fabricDeviceDescriptor structure to be encoded in a data label (e.g. QR-code) that is physically associated with the device.

**M. Echo Profile**

The Echo profile provides a mechanism to test network connectivity and latency. In some embodiments, the profile ID may have a Vendor ID of 0x0000 (CORE) and a Profile identified by 0x0001. There are two types of messages echo requests and echo responses. In some embodiments, these message types may be flagged using the following values: nlfabricMessageEchoRequest= 1 and nlfabricMessageEchoResponse= 2. In some embodiments, the payload of the echo request may be constrained by the maximum fabric message size to 64k minus headers and footers. In some embodiments, a fault notification may be omitted from the profile. Instead, in such embodiments, success may be determined by receipt of the response.

A fabric node may send echo requests to arbitrary nodes within a fabric. As discussed above, in some embodiments, an echo request is a message with profile ID 0x00000001 and message type 1. The application payload consists of arbitrary data supplied by the requesting node and expected to be echoed back verbatim in the response.

A fabric node responds to an echo request by sending an echo response. The response's application payload matches the payload of the request in a proper response. The encryption and signature types of the response also match those from the request, and the response uses the same encryption key as the request if encryption is specified.

The specific embodiments described above have been shown by way of example, and it should be understood that these embodiments may be susceptible to various modifications and alternative forms. It should be further understood that the claims are not intended to be limited to the particular forms disclosed, but rather to cover modifications and alternatives falling within the scope of this disclosure.

### N. Locale Profile

Using the locale profile, smart devices may present supported localizations to other devices in the mesh network. Specifically, the locale profile enables smart devices to specify which locations and languages are supported in a specific format recognizable by other devices in the network.

In some embodiments, any communication using the locale profile may be identified using a profile ID. For example, in some embodiments, the profile ID for the locale profile may be 0x0000 0011. Any communication tagged with the locale profile ID may be interpreted as a locale identifier organized in a format that is mutually understood by other devices in the network. Moreover, in some embodiments, the bits of data in the profile may be formatted in a big endian or little endian. Furthermore, in some embodiments, the locale profile may be instanced for each device using a node identifier as a unique identifier for each respective device in the network.

### O. Alarm Profile

When a hazard detector or other status-determining device changes state, that state change may be communicated to the other devices on the network. The state changes from the originating device may be signaled to an alarming state machine on the remote nodes (e.g., thermostats), and taken as inputs into the different state transitions. In addition, the remote node may request different state changes from the originating node (e.g., the hazard detector), and the originating node can accept or reject the state change. The state transmissions may include alarm propagations, remote hushes of alarms, and alarm handling, among other transmissions. For example, propagation of the alarm through various states, from different "Heads Up" pre-alarm states, to a hushable alarm, to a non-hushable alarm, and to a standby mode. In some embodiments, the alarm conditions may change over time, as different sensors in one or more devices in a fabric may trigger an alarm.

Additionally, a remote hush occurs when a remote node is hushed locally by some interaction. In such cases, the remote hush propagates an update to the originating node, and depending on the policies, that update may result in a hush request being propagated to other remotes ("global hush"). Moreover, in some embodiments, alarms from different originating nodes may be treated differently. The different devices within the network may be aware of the different originating alarms, and, the policies may allow the alarm to be hushed at originating device by one device or type but not by another device or type. In some embodiments, the alarm may be propagated the other devices of the same type, the service, and any clients that are participating in the network.

In some embodiments, the originating device is responsible for changing the global state of the alarm. In such cases, the alarm updates are propagated from a remote device to the originating device, where they are processed and either accepted (and propagated to the rest of the network) or rejected. The policy for changing the global state of the alarm may be specific to the alarm, deployment locale, and possibly other factors and may be handled by application layer.

An application interface provides an interface to initiate an alarm, hush an alarm and receive various updates. The application interfaces with that layer, and implements local policy rules for hushing, etc. Protocol and message specifications provide a framework for disseminating alarms to the entire network and specify message formats and message exchange patterns. In a case of an alarm, the network stops being sleepy, and the nodes in the network become active. However, waking up the network from and propagating the detailed alarm are separate functions that may be performed independently.

### a. Terms

Alarm originator as used herein refers to a device that originates the alarm. There may be multiple alarm originators devices within a single network or fabric. Alarm remote, as used herein, refers to a device that is not the originating device and receives an alarm message. A device can simultaneously be an alarm remote for one alarm and an originating node for another alarm. For example, if two hazard detectors detect a hazard condition, both hazard detectors may originate an alarm and receive another alarm.

Alarm source, as used herein, refers to a sensor or condition that triggered the alarm. Global hush, as used herein, refers to an alarm that is hushed at both the alarm originator and the alarm remotes. Hush, as used herein, refers to a silenced alarm that is set to disable re-arming for a period of time. Remote hush, as used herein, refers to an alarm that is hushed at all the remote devices, but the originating device is still alarming. Pre-alarms, as used herein, refers states of the alarming state machine that may causes the remote device to arm enter a higher wakefulness state. For example, when a hazard detector detects that levels are approaching an alarm level.

**b. Message Types**

In some embodiments, alarm messages may have some information that is consistent between at least some of the alarm message types. For example, the alarm originator may be identified using a NodeID, such as a 64-bit ID that is unique for the device on the network. Moreover, a WhereID may be an extended 128-bit ID of the location of the alarm originator. AlarmCtr may be an 8-bit alarm version counter that is used to communicate that an alarm state has been updated. An initial alarm may start with an AlarmCtr of 0, and each update of alarm state (as determined by the originating node) may increment the AlarmCtr counter. A change in the AlarmCtr may be signaled locally to the application at each remote node. Throughout the network, the combination of the AlarmCtr and originating node id form a unique tuple that causes a particular action on a receiving node. After an alarm has been resolved at the alarm originator, the AlarmCtr may restart at 0 on a subsequent, distinct alarm condition.

The alarm profile defines the following numeric message types in Table 85:

**Table 85.** Alarm profile message types

| Message Type | Message |
|---|---|
| 0x01 | Alarm Message |
| 0x02 | AlarmUpdate |
| 0x03 | AlarmAck |

The protocol has a number of fields, such as an alarm condition. FIG. 109 illustrates a schematic view of an embodiment of an alarm message interaction 5550. As illustrated, a sending device 5552 sends an alarm message 5556 to a receiving device 5554. In some embodiments, the receiving device 5554 sends an alarm acknowledgment 5558. For example, in some embodiments, the receiving device 5554 may send the alarm acknowledgment 5558 when the alarm message 5552 is unicast and addressed to the receiving device 5554. However, in certain embodiments, the receiving device 5554 may omit an alarm acknowledgment 5558 when the alarm message 5556 is multicast among devices. In some embodiments, the alarm condition may be an 8-bit value, where the 4 most significant bits determine the alarm source and the lower 4 bits determine the alarm state. In certain embodiments, the alarm source may be populated using one of the following values reproduced in Table 86:

**Table 86.** Alarm sources

| Value | Name | Comments |
|---|---|---|
| 0x10 | ALARM_SMOKE | Alarm triggered by the smoke sensor |
| 0x20 | ALARM_TEMP | Alarm triggered by the temperature sensor |
| 0x30 | ALARM_CO | Alarm triggered by the CO sensor |
| 0x40 | ALARM_CH4 | Alarm triggered by the natural gas sensor |
| 0x50 | ALARM_HUMIDITY | Alarm triggered by the humidity sensor |
| 0x60 | ALARM_SECURITY | Security Alarm |
| 0x70..0xe0 | | Reserved for future use |
| 0xf0 | ALARM_OTHER | Other alarm condition not called out here. Check the TLV metadata for the specific alarm source. |

Similarly, alarm state may be populated using the following values reproduced in Table 87:

**Table 87.** Alarm states

| Value | Name | Comments |
|-------|------|----------|
| 0x00 | STATE_STANDBY | Everything is OK. Originating node will send this to indicate an "all clear" for the specific alarm source |
| 0x01 | STATE_HEAD_UP_1 | Pre-alarm state |
| 0x02 | STATE_HEAD_UP_2 | Pre-alarm state |
| 0x03 | STATE_HU_HUSH | Pre-alarm state |
| 0x04 | STATE_ALARM_HUSHABL E | Alarm state, the originating or remote node may locally hush the alarm |
| 0x05 | STATE_ALARM_NONHUSH ABLE | Originating alarms may not be hushed, but remote alarms may hush |
| 0x06 | STATE_ALARM_GLOBAL_ HUSH | he originating and the remote nodes are in the hush state |
| 0x07 | STATE_ALARM_REMOTE_ HUSH | The originating node is alarming and the remote nodes are hushed |
| 0x08 | STATE_SELFTEST | Selftest of the sensor alarm |

AlarmUpdateStatus may be populated as an 8-bit integer to indicate the status of an alarm update request using the following values reproduced in Table 88:

**Table 88.** AlarmUpdateStatus

| Value | Meaning |
|-------|---------|
| 0 | SUCCESS |
| 1 | REJECTED_BY_POLICY |
| 2 | INVALID_STATE |

**i. Alarm Message**

Alarm messages may be either multicast or unicast. The message may be periodically re-sent as long as the alarm condition is ongoing in the multicast and/or unicast case. The alarm originator may update the alarm state at any point with those changes being propagated. In some embodiments, in a steady state (e.g., the alarm state is not changing), the message may be re-disseminated to the network at a rate higher than the alarm expiration. An alarm message may include the following information reproduced in Table 89.

**Table 89.** Alarm message fields

| Name | Size | Note |
|------|------|------|
| AlarmCtr | 1 byte | Alarm version counter |
| AlarmLen | 1 byte | Number of different AlarmConditions triggering this alarm |
| AlarmConditions | variable | An array of AlarmConditions |
| Where ID | 1-16 bytes | The WhereID of the originating node |
| Metadata | variable | TLV data |

In some embodiments, one or more of the data fields may vary in size from the above values. If the alarm source is not present in the list of AlarmConditions, the remote node may assume that the alarm state for that sensor is STATE_STANDBY. In some embodiments, when the alarm message includes a correctly set counter and the AlarmLen set to 0 and AlarmConditions omitted, the message may be interpreted as an "All Clear" signal. In some embodiments, the AlarmConditions may include an alarm type and severity of the alarm. In certain embodiments, additional information may be included in TLV data, such as authorization keys or other pertinent information to the network.

### ii. Alarm Update Message

Alarm Update messages may be sent from alarm remotes to the alarm originator to update the alarm state. For example, an alarm update message may be used as a request for status change (such as to request a remote hush or to change the alarming bits) or an update to other pertinent metadata (remote readings, etc). An alarm update message may be populated using a structure similar to the data reproduced in Table 90 below:

**Table 90.** Alarm update message.

| Name | Size | Note |
|---|---|---|
| AlarmCtr | 1 byte | Alarm version counter (the version of the alarm that is requested to change) |
| AlarmLen | 1 byte | Number of Alarm Conditions to update |
| AlarmConditions | variable | AlarmConditions to be updated |
| Metadata | variable | TLV data |

Using an AlarmUpdate, the alarm remote requests changes to the state of the ongoing alarm. Each of the AlarmConditions elements contains the desired state for a specific alarm source. If an AlarmCondition is not present in the list, the originating node assumes that there is no status change request made for that sensor.

### iii. Alarm Acknowledgement Message

An alarm acknowledgement message is a unicast message that serves as an acknowledgement for the unicast scenarios such as alarm update. The message includes fields used to identify the message that is being acknowledged such as those included in Table 91 below:

**Table 91.** Alarm acknowledgement message.

| Name | Size | Note |
|---|---|---|
| AlarmCtr | 1 byte | Alarm version counter (equal to the AlarmCtr from the AlarmUpdate message) |
| AlarmUpdateStatus | 1 byte | Status of the update: the originating node specifies whether the update request has been successful or not. |
| AlarmLen | 1 byte | If update was rejected, this field would contain the length of AlarmConditions |
| AlarmConditions | Variable | If the update was rejected, the originating node may specify the desired state on the remote. |

### c. Multicast Alarms

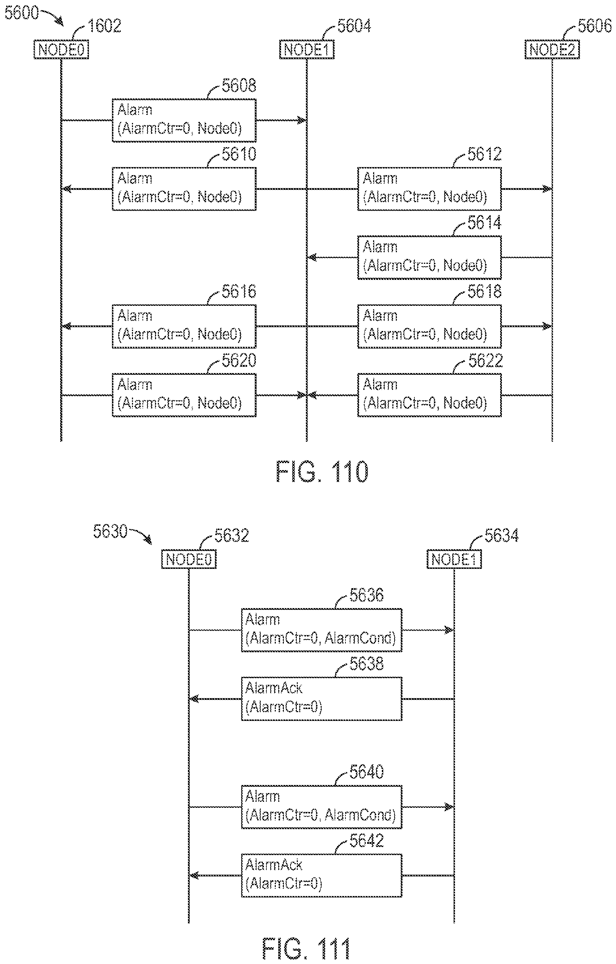

FIG. 110 illustrates a broadcast pattern 5600 where an alarm is broadcast to the entire network from an originating node, NodeO 5602, and remote nodes, Nodel 5604 and Node2 5606. An alarm message 5608 starts at the originating node, and propagates to its locally-connected neighbor Nodel 5604 as alarm messages 5608. Nodel 5602 uses a timer to determine how long after receiving a message to propagate the alarm. After the time expires, Nodel 5602 then propagates the message 5608 contents to all connected neighbors, Nodel 5604 and Node2 5606, as the alarm messages 5610 and 5612, respectively. Node2 5606 then propagates the alarm content as alarm message 5614 to all connected neighbors (e.g., Nodel 5604). Nodel 5604 then propagates the alarm as alarm messages 5616 and 5618 to NodeO 5602 and Nodel 5604. With a broadcasting dissemination with each node having a threshold of 2 may result in the broadcast pattern 5600 of FIG. 110. If the number is higher, each device may attempt to propagate more times, but if the number is lower, the propagation may cease sooner with each device propagating the alarm fewer times.

In some embodiments, the multicast alarm is re-sent periodically as long as the alarm condition is active. The resend rate is a function of the underlying configuration of the broadcast dissemination. In some embodiments, the resend rate may be approximately on the order of the broadcast message expiration time T.

When the alarm state changes, the originating node increments the AlarmCtr, and sends out a new broadcast message (with a new broadcast ID). By sending out a new broadcast message, the originating node (e.g., NodeO 5602) resets the internal timers, and starts fast message propagation through the network.

### d. Unicast Alarms

Unicast alarms are targeted to a specific endpoint. Unicast alarms are slightly different from multicast alarms, in that they may not account for network density, and may not rely on intermediate nodes to keep any additional state. Unicast alarms utilize AlarmAck messages to turn down the message rates to a relatively lower rate. FIG. 111 shows an example message distribution 5640. As shown in FIG. 111, two nodes are present, NodeO 5632 and Nodel 5634, where NodeO 5632 is an originating node and Nodel 5634 is a remote node that the alarm message is designated to reach. FIG. 111 illustrates steady state alarming with no changes to the alarms. Specifically, an alarm message 5636 is sent from NodeO 5632 to Nodel 5634 with a list of alarm conditions. Nodel 5634 responds with an alarm acknowledgment message 5638 with the same AlarmCtr. At some later time, NodeO 5632 sends another alarm message 5640 indicating a set of alarm conditions. Again, Nodel 5634 responds with an alarm acknowledgment message 5640. The alarm conditions for the alarm messages 5636 and 5640 indicate that no changes have been made to the alarm by NodeO 5632.

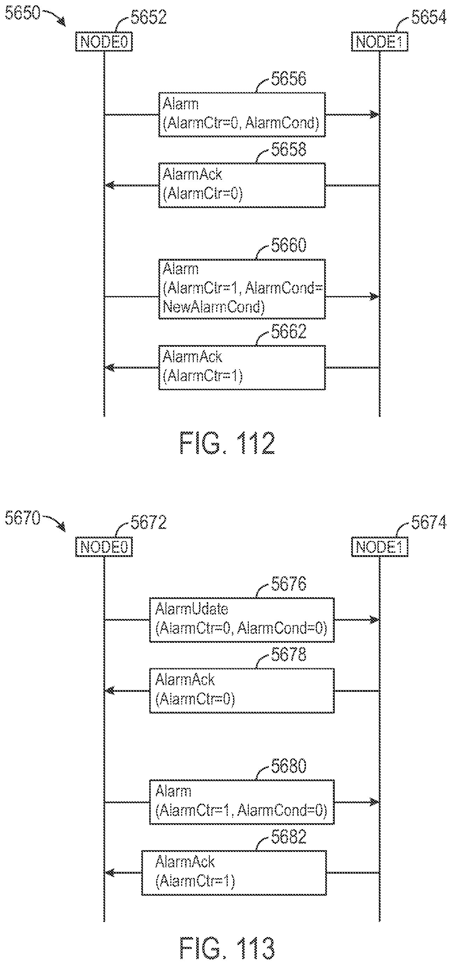

FIG. 112 illustrates a message distribution 5650 when an alarm state change occurs at the originator. Similar to FIG. 111, the originator node 5652 sends an alarm message 5656 to a remote node 5654. The remote node 5654 responds with an alarm acknowledgment message 5658. Some change (e.g., temperature change) occurs at the originating node 5652, and the originating node 5654 responds with a new alarm message 5660 with an indication of a status change with a change in the AlarmCtr and new alarm conditions. Again, the remote node 5654 responds with an alarm acknowledgment message 5662.

FIG. 113 illustrates a message distribution 5670 where a remote node 5674 request to update alarm state where the remote node 5674 requests the originator node 5672 to hush the alarm and the originator accepts. The remote node 5674 sends an originator node 5672 an alarm update message 5676. The originator node 5672 responds with an acknowledgment message 5678. Once the alarm has been acted upon (e.g., hushed), the originator node 5672 sends an alarm message that indicates that the alarm status has changed using an AlarmCtr change. Furthermore, a value of 0 for the alarm conditions indicate that the alarm is hushed.

Moreover, in some embodiments, in the unicast case, the originator node is done with the alarm as soon as it receives an acknowledgement to the message that indicated alarm hushing (AlarmCond=0) or T0 timeout is reached.

### e. TLV tags

The profile may be primarily concerned with the general type of alarm and the state of the alarm as it propagates through the network. Additional alarm specific data may also be packed into a TLV section of the alarm message. Some sample parameters that might be present in the TLV data may be the time of the alarm along with the appropriate time base, the reading of the alarming sensor, and auxiliary sensor readings. The profile also allows for an implementation of a stateful alarm that expects that the notifications about the alarm state are propagated to an application program without loss, and exactly once.

### f. Sample Scenarios

The updates allow for a remote node to issue an update and leave the policy of how the update affects the alarm to the originating node. This allows for implementations of remote hushing (or for preventing such actions).

While the specifics of how the application chooses to handle the different alarm scenarios (the application is the view, while this profile provides a model), below are some sample scenarios of how different scenarios might be handled. In some embodiments, alarm sounds may be decomposed by a tuple of (severity, type, location); the notification for multiple originators and alarm conditions can be derived by lexicographic ordering of all the known conditions.

Single alarm originator, multiple alarm causes:

- Alarming: the alarm originator sends out alarm messages as the alarm conditions change. The alarm remotes modify the alarm sequence as the conditions evolve. The remote alarms play the appropriate message that is the result of interpreting the set of alarm conditions. In some embodiments, the playback may be subject to regulatory policy and timing constraints. In some embodiments, the most severe condition would be prioritized for playing. In some embodiments, all conditions that meet a predetermined severity are played. In certain embodiments, the remote alarms also play the location on the originating alarm.
- Local hush: on hush condition at the originator, the alarm originator sends out the alarm message with the state for each alarm set to STATE_ALARM_GLOBAL_HUSH. On reception of the message, the remote alarms enter hush state.
- Remote hush: at the remote alarm, a hush request is initiated. The node sends out an AlarmUpdate to the alarm originator with the STATE_ALARM_GLOBAL_HUSH bit set for all AlarmConditions. The alarm originator acknowledges the message. The acknowledgement carries with it information whether the requested state was permitted or disallowed. If the state was disallowed, an indication of a reason if given (e.g. disallowed by regulatory policy) is included in the acknowledgment. If the remote hush request was accepted, the alarm originator increases the sequence number. Then, if permitted by policy, the originator changes the state of the alarm conditions asked in the request. When the alarm may not be hushed on the originator but is permitted to be hushed on the remote alarms, the alarm state is set to STATE_ALARM_REMOTE_HUSH. The originator then proceeds to send out the alarm messages as previously described. Upon receipt of the new alarm state, remote alarms enter the hush state

Multiple alarm originators, single alarm cause:

• Alarming: Each alarm originator sends out an alarm message, with the AlarmCondition set to the alarm cause. Because there is only a single common cause of the alarm, each alarm originator sets the same cause in their alarm messages. Each node in the network (both the nodes that are remote nodes as well as those that originated the alarms) tracks the known AlarmConditions. Each node independently combines the alarm conditions from all the alarm originators. The choice of alarm to be played is a straightforward one: there is only a single alarm condition. If timing constraints permit, the list of locations is played as well. If timing constraints do not permit the location of the alarm to be played, the location may be omitted or a special phrase may be inserted to indicate that the alarm originated in multiple places.

• Local hush: on hush condition at the one the originators, the respective originator node increments the AlarmCtr field and sends out the alarm message with the state set to STATE_ALARM_GLOBAL_HUSH. Additionally, it sends AlarmUpdate requests to each of the other active originators, the requested state is STATE_ALARM_GLOBAL_HUSH. Each of the other originators acts independently on the reception of the AlarmUpdate message: each originator accepts or rejects the update (according to policy), updates its AlarmCtr, and sends out the new state. If permitted by policy, all originators accept the STATE_ALARM_GLOBAL_HUSH. When each of the nodes (both originating alarm and acting as remote alarms) receives update from all originators stating that the respective originating alarm is now STATE_ALARM_GLOBAL_HUSH, the node plays back the message "Alarm hushed" and enters the hushed state.

• Remote hush: at the remote alarm, a hush state is initiated. The remote node sends out an AlarmUpdate to each alarm originator with the STATE_ALARM_GLOBAL_HUSH bit set for all the AlarmCondition. Each alarm originator acknowledges the message. The acknowledgement carries with it information whether the requested state was permitted or disallowed. If the state was disallowed, the acknowledgment includes an indication of a reason if given (e.g. disallowed by regulatory policy). If the remote hush request was accepted, the alarm originator increases the sequence number. Then, if permitted by policy, the originator changes the state of the alarm conditions asked in the request. If the alarm may not be hushed remotely, the originator sets the state to STATE_ALARM_REMOTE_HUSH. Each originator then proceeds to send out the Alarm message with the updated alarm state. Upon reception of the new alarm state from every alarm originator, remote alarms enter the hush state. If the global hush was permitted at each originator, every node in the network will play the message "Alarm hushed". If the alarm originators only permitted a remote hush, each originator will play its own alarm message along with its own location, and the nodes that did not originate an alarm will be hushed.

Multiple alarm originators, multiple alarm causes:

• Alarming: Each alarm originator sends out an alarm message, with the AlarmConditions set as needed. Each node in the network tracks all the known AlarmConditions from all originators. The alarm that is played consists of tuples of the form (Severity, AlarmCondition, list of locations where alarms are occurring) ordered by severity and AlarmCondition. The alarm sound played may be incomplete if it exceeds the maximum duration. In some embodiments, only the most severe alarm cause may be played. In some embodiments all alarms exceeding a predetermined severity may be played. Given the tight timing between the buzzer sounds, the embodiments may favor a brief messages, and play only the most severe alarm condition, and omitting the location of that condition if it occurs in more than a single place

• Local hush: on hush condition at the one the originators, the respective originator node sends out the alarm message with the STATE_ALARM_GLOBAL_HUSH bit set for all the AlarmConditions that it originated. Additionally, it sends AlarmUpdate requests to each of the other active originators, the requested state is STATE_ALARM_GLOBAL_HUSH. Each of the other originators acts independently on the reception of the AlarmUpdate message: each originator accepts or rejects the update (according to policy), updates its AlarmCtr, and sends out the new state. If permitted by policy, the receiving originator accepts the STATE_ALARM_GLOBAL_HUSH. If the policy does not permit global hush, the receiving originator sets its state to STATE_ALARM_REMOTE_HUSH, and continues to play its local alarm tone. When each remote alarm has received the updated state from each originator, the state of each alarm will be either STATE_ALARM_GLOBAL_HUSH or STATE_ALARM_REMOTE_HUSH. At that point, the remote alarms will play the message "Alarm hushed" and enter the hushed state. The alarm originators may continue to play their local alarm messages if they rejected the global hush request.

- Remote hush: at the remote alarm, a hush state is initiated. The node sends out an AlarmUpdate to each alarm originator with the STATE_ALARM_GLOBAL_HUSH bit set for all the AlarmCondition. Each AlarmOriginator acknowledges the message. The acknowledgement carries with it information whether the requested state was permitted or disallowed. If the requested state was disallowed, an indication of a reason is given (e.g. disallowed by regulatory policy) in the acknowledgment. If the remote hush request was accepted, the alarm originator increases the sequence number. Then, if permitted by policy, it changes the state of the alarm conditions asked in the request. If the alarm may not be hushed remotely, the originator sets the state to STATE_ALARM_REMOTE_HUSH. Each originator then proceeds to send out the Alarm message with the updated alarm state. If the policy does not permit global hush, the receiving originator sets its state to STATE_ALARM_REMOTE_HUSH, and continues to play its local alarm tone. When each remote alarm has received the updated state from each originator, the state of each alarm will be wither STATE_ALARM_GLOBAL_HUSH or STATE_ALARM_REMOTE_HUSH. At that point, the remote alarms will play the message "Alarm hushed" and enter the hushed state. The alarm originators may continue to play their local alarm messages if they rejected the global hush request.

### g. Broadcast Dissemination

A number of communication patterns -- interconnected alarms, broadcast notifications -- use a multicast primitive that operates over a multi-hop network. The broadcast primitive is used when the notion of group membership is ill-defined, changing, or unknown. In such situations, the communication pattern may be implemented in a way to not block group membership changes.

The broadcast primitive may be based around broadcasting a single message to the network and flooding that message throughout the network in a controlled manner. In some embodiments, the message may be sent to all nodes in a fabric. In other embodiments, a sending device (or user) may specify whether to send to all nodes or just nodes in a particular link. Moreover, in some embodiments, one or more devices on the network may forward messages to other sub-networks or networks. It may desirable to separate the forwarding and dissemination of the message from the processing and understanding of message payload. For example, a node may be able to forward a message without acting on the message, as this enables a much greater connectivity within the network. For simplicity, in some embodiments, each node may originate a single broadcast message active within the network.

### i. Broadcast Dissemination Message Formatting

In some embodiments, the broadcast message may specify the following attributes:

- The destination address maybe set to a site-local broadcast within one or more logical networks (e.g., WiFi, 802.15.4, etc.)
- The S-flag in the Fabric message header may be set to 1 and the Source Node ID may be set to the originator of the message.
- As in other Fabric messages, the MessageID may be used to identify the messages. Here, the MessageID may remain associated with the Source Node ID, even though the packet is being re-broadcast. In contrast to other fabric applications, the forwarding node may hold onto the MessageIDs for a period of time. Repeated receptions of the same message IDs are not necessarily an indication of a replay but rather an indication of a local network density.
- The message is resent using the forwarder EUI-based IP address, such as a ULA assigned to the destination link.

In some embodiments, the fabric layer may understand how long to hold onto the message and to retransmit that message. This resending periodicity could be a system-wide configuration parameter, could be set during the key rotation periods, or perhaps be embedded within the message itself; we note that there are two unused bits in the fabric message headers that could be used to indicate additional fields that associate the timer durations with the message. The timers could also be set based on the class of service depending on whether the latency is important in the particular application.

### ii. Broadcast Dissemination Runtime

In the propagation of the message, each message may the following state associated with it:

- A timer $T$ that determines when to stop tracking the message.

- A time constant $\tau$ that, in conjunction with *T,* determines how many retransmissions of the single message take place independently within the network.
- A random timer *t* in the range [0, $\tau$] that determines whether to forward the message.
- A counter c that tracks how many retransmissions have been received.
- An integer *k* that represents the threshold of retransmissions.

Upon receiving a new broadcast message, the node starts a new timer *t.* The counter c is reset to 0. The node increments the counter *c* every time it receives the message with the tuple (messageID and Sender ID). When the timer *t* expires, and the node has received $c <= k$ messages, it forwards the message. If the $c > k,$ the node waits until $\tau$ time expires, and begins the process anew. The process repeats until either *T* time expires, or a new broadcast message from SourceNodeID is received.

In some embodiments, each node may transmit at most once per time $\tau$. Moreover, in some embodiments, each node may have a chance to perform T/$\tau$ retransmissions. Furthermore, in certain embodiments, the random selection of t spreads which of the nodes in the local broadcast performs the retransmission.

The messages propagate across the hops as a function of the time constant $\tau$. The fundamental tradeoff in gossip protocols is between the number of messages sent and the propagation latency of the new information. In some embodiments, $\tau$ may be dynamically adjusted during the execution of the algorithm between $\tau0$ and $\tau$max. For example, $\tau$ may be set to a short $\tau0$ with each time the $\tau$ time elapses, $\tau$ may be doubled up to the value of $\tau$max.

To sum up, the algorithm may perform the following actions illustrated in Table 92 below:

**Table 92.** Algorithm actions

| Event | Action |
|---|---|
| *T* expires | Terminate the algorithm |
| $\tau$ expires | Double $\tau$ up to the maximum value of $\tau$max, pick a new timer *t* |
| *t* expires | if $c < k,$ retransmit the message |
| Receive a duplicate of a message | increment *c* |
| Receive a newer message | set $\tau$ to $\tau0$, reset *c*, pick a new timer *t* |
| Receive an older message | set $\tau$ to $\tau0$, reset *c*, pick a new timer *t* |

In some particular embodiments, the algorithms for waking up devices on a fabric and disseminating messages to those devices as described in U.S. Patent Application No. 14/478,346, filed September 5, 2014, and U.S. Patent Application No. 14/478,265, filed September 5, 2014, both of which are incorporated by reference in their entirety for all purposes, may be implemented.

The specific embodiments described above have been shown by way of example, and it should be understood that these embodiments may be susceptible to various modifications and alternative forms. It should be further understood that the claims are not intended to be limited to the particular forms disclosed, but rather to cover modifications and alternatives falling within the scope of this disclosure.

**Claims**

1. An electronic device (10; 1092) adapted for conveying locale information, the electronic device (10; 1092) comprising:

   a network interface (18);
   a processor (20); and
   a memory, the memory comprising instructions configured to cause the processor (20) to:

   request (4912), from another device (10; 1094), and via the network interface (18), a list (4906) of available locales (4910) that are available to the other device (10; 1094), the request comprising a request for either a view of an entire profile instance of a locale profile (4900) on the other device (10; 1094), or a view of only available locales sub-fields (4910) of a locale profile (4900) on the other device (10; 1094);
   receive (4914) the list (4906) of available locales (4910) from the other device (10; 1094);
   select (4916) an active locale (4904, 4908) for the other device (10; 1092) from the received list (4906) of available locales (4910), wherein the active locale (4904, 4908) indicates which language and/or location is being used; and

send (4918) a request, to the other device (10; 1094), to change the active locale (4904, 4908) of the other device (10; 1094) to the selected locale such that the other device (10; 1094) will use the language and/or location indicated by the selected locale.

2. The electronic device of claim 1, wherein the electronic device (10; 1092) presents the available locales (4910) to a user and receives a selection of the active locale (4910) from the user.

3. The electronic device of claim 1, wherein the list (4906) of available locales (4910) is a prioritized list of the available locales (4910).

4. The electronic device of claim 1, wherein the electronic device (10; 1092) selects the active locale (4904, 4908) to be a preferred locale stored on the electronic device (10; 1092), another device (10; 1004 - 1016; 1026 - 1052; 1060 - 1072; 1094), or a service (1082).

5. The electronic device of claim 4, wherein the preferred locale is a first locale in the list (4906) of available locales (4910).

6. The electronic device of claim 1, the instructions configured to cause the processor (20) to:
store the available locales (4910) without setting a new active locale (4904, 4908).

7. A method for conveying locale information for an electronic device (10; 1092), comprising:

requesting (4912), from another device (10; 1094), a list (4906) of available locales (4910) that are available to the other device (10; 1094), the request comprising a request for either a view of an entire profile instance of a locale profile (4900) on the other device (10; 1094), or a view of only available locales sub-fields (4910) of a locale profile (4900) on the other device (10; 1094);
receiving (4914) the list (4906) of available locales (4910) from the other device (10; 1094);
upon the receiving the list (4906) of available locales (4910), selecting (4916) an active locale (4904, 4908) for the other device (10; 1092), wherein the active locale (4904, 4908) indicates which language and/or location is being used; and
sending (4918) a request, to the other device (10; 1094), to change the active locale (4904, 4908) of the other device (10; 1094) to the selected locale such that the other device (10; 1094) will use the language and/or location indicated by the selected locale.

8. The method of claim 7, the method further comprising:

presenting the available locales (4910) to a user; and
receiving a selection of the active locale (4904, 4908) from the user.

9. The method of claim 7, wherein the list (4906) of available locales (4910) is a prioritized list of the available locales (4910).

10. The method of claim 7, wherein the selecting the active locale (4904, 4908) is selecting a preferred locale stored on the electronic device (10; 1092), another device (10; 1004 - 1016; 1026 - 1052; 1060 - 1072; 1094), or a service (1082).

11. The method of claim 10, wherein the preferred locale is a first locale in the list (4906) of available locales (4910).

12. The method of claim 7, further comprising:
storing the available locales (4910) without setting a new active locale (4904, 4908).

13. A non-transitory, computer-readable medium comprising instructions which, when executed by a processor of an electronic device, configure the electronic device to perform the method of any one of claims 7 to 12.

**Patentansprüche**

1. Elektronisches Gerät (10; 1092), das zum Übermitteln von Gebietsschemainformationen ausgelegt ist, wobei das elektronische Gerät (10; 1092) Folgendes umfasst:

   eine Netzwerkschnittstelle (18);
   einen Prozessor (20); und
   einen Speicher, wobei der Speicher Anweisungen umfasst, die so konfiguriert sind, dass sie den Prozessor (20) zu Folgendem veranlassen:

   Anfordern (4912), von einem anderen Gerät (10; 1094) und über die Netzwerkschnittstelle (18), einer Liste (4906) von verfügbaren Gebietsschemata (4910), die dem anderen Gerät (10; 1094) zur Verfügung stehen, wobei die Anforderung eine Anforderung entweder für eine Ansicht einer gesamten Profilinstanz eines Gebietsschemaprofils (4900) auf dem anderen Gerät (10; 1094) oder für eine Ansicht nur von verfügbaren Gebietsschemaunterfeldern (4910) eines Gebietsschemaprofils (4900) auf dem anderen Gerät (10; 1094) umfasst;
   Empfangen (4914) der Liste (4906) von verfügbaren Gebietsschemata (4910) von dem anderen Gerät (10; 1094);
   Auswählen (4916) eines aktiven Gebietsschemas (4904, 4908) für das andere Gerät (10; 1092) aus der empfangenen Liste (4906) von verfügbaren Gebietsschemata (4910), wobei das aktive Gebietsschema (4904, 4908) angibt, welche Sprache und/oder welcher Standort verwendet wird; und
   Senden (4918), an das andere Gerät (10; 1094), einer Anforderung zum Ändern des aktiven Gebietsschemas (4904, 4908) des anderen Geräts (10; 1094) auf das ausgewählte Gebietsschema, sodass das andere Gerät (10; 1094) die Sprache und/oder den Standort verwendet, die bzw. der durch das ausgewählte Gebietsschema angegeben ist.

2. Elektronisches Gerät nach Anspruch 1, wobei das elektronische Gerät (10; 1092) die verfügbaren Gebietsschemata (4910) für einen Benutzer darstellt und eine Auswahl des aktiven Gebietsschemas (4910) von dem Benutzer empfängt.

3. Elektronisches Gerät nach Anspruch 1, wobei die Liste (4906) von verfügbaren Gebietsschemata (4910) eine priorisierte Liste der verfügbaren Gebietsschemata (4910) ist.

4. Elektronisches Gerät nach Anspruch 1, wobei das elektronische Gerät (10; 1092) das aktive Gebietsschema (4904, 4908) so auswählt, dass es ein auf dem elektronischen Gerät (10; 1092), einem anderen Gerät (10; 1004-1016; 1026-1052; 1060-1072; 1094) oder einem Dienst (1082) gespeichertes bevorzugtes Gebietsschema ist.

5. Elektronisches Gerät nach Anspruch 4, wobei das bevorzugte Gebietsschema ein erstes Gebietsschema in der Liste (4906) von verfügbaren Gebietsschemata (4910) ist.

6. Elektronisches Gerät nach Anspruch 1, wobei die Anweisungen so konfiguriert sind, dass sie den Prozessor (20) zu Folgendem veranlassen:
   Speichern der verfügbaren Gebietsschemata (4910), ohne ein neues aktives Gebietsschema (4904, 4908) einzustellen.

7. Verfahren zum Übermitteln von Gebietsschemainformationen für ein elektronisches Gerät (10; 1092), umfassend:

   Anfordern (4912), von einem anderen Gerät (10; 1094), einer Liste (4906) von verfügbaren Gebietsschemata (4910), die dem anderen Gerät (10; 1094) zur Verfügung stehen, wobei die Anforderung eine Anforderung entweder für eine Ansicht einer gesamten Profilinstanz eines Gebietsschemaprofils (4900) auf dem anderen Gerät (10; 1094) oder für eine Ansicht nur von verfügbaren Gebietsschemaunterfeldern (4910) eines Gebietsschemaprofils (4900) auf dem anderen Gerät (10; 1094) umfasst;
   Empfangen (4914) der Liste (4906) von verfügbaren Gebietsschemata (4910) von dem anderen Gerät (10; 1094);
   nach Empfangen der Liste (4906) von verfügbaren Gebietsschemata (4910), Auswählen (4916) eines aktiven Gebietsschemas (4904, 4908) für das andere Gerät (10; 1092), wobei das aktive Gebietsschema (4904, 4908) angibt, welche Sprache und/oder welcher Standort verwendet wird; und
   Senden (4918), an das andere Gerät (10; 1094), einer Anforderung zum Ändern des aktiven Gebietsschemas (4904, 4908) des anderen Geräts (10; 1094) auf das ausgewählte Gebietsschema, sodass das andere Gerät (10; 1094) die Sprache und/oder den Standort verwendet, die bzw. der durch das ausgewählte Gebietsschema angegeben ist.

8. Verfahren nach Anspruch 7, das Verfahren ferner Folgendes umfassend:

Darstellen der verfügbaren Gebietsschemata (4910) für einen Benutzer; und
Empfangen einer Auswahl des aktiven Gebietsschemas (4904, 4908) von dem Benutzer.

9. Verfahren nach Anspruch 7, wobei die Liste (4906) von verfügbaren Gebietsschemata (4910) eine priorisierte Liste der verfügbaren Gebietsschemata (4910) ist.

10. Verfahren nach Anspruch 7, wobei es sich bei dem Auswählen des aktiven Gebietsschemas (4904, 4908) um ein Auswählen eines auf dem elektronischen Gerät (10; 1092), einem anderen Gerät (10; 1004-1016; 1026-1052; 1060-1072; 1094) oder einem Dienst (1082) gespeicherten bevorzugten Gebietsschemas handelt.

11. Verfahren nach Anspruch 10, wobei das bevorzugte Gebietsschema ein erstes Gebietsschema in der Liste (4906) von verfügbaren Gebietsschemata (4910) ist.

12. Verfahren nach Anspruch 7, ferner umfassend:
Speichern der verfügbaren Gebietsschemata (4910), ohne ein neues aktives Gebietsschema (4904, 4908) einzustellen.

13. Nichtflüchtiges computerlesbares Medium, das darauf gespeicherte Anweisungen umfasst, die, bei Ausführung durch einen Prozessor eines elektronischen Geräts, das elektronische Gerät so konfigurieren, dass es das Verfahren nach einem der Ansprüche 7 bis 12 durchführt.


**Revendications**

1. Dispositif électronique (10 ; 1092) adapté pour acheminer des informations locales, le dispositif électronique (10 ; 1092) comprenant :

une interface réseau (18) ;
un processeur (20) ; et
une mémoire, la mémoire comprenant des instructions configurées pour amener le processeur (20) à :

demander (4912), auprès d'un autre dispositif (10 ; 1094), et via l'interface réseau (18), une liste (4906) de paramètres régionaux disponibles (4910) qui sont à la disposition de l'autre dispositif (10 ; 1094), la demande comprenant une demande soit d'un aperçu d'une instance de profil entière d'un profil de paramètre régional (4900) sur l'autre dispositif (10 ; 1094), soit d'un aperçu de seulement des sous-champs de paramètres régionaux disponibles (4910) d'un profil de paramètre régional (4900) sur l'autre dispositif (10 ; 1094) ;
recevoir (4914) la liste (4906) de paramètres régionaux disponibles (4910) à partir de l'autre dispositif (10 ; 1094) ;
sélectionner (4916) un paramètre régional actif (4904, 4908) pour l'autre dispositif (10 ; 1092) à partir de la liste (4906) reçue de paramètres régionaux disponibles (4910), dans lequel le paramètre régional actif (4904, 4908) indique la langue et/ou l'emplacement qui sont utilisés ; et
envoyer (4918) une demande, à l'autre dispositif (10 ; 1094), de changement du paramètre régional actif (4904, 4908) de l'autre dispositif (10 ; 1094) au paramètre régional sélectionné de telle sorte que l'autre dispositif (10 ; 1094) utilise la langue et/ou l'emplacement indiqués par le paramètre régional sélectionné.

2. Dispositif électronique selon la revendication 1, dans lequel le dispositif électronique (10 ; 1092) présente les paramètres régionaux disponibles (4910) à un utilisateur et reçoit une sélection du paramètre régional actif (4910) à partir de l'utilisateur.

3. Dispositif électronique selon la revendication 1, dans lequel la liste (4906) de paramètres régionaux disponibles (4910) est une liste priorisée des paramètres régionaux disponibles (4910).

**4.** Dispositif électronique selon la revendication 1, dans lequel le dispositif électronique (10 ; 1092) sélectionne le paramètre régional actif (4904, 4908) pour qu'il soit un paramètre régional préféré stocké sur le dispositif électronique (10 ; 1092), un autre dispositif (10 ; 1004 à 1016 ; 1026 à 1052 ; 1060 à 1072 ; 1094), ou un service (1082).

**5.** Dispositif électronique selon la revendication 4, dans lequel le paramètre régional préféré est un premier paramètre régional dans la liste (4906) de paramètres régionaux disponibles (4910).

**6.** Dispositif électronique selon la revendication 1, les instructions étant configurées pour amener le processeur (20) à : stocker les paramètres régionaux disponibles (4910) sans établir un nouveau paramètre régional actif (4904, 4908).

**7.** Procédé d'acheminement d'informations de paramètre régional pour un dispositif électronique (10 ; 1092), comprenant :

la demande (4912), auprès d'un autre dispositif (10 ; 1094), d'une liste (4906) de paramètres régionaux disponibles (4910) qui sont à la disposition de l'autre dispositif (10 ; 1094), la demande comprenant une demande soit d'un aperçu d'une instance de profil entière d'un profil de paramètre régional (4900) sur l'autre dispositif (10 ; 1094), soit d'un aperçu de seulement des sous-champs de paramètres régionaux disponibles (4910) d'un profil de paramètre régional (4900) sur l'autre dispositif (10 ; 1094) ;
la réception (4914) de la liste (4906) de paramètres régionaux disponibles (4910) à partir de l'autre dispositif (10 ; 1094) ;
lors de la réception de la liste (4906) de paramètres régionaux disponibles (4910), la sélection (4916) d'un paramètre régional actif (4904, 4908) pour l'autre dispositif (10 ; 1092), dans lequel le paramètre régional actif (4904, 4908) indique la langue et/ou l'emplacement qui sont utilisés ; et
l'envoi (4918) d'une demande, à l'autre dispositif (10 ; 1094), de changement du paramètre régional actif (4904, 4908) de l'autre dispositif (10 ; 1094) au paramètre régional sélectionné de telle sorte que l'autre dispositif (10 ; 1094) utilise la langue et/ou l'emplacement indiqués par le paramètre régional sélectionné.

**8.** Procédé selon la revendication 7, le procédé comprenant en outre :

la présentation des paramètres régionaux disponibles (4910) à un utilisateur ; et
la réception d'une sélection du paramètre régional actif (4904, 4908) à partir de l'utilisateur.

**9.** Procédé selon la revendication 7, dans lequel la liste (4906) de paramètres régionaux disponibles (4910) est une liste priorisée des paramètres régionaux disponibles (4910).

**10.** Procédé selon la revendication 7, dans lequel la sélection du paramètre régional actif (4904, 4908) est une sélection d'un paramètre régional préféré stocké sur le dispositif électronique (10 ; 1092), un autre dispositif (10 ; 1004 à 1016 ; 1026 à 1052 ; 1060 à 1072 ; 1094), ou un service (1082).

**11.** Procédé selon la revendication 10, dans lequel le paramètre régional préféré est un premier paramètre régional dans la liste (4906) de paramètres régionaux disponibles (4910).

**12.** Procédé selon la revendication 7, comprenant en outre :
le stockage des paramètres régionaux disponibles (4910) sans établir un nouveau paramètre régional actif (4904, 4908).

**13.** Support non transitoire lisible par ordinateur comprenant des instructions qui, lorsqu'elles sont exécutées par un processeur d'un dispositif électronique, configurent le dispositif électronique pour réaliser le procédé de l'une quelconque des revendications 7 à 12.

FIG. 1

FIG. 2

90

| | |
|---|---|
| APPLICATION LAYER | 102 |
| PLATFORM LAYER | 100 |
| TRANSPORT LAYER | 98 |
| NETWORK LAYER | 96 |
| DATA LINK LAYER | 94 |
| PHYSICAL LAYER | 92 |

FIG. 3

FIG. 4

FIG. 5

FIG. 6

1078

WEAVE
FABRIC

1076

1086

1084

1074

1086

END
POINT

SERVICE
END
POINT

SERVICE

END
POINT

WEAVE
FABRIC

WEAVE
FABRIC

END
POINT

1082

END
POINT

CONSUMER
DEVICE

1080

1086

1086

1088

FIG. 7

1090

1094

1096

DEVICE

· · ·

DEVICE

1092

FIG. 8

1098

ULA (UNIQUE LOCAL ADDRESS)

```
      1100              1102                    1104
┌──────────────────┬──────────────┬─────────────────────────┐
│    GLOBAL ID     │  SUBNET ID   │      INTERFACE ID       │
└──────────────────┴──────────────┴─────────────────────────┘
├───── 40 BITS ────┼── 16 BITS ───┼────────── 64 BITS ──────┤
```

FABRIC ID   1103        FIG. 9

1105

```
┌─────────────────────────┐
│   ASSIGN VIRTUAL ADDRESS │──1106
│    TO PERIPHERY NODE     │
└─────────────────────────┘
            │
            ▼
┌─────────────────────────┐
│      MAINTAIN LIST OF    │──1108
│     PERIPHERY NODES      │
└─────────────────────────┘
            │
            ▼
┌─────────────────────────┐
│   MONITOR FOR NEIGHBOR   │
│  SOLICITATION MESSAGE OF │──1110
│      VIRTUAL ADDRESS     │
│         IN LIST          │
└─────────────────────────┘
            │
            ▼
┌─────────────────────────┐
│  ASSIGN VIRTUAL ADDRESS TO│
│  HUB NETWORK INTERFACE   │──1112
│     FOR ROUTING NODE     │
└─────────────────────────┘
            │
            ▼
┌─────────────────────────┐
│    RESEND TO NEIGHBOR    │
│ SOLICITATION MESSAGE AND │──1114
│      RECEIVE PACKET      │
└─────────────────────────┘
            │
            ▼
┌─────────────────────────┐
│    REWRITE DESTINATION   │──1116
│         ADDRESS          │
└─────────────────────────┘
            │
            ▼
┌─────────────────────────┐
│      FORWARD PACKET      │──1118
└─────────────────────────┘
```

FIG. 10

1120

1122　　　　　1124　　　　　1126

| TAG | LENGTH | VALUE |
|-----|--------|-------|

FIG. 11

GENERAL MESSAGE PROTOCOL

| 2 BYTES | 15 | PACKET LENGTH | 0 | ~1130 |

| 2 BYTES | 15 | MESSAGE HEADER | 0 | ~1132 |

| 4 BYTES | 31 | MESSAGE ID | 16 | ~1134 |
| | 15 | | 0 | |

| 8 BYTES | 63 | SOURCE NODE ID | 48 | ~1136 |
| | 15 | | 0 | |

| 8 BYTES | 63 | DESTINATION NODE ID | 48 | ~1138 |
| | 15 | | 0 | |

| 2 BYTES | 15 | KEY ID | 0 | ~1140 |

| 2 BYTES | 15 | PAYLOAD LENGTH | 0 | ~1142 |

| VARIABLE | INTIALIZATION VECTOR | ~1144 |

| VARIABLE | APPLICATION PAYLOAD | ~1146 |

| VARIABLE | MESSAGE INTEGRITY CHECK | ~1148 / ~1152 |

| VARIABLE | PADDING | ~1150 |

| VARIABLE | MESSAGE SIGNATURE | ~1154 |

1128

FIG. 12

1132

15 VERSION | – | – | S | D | ENCRYPTION TYPE | SIGNATURE TYPE 0

1156   1158   1160   1162   1164

├— 4 BITS —┼— 4 BITS —┼— 4 BITS —┼— 4 BITS —┤

## FIG. 13

1140

15 KEY TYPE 12 | 11 | KEY NUMBER | 0

1166   1168

├— 4 BITS —┼————— 12 BITS —————┤

## FIG. 14

1146

├—8 BITS—┼—8 BITS—┼———16 BITS———┤

0       1170      1172                    32

| VERSION | MSG TYPE | EXCHANGE ID | —1174 |

| PROFILE ID | —1176 |

| PROFILE-SPECIFIC HEADERS | —1178 |

| APPLICATION PAYLOAD SUB-FIELD | —1180 |

## FIG. 15

FIG. 16

FIG. 17

FIG. 18

FIG. 19

1206

1 BYTE | 0    FRAME CONTROL    7 | —1218

6 BYTES | 0         PRODUCT SPECIFICATION       47 | —1220

VARIABLE | VENDOR SPECIFIC DATA | —1222

VARIABLE | VERSION SPECIFICATION | —1224

VARIABLE | LOCALE SPECIFICATION | —1226

2...4 BYTES | INTEGRITY TYPES SUPPORTED | —1228

2...5 BYTES | UPDATE SCHEMES SUPPORTED | —1230

FIG. 20

1218

| VENDOR SPECIFIC FLAG 1232 | LOCALE SPECIFICATION FLAG 1234 | RESERVED    7 |
| --- | --- | --- |
| — 1 BIT — | — 1 BIT — | — 6 BITS — |

FIG. 21

1220

| 0      VENDOR ID      15 | —1236 |
| 16      PRODUCT ID      31 | —1238 |
| 32      PRODUCT REVISION      47 | —1240 |

FIG. 22

1224

| 0   VERSION LENGTH 1242   7 | VERSION STRING 1244 |
| --- | --- |
| — 8 BITS — | — VARIABLE — |

FIG. 23

1226

| 0   LOCALE STRING LENGTH 1246   7 | LOCALE STRING 1248 |
| --- | --- |
| — 8 BITS — | — VARIABLE — |

FIG. 24

1228

| 0 TYPE LIST LENGTH 7 | INTEGRITY TYPE LIST |
|---|---|

—1250  —1252

├──────── 8 BITS ────────┤├──────── VARIABLE ────────┤

**FIG. 25**

1230

| 0 SCHEME LIST LENGTH 7 | UPDATE SCHEME LIST |
|---|---|

—1254  —1256

├──────── 8 BITS ────────┤├──────── VARIABLE ────────┤

**FIG. 26**

1208

| VARIABLE | QUERY STATUS | —1258 |
|---|---|---|
| VARIABLE | 0 URI 15 | —1260 |
| VARIABLE | INTEGRITY SPECIFICATIONS | —1262 |
| 2 BYTES | 0 UPDATE SCHEME 7 \| 0 UPDATE OPTIONS 7 | —1266 |

1264—

**FIG. 27**

1260

| 0 URI LENGTH 15 | —1268 |
|---|---|
| URI STRING | —1270 |

**FIG. 28**

1262

| 0 INTEGRITY TYPE 7 | —1272 |
|---|---|
| INTEGRITY VALUE | —1274 |

**FIG. 29**

1266

| UPDATE PRIORITY | UPDATE CONDITION | REPORT STATUS | RESERVED |
|---|---|---|---|

1276   1278   1280   1282

├── 2 BITS ──┼── 3 BITS ──┼─ 1 BIT ─┼── 2 BITS ──┤

## FIG. 30

1400

| SENDER | 1404 ⟶ / ⟵ 1408 | RECEIVER |
|---|---|---|

1402   1406

## FIG. 31

FIG. 32

1422

| - | ASYNCH | RDRIVE | SDRIVE | VERSION |
|---|--------|--------|--------|---------|

1450  1452  1454  1456

├─ 1 BIT ─┼─ 1 BIT ─┼─ 1 BIT ─┼─ 1 BIT ─┼──── 4 BITS ────┤

**FIG. 33**

1424

| - | - | - | BIGEXTENT | - | - | SOFF | DEFLEN |
|---|---|---|-----------|---|---|------|--------|

1470  1472  1474

**FIG. 34**

1500

| 1 BYTE | TRANSFER CONTROL | 1502 |
|--------|------------------|------|
| 2 BYTES | 0   MAX BLOCK SIZE   15 | 1504 |
| VARIABLE | METADATA | 1506 |

**FIG. 35**

1520

| 2 BYTES | 0   STATUS CODE   15 | 1522 |
|---------|----------------------|------|
| 1 BYTE | NEXT STATUS | 1524 |
| VARIABLE | ADD'L INFO | 1526 |

**FIG. 36**

1540

1542

| 0 | TRANSFER CONTROL | 7 | 8 | RANGE CONTROL | 15 |
|---|---|---|---|---|---|

1544

| 0 | MAX BLOCK SIZE | 15 |
|---|---|---|

1546

| 0 | | | | | | | | 15 |
|---|---|---|---|---|---|---|---|---|
| 16 | LENGTH (4-8 BYTES) | | | | | | | 31 |
| 32 | | | | | | | | 39 |
| 40 | | | | | | | | 47 |

1548

FIG. 37

1600

| 0 | PROFILE NUMBER | |
|---|---|---|
| | VENDOR IDENTIFIER | 31 |

1602

1604

FIG. 38

1606

| IP & WEAVE MESSAGE HEADERS | EXCHANGE HEADER, PROFILE ID=WDM | ... {PROFILE ID: DATA IDENTIFIER: VERSION: DATA} ... |
|---|---|---|

FIG. 39

FIG. 40

FIG. 41

FIG. 42

FIG. 43

FIG. 44

FIG. 45

1702 SUBSCRIBER — 1718 NHL — 1714 DME
1700 PUBLISHER — 1706 DME — 1710 NHL

PUBLISH / SUBSCRIBE EXCHANGE

CANCEL SUBSCRIBE REQUEST

DME-CancelSubscription.request — 1724
DME-CancelSubscription.confirm — 1728
CANCELED

DME-CancelSubscription.indication — 1726
CANCELED

FIG. 46

1702 SUBSCRIBER — 1718 NHL — 1714 DME
1700 PUBLISHER — 1706 DME — 1710 NHL

DME-View.request — 1802
VIEW REQUEST — 1803
DME-View.indication — 1804
MARSHALL DATA
DME-View.response — 1806
VIEW RESPONSE — 1808
DME-View.confirm — 1810
DISSEMINATE DATA

-- OR --

DME-View.request — 1802
VIEW REQUEST — 1803
DME-View.indication — 1804
FAIL
DME-View.response — 1806
STATUS REPORT — 1812
DME-View.confirm — 1810
HANDLE FAILURE

EP 3 713 157 B1

FIG. 47

FIG. 48

2000

| VARIABLE | PATH LIST |
|---|---|

2002

FIG. 49

2004

| VARIABLE | DATA LIST |
|---|---|

2006

FIG. 50

2008

| 2 BYTES | 0 | TOPIC ID | 15 |
|---|---|---|---|

2010

| VARIABLE | PATH LIST |
|---|---|

2012

FIG. 51

2014

| 2 BYTES | 0 | TOPIC ID | 15 |
|---|---|---|---|

2016

| VARIABLE | DATA LIST |
|---|---|

2018

FIG. 52

2020

| 2 BYTES | 0 | TOPIC ID | 15 |
|---|---|---|---|

2022

FIG. 53

2024

| VARIABLE | DATA LIST |
|---|---|

2026

FIG. 54

2028

| 2 BYTES | 0 | TOPIC IDENTIFIER | 15 |
|---|---|---|---|

2030

| VARIABLE | DATA LIST |
|---|---|

2032

FIG. 55

EP 3 713 157 B1

FIG. 56

FIG. 57

EP 3 713 157 B1

4002

DATA
--MANUAL OVERRIDE

4000

SUB (MANUAL)
OVERRIDE

SUB (HEAT ON /OFF)

4008

SUB (OCC, TEMP)

4004

SUBSCRIBE (ALL)

4010

UPDATE /VIEW

DATA
--OCCUPANCY
--TEMPERATURE

DATA
--TEMPERATURE
--HEAT ON /OFF
--REMOTE SENSING

4006

DATA
--TEMPERATURE
--HEAT ON /OFF
--REMOTE SENSING

FIG. 58

4632

STREAMS —4634

VERSION —4636

DESCRIPTION —4638

RESOURCES —4640

URI —4646

URI —4646

DESCRIPTORS —4642

DESCRIPTOR    IDENTIFIER: 1 —4658    —4654

DESCRIPTOR    IDENTIFIER: 2 —4658    —4654

RECORDS —4644

STREAM    IDENTIFIER: 1 —4658    —4656

STREAM    IDENTIFIER: 2 —4658    —4656

STREAM    IDENTIFIER: 3 —4658    —4656

FIG. 59

EXTERNAL DESCRIPTOR — 4648

DESCRIPTOR — 4650

DESCRIPTOR — 4650

DESCRIPTOR — 4650

## FIG. 60

DESCRIPTOR — 4654

IDENTIFIER — 4658

STREAM  PERIODICITY — 4660

TYPE — 4662

FIELDS — 4664

FIELD — 4680

FIELD — 4680

FIELD — 4680

DESCRIPTION — 4666

DERIVATION — 4668

TIME  BASE — 4670

TIME  PERIOD — 4672

## FIG. 61

DERIVATION — 4668

OPERATIONS — 4674

OPERATION — 4676

OPERATION — 4676

IDENTIFIER — 4678

FIG. 62

FIELD — 4680

VALID — 4682

RELATIVE — 4684

SIGNED — 4686

SIZE — 4688

COUNT — 4690

EXPONENT — 4692

UNITS — 4702

DESCRIPTION — 4704

TYPE — 4706

DERIVATION — 4708

LOGICAL MINIMUM — 4694

LOGICAL MAXIMUM — 4696

PHYSICAL MINIMUM — 4698

PHYSICAL MAXIMUM — 4700

FIG. 63

UNITS ——4702

SYSTEM ——4710

DESCRIPTION ——4712

EXPONENT ——4714

UNITS ——4716

UNIT ——4718

QUANTITY ——4720

EXPONENT ——4722

UNIT ——4718

QUANTITY ——4720

EXPONENT ——4722

UNIT ——4718

QUANTITY ——4720

EXPONENT ——4722

FIG. 64

TIME PERIOD ——4672

EXPONENT ——4724

FIG. 65

140

TIME BASE ———4670

REFERENCE ———4726

EXPONENT ———4728

SYNCHRONIZATION ———4730

FIG. 66

STREAM ———4656

IDENTIFIER ———4658

TIME BASE ———4732

TIME PERIOD ———4734

DATA ———4736

FIG. 67

$b_{t-1}$ ••• 10 9 8 7 6 5 4 3 2 1 0

SIZE = 7 SIZE = 1 SIZE = 7
VALID = 1 VALID = 0 VALID = 1

COUNT = 1 COUNT = 1 COUNT = 1

FIG. 68

EP 3 713 157 B1

| $b_{t-1}$ | ••• | 21 | 20 | 19 | 18 | 17 | 16 | 15 | 14 | 13 | 12 | 11 | 10 | 9 | 8 | 7 | 6 | 5 | 4 | 3 | 2 | 1 | 0 |

SIZE = 5    SIZE = 1    SIZE = 5    SIZE = 5    SIZE = 5
VALID = 1   VALID = 0   VALID = 1   VALID = 1   VALID = 1

COUNT = 1                    COUNT = 3

## FIG. 69

4800

┌─────────────────────────────────────────┐
│ OBTAIN DATA SAMPLES FROM SENSOR │ 4802
└─────────────────────────────────────────┘
                    │
┌─────────────────────────────────────────┐
│ PERFORM │ 4804
│ MATHEMATICAL OPERATION ON THE DATA │
└─────────────────────────────────────────┘
                    │
┌─────────────────────────────────────────┐
│ ENCAPSULATE THE DATA SAMPLES │ 4808
│ ACCORDING TO THE TIME VARIANT DATA │
└─────────────────────────────────────────┘
                    │
┌─────────────────────────────────────────┐
│ SEND │ 4810
│ THE ENCAPSULATED DATA SAMPLES │
└─────────────────────────────────────────┘

## FIG. 70

LOCALE PROFILE — 4900

VERSION — 4902

ACTIVE LOCALE — 4904

LOCALE — 4908

AVAILABLE LOCALES — 4906

LOCALE — 4910

LOCALE — 4910

LOCALE — 4910

**FIG. 71**

REQUEST AVAILABLE LOCALES — 4912

RECEIVE AVAILABLE LOCALES — 4914

CHOOSE AN ACTIVE LOCALE FROM THE AVAILABLE LOCALES — 4916

SEND REQUEST TO CHANGE ACTIVE LOCALE TO CHOSEN ACTIVE LOCALE — 4918

**FIG. 72**

RECEIVE REQUEST FOR AVAILABLE LOCALES — 4920

SEND LIST OF AVAILABLE LOCALES — 4922

RECEIVE A REQUEST TO CHANGE ACTIVE LOCALE — 4924

4926

SUCCESS ?

YES — 4928
CHANGE ACTIVE LOCALES

NO — 4930
SEND STATUS REPORT

**FIG. 73**

4940
DEVICE
CONTROL CLIENT

4942
DEVICE
CONTROL SERVER

RESET CONFIG
(ALL | NETWORK | FABRIC | SERVICE)
4944

STATUS REPORT 4946

SERVER RESETS
CONFIGURATION

## FIG. 74

4940
DEVICE
CONTROL CLIENT

4940
DEVICE
CONTROL SERVER

ARM FAILSAFE
(NEW MODE, FAILSAFE TOKEN)
4948

STATUS REPORT 4950

SERVER ARMS
FAILSAFE AND
SETS NEW
FAILSAFE TOKEN
IF DISARMED,
FAILS OTHERWISE

## FIG. 75

4940
DEVICE
CONTROL CLIENT

4942
DEVICE
CONTROL SERVER

ARM FAILSAFE
(RESET MODE, FAILSAFE TOKEN)
4956

STATUS REPORT 4958

SERVER RESETS
NETWORK, FABRIC
AND SERVICE
CONFIGS, ARMS
FAILSAFE, AND
SETS NEW
FAILSAFE TOKEN

## FIG. 76

FIG. 77

FIG. 78

FIG. 79

EP 3 713 157 B1

FIG. 80

EP 3 713 157 B1

2 BYTES | 0             RESET FLAGS             15   4988

## FIG. 81

4990

1 BYTE | 0     ARM MODE     7   4992

4 BYTES | 0             FAILSAFE TOKEN             31   4994

## FIG. 82

EP 3 713 157 B1

4996

| 2 BYTES | 0 | CONNECTION MONITOR TIMEOUT | 15 | 4998 |
| 2 BYTES | 0 | CONNECTION MONITOR INTERNAL | 15 | 5000 |

FIG. 83

5002

| 2 BYTES | 0 | RENDEZVOUS TIMEOUT | 15 | 5004 |
| 2 BYTES | 0 | INACTIVITY TIMEOUT | 15 | 5006 |
| 16 BYTES | 0 | FILTER ADDRESS | 64 | 5008 |

FIG. 84

FIG. 85

FIG. 86

5050

RECEIVE ACCOUNT INFORMATION — 5052

CONNECT TO A REMOTE SERVICE — 5054

RECEIVE PAIRING
TOKEN, ACCOUNT IDENTIFIER, AND
SERVICE CONFIGURATION DETAILS — 5056

CONNECT TO A JOINING DEVICE — 5058

OBTAIN INITIALIZATION
DATA FOR THE JOINING DEVICE — 5060

SEND A REGISTER SERVICE MESSAGE — 5062

FIG. 87

5070

CONNECT TO A COMMISSIONING DEVICE — 5072

SEND PAIRING
TOKEN, ACCOUNT IDENTIFIER, AND
SERVICE CONFIGURATION DETAILS — 5074

CONNECT TO A JOINING DEVICE — 5076

VALIDATED JOINING DEVICE ? — 5078
NO
YES

ADD DEVICE
TO LIST OF DEVICES FOR ACCOUNT — 5080

SEND SUCCESSFUL PAIR MESSAGE — 5082

SEND ADDITIONAL
INFORMATION TO THE JOINING DEVICE — 5084

FIG. 88

5090

5092
CONNECT TO A COMMISSIONING DEVICE

5094
RECEIVE PAIRING TOKEN, ACCOUNT IDENTIFIER AND SERVICE CONFIGURATION DETAILS FROM THE COMMISSIONING DEVICE

5096
CONNECT TO A REMOTE SERVICE USING THE RECEIVED SERVICE CONFIGURATION DETAILS

5098
VALIDATE CONNECTION USING THE PAIRING TOKEN

5100
RECEIVE A SUCCESSFUL PAIR MESSAGE

5102
STORE THE ACCOUNT IDENTIFIER AND SERVICE CONFIGURATION DETAILS

5104
SEND SUCCESSFUL STORE MESSAGE TO THE REMOTE SERVICE

5106
YES
ADDITIONAL SERVICE?

FIG. 89

5110

| 5112 |
|---|
| RECEIVE UNREGISTER INSTRUCTION |

| 5114 |
|---|
| SEND UNREGISTER INSTRUCTION TO A DEVICE |

FIG. 90

5120

| 5122 |
|---|
| RECEIVE UNREGISTER INSTRUCTION |

| 5124 |
|---|
| DELETE ACCOUNT PAIRING INFORMATION |

FIG. 91

5130

| 5132 |
|---|
| RECEIVE UPDATE INSTRUCTION |

| 5134 |
|---|
| CHANGE /ADD SERVICE ENDPOINTS AND/OR LIST OF TRUSTED CERTIFICATES |

FIG. 92

5140

5142  5144  5146  5148

| 1 BYTE | 0 DIRECTORY LENGTH 3 | b4: REDIRECT | b5: SUFFIX TABLE PRESENT | b6: TIME FIELDS PRESENT | b7: RESERVED |

VARIABLE | DIRECTORY LIST | 5150

VARIABLE | SUFFIX TABLE | 5216

8 BYTES | 0 ... QUERY RECEIPT TIME ... 63 | 5228

4 BYTES | 0 ... PROCESSING TIME ... 31 | 5230

FIG. 93

5150

5152  5154

| 1 BYTE | 0 HOST/PORT LIST LENGTH 2 | 3 RESERVED 5 | 6 ENTRY TYPE 7 |

8 BYTES | 0 ... SERVICE ENDPOINT ID ... 63 | 5156

8 BYTES | 0 ... NODE ID ... 63 | 5158

VARIABLE | HOST AND PORT LIST | 5200

FIG. 94

5200

5202    5204    5208

| 1 BYTE | 0 | HOST ID TYPE | 1 | b5: SUFFIX INDEX PRESENT | b3: PORT ID PRESENT | 4 | RESERVED | 7 |

| 1 BYTE | 0 | HOST ID STRING LENGTH | 7 | 5212 |

| VARIABLE | HOST ID STRING | 5214 |

| 1 BYTE | 0 | SUFFIX INDEX | 7 | 5206 |

| 2 BYTES | 0 | PORT ID | 15 | 5210 |

FIG. 95

5216

| 1 BYTE | 0 | SUFFIX TABLE LENGTH | 7 | 5224 |

| 1 BYTE | 0 | SUFFIX STRING LENGTH | 7 | 5222 |

| VARIABLE | SUFFIX STRING |

5226

5220

...

FIG. 96

NETWORK SCAN — 1804

NETWORK SCAN RESPONSE

FIG. 97

1800 1802 1806

ADD NETWORK — 1808

ADD NETWORK RESPONSE

FIG. 98

1800 1802 1810

GET NETWORK — 1812

GET NETWORK RESPONSE

FIG. 99

1800 1802 1814

REMOVE NETWORK — 1816

REMOVE NETWORK RESPONSE

FIG. 100

1800 1802 1820

FIG. 101

FIG. 102

FIG. 103

FIG. 104

EP 3 713 157 B1

5312
5314
CONNECT TO A
REQUESTOR DEVICE VIA A FIRST
WIFI RADIO ON A FIRST CHANNEL

5316
RECEIVE A COMMAND
FROM THE REQUESTOR DEVICE

5318
CONNECT
TO A NETWORK VIA A SECOND
WIFI RADIO ON A SECOND CHANNEL

5320
STORE RESULT
TO THE COMMAND IN MEMORY

5322
CONNECT TO THE REQUESTOR
DEVICE VIA THE FIRST WIFI
RADIO ON THE SECOND CHANNEL

5324
RECEIVE REQUEST FOR THE
RESULT FROM THE REQUESTOR

5326
SEND THE LAST RESULT

FIG. 105

5328
CONNECT TO A DEVICE

5330
SEND COMMAND TO THE DEVICE

5332
RECONNECT TO
THE DEVICE ON ANOTHER CHANNEL

5334
REQUEST
RESULT FOR THE COMMAND

5336
RECEIVE THE RESULT

FIG. 106

5342    5344    5346

IDENTIFY REQUEST

IDENTIFY RESPONSE

5348

FIG. 107

5346

5342    5344    5348

5348

5346

5348

5346

FIG. 108

5550

5552    5556    5554

5558

FIG. 109

FIG. 110

FIG. 111

FIG. 112

FIG. 113

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62061593 B
- US 2013013286 A1
- US 2005209845 A1
- US 62061593
- US 50893314
- US 47834614
- US 47826514